(19) Europäisches Patentamt
European Patent Office
Office européen des brevets

(11) **EP 4 177 886 A1**

(12) **EUROPEAN PATENT APPLICATION**

(43) Date of publication:
**10.05.2023  Bulletin 2023/19**

(21) Application number: **22213391.0**

(22) Date of filing: **22.05.2015**

(51) International Patent Classification (IPC):
**G11B 27/034** (2006.01)   **G10L 19/008** (2013.01)
**G06F 13/00** (2006.01)   **G10K 15/02** (2006.01)
**G10L 19/00** (2013.01)   **G11B 20/12** (2006.01)
**H04N 21/439** (2011.01)   **G10L 19/16** (2013.01)
**H04S 7/00** (2006.01)

(52) Cooperative Patent Classification (CPC):
G10L 19/008; **G11B 27/034; H04N 21/233;**
**H04N 21/439; H04N 21/8106; H04N 21/85406;**
G10K 15/02; G10L 19/167; G11B 20/1217;
G11B 2020/10546; H04S 7/30; H04S 2400/11;
H04S 2400/15

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.05.2014   JP 2014113485
06.06.2014   JP 2014117329
27.06.2014   JP 2014133131
01.10.2014   JP 2014203517**

(62) Document number(s) of the earlier application(s) in accordance with Art. 76 EPC:
**15800260.0 / 3 151 240**

(71) Applicant: **Sony Corporation**
**108-0075 Tokyo (JP)**

(72) Inventors:
• **HIRABAYASHI, Mitsuhiro**
**Minato-ku, 108-0075 (JP)**
• **CHINEN, Toru**
**Minato-ku, 108-0075 (JP)**
• **YAMAMOTO, Yuki**
**Minato-ku, 108-0075 (JP)**
• **SHI, Runyu**
**Minato-ku, 108-0075 (JP)**

(74) Representative: **D Young & Co LLP**
**120 Holborn**
**London EC1N 2DY (GB)**

Remarks:
This application was filed on 14-12-2022 as a divisional application to the application mentioned under INID code 62.

(54) **INFORMATION PROCESSING APPARATUS AND INFORMATION PROCESSING METHOD**

(57)   The present disclosure relates to an information processing apparatus and an information processing method which are capable of improving an efficiency of acquiring a predetermined type of audio data among a plurality of types of audio data.

Audio data of a predetermined track is acquired in a file in which a plurality of types of audio data are divided into a plurality of tracks depending on the types and the tracks are arranged. The present disclosure is applicable to, for example, an information processing system including a file generation device that generates a file, a Web server that records a file generated by the file generation device, and a video playback terminal that plays back a file.

FIG. 33

EP 4 177 886 A1

**Description**

TECHNICAL FIELD

The present disclosure relates to an information processing apparatus and an information processing method, and more particularly, to an information processing apparatus and an information processing method which are capable of improving the efficiency of acquiring a predetermined type of audio data among a plurality of types of audio data.

BACKGROUND ART

One of the recent most popular streaming services is the over-the-top video (OTT-V) via the Internet. The moving picture experts group phase-dynamic adaptive streaming over HTTP (MPEG-DASH) is widely used as its underlying technology (see, for example, Non-Patent Document 1).
In MPEG-DASH, a delivery server prepares a group of video data having different screen sizes and coding rates for one video content item, and a playback terminal requests a group of video data having an optimal screen size and coding rate depending on transmission line conditions, thus adaptive streaming delivery is achieved.

CITATION LIST

NON-PATENT DOCUMENT

Non-Patent Document 1: MPEG-DASH (Dynamic Adaptive Streaming over HTTP)(URL:http://mpeg.chiariglione.org/standards/mpeg-dash/media-prese ntation-description-and-segment-formats/text-isoiec-23009-12012-dam-1)

SUMMARY OF THE INVENTION

PROBLEMS TO BE SOLVED BY THE INVENTION

However, no consideration is given to an improvement in efficiency of acquiring a predetermined type of audio data among a plurality of types of audio data of a video content.
The present disclosure has been made in view of the above-mentioned circumstances and is capable of improving the efficiency of acquiring a predetermined type of audio data among a plurality of types of audio data.

SOLUTIONS TO PROBLEMS

An information processing apparatus according to a first aspect of the present disclosure is an information processing apparatus including an acquisition unit that acquires audio data in a predetermined track of a file in which a plurality of types of audio data are divided into a plurality of tracks depending on the types and the tracks are arranged.
An information processing method according to the first aspect of the present disclosure corresponds to the information processing apparatus according to the first aspect of the present disclosure.
In the first aspect of the present disclosure, audio data of the predetermined track in the file in which the plurality of types of audio data are divided into the plurality of tracks depending on the types and the tracks arranged is acquired.
An information processing apparatus according to a second aspect of the present disclosure is an information processing apparatus including a generation unit that generates a file in which a plurality of types of audio data are divided into a plurality of tracks depending on the types and the tracks are arranged.
An information processing method according to the second aspect of the present disclosure corresponds to the information processing apparatus according to the second aspect of the present disclosure.
In the second aspect of the present disclosure, the file in which the plurality of types of audio data are divided into the plurality of tracks depending on the types and the tracks are arranged is generated.
Note that the information processing apparatuses according to the first and second aspects can be implemented by causing a computer to execute a program.
Further, in order to achieve the information processing apparatuses according to the first and second aspects, a program executed by a computer can be provided by transmitting the program via a transmission medium, or by recording the program in a recording medium.

EFFECTS OF THE INVENTION

According to a first aspect of the present disclosure, audio data can be acquired. Further, according to the first aspect of the present disclosure, a predetermined type of audio data among a plurality of types of audio data can be acquired efficiently.

According to the second aspect of the present disclosure, a file can be generated. Further, according to the second aspect of the present disclosure, a file that improves the efficiency of acquiring a predetermined type of audio data among a plurality of types of audio data can be generated.

BRIEF DESCRIPTION OF DRAWINGS

Fig. 1 is a diagram illustrating an outline of a first example of an information processing system to which the present disclosure is applied.
Fig. 2 is a diagram showing an example of a file.
Fig. 3 is a diagram illustrating an object.
Fig. 4 is a diagram illustrating object position information.
Fig. 5 is a diagram illustrating image frame size information.
Fig. 6 is a diagram showing a structure of an MPD file.
Fig. 7 is a diagram showing a relationship among "Period", "Representation", and "Segment".
Fig. 8 is a diagram showing a hierarchical structure of an MPD file.
Fig. 9 is a diagram showing a relationship between a structure of an MPD file and a time axis.
Fig. 10 is a diagram illustrating an exemplary description of the MPD file.
Fig. 11 is a block diagram showing a configuration example of a file generation device.
Fig. 12 is a flowchart illustrating file generation process of the file generation device.
Fig. 13 is a block diagram showing a configuration example of a streaming playback unit.
Fig. 14 is a flowchart illustrating a streaming playback process of the streaming playback unit.
Fig. 15 is a diagram illustrating an exemplary description of the MPD file.
Fig. 16 is a diagram illustrating another exemplary description of the MPD file.
Fig. 17 is a diagram showing an arrangement example of an audio stream.
Fig. 18 is a diagram showing an exemplary description of gsix.
Fig. 19 is a diagram showing an example of information indicating a correspondence relation between a sample group entry and object ID.
Fig. 20 is a diagram showing an exemplary description of AudioObjectSampleGroupEntry.
Fig. 21 is a diagram showing an exemplary description of a type assignment box.
Fig. 22 is a diagram illustrating an outline of a second example of the information processing system to which the present disclosure is applied.
Fig. 23 is a block diagram showing a configuration example of the streaming playback unit of the information processing system to which the present disclosure is applied.
Fig. 24 is a diagram illustrating a method of determining a position of an object.
Fig. 25 is a diagram illustrating a method of determining a position of an object.
Fig. 26 is a diagram illustrating a method of determining a position of an object.
Fig. 27 is a diagram showing a relationship between a horizontal angle $\theta_{Ai}$ and a horizontal angle $\theta_{Ai}'$.
Fig. 28 is a flowchart illustrating the streaming playback process of the streaming playback unit shown in Fig. 23.
Fig. 29 is a flowchart illustrating details of a position determination process shown in Fig. 28.
Fig. 30 is a flowchart illustrating details of a horizontal angle $\theta_{Ai}'$ estimation process shown in Fig. 29.
Fig. 31 is a diagram illustrating an outline of tracks of a 3D audio file format of MP4.
Fig. 32 is a diagram showing a structure of a moov box.
Fig. 33 is a diagram illustrating an outline of tracks according to a first embodiment to which the present disclosure is applied.
Fig. 34 is a diagram showing an exemplary syntax of a sample entry of a base track shown in Fig. 33.
Fig. 35 is a diagram showing an exemplary syntax of a sample entry of a channel audio track shown in Fig. 33.
Fig. 36 is a diagram showing an exemplary syntax of a sample entry of an object audio track shown in Fig. 33.
Fig. 37 is a diagram showing an exemplary syntax of a sample entry of an HOA audio track shown in Fig. 33.
Fig. 38 is a diagram showing an exemplary syntax of a sample entry of an object metadata track shown in Fig. 33.
Fig. 39 is a diagram showing a first example of a segment structure.
Fig. 40 is a diagram showing a second example of the segment structure.
Fig. 41 is a diagram showing an exemplary description of a level assignment box.
Fig. 42 is a diagram showing an exemplary description of the MPD file in the first embodiment to which the present disclosure is applied.

Fig. 43 is a diagram showing a definition of Essential Property.

Fig. 44 is a diagram illustrating an outline of an information processing system in the first embodiment to which the present disclosure is applied.

Fig. 45 is a block diagram showing a configuration example of a file generation device shown in Fig. 44.

Fig. 46 is a flowchart illustrating a file generation process of the file generation device shown in Fig. 45.

Fig. 47 is a block diagram showing a configuration example of a streaming playback unit implemented by a video playback terminal shown in Fig. 44.

Fig. 48 is a flowchart illustrating a channel audio playback process of the streaming playback unit shown in Fig. 47.

Fig. 49 is a flowchart illustrating an object specifying process of the streaming playback unit shown in Fig. 47.

Fig. 50 is a flowchart illustrating a specific object audio playback process of the streaming playback unit shown in Fig. 47.

Fig. 51 is a diagram illustrating an outline of tracks in a second embodiment to which the present disclosure is applied.

Fig. 52 is a diagram showing an exemplary syntax of a sample entry of a base track shown in Fig. 51.

Fig. 53 is a diagram showing a structure of a base sample.

Fig. 54 is a diagram showing an exemplary syntax of a base sample.

Fig. 55 is a diagram showing an example of data of an extractor.

Fig. 56 is a diagram illustrating an outline of tracks in a third embodiment to which the present disclosure is applied.

Fig. 57 is a diagram illustrating an outline of tracks in a fourth embodiment to which the present disclosure is applied.

Fig. 58 is a diagram showing an exemplary description of an MPD file in the fourth embodiment to which the present disclosure is applied.

Fig. 59 is a diagram illustrating an outline of an information processing system in the fourth embodiment to which the present disclosure is applied.

Fig. 60 is a block diagram showing a configuration example of the file generation device shown in Fig. 59.

Fig. 61 is a flowchart illustrating a file generation process of the file generation device shown in Fig. 60.

Fig. 62 is a block diagram showing a configuration example of a streaming playback unit implemented by a video playback terminal shown in Fig. 59.

Fig. 63 is a flowchart illustrating an example of a channel audio playback process of the streaming playback unit shown in Fig. 62.

Fig. 64 is a flowchart illustrating a first example of an object audio playback process of the streaming playback unit shown in Fig. 62.

Fig. 65 is a flowchart illustrating a second example of the object audio playback process of the streaming playback unit shown in Fig. 62.

Fig. 66 is a flowchart illustrating a third example of the object audio playback process of the streaming playback unit shown in Fig. 62.

Fig. 67 is a diagram showing an example of an object selected on the basis of a priority.

Fig. 68 is a diagram illustrating an outline of tracks in a fifth embodiment to which the present disclosure is applied.

Fig. 69 is a diagram illustrating an outline of tracks in a sixth embodiment to which the present disclosure is applied.

Fig. 70 is a diagram showing a hierarchical structure of 3D audio.

Fig. 71 is a diagram illustrating a first example of a Web server process.

Fig. 72 is a flowchart illustrating a track division process of a Web server.

Fig. 73 is a diagram illustrating a first example of a process of an audio decoding processing unit.

Fig. 74 is a flowchart illustrating details of a first example of a decoding process of the audio decoding processing unit.

Fig. 75 is a diagram illustrating a second example of a process of the audio decoding processing unit.

Fig. 76 is a flowchart illustrating details of the second example of the decoding process of the audio decoding processing unit.

Fig. 77 is a diagram illustrating a second example of the Web server process.

Fig. 78 is a diagram illustrating a third example of the process of the audio decoding processing unit.

Fig. 79 is a flowchart illustrating details of the third example of the decoding process of the audio decoding processing unit.

Fig. 80 is a diagram showing a second example of syntax of Config information disposed in a base sample.

Fig. 81 is an exemplary syntax of Config information for Ext element shown in Fig. 80.

Fig. 82 is a diagram showing an exemplary syntax of Config information for Extractor shown in Fig. 81.

Fig. 83 is a diagram showing a second example of syntax of data of a frame unit disposed in a base sample.

Fig. 84 is a diagram showing an exemplary syntax of data of Extractor shown in Fig. 83.

Fig. 85 is a diagram showing a third example of syntax of Config information disposed in a base sample.

Fig. 86 is a diagram showing a third example of syntax of data of a frame unit disposed in a base sample.

Fig. 87 is a diagram showing a configuration example of an audio stream in a seventh embodiment of the information processing system to which the present disclosure is applied.

Fig. 88 is a diagram illustrating an outline of tracks in the seventh embodiment.
Fig. 89 is a flowchart illustrating a file generation process in the seventh embodiment.
Fig. 90 is a flowchart illustrating an audio playback process in the seventh embodiment.
Fig. 91 is a diagram illustrating an outline of tracks in an eighth embodiment of the information processing system to which the present disclosure is applied.
Fig. 92 is a diagram showing a configuration example of an audio file.
Fig. 93 is a diagram showing another configuration example of the audio file.
Fig. 94 is a diagram showing still another configuration example of the audio file.
Fig. 95 is a block diagram showing a configuration example of hardware of a computer.

MODE FOR CARRYING OUT THE INVENTION

Modes for carrying out the present disclosure (hereinafter referred to as embodiments) will be described below in the following order.

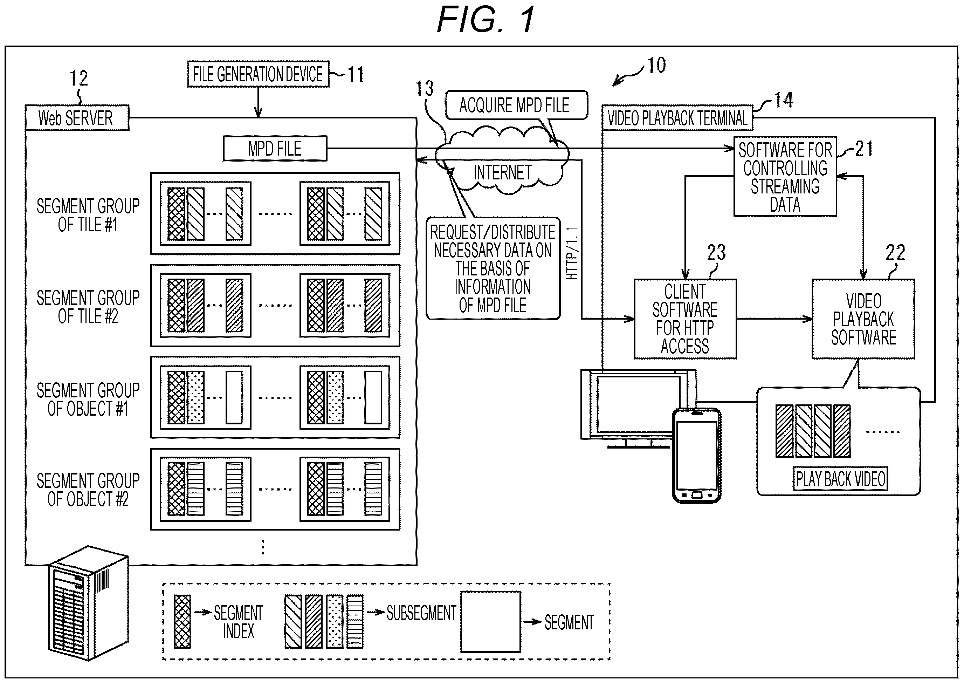

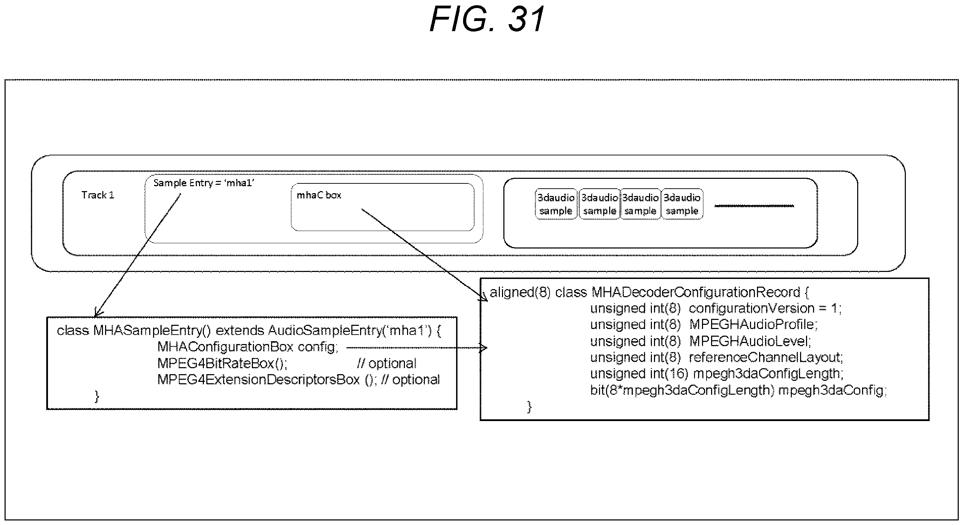

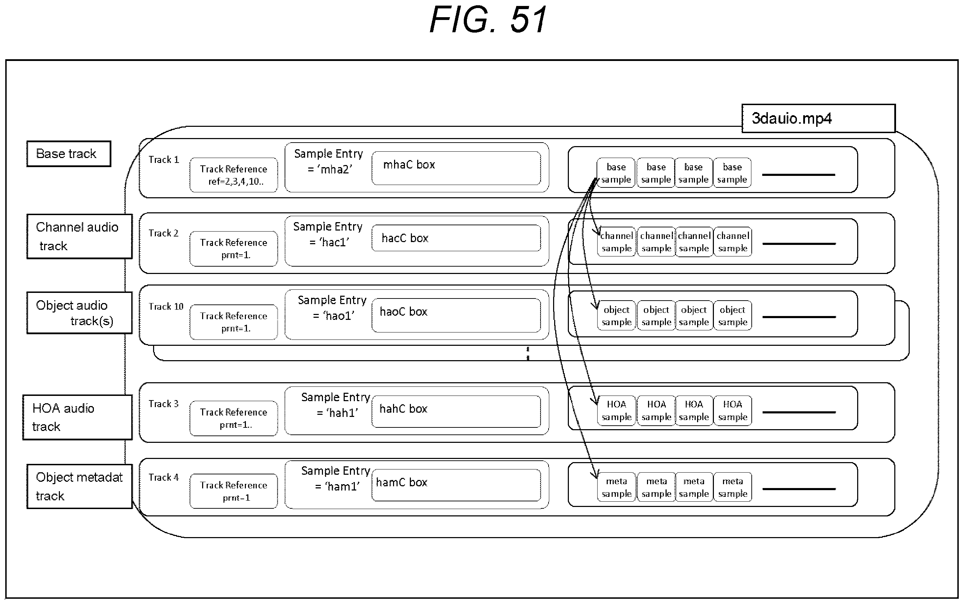

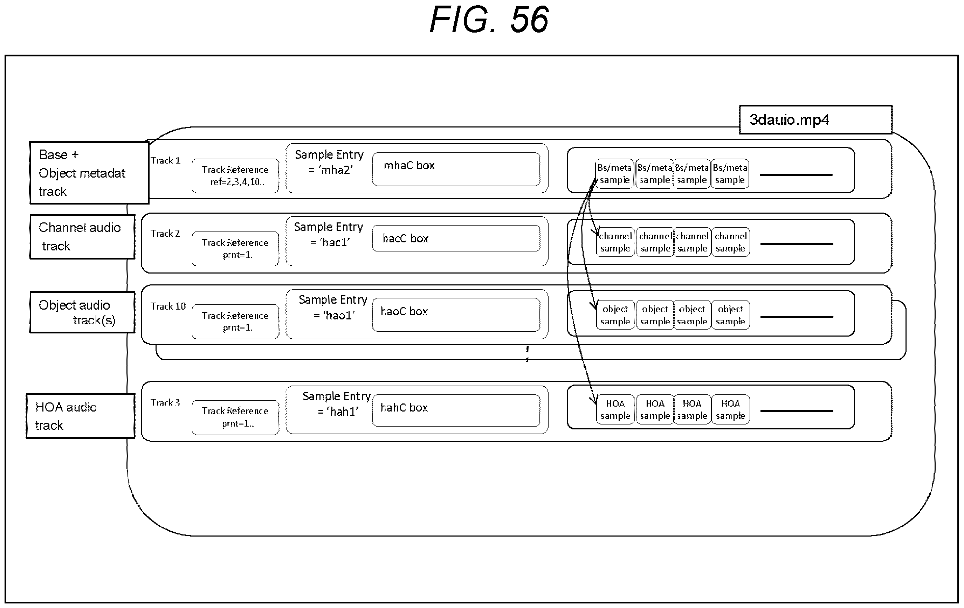

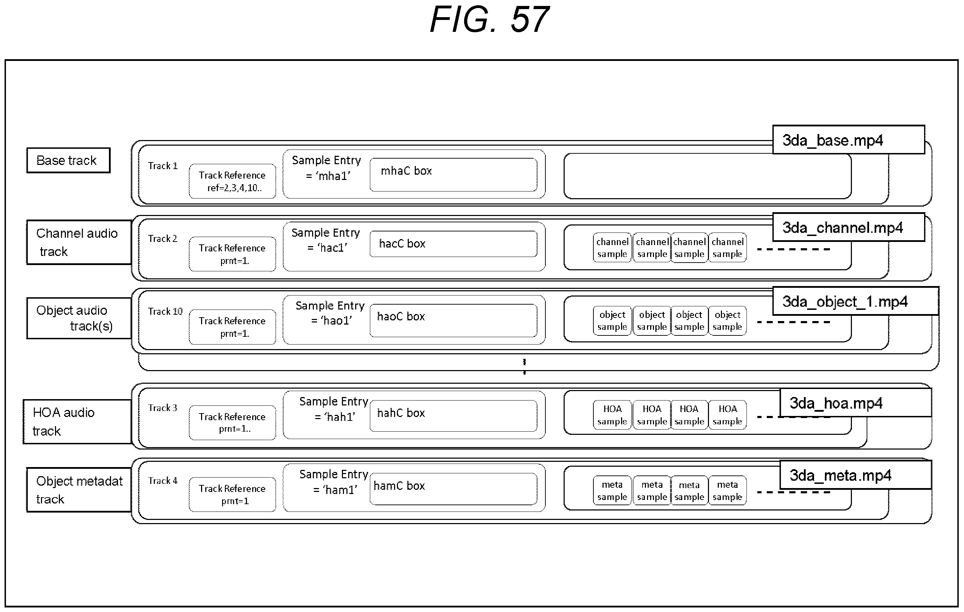

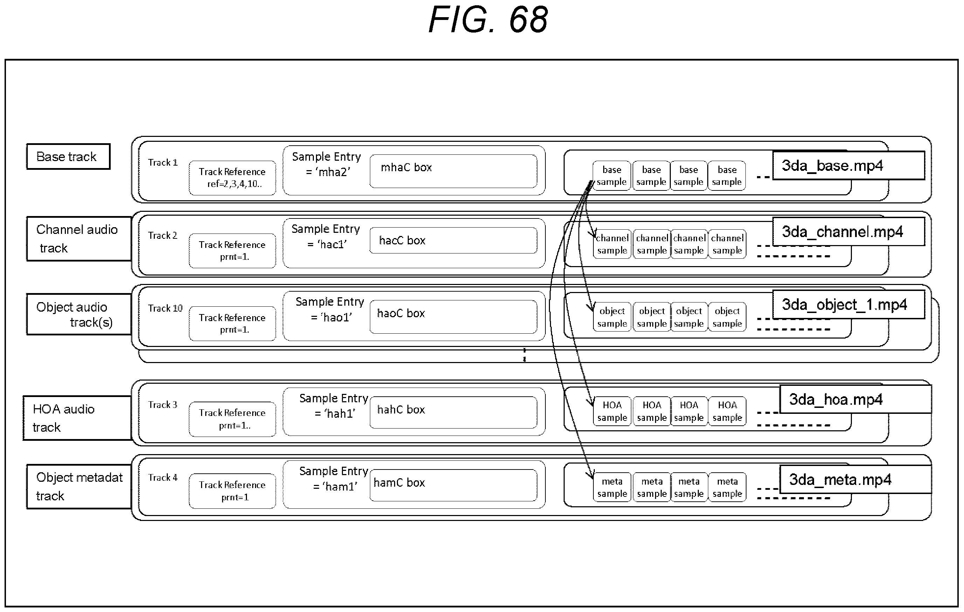

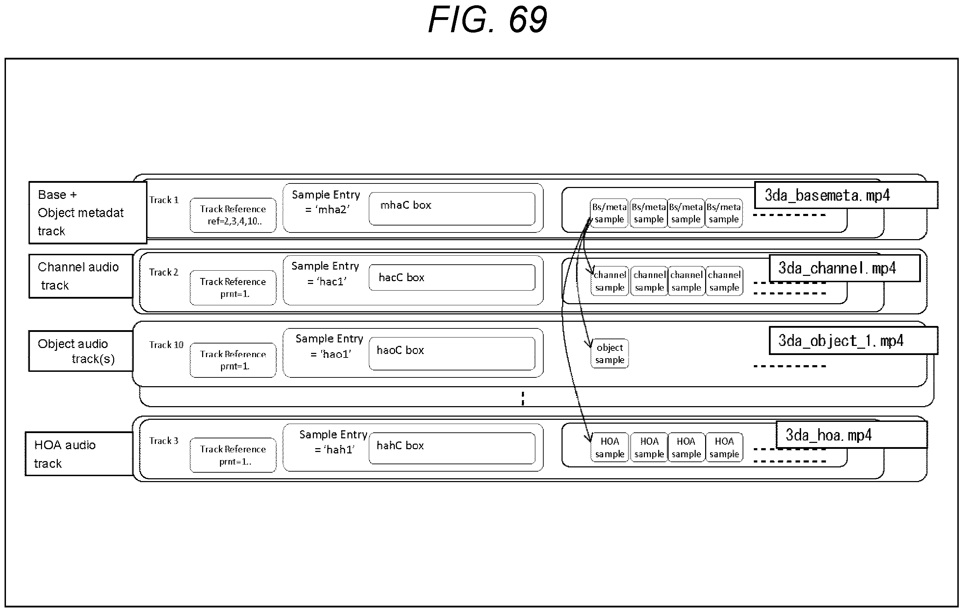

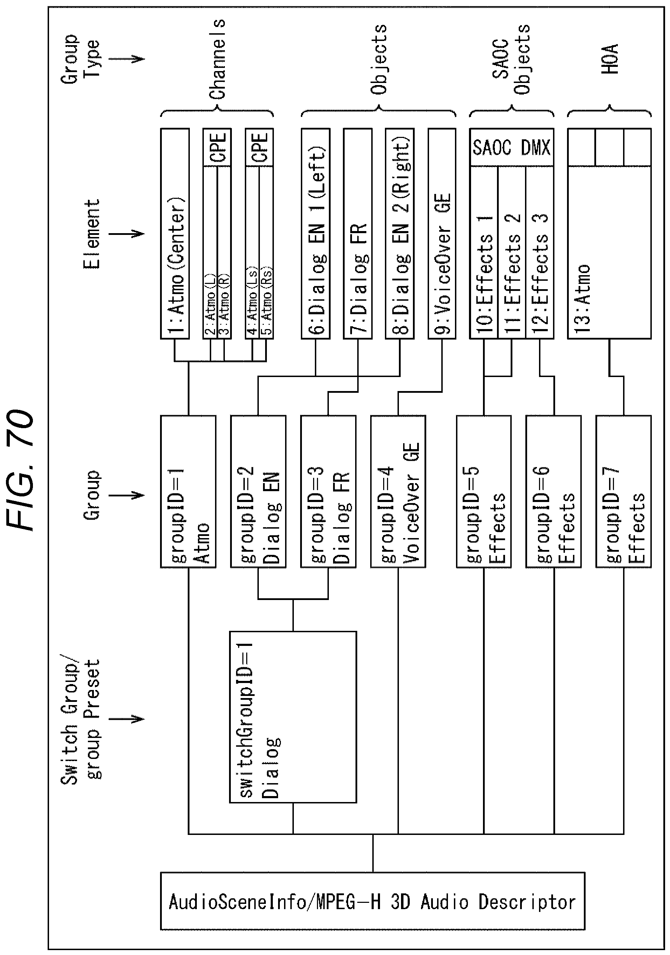

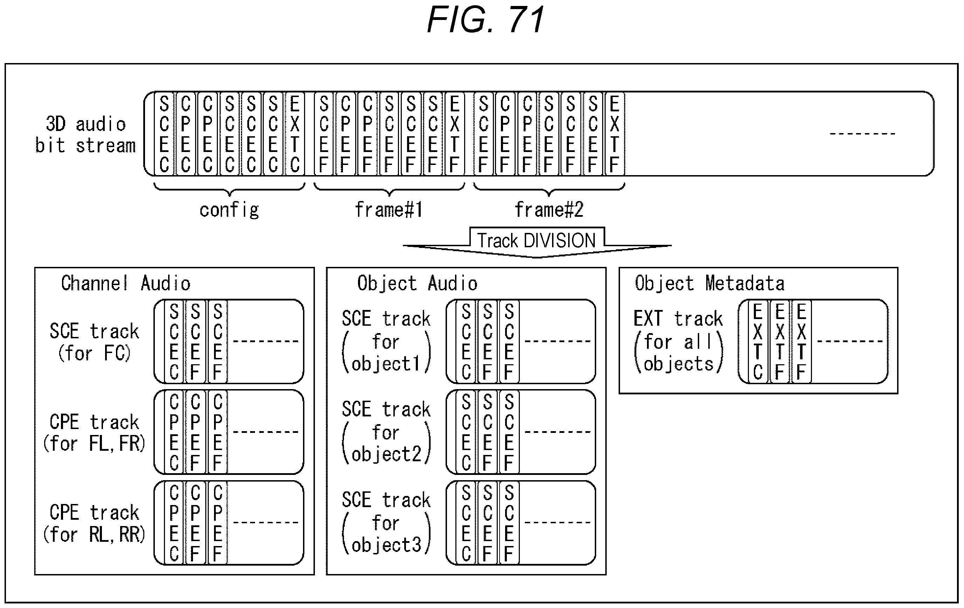

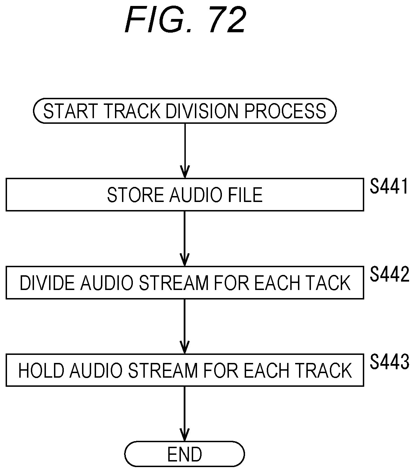

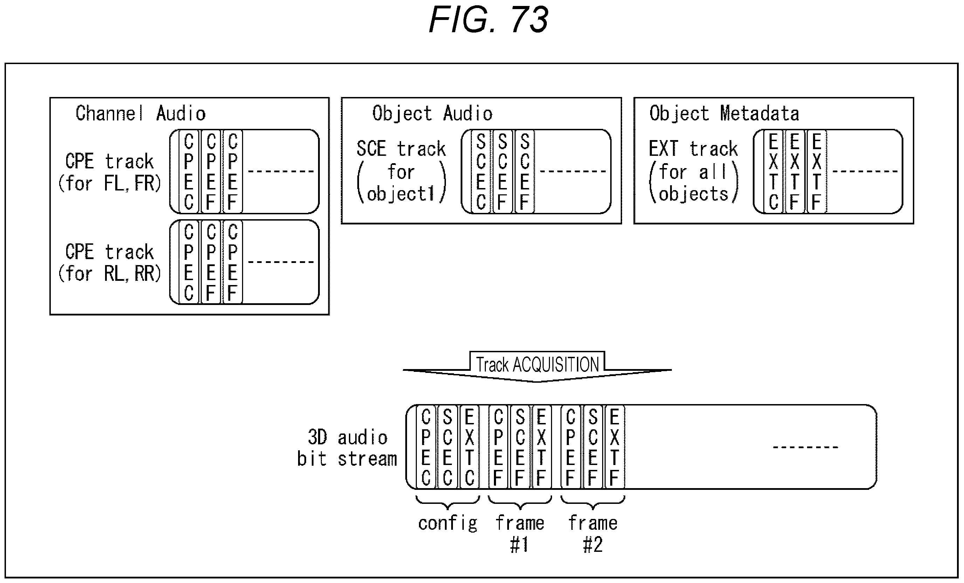

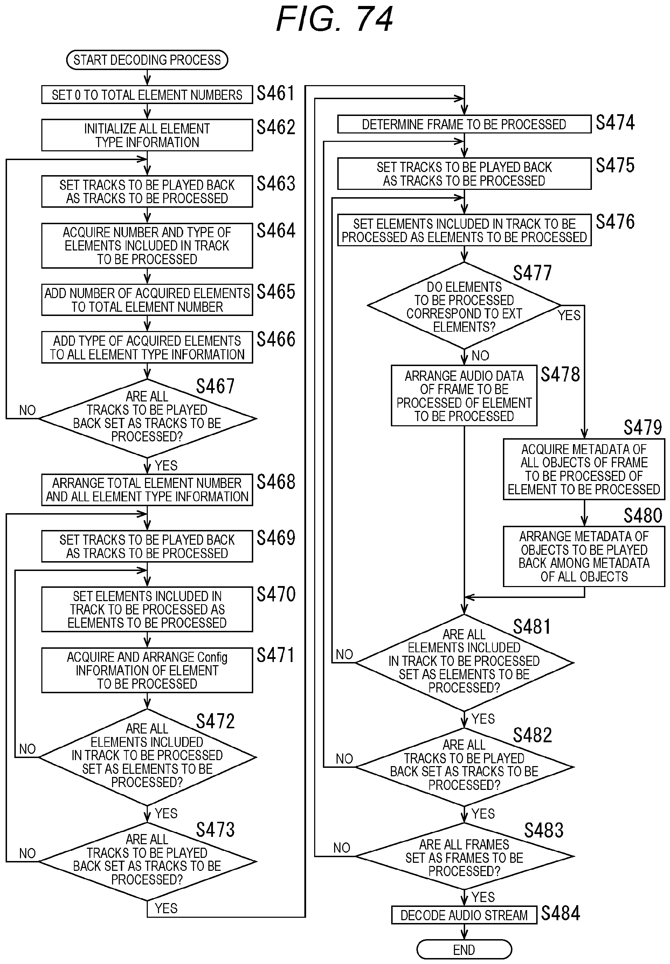

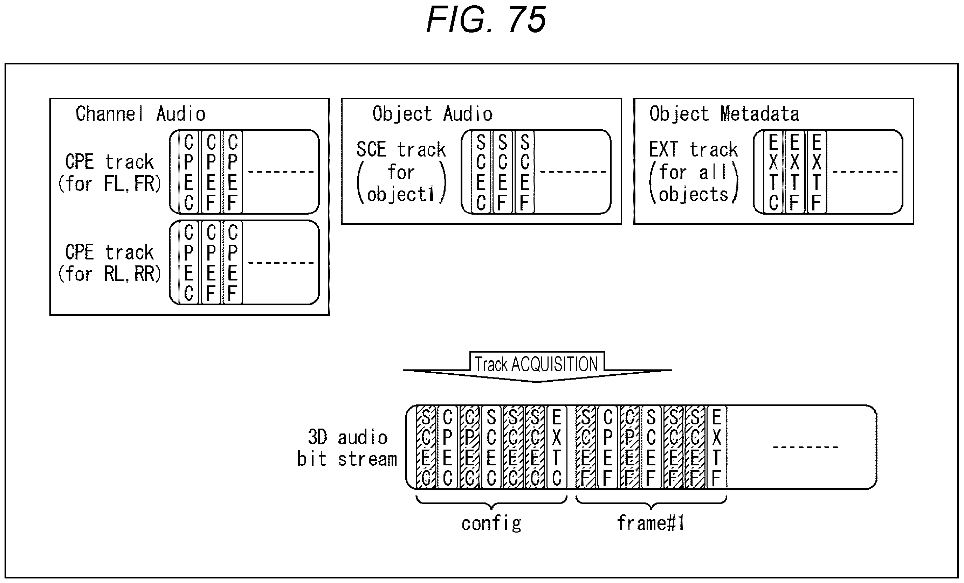

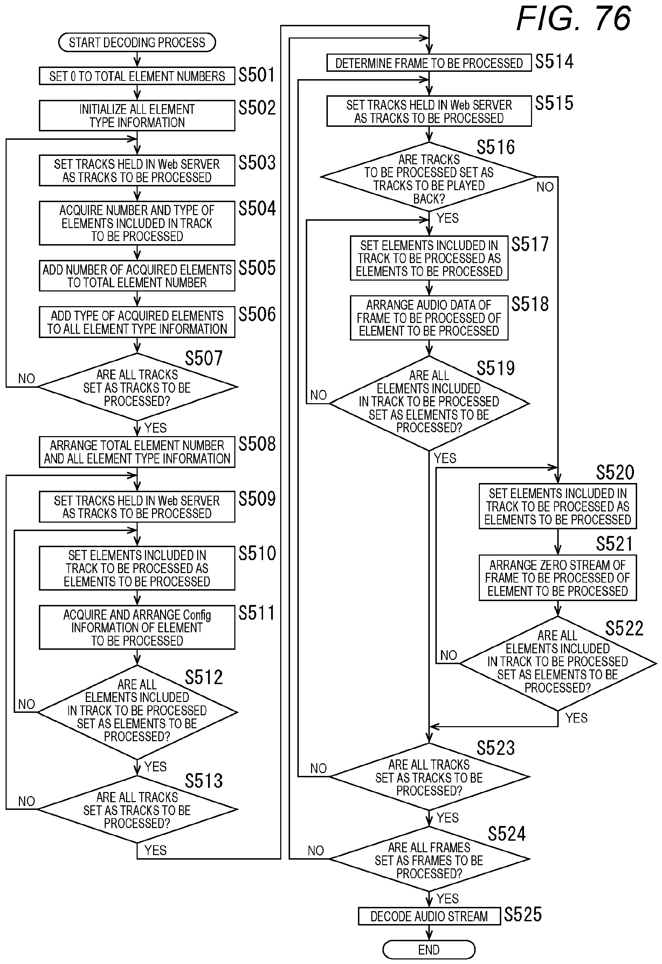

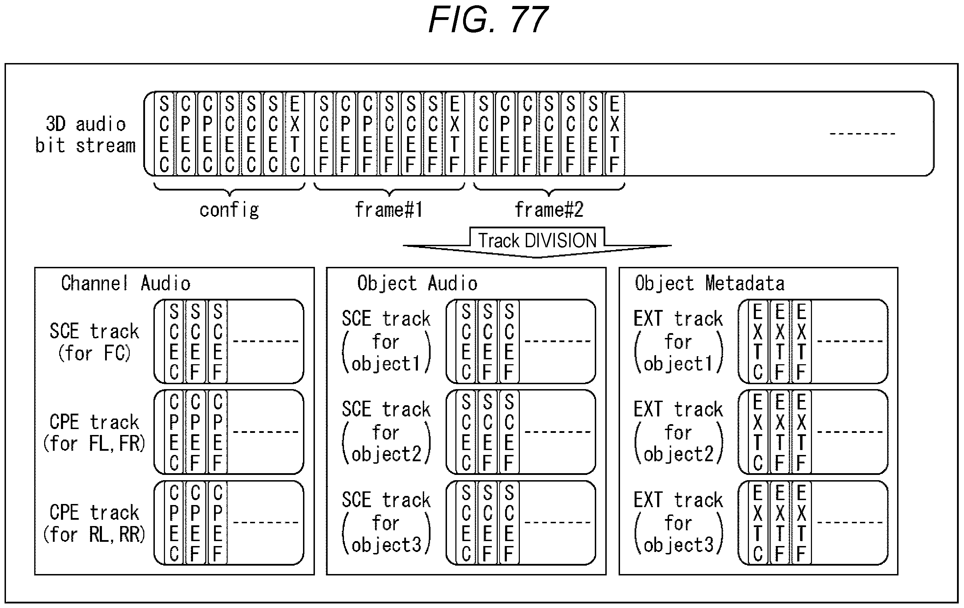

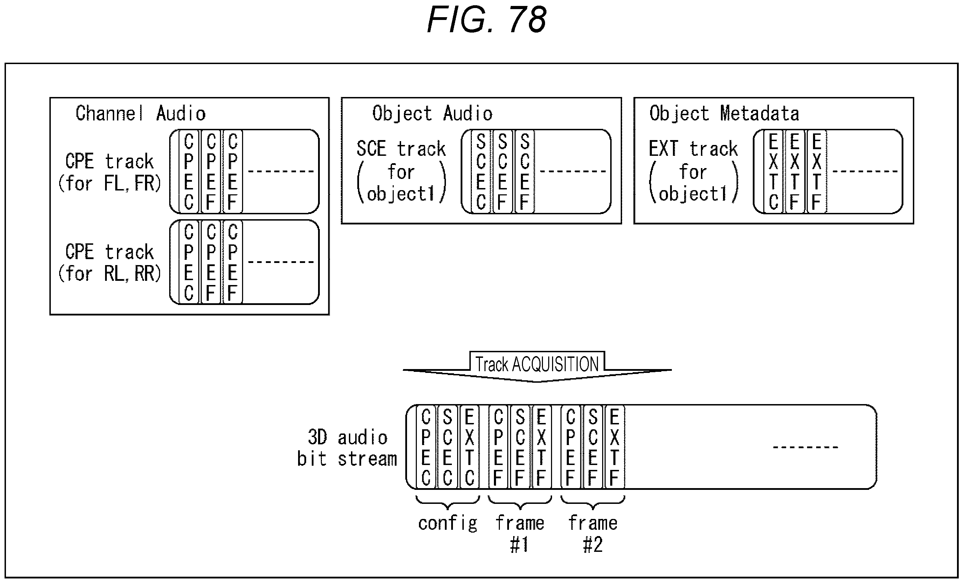

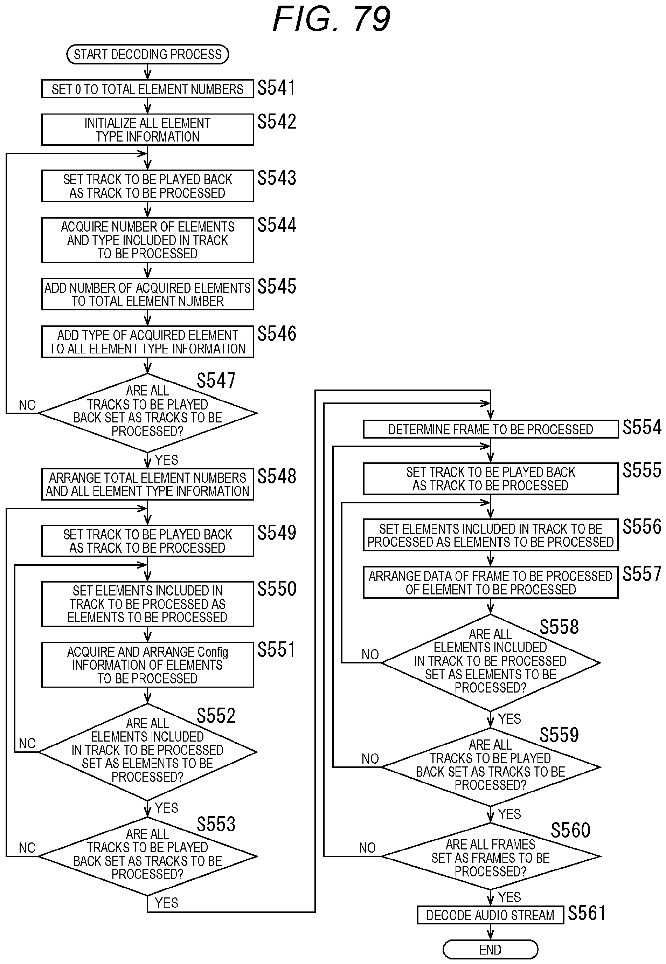

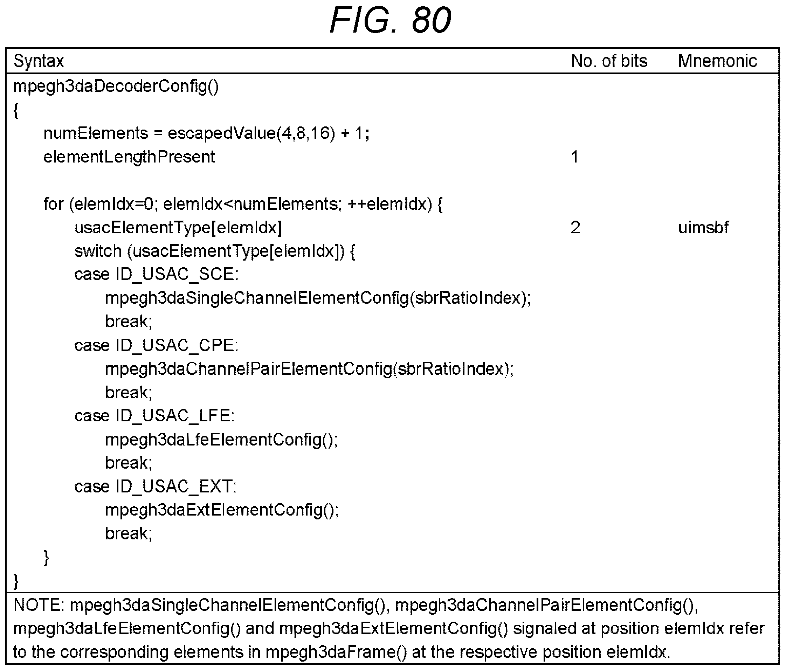

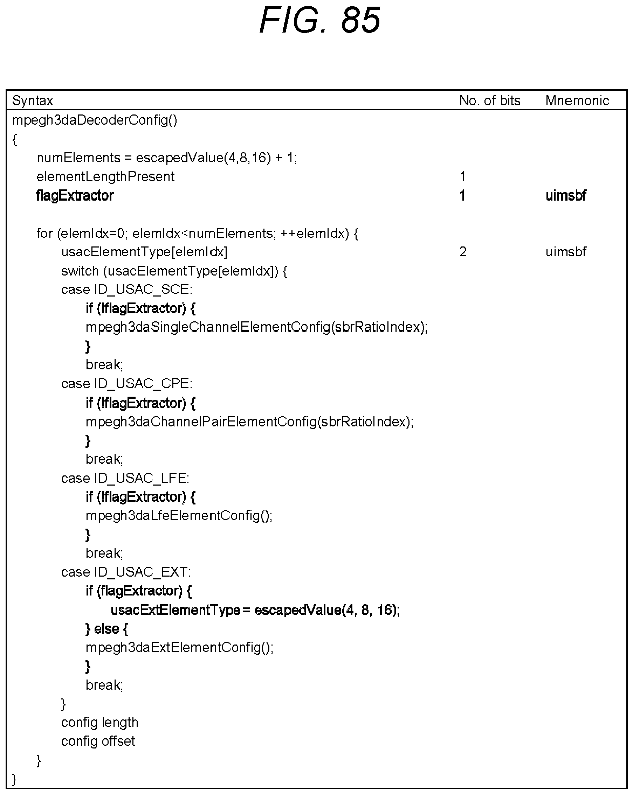

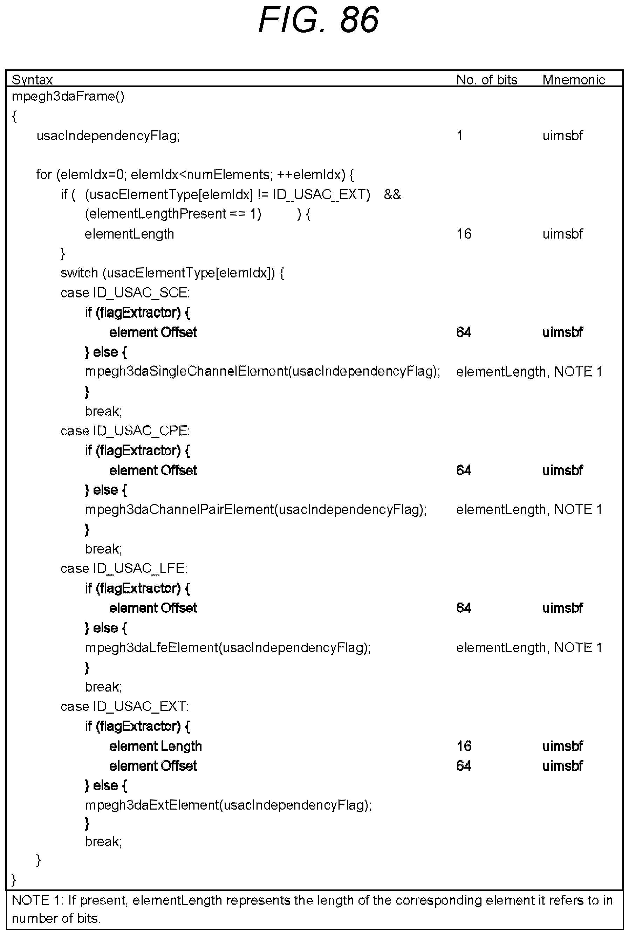

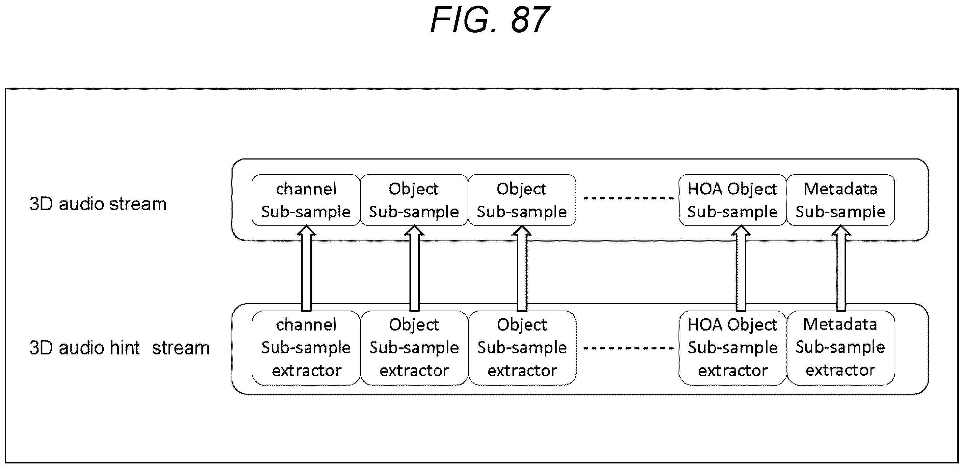

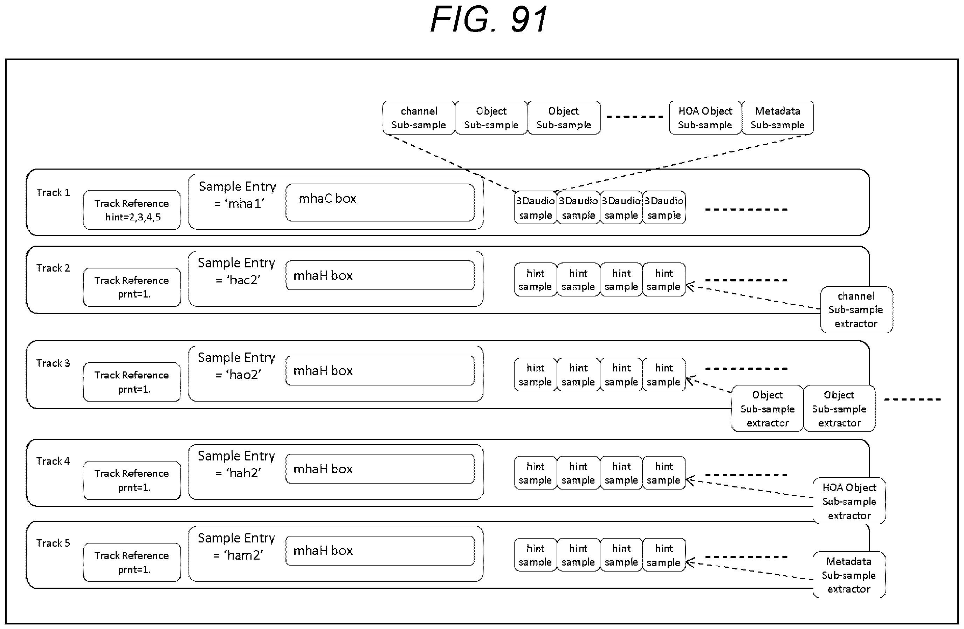

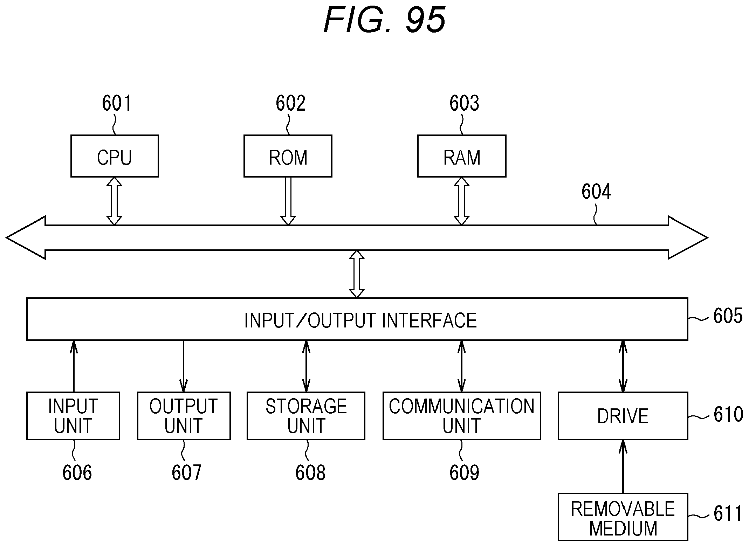

0. Premise of the present disclosure (Figs. 1 to 30)
1. First embodiment (Figs. 31 to 50)
2. Second embodiment (Figs. 51 to 55)
3. Third embodiment (Fig. 56)
4. Fourth embodiment (Figs. 57 to 67)
5. Fifth embodiment (Fig. 68)
6. Sixth embodiment (Fig. 69)
7. Explanation of Hierarchical Structure of 3D Audio (Fig. 70)
8. Explanation of First Example of Web Server Process (Figs. 71 and 72)
9. Explanation of First Example of Process of Audio Decoding Processing Unit (Figs. 73 and 74)
10. Explanation of Second Example of Process of Audio Decoding Processing Unit (Figs. 75 and 76)
11. Explanation of Second Example of Web Server Process (Fig. 77)
12. Explanation of Third Example of Process of Audio Decoding Processing Unit (Figs. 78 and 79)
13. Second Example of Syntax of Base Sample (Figs. 80 to 84)
14. Third Example of Syntax of Base Sample (Figs. 85 and 86)
15. Seventh embodiment (Figs. 87 to 90)
16. Eighth embodiment (Figs. 91 to 94)
17. Ninth embodiment (Fig. 95)

<Premise of Present Disclosure>

(Outline of First Example of Information Processing System)

Fig. 1 is a diagram illustrating an outline of a first example of an information processing system to which the present disclosure is applied.
An information processing system 10 shown in Fig. 1 has a configuration in which a Web server 12, which is connected to a file generation device 11, and a video playback terminal 14 are connected via the Internet 13.
In the information processing system 10, the Web server 12 delivers (tiled streaming) image data of video content to the video playback terminal 14 in units of tiles by a method compliant with MPEG-DASH.
Specifically, the file generation device 11 acquires the image data of video content and encodes the image data in units of tiles to generate a video stream. The file generation device 11 processes the video stream of each tile into a file format at time intervals ranging from several seconds to approximately ten seconds, which is called a segment. The file generation device 11 uploads the resulting image file of each tile to the Web server 12.
Further, the file generation device 11 acquires audio data of video content for each object (to be described in detail later) and encodes the image data in units of objects to generate an audio stream. The file generation device 11 processes the audio stream of each object into a file format in units of segments, and uploads the resulting audio file of each object to the Web server 12.
Note that the object is a sound source. The audio data of each object is acquired through a microphone or the like attached to the object. The object may be an object such as a fixed microphone stand, or may be a moving body such as a person.
The file generation device 11 encodes audio metadata including object position information (audio position information) indicating the position of each object (the position at which audio data is acquired) and an object ID that is an ID unique to the object. The file generation device 11 processes the encoded data obtained by encoding the audio metadata into a file format in unit of segments, and uploads the resulting audio metafile to the Web server 12.

Further, the file generation device 11 generates a media presentation description (MPD) file (control information) managing an image file and audio file and including image frame size information that indicates the frame size of images of video content and tile position information that indicates the position of each tile on an image. The file generation device 11 uploads the MPD file to the Web server 12.

The Web server 12 stores the image file, audio file, audio metafile, and MPD file which are uploaded from the file generation device 11.

In the example shown in Fig. 1, the Web server 12 stores a segment group of a plurality of segments composed of image files of a tile with a tile ID "1" and a segment group of a plurality of segments composed of image files of a tile with a tile ID "2". The Web server 12 also stores a segment group of a plurality of segments composed of audio files of an object with an object ID "1" and a segment group of a plurality of segments composed of audio files of an object with an object ID "2". Although not shown, a segment group composed of audio metafiles is similarly stored.

Note that a file with a tile ID of i is hereinafter referred to as "tile #i", and an object with an object ID of i is hereinafter referred to as "object #i".

The Web server 12 functions as a transmitter and transmits the stored image file, audio file, audio metafile, MPD file, and the like to the video playback terminal 14 in response to a request from the video playback terminal 14.

The video playback terminal 14 executes, for example, software for control of streaming data (hereinafter referred to as control software) 21, video playback software 22, and client software for hypertext transfer protocol (HTTP) access (hereinafter referred to as access software) 23.

The control software 21 is software to control data delivered via streaming from the Web server 12. Specifically, the control software 21 allows the video playback terminal 14 to acquire the MPD file from the Web server 12.

Further, the control software 21 specifies a tile in a display area on the basis of the display area that is an area in an image used to display a video content indicated by the video playback software 22 and the tile position information included in the MPD file. The control software 21 instructs the access software 23 to issue a request to transmit an image file of the specified tile.

Further, the control software 21 instructs the access software 23 to issue a request to transmit the audio metafile. The control software 21 specifies an object corresponding to an image in the display area, on the basis of the display area, the image frame size information included in the MPD file, and the object position information included in the audio metafile. The control software 21 instructs the access software 23 to issue a request to transmit an audio file of the specified object.

The video playback software 22 is software to play back the image file and audio file acquired from the Web server 12. Specifically, when a user specifies a display area, the video playback software 22 indicates the specified display area to the control software 21. The video playback software 22 decodes the image file and audio file acquired from the Web server 12 in response to the indication, and the video playback software 22 synthesizes and outputs the decoded files.

The access software 23 is software to control communication with the Web server 12 via the Internet 13 using HTTP. Specifically, the access software 23 allows the video playback terminal 14 to transmit the request to transmit the image file, audio file, and audio metafile in response to the instruction from the control software 21. Further, the access software 23 allows the video playback terminal 14 to receive the image file, audio file, and audio metafile transmitted from the Web server 12 in response to the transmission request.

(Example of Tile)

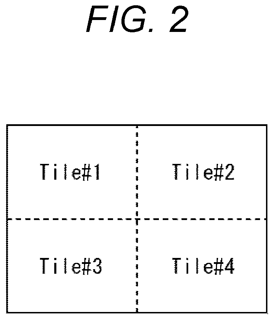

Fig. 2 is a diagram showing an example of a tile.

As shown in Fig. 2, an image of video content is divided into a plurality of tiles. A tile ID that is a sequential number starting from 1 is assigned to each tile. In the example shown in Fig. 2, an image of video content is divided into four tiles #1 to #4.

(Explanation of Object)

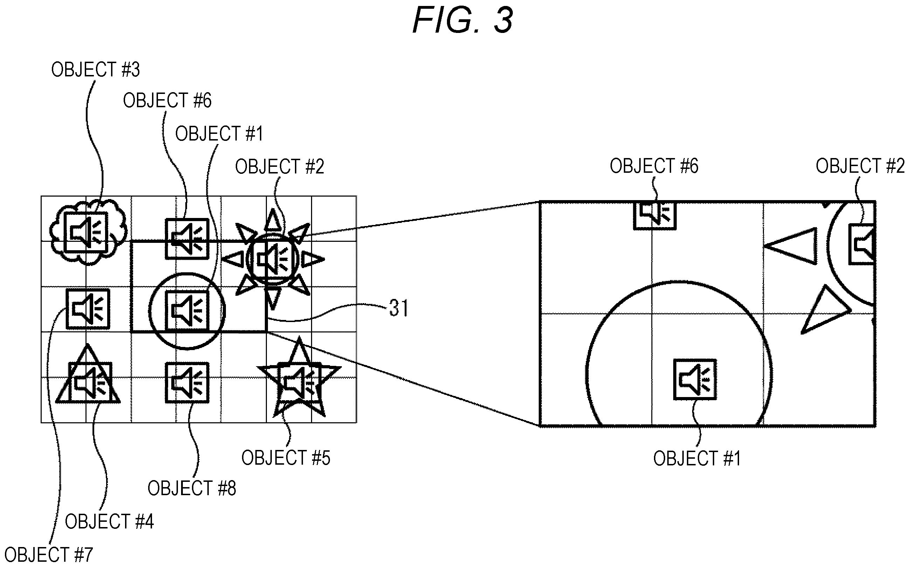

Fig. 3 is a diagram illustrating an object.

The example of Fig. 3 illustrates eight audio objects in an image acquired as an audio of video content. An object ID that is a sequential number starting from 1 is assigned to each object. Objects #1 to #5 are moving bodies, and objects #6 to #8 are fixed material bodies. Further, in the example of Fig. 3, the image of video content is divided into 7 (width) $\times$ 5 (height) tiles.

In this case, as shown in Fig. 3, when the user specifies a display area 31 composed of 3 (width) $\times$ 2 (height) tiles, the display area 31 includes only objects #1, #2, and #6. Thus, the video playback terminal 14 acquires and plays back, for example, only the audio files of the objects #1, #2, and #6 from the Web server 12.

The objects in the display area 31 can be specified on the basis of the image frame size information and the object position information as described below.

(Explanation of Object Position Information)

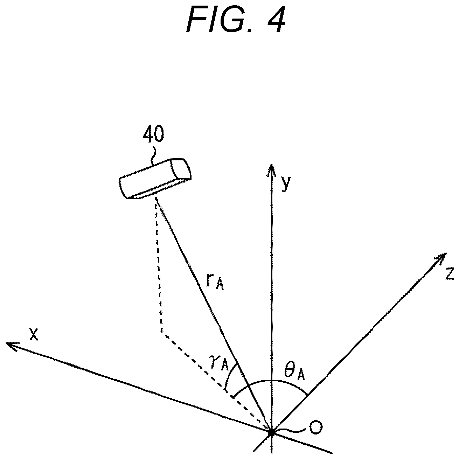

Fig. 4 is a diagram illustrating the object position information.

As shown in Fig. 4, the object position information includes a horizontal angle $\theta_A$ (-180° ≤ $\theta_A$ ≤ 180°), a vertical angle $\gamma_A$ (-90° ≤ $\gamma_A$ ≤ 90°), and a distance $r_A$ (0 < $r_A$) of an object 40. The horizontal angle $\theta_A$ is the angle in the horizontal direction formed by the straight line connecting the object 40 and an origin O and a YZ plane, for example, when a shooting position in the center of an image may be set to the origin (base point) O; the horizontal direction of the image is set to an X direction; the vertical direction of the image is set to a Y direction; and the depth direction perpendicular to the XY plane is set to a Z direction. The vertical angle $\gamma_A$ is the angle in the vertical direction formed by the straight line connecting the object 40 and the origin O and the XZ plane. The distance $r_A$ is the distance between the object 40 and the origin O.

Furthermore, assume herein that the angle of the left and up rotation is set to a positive angle, and the angle of the right and down rotation is set to a negative angle.

(Explanation of Image Frame Size Information)

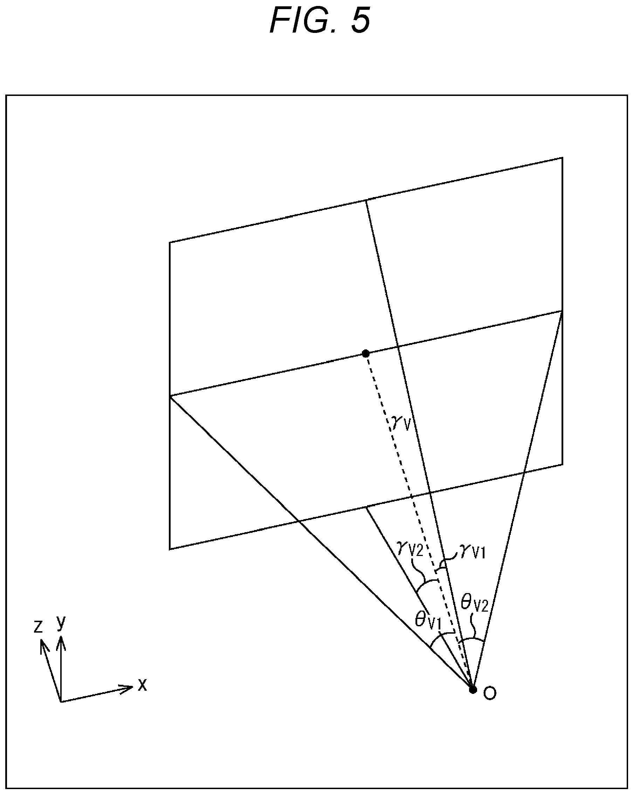

Fig. 5 is a diagram illustrating the image frame size information.

As shown in Fig. 5, the image frame size information includes a horizontal angle $\theta_{v1}$ of the left end, a horizontal angle $\theta_{v2}$ of the right end, a vertical angle $\gamma_{v1}$ of the upper end, a vertical angle $\gamma_{v2}$ of the lower end, and a distance $r_v$ in the image frame.

The horizontal angle $\theta_{v1}$ is the angle in the horizontal direction formed by the straight line connecting the left end of an image frame and the origin O and the YZ plane, for example, when a shooting position in the center of an image is set to the origin O; the horizontal direction of the image is set to the X direction; the vertical direction of the image is set to the Y direction; and the depth direction perpendicular to the XY plane is set to the Z direction. The horizontal angle $\theta_{v2}$ is the angle in the horizontal direction formed by the straight line connecting the right end of an image frame and the origin O and the YZ plane. Thus, an angle obtained by combining the horizontal angle $\theta_{v1}$ and the horizontal angle $\theta_{v2}$ is a horizontal angle of view.

The vertical angle $\gamma_{v1}$ is the angle formed by the XZ plane and the straight line connecting the upper end of the image frame and the origin O, and the vertical angle $\gamma_{v2}$ is the angle formed by the XZ plane and the straight line connecting the lower end of the image frame and the origin O. An angle obtained by combining the vertical angles $\gamma_{v1}$ and $\gamma_{v2}$ becomes a vertical angle of view. The distance $r_v$ is the distance between the origin O and the image plane.

As described above, the object position information represents the positional relationship between the object 40 and the origin O, and the image frame size information represents the positional relationship between the image frame and the origin O. Thus, it is possible to detect (recognize) the position of each object on the image on the basis of the object position information and the image frame size information. As a result, it is possible to specify an object in the display area 31.

(Explanation of Structure of MPD File)

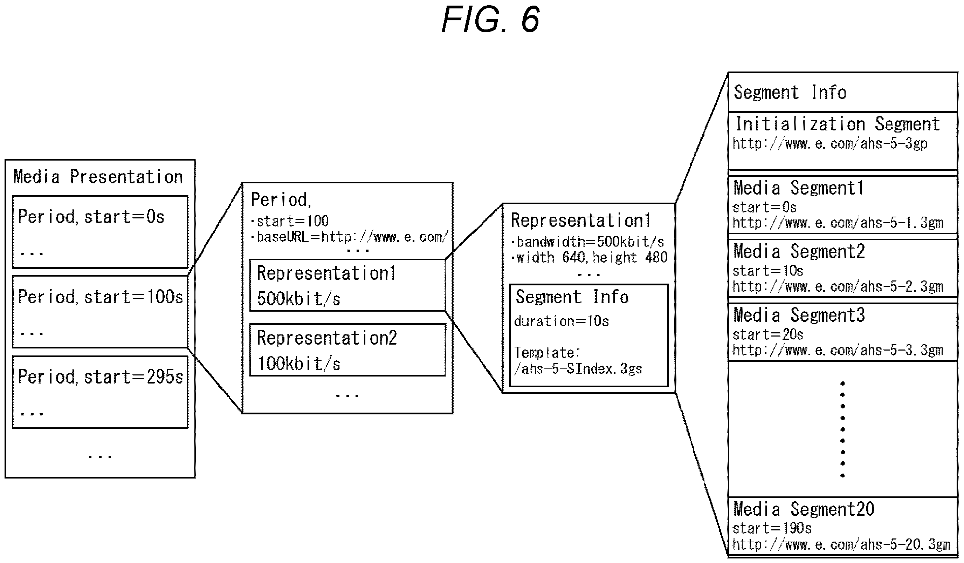

Fig. 6 is a diagram illustrating the structure of an MPD file.

In the analysis (parsing) of an MPD file, the video playback terminal 14 selects an optimum one among attributes of "Representation" included in "Period" of the MPD file (Media Presentation in Fig. 6).

The video playback terminal 14 acquires a file by referring to a uniform resource locator (URL) or the like of "Initialization Segment" at the head of the selected "Representation", and processes the acquired file. Then, the video playback terminal 14 acquires a file by referring to the URL or the like of the subsequent "Media Segment", and plays back the acquired file.

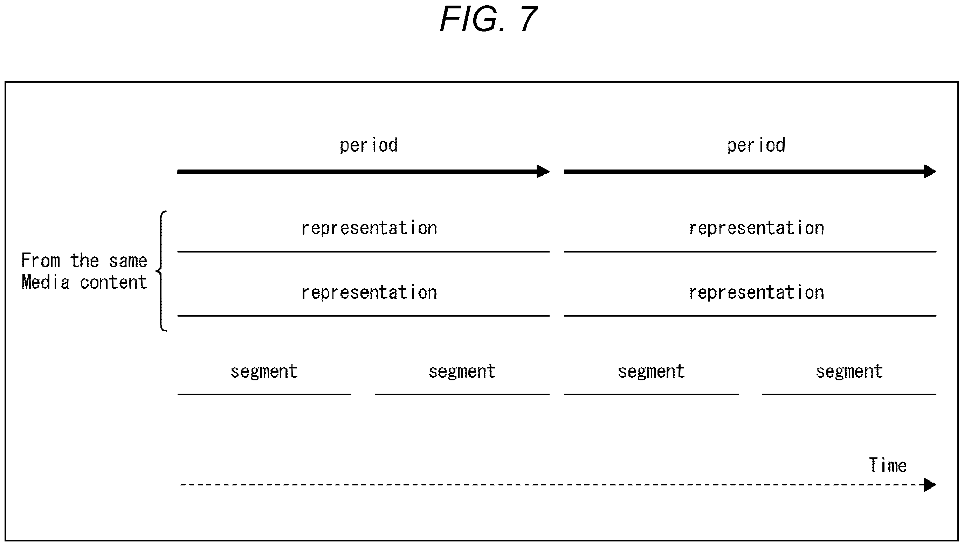

Note that in the MPD file, the relationship among "Period", "Representation", and "Segment" becomes as shown in Fig. 7. In other words, a single video content item can be managed in a longer time unit than the segment by "Period", and can be managed in units of segments by "Segment" in each "Period". Further, in each "Period", it is possible to manage the video content in units of stream attributes by "Representation".

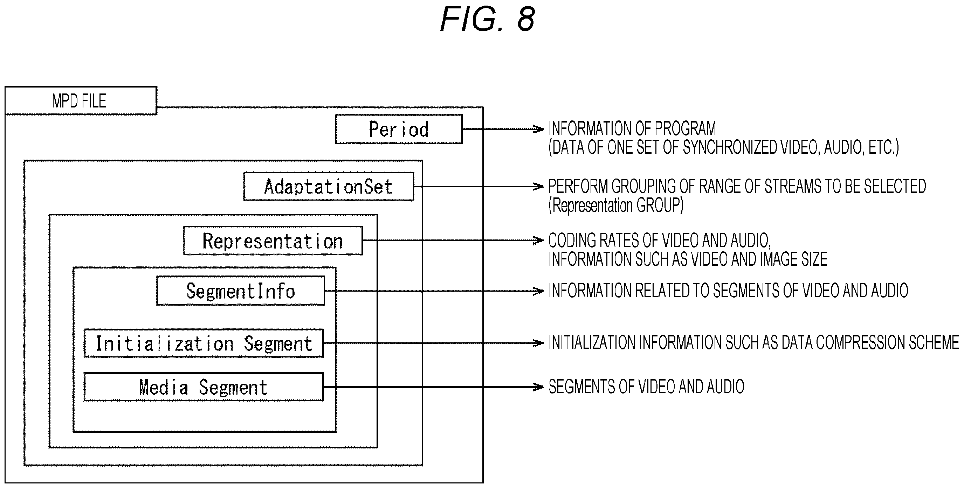

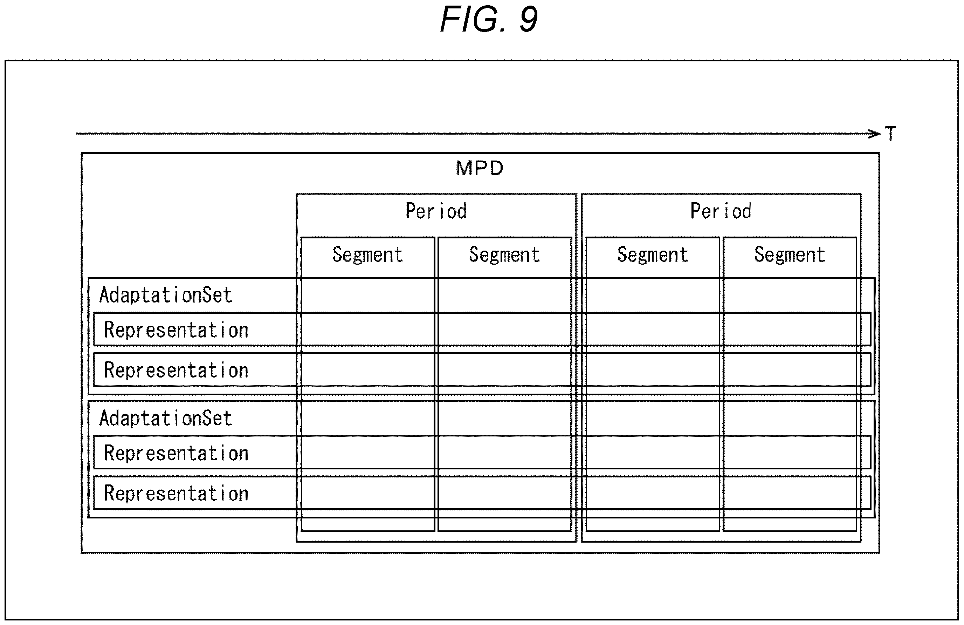

Thus, the MPD file has a hierarchical structure shown in Fig. 8, starting from the "Period". Further, the structure of the MPD file arranged on the time axis becomes the configuration as shown in Fig. 9. As is clear from Fig. 9, there are a plurality of "Representation" elements in the same segment. The video playback terminal 14 selects any one from among these elements adaptively, and thus it is possible to acquire an image file and audio file in the display area selected by the user and to play back the acquired file.

(Explanation of Description of MPD File)

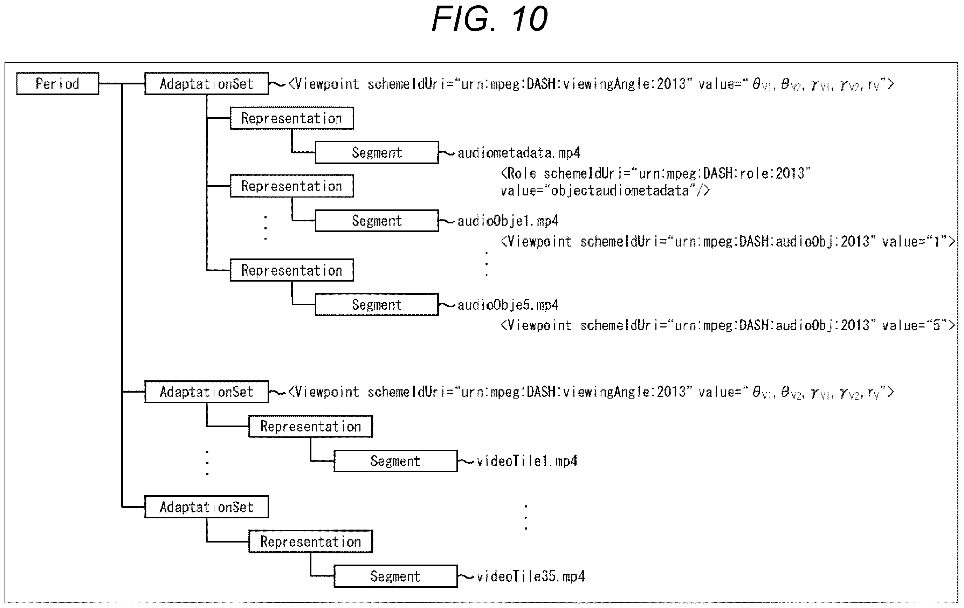

Fig. 10 is a diagram illustrating the description of an MPD file.

As described above, in the information processing system 10, the image frame size information is included in the MPD file to allow an object in the display area to be specified by the video playback terminal 14. As shown in Fig. 10, Scheme (urn:mpeg:DASH:viewingAngle:2013) used to define new image frame size information (viewing angle) is extended by utilizing a DescriptorType element of Viewpoint, and thus the image frame size information is arranged in an "Adaptation Set" for audio and an "Adaptation Set" for image. The image frame size information may be arranged only in the "Adaptation Set" for image.

Further, the "Representation" for audio metafile is described in the "Adaptation Set" for audio of the MPD file. A URL or the like as information for specifying the audio metafile (audiometadata.mp4) is described in "Segment" of the "Representation". In this case, it is described that the file to be specified in "Segment" is the audio metafile (objectaudiometadata) by utilizing Role element.

The "Representation" for audio file of each object is also described in "Adaptation Set" for audio of the MPD file. A URL or the like as information for specifying the audio file (audioObje1.mp4, audioObje5.mp4) of each object is described in "Segment" of the "Representation". In this case, object IDs (1 and 5) of the objects corresponding to the audio file are also described by extending Viewpoint.

Note that, although not shown, the tile position information is arranged in the "Adaptation Set" for image.

(Configuration Example of File Generation Device)

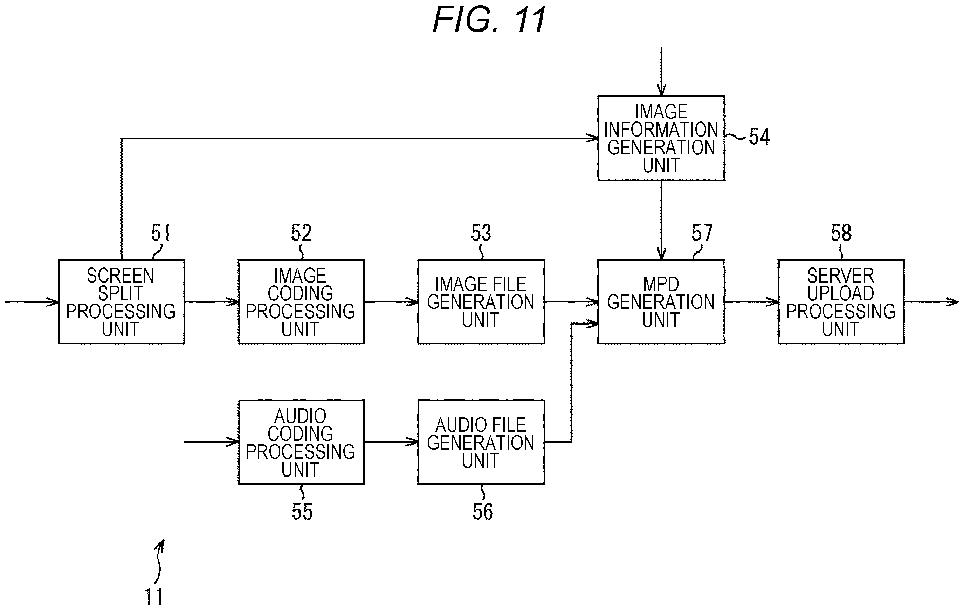

Fig. 11 is a block diagram showing a configuration example of the file generation device 11 shown in Fig. 1.

The file generation device 11 shown in Fig. 11 includes a screen split processing unit 51, an image coding processing unit 52, an image file generation unit 53, an image information generation unit 54, an audio coding processing unit 55, an audio file generation unit 56, an MPD generation unit 57, and a server upload processing unit 58.

The screen split processing unit 51 of the file generation device 11 splits image data of video content input from the outside into tile units. The screen split processing unit 51 supplies the image information generation unit 54 with the tile position information. Further, the screen split processing unit 51 supplies the image coding processing unit 52 with the image data configured in units of tiles.

The image coding processing unit 52 encodes the image data, which is configured in units of tiles and is supplied from the screen split processing unit 51, for each tile to generate a video stream. The image coding processing unit 52 supplies the image file generation unit 53 with the video stream of each tile.

The image file generation unit 53 processes the video stream of each tile supplied from the image coding processing unit 52 into a file format in units of segments and supplies the MPD generation unit 57 with the resulting image file of each tile.

The image information generation unit 54 supplies the MPD generation unit 57 with the tile position information supplied from the screen split processing unit 51 and with the image frame size information input from the outside as image information.

The audio coding processing unit 55 encodes audio data, which is configured in units of objects of video content input from the outside, for each object, and generates an audio stream. Further, the audio coding processing unit 55 encodes the object position information of each object input from the outside and the audio metadata including the object ID and the like to generate encoded data. The audio coding processing unit 55 supplies the audio file generation unit 56 with the audio stream of each object and the encoded data of the audio metadata.

The audio file generation unit 56 functions as an audio file generation unit, processes the audio stream of each object supplied from the audio coding processing unit 55 into a file format in units of segments, and supplies the MPD generation unit 57 with the resulting audio file of each object.

Further, the audio file generation unit 56 functions as a metafile generation unit, processes the encoded data of audio metadata supplied from the audio coding processing unit 55 into a file format in units of segments, and supplies the MPD generation unit 57 with the resulting audio metafile.

The MPD generation unit 57 determines the URL or the like of the Web server 12 for storing the image file of each tile supplied from the image file generation unit 53. Further, the MPD generation unit 57 determines the URL or the like of the Web server 12 for storing the audio file of each object and the audio metafile which are supplied from the audio file generation unit 56.

The MPD generation unit 57 arranges the image information supplied from the image information generation unit 54 in "AdaptationSet" for an image of the MPD file. Further, the MPD generation unit 57 arranges the image frame size information among the pieces of image information in "AdaptationSet" for audio of the MPD file. The MPD generation unit 57 arranges the URL or the like of the image file of each tile in "Segment" of "Representation" for the image file of the tile.

The MPD generation unit 57 arranges the URL or the like of the audio file of each object in "Segment" of "Representation" for audio file of the object. Further, the MPD generation unit 57 functions as an information generation unit, and arranges a URL or the like as information for specifying an audio metafile in "Segment" of "Representation" for audio metafile. The MPD generation unit 57 supplies the server upload processing unit 58 with the MPD file in which various types of information are arranged as described above, the image file, the audio file, and the audio metafile.

The server upload processing unit 58 uploads the image file of each tile, the audio file of each object, the audio metafile, and the MPD file, which are supplied from the MPD generation unit 57, to the Web server 12.

(Explanation of Process of File Generation Device)

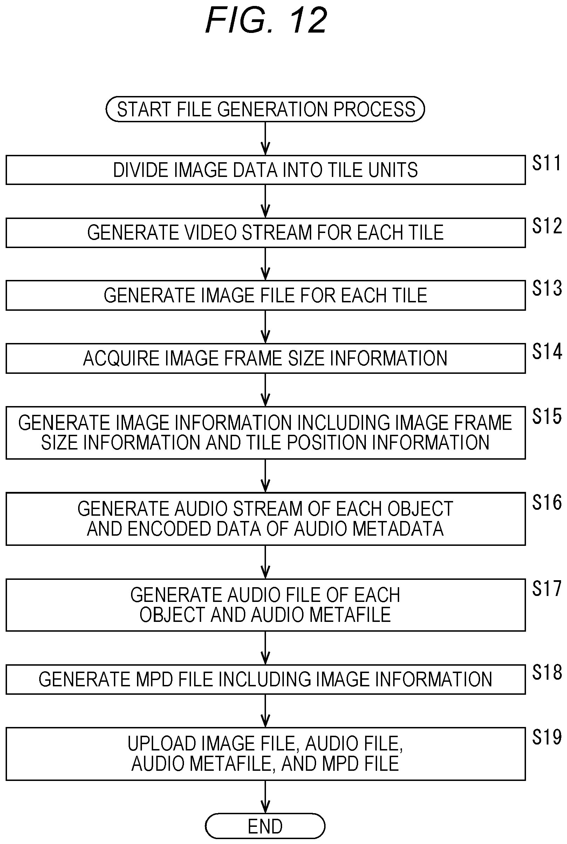

Fig. 12 is a flowchart illustrating a file generation process of the file generation device 11 shown in Fig. 11.

In step S11 of Fig. 12, the screen split processing unit 51 of the file generation device 11 splits image data of video content input from the outside into tile units. The screen split processing unit 51 supplies the image information generation unit 54 with the tile position information. Further, the screen split processing unit 51 supplies the image coding processing unit 52 with the image data configured in units of tiles.

In step S12, the image coding processing unit 52 encodes the image data, which is configured in units of tiles and is supplied from the screen split processing unit 51, for each tile to generate a video stream of each tile. The image coding processing unit 52 supplies the image file generation unit 53 with the video stream of each tile.

In step S13, the image file generation unit 53 processes the video stream of each tile supplied from the image coding processing unit 52 into a file format in units of segments to generate an image file of each tile. The image file generation unit 53 supplies the MPD generation unit 57 with the image file of each tile.

In step S14, the image information generation unit 54 acquires the image frame size information from the outside. In step S15, the image information generation unit 54 generates image information including the tile position information supplied from the screen split processing unit 51 and the image frame size information, and supplies the MPD generation unit 57 with the image information.

In step S16, the audio coding processing unit 55 encodes audio data, which is configured in units of objects of video content input from the outside, for each object, and generates an audio stream of each object. Further, the audio coding processing unit 55 encodes the object position information of each object input from the outside and the audio metadata including the object ID to generate encoded data. The audio coding processing unit 55 supplies the audio file generation unit 56 with the audio stream of each object and the encoded data of the audio metadata.

In step S17, the audio file generation unit 56 processes the audio stream of each object supplied from the audio coding processing unit 55 into a file format in units of segments to generate an audio file of each object. Further, the audio file generation unit 56 processes the encoded data of the audio metadata supplied from the audio coding processing unit 55 into a file format in units of segments to generate an audio metafile. The audio file generation unit 56 supplies the MPD generation unit 57 with the audio file of each object and the audio metafile.

In step S18, the MPD generation unit 57 generates an MPD file including the image information supplied from the image information generation unit 54, the URL or the like of each file. The MPD generation unit 57 supplies the server upload processing unit 58 with the MPD file, the image file of each tile, the audio file of each object, and the audio metafile.

In step S19, the server upload processing unit 58 uploads the image file of each tile, the audio file of each object, the audio metafile, and the MPD file, which are supplied from the MPD generation unit 57, to the Web server 12. Then, the process is terminated.

(Functional Configuration Example of Video Playback Terminal)

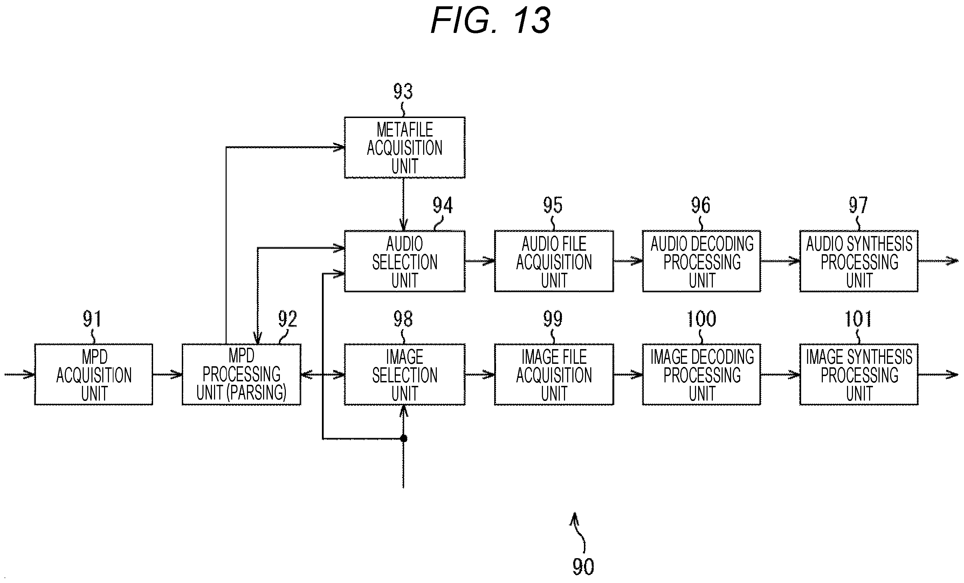

Fig. 13 is a block diagram showing a configuration example of the streaming playback unit which is implemented in such a manner that the video playback terminal 14 shown in Fig. 1 executes the control software 21, the video playback software 22, and the access software 23.

A streaming playback unit 90 shown in Fig. 13 includes an MPD acquisition unit 91, an MPD processing unit 92, a metafile acquisition unit 93, an audio selection unit 94, an audio file acquisition unit 95, an audio decoding processing unit 96, an audio synthesis processing unit 97, an image selection unit 98, an image file acquisition unit 99, an image decoding processing unit 100, and an image synthesis processing unit 101.

The MPD acquisition unit 91 of the streaming playback unit 90 functions as a receiver, acquires an MPD file from the Web server 12, and supplies the MPD processing unit 92 with the MPD file.

The MPD processing unit 92 extracts information such as a URL, which is described in "Segment" for audio metafile, from the MPD file supplied from the MPD acquisition unit 91, and supplies the metafile acquisition unit 93 with the extracted information. Further, the MPD processing unit 92 extracts image frame size information, which is described in "AdaptationSet" for image, from the MPD file, and supplies the audio selection unit 94 with the extracted information. The MPD processing unit 92 extracts information such as a URL, which is described in "Segment" for audio file of the object requested from the audio selection unit 94, from the MPD file, and supplies the audio selection unit 94 with the extracted information.

The MPD processing unit 92 extracts the tile position information described in "AdaptationSet" for image from the MPD file and supplies the image selection unit 98 with the extracted information. The MPD processing unit 92 extracts information such as a URL, which is described in "Segment" for the image file of the tile requested from the image selection unit 98, from the MPD file, and supplies the image selection unit 98 with the extracted information.

On the basis of the information such as a URL supplied from the MPD processing unit 92, the metafile acquisition unit 93 requests the Web server 12 to send an audio metafile specified by the URL, and acquires the audio metafile. The metafile acquisition unit 93 supplies the audio selection unit 94 with object position information included in the audio metafile.

The audio selection unit 94 functions as a position determination unit, and calculates a position of each object on the image on the basis of the image frame size information supplied from the MPD processing unit 92 and the object position information supplied from the metafile acquisition unit 93. The audio selection unit 94 selects an object in the display area designated by the user on the basis of the position of each object on the image. The audio selection unit 94 requests the MPD processing unit 92 to send information such as the URL of the audio file of the selected object. The audio selection unit 94 supplies the audio file acquisition unit 95 with the information such as the URL supplied from the MPD processing unit 92 in response to the request.

The audio file acquisition unit 95 functions as a receiver. On the basis of the information such as a URL supplied from the audio selection unit 94, the audio file acquisition unit 95 requests the Web server 12 to send an audio file, which is specified by the URL and configured in units of objects, and acquires the audio file. The audio file acquisition unit 95 supplies the audio decoding processing unit 96 with the acquired audio file in units of objects.

The audio decoding processing unit 96 decodes an audio stream included in the audio file, which is supplied from the audio file acquisition unit 95 and configured in units of objects, to generate audio data in units of objects . The audio decoding processing unit 96 supplies the audio synthesis processing unit 97 with the audio data in units of objects.

The audio synthesis processing unit 97 synthesizes the audio data, which is supplied from the audio decoding processing unit 96 and configured in units of objects, and outputs the synthesized data.

The image selection unit 98 selects a tile in the display area designated by the user on the basis of the tile position information supplied from the MPD processing unit 92. The image selection unit 98 requests the MPD processing unit 92 to send information such as a URL for the image file of the selected tile. The image selection unit 98 supplies the image file acquisition unit 99 with the information such as a URL supplied from the MPD processing unit 92 in response to the request.

On the basis of the information such as a URL supplied from the image selection unit 98, the image file acquisition unit 99 requests the Web server 12 to send an image file, which is specified by the URL and configured in units of tiles, and acquires the image file. The image file acquisition unit 99 supplies the image decoding processing unit 100 with the acquired image file in units of tiles.

The image decoding processing unit 100 decodes a video stream included in the image file, which is supplied from the image file acquisition unit 99 and configured in units of tiles, to generate image data in units of tiles. The image decoding processing unit 100 supplies the image synthesis processing unit 101 with the image data in units of tiles.

The image synthesis processing unit 101 synthesizes the image data, which is supplied from the image decoding processing unit 100 and configured in units of tiles, and outputs the synthesized data.

(Explanation of Process of Moving Image Playback Terminal)

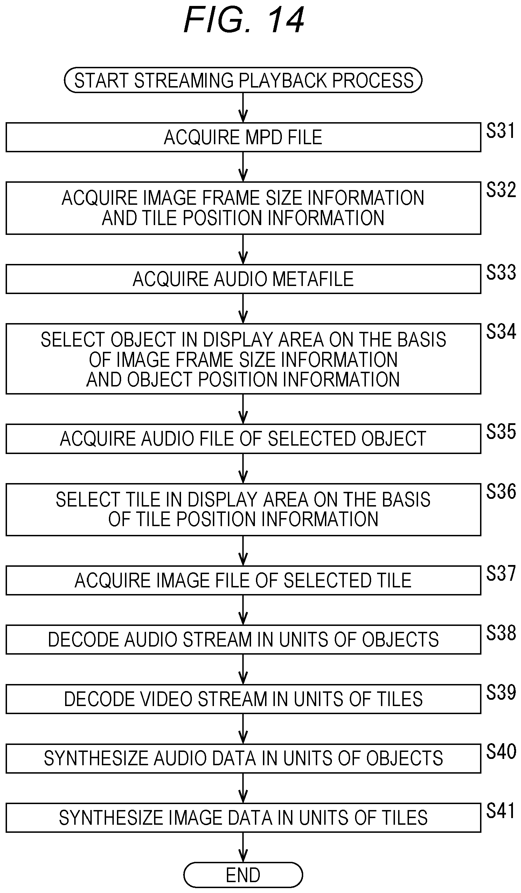

Fig. 14 is a flowchart illustrating a streaming playback process of the streaming playback unit 90 (Fig. 13) of the video playback terminal 14.

In step S31 of Fig. 14, the MPD acquisition unit 91 of the streaming playback unit 90 acquires the MPD file from the Web server 12 and supplies the MPD processing unit 92 with the MPD file.

In step S32, the MPD processing unit 92 acquires the image frame size information and the tile position information, which are described in "AdaptationSet" for image, from the MPD file supplied from the MPD acquisition unit 91. The MPD processing unit 92 supplies the audio selection unit 94 with the image frame size information and supplies the image selection unit 98 with the tile position information. Further, the MPD processing unit 92 extracts information such as a URL described in "Segment" for audio metafile and supplies the metafile acquisition unit 93 with the extracted information.

In step S33, on the basis of the information such as a URL supplied from the MPD processing unit 92, the metafile acquisition unit 93 requests the Web server 12 to send an audio metafile specified by the URL, and acquires the audio metafile. The metafile acquisition unit 93 supplies the audio selection unit 94 with object position information included in the audio metafile.

In step S34, the audio selection unit 94 selects an object in the display area designated by the user on the basis of the image frame size information supplied from the MPD processing unit 92 and the object position information supplied from the metafile acquisition unit 93. The audio selection unit 94 requests the MPD processing unit 92 to send the information such as a URL for the audio file of the selected object.

The MPD processing unit 92 extracts information such as a URL, which is described in "Segment" for audio file of the object requested from the audio selection unit 94, from the MPD file, and supplies the audio selection unit 94 with the extracted information. The audio selection unit 94 supplies the audio file acquisition unit 95 with the information such as a URL supplied from the MPD processing unit 92.

In step S35, on the basis of the information such as a URL supplied from the audio selection unit 94, the audio file acquisition unit 95 requests the Web server 12 to send an audio file of the selected object which is specified by the URL, and acquires the audio file. The audio file acquisition unit 95 supplies the audio decoding processing unit 96 with the acquired audio file in units of objects.

In step S36, the image selection unit 98 selects a tile in the display area designated by the user on the basis of the tile position information supplied from the MPD processing unit 92. The image selection unit 98 requests the MPD processing unit 92 to send information such as a URL for the image file of the selected tile.

The MPD processing unit 92 extracts information such as a URL, which is described in "Segment" for image file of the object requested from the image selection unit 98, from the MPD file, and supplies the image selection unit 98 with the extracted information. The image selection unit 98 supplies the image file acquisition unit 99 with the information such as a URL supplied from the MPD processing unit 92.

In step S37, on the basis of the information such as a URL supplied from the image selection unit 98, the image file acquisition unit 99 requests the Web server 12 to send an image file of the selected tile which is specified by the URL, and acquires the image file. The image file acquisition unit 99 supplies the image decoding processing unit 100 with the acquired image file in units of tiles.

In step S38, the audio decoding processing unit 96 decodes an audio stream included in the audio file, which is supplied from the audio file acquisition unit 95 and configured in units of objects, to generate audio data in units of objects. The audio decoding processing unit 96 supplies the audio synthesis processing unit 97 with the audio data in units of objects.

In step S39, the image decoding processing unit 100 decodes a video stream included in the image file, which is supplied from the image file acquisition unit 99 and configured in units of tiles, to generate image data in units of tiles. The image decoding processing unit 100 supplies the image synthesis processing unit 101 with the image data in units of tiles.

In step S40, the audio synthesis processing unit 97 synthesizes the audio data, which is supplied from the audio decoding processing unit 96 and configured in units of objects, and outputs the synthesized data. In step S41, the image synthesis processing unit 101 synthesizes the image data, which is supplied from the image decoding processing unit 100 and configured in units of tiles, and outputs the synthesized data. Then, the process is terminated.

As described above, the Web server 12 transmits the image frame size information and the object position information. Thus, the video playback terminal 14 can specify, for example, an object in the display area to selectively acquire an audio file of the specified object so that the audio file corresponds to the image in the display area. This allows the video playback terminal 14 to acquire only a necessary audio file, which leads to an improvement in transmission efficiency.

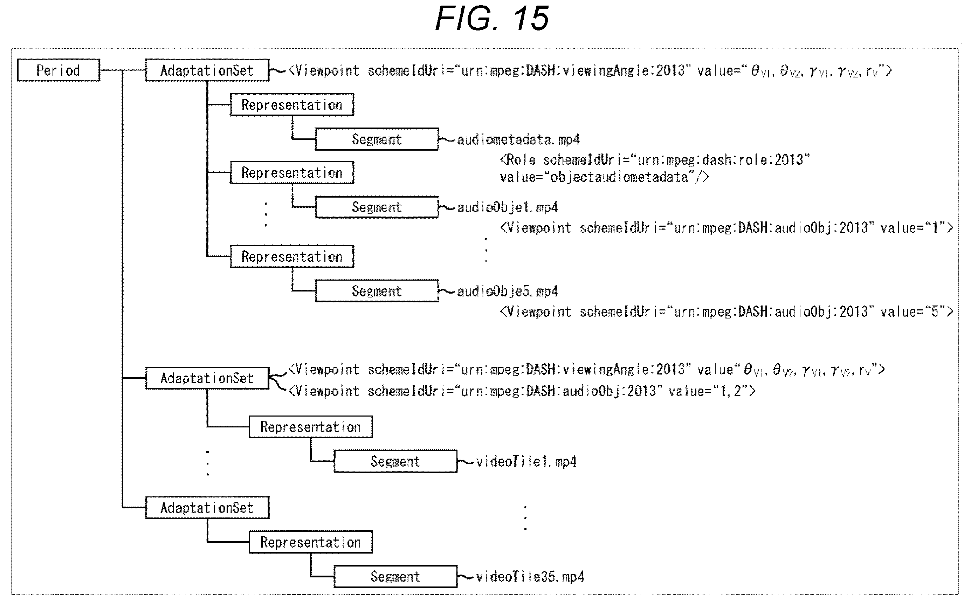

Note that as shown in Fig. 15, an object ID (object specifying information) may be described in "AdaptationSet" for an image of the MPD file as information for specifying an object corresponding to audio to play back at the same time with the image. The object ID may be described by extending Scheme (urn:mpeg:DASH:audioObj:2013) for defining new object ID information (audioObj) by utilizing a DescriptorType element of Viewpoint. In this case, the video playback terminal 14 selects an audio file of the object corresponding to the object ID described in "AdaptationSet" for image, and acquires the audio file for playback.

Instead of generating an audio file in units of objects, the encoded data of all objects may be multiplexed into a single audio stream to generate a single audio file.

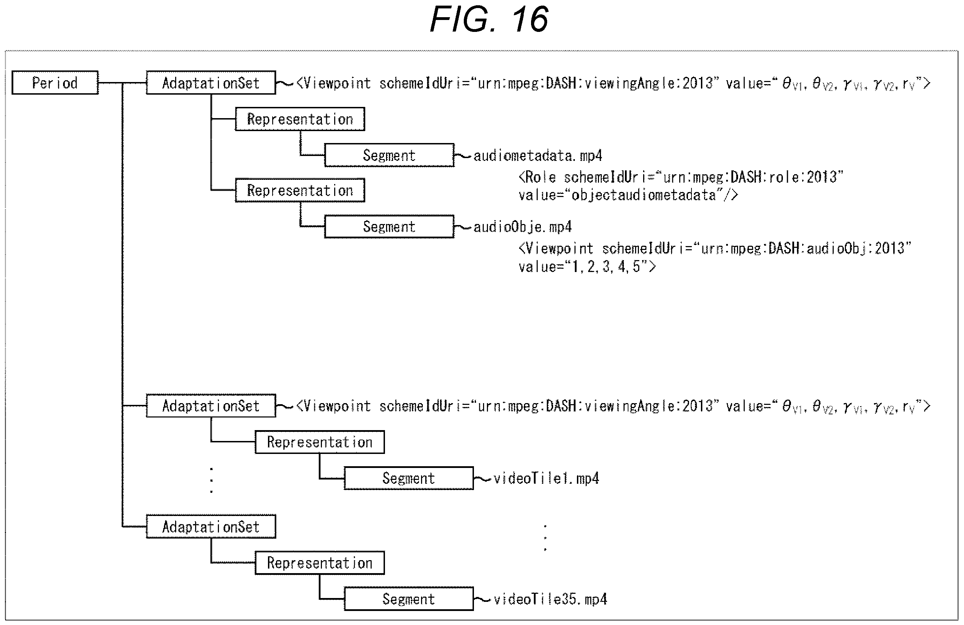

In this case, as shown in Fig. 16, one "Representation" for audio file is provided in "AdaptationSet" for audio of the MPD file, and a URL or the like for the audio file (audioObje.mp4) including the encoded data of all objects is described in "Segment". At this time, object IDs (1, 2, 3, 4, and 5) of all objects corresponding to the audio file are described by extending Viewpoint.

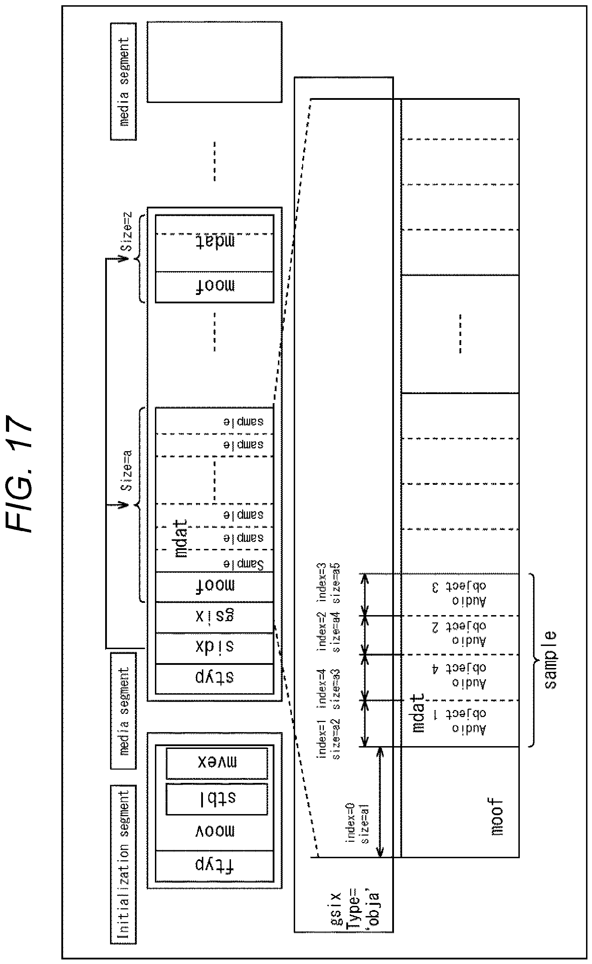

In addition, in this case, as shown in Fig. 17, the encoded data (Audio object) of each object is arranged, as a sub-sample, in an mdat box of the audio file (hereinafter also referred to as an audio media file, as appropriate) acquired by referring to "Media Segment" of the MPD file.

Specifically, data is arranged in the audio media file in units of subsegments that are any time shorter than a segment. The position of data in units of subsegments is specified by an sidx box. Further, the data in units of subsegments is composed of a moof box and an mdat box. The mdat box is composed of a plurality of samples, and the encoded data of each object is arranged as each sub-sample of the sample.

Further, a gsix box in which information on a sample is described is arranged next to the sidx box of the audio media file. In this manner, the gsix box in which the information on the sample is described is provided separately from the moof box, and thus the video playback terminal 14 can acquire the information on the sample rapidly.

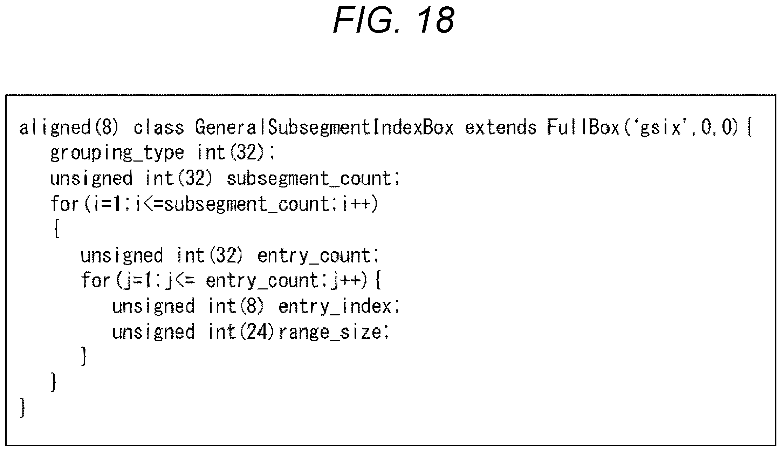

As shown in Fig. 18, grouping type representing the types of Sample group entries each composed of one or more samples or sub-samples managed by the gsix box is described in the gsix box. For example, when the Sample group entry is a sub-sample of the encoded data in units of objects, the type of the Sample group entry is "obja" as shown in Fig. 17. A plurality of gsix boxes of grouping_type are arranged in the audio media file.

Further, as shown in Fig. 18, an index (entry index) of each Sample group entry and a byte range (range_size) as data position information indicating the position in the audio media file are described in the gsix box. Note that when the index (entry_index) is 0, the corresponding byte range indicates a byte range of the moof box (a1 in the example of Fig. 17) .

Information indicating which object is used for allowing each Sample group entry to correspond to a sub-sample of encoded data is described in the audio file acquired by referring to "Initialization Segment" of the MPD file (hereinafter also referred to as an audio initialization file, as appropriate).

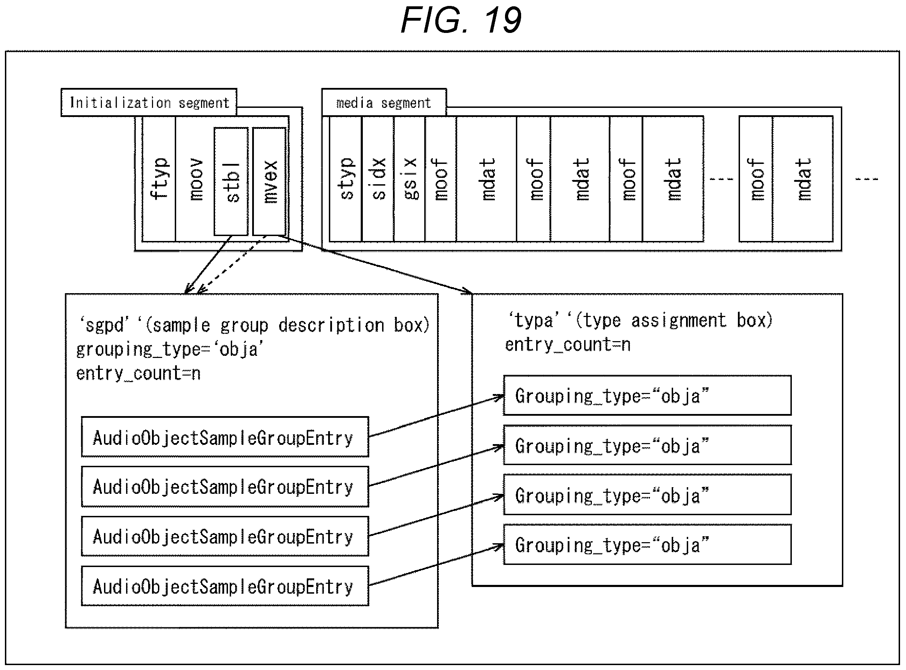

Specifically, as shown in Fig. 19, this information is indicated by using a type assignment box (typa) of an mvex box that is associated with AudioObjectSampleGroupEntry of a sample group description box (sgpd) in an sbtl box of the audio initialization file.

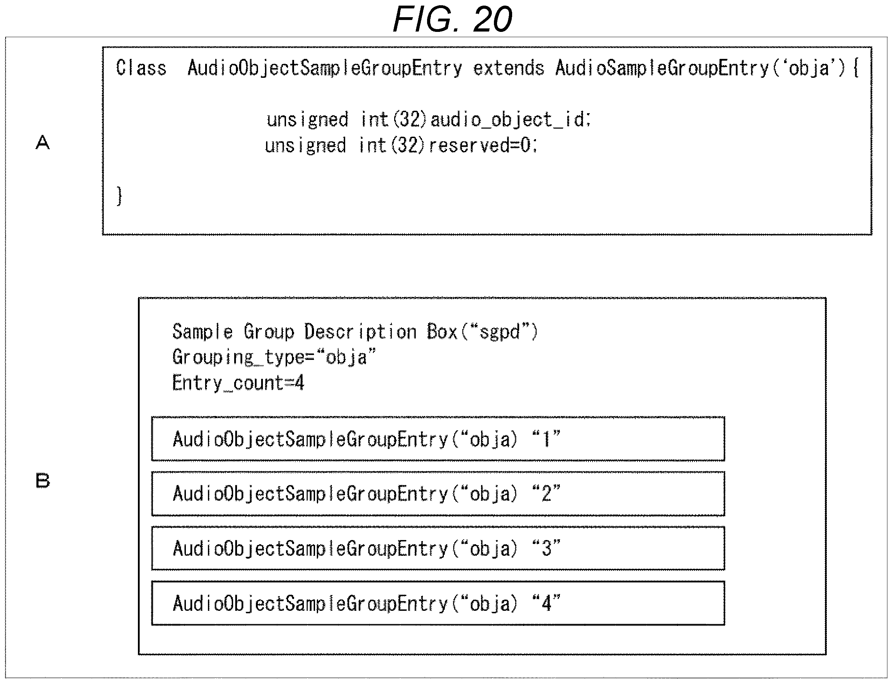

In other words, as shown in A of Fig. 20, an object ID (audio_object_id) corresponding to the encoded data included in the sample is described in each AudioObjectSampleGroupEntry box. For example, as shown in B of Fig. 20, object IDs 1, 2, 3, and 4 are described in each of four AudioObjectSampleGroupEntry boxes.

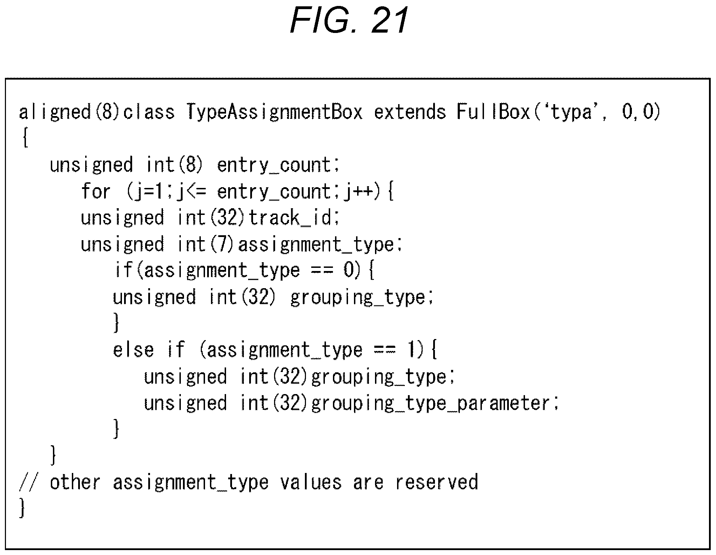

On the other hand, as shown in Fig. 21, in the type assignment box, an index as a parameter (grouping_type_parameter) of the Sample group entry corresponding to the AudioObjectSampleGroupEntry is described for each AudioObjectSampleGroupEntry.

The audio media file and the audio initialization file are configured as described above. Thus, when the video playback terminal 14 acquires the encoded data of the object selected as an object in the display area, the AudioObjectSampleGroupEntry in which the object ID of the selected object is described is retrieved from the stbl box of the audio initialization file. Then, the index of the Sample group entry corresponding to the retrieved AudioObjectSampleGroupEntry is read from the mvex box. Then, the position of data in units of subsegments is read from the sidx of the audio file, and the byte range of the Sample group entry of the read index is read from the gsix. Then, the encoded data arranged in the mdat is acquired on the basis of the position of data in units of subsegments and the byte range. Thus, the encoded data of the selected object is acquired.

Although, in the above description, the index of Sample group entry and the object ID of AudioObjectSampleGroupEntry are associated with each other through the mvex box, they may be associated with each other directly. In this case, the index of Sample group entry is described in the AudioObjectSampleGroupEntry.

Further, when the audio file is composed of a plurality of tracks, the sgpd can be stored in the mvex, which allows the sgpd to be shared among the tracks.

(Outline of Second Example of Information Processing System)

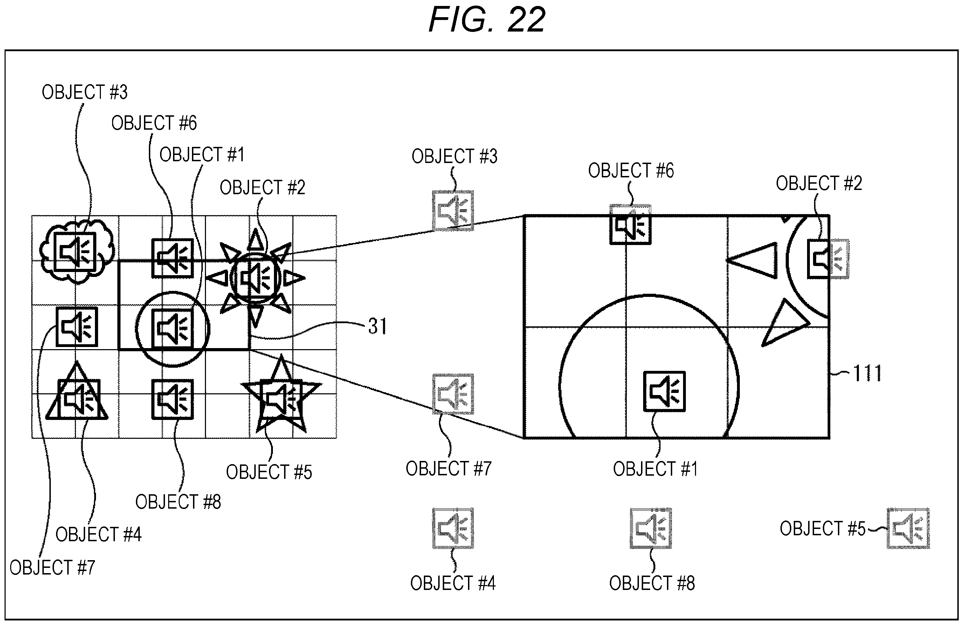

Fig. 22 is a diagram illustrating an outline of a second example of the information processing system to which the present disclosure is applied.

Note that the elements shown in Fig. 22 that are the same as those in Fig. 3 are denoted by the same reference numerals.

In the example shown in Fig. 22, as is the case with Fig. 3, the image of video content is divided into 7 (width) × 5 (height) tiles, and audios of objects #1 to #8 are acquired as the audio of video content.

In this case, when the user specifies the display area 31 composed of 3 (width) × 2 (height) tiles, the display area 31 is converted (extended) to an area having the same size as the size of the image of video content, thereby obtaining a display image 111 in a second example as shown in Fig. 22. The audios of the objects #1 to #8 are synthesized on the basis of the positions of the objects #1 to #8 in a display image 111 and are output together with the display image 111. In other words, the audios of the objects #3 to #5, #7, and #8, which are outside the display area 31, are output, in addition to the audios of the objects #1, #2, and #6, which are inside the display area 31.

(Configuration Example of Streaming Playback Unit)

The configuration of the second example of the information processing system to which the present disclosure is applied is the same as the configuration of the information processing system 10 shown in Fig. 1 except for the configuration of the streaming playback unit, and thus only of the streaming playback unit will be described below.

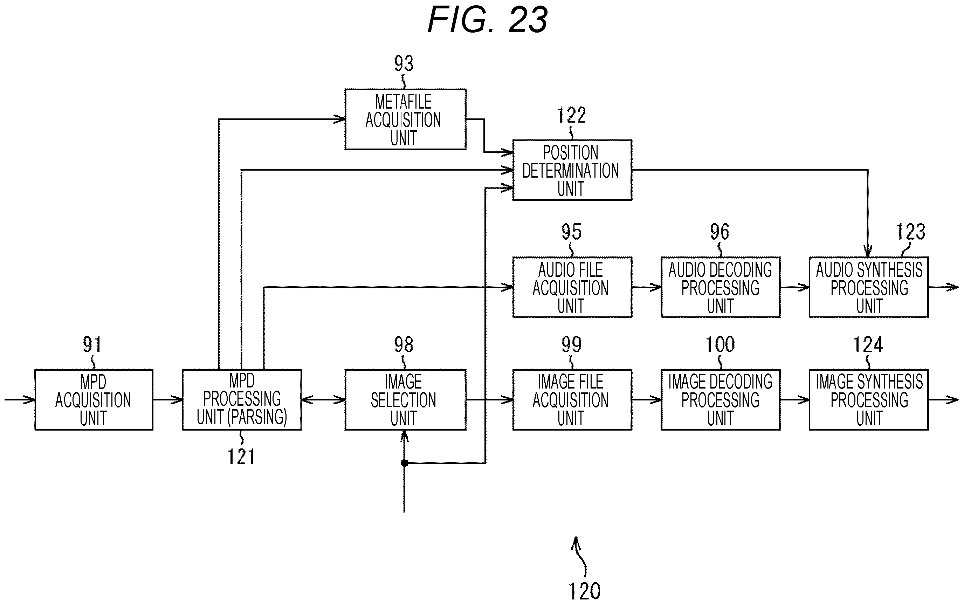

Fig. 23 is a block diagram showing a configuration example of the streaming playback unit of the information processing system to which the present disclosure is applied.

The components shown in Fig. 23 that are the same as those in Fig. 13 are denoted by the same reference numerals, and repeated explanation is omitted as appropriate.

The configuration of the streaming playback unit 120 shown in Fig. 23 differs from the configuration of the streaming playback unit 90 shown in Fig. 13 in that an MPD processing unit 121, an audio synthesis processing unit 123, and an image synthesis processing unit 124 are newly provided instead of the MPD processing unit 92, the audio synthesis processing unit 97, and the image synthesis processing unit 101, respectively, and a position determination unit 122 is additionally provided.

The MPD processing unit 121 of the streaming playback unit 120 extracts information such as a URL, which is described in "Segment" for audio metafile, from the MPD file supplied from the MPD acquisition unit 91, and supplies the metafile acquisition unit 93 with the extracted information. Further, the MPD processing unit 121 extracts image frame size information of an image of the video content (hereinafter referred to as content image frame size information) that is described in "AdaptationSet" for image from the MPD file and supplies the position determination unit 122 with the extracted information. The MPD processing unit 121 extracts information such as a URL, which is described in "Segment" for audio file of all objects, from the MPD file, and supplies the audio file acquisition unit 95 with the extracted information.

The MPD processing unit 121 extracts the tile position information described in "AdaptationSet" for image from the MPD file and supplies the image selection unit 98 with the extracted information. The MPD processing unit 121 extracts information such as a URL, which is described in "Segment" for the image file of the tile requested from the image selection unit 98, from the MPD file, and supplies the image selection unit 98 with the extracted information.

The position determination unit 122 acquires the object position information that is included in the audio metafile obtained by the metafile acquisition unit 93 and the content image frame size information that is supplied from the MPD processing unit 121. Further, the position determination unit 122 acquires display area image frame size information that is the image frame size information of the display area designated by the user. The position determination unit 122 determines (recognizes) the position of each object in the display area on the basis of the object position information, the content image frame size information, and the display area image frame size information. The position determination unit 122 supplies the audio synthesis processing unit 123 with the determined position of each object.

The audio synthesis processing unit 123 synthesizes audio data in units of objects supplied from the audio decoding processing unit 96 on the basis of the object position supplied from the position determination unit 122. Specifically, the audio synthesis processing unit 123 determines audio data to be allocated to each speaker for each object on the basis of the object position and the position of each speaker that outputs sound. The audio synthesis processing unit 123 synthesizes audio data of each object for each speaker and outputs the synthesized audio data as audio data for each speaker. A detailed description of the method of synthesizing audio data of each object on the basis of the object position is disclosed in, for example, Ville Pulkki, "Virtual Sound Source Positioning Using Vector Base Amplitude Panning", Journal of AES, vol. 45, no. 6, pp. 456-466, 1997.

The image synthesis processing unit 124 synthesizes image data in units of tiles supplied from the image decoding processing unit 100. The image synthesis processing unit 124 functions as a converter, and converts the size of the image corresponding to the synthesized image data to the size of the video content to generate a display image. The image synthesis processing unit 124 outputs the display image.

(Explanation of Object Position Determination Method)

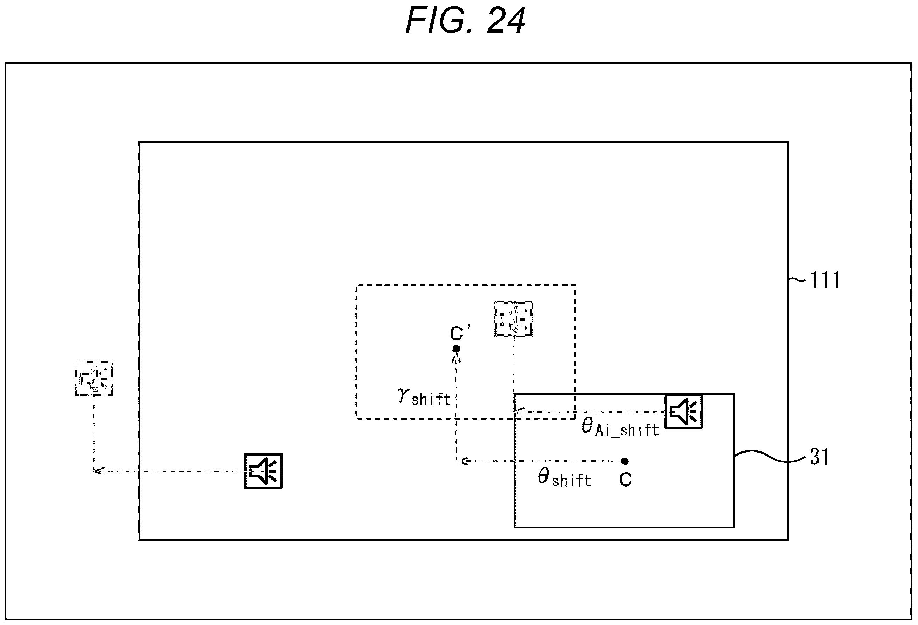

Figs. 24 to 26 are diagrams each illustrating the object position determination method by the position determination unit 122 shown in Fig. 23.

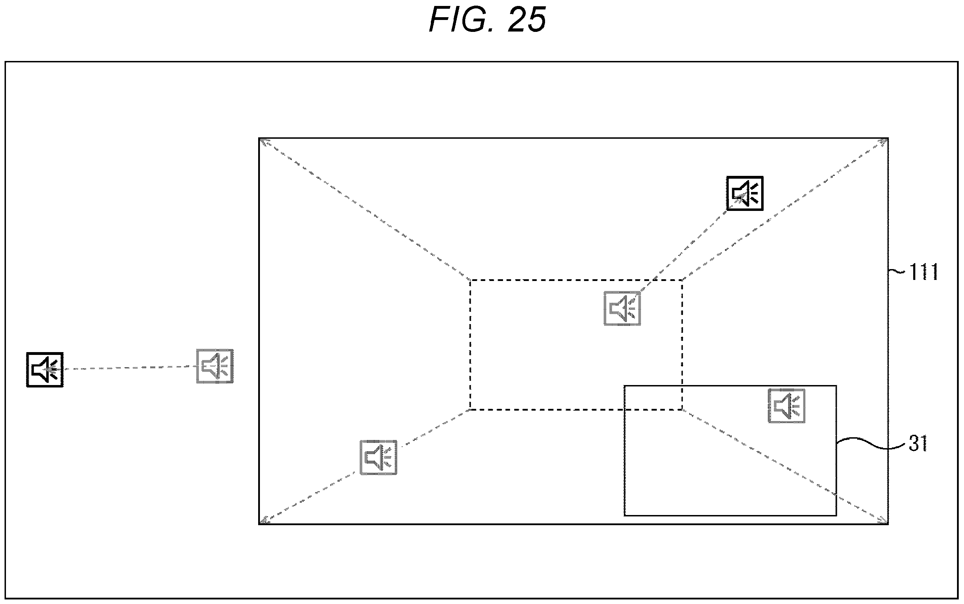

The display area 31 is extracted from the video content and the size of the display area 31 is converted to the size of the video content, so that the display image 111 is generated. Thus, the display image 111 has a size equivalent to the size obtained by shifting the center C of the display area 31 to the center C' of the display image 111 as shown in Fig. 24 and by converting the size of the display area 31 to the size of the video content as shown in Fig. 25.

Thus, the position determination unit 122 calculates, by the following Formula (1), a shift amount $\theta_{shift}$ in horizontal direction when the center O of the display area 31 is shifted to the center O' of the display image 111.

[Mathematical Formula 1]

$$\theta_{shift} = \frac{\theta_{v1}{}' + \theta_{v2}{}' - \theta_{v1} - \theta_{v2}}{2} \qquad \cdots (1)$$

In Formula (1), $\theta_{v1}$' represents a horizontal angle at a left end of the display area 31 included in the display area image frame size information, and $\theta_{v2}'$ represents a horizontal angle at a right end of the display area 31 included in the display area image frame size information. Further, $\theta_{v1}$ represents a horizontal angle at a left end in the content image frame size information, and $\theta_{v2}$ represents a horizontal angle at a right end in the content image frame size information.

Next, the position determination unit 122 calculates, by the following Formula (2), a horizontal angle $\theta_{v1\_shift}'$ at the left end of the display area 31 and a horizontal angle $\theta_{v2\_shift}'$ at the right end thereof after the center O of the display area 31 is shifted to the center O' of the display image 111 by using the shift mount $\theta_{shift}$.
[Mathematical Formula 2]

$$\theta_{v1\_shift}' = \mathrm{mod}(\theta_{v1}' + \theta_{shift} + 180°,\ 360°) - 180°$$
$$\theta_{v2\_shift}' = \mathrm{mod}(\theta_{v2}' + \theta_{shift} + 180°,\ 360°) - 180° \qquad \ldots (2)$$

According to Formula (2), the horizontal angle $\theta_{v1\_shift}'$ and the horizontal angle $\theta_{v2\_shift}'$ are calculated so as not to exceed the range of -180° to 180°.

Note that, as described above, the display image 111 has a size equivalent to the size obtained by shifting the center O of the display area 31 to the center O' of the display image 111 and by converting the size of the display area 31 to the size of the video content. Thus, the following Formula (3) is satisfied for the horizontal angles $O_{v1}$ and $\theta_{v2}$.
[Mathematical Formula 3]

$$\theta_{v1} = \frac{\theta_{v1} - \theta_{v2}}{\theta_{v1\_shift}' - \theta_{v2\_shift}'} * \theta_{v1\_shift}'$$

$$\theta_{v2} = \frac{\theta_{v1} - \theta_{v2}}{\theta_{v1\_shift}' - \theta_{v2\_shift}'} * \theta_{v2\_shift}' \qquad \cdots (3)$$

The position determination unit 122 calculates the shift amount $\theta_{shift}$, the horizontal angle $\theta_{v1\_shift}'$, and the horizontal angles $\theta_{v2\_shift}'$, in the manner as described above, and then calculates a horizontal angle of each object in the display image 111. Specifically, the position determination unit 122 calculates, by the following Formula (4), a horizontal angle $\theta_{Ai\_shift}$ of the object #i after the center C of the display area 31 is shifted to the center C' of the display image 111 by using the shift mount $\theta_{shift}$.
[Mathematical Formula 4]

$$\theta_{Ai\_shift} = \mathrm{mod}(\theta_{Ai} + \theta_{shift} + 180°,\ 360°) - 180° \quad \ldots (4)$$

In Formula (4), $\theta_{Ai}$ represents the horizontal angle of the object #i included in the object position information. Further, according to Formula (4), the horizontal angle $\theta_{Ai\_shift}$ is calculated so as not to exceed the range of -180° to 180°.

Next, when the object #i is present in the display area 31, that is, when the condition of $\theta_{v2\_shift}' < \theta_{Ai\_shift} < \theta_{v1\_shift}'$ is satisfied, the position determination unit 122 calculates a horizontal angle $\theta_{A1}'$ of the object #i in the display image 111 by the following Formula (5).
[Mathematical Formula 5]

$$\theta_{Ai}' = \frac{\theta_{v1} - \theta_{v2}}{\theta_{v1\_shift}' - \theta_{v2\_shift}'} \cdot \left( \theta_{Ai\_shift} - \frac{\theta_{v1} + \theta_{v2}}{2} \right) \qquad \cdots (5)$$

According to Formula (5), the horizontal angle $\theta_{A1}'$ is calculated by extending the distance between the position of the object #i in the display image 111 and the center C' of the display image 111 according to the ratio between the size of the display area 31 and the size of the display image 111.

On the other hand, when no object #i is present in the display area 31, that is, when the condition of $-180° \le \theta_{Ai\_shift} \le \theta_{v2\_shift}'$ or $\theta_{v1\_shift}' \le \theta_{Ai\_shift} \le 180°$ is satisfied, the position determination unit 122 calculates the horizontal angle $\theta_{Ai}'$ of the object #i in the display image 111 by the following Formula (6).
[Mathematical Formula 6]

$$\theta_{Ai}{}' = \frac{\theta_{v2}+180°}{\theta_{v2\_shift}{}'+180°} \cdot (\theta_{Ai\_shift}+180°) - 180°$$

$$\textbf{(when } -180° \leq \theta_{Ai\_shift} \leq \theta_{v2\_shift}{}')$$

$$\theta_{Ai}{}' = \frac{180°-\theta_{v1}}{180°-\theta_{v1\_shift}{}'} \cdot (\theta_{Ai\_shift}-180°) + 180°$$

$$\textbf{(when } \theta_{v1\_shift}{}' \leq \theta_{Ai\_shift} \leq 180°)$$

$$\cdots (6)$$

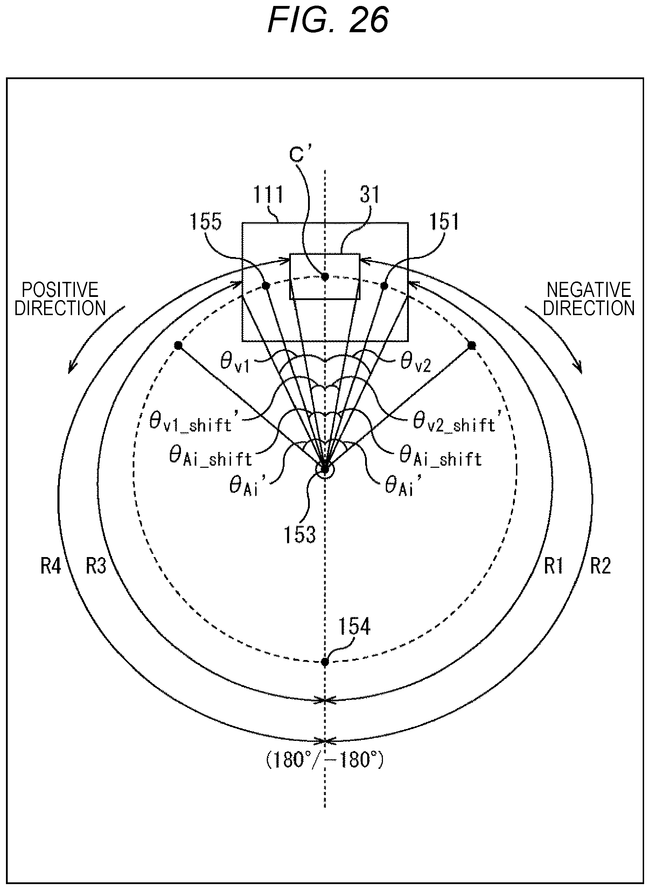

According to Formula (6), when the object #i is present at a position 151 on the right side of the display area 31 ($-180° \leq \theta_{Ai\_shift} \leq \theta_{v2\_shift}{}'$) as shown in Fig. 26, the horizontal angle $\theta_{Ai}{}'$ is calculated by extending the horizontal angle $\theta_{Ai\_shift}$ according to the ratio between an angle R1 and an angle R2. Note that the angle R1 is the angle measured from the right end of the display image 111 to a position 154 just behind a viewer 153, and the angle R2 is the angle measured from the right end of the display area 31 whose center is shifted to the position 154.

Further, according to Formula (6), when the object #i is present at a position 155 on the left side of the display area 31 ($\theta_{v1\_shift}{}' \leq \theta_{Ai\_shift} \leq 180°$), the horizontal angle $\theta_{Ai}{}'$ is calculated by extending the horizontal angle $\theta_{Ai\_shift}$ according to the ratio between an angle R3 and an angle R4. Note that the angle R3 is the angle measured from the left end of the display image 111 to the position 154, and the angle R4 is the angle measured from the left end of the display area 31 whose center is shifted to the position 154.

Further, the position determination unit 122 calculates a vertical angle $\gamma_{Ai}{}'$ in a similar manner to the horizontal angle $\theta_{Ai}{}'$. Specifically, the position determination unit 122 calculates, by the following Formula (7), a movement amount $\gamma_{shift}$ in the vertical direction when the center C of the display area 31 is shifted to the center C' of the display image 111. [Mathematical Formula 7]

$$\gamma_{shift} = \frac{\gamma_{v1}{}'+\gamma_{v2}{}'-\gamma_{v1}-\gamma_{v2}}{2} \qquad \cdots (7)$$

In Formula (7), $\gamma_{v1}{}'$ represents the vertical angle at an upper end of the display area 31 included in the display area image frame size information, and $\gamma_{v2}{}'$ represents the vertical angle at a lower end thereof. Further, $\gamma_{v1}$ represents the vertical angle at an upper end in the content image frame size information, and $\gamma_{v2}$ represents the vertical angle at a lower end in the content image frame size information.

Next, the position determination unit 122 calculates, by the following Formula (8), a vertical angle $\gamma_{v1\_shift}{}'$ at an upper end of the display area 31 and a vertical angle $\gamma_{v2\_shift}{}'$ at a lower end thereof after the center C of the display area 31 is shifted to the center C' of the display image 111 by using the movement amount $\gamma_{shift}$. [Mathematical Formula 8]

$$\gamma_{v1\_shift}{}' = mod(\gamma_{v1}{}' + \gamma_{shift} + 90°, 180°) - 90°$$
$$\gamma_{v2\_shift}{}' = mod(\gamma_{v2}{}' + \gamma_{shift} + 90°, 180°) - 90° \quad \cdots (8)$$

According to Formula (8), the vertical angle $\gamma_{v1\_shift}{}'$ and the vertical angle $\gamma_{v2\_shift}{}'$ are calculated so as not to exceed the range of -90° to 90°.

The position determination unit 122 calculates the movement amount $\gamma_{shift}$, the vertical angle $\gamma_{v1\_shift}{}'$, and the vertical angle $\gamma_{v2\_shift}{}'$ in the manner as described above, and then calculates the position of each object in the display image 111. Specifically, the position determination unit 122 calculates, by the following Formula (9), a vertical angle $\gamma_{Ai\_shift}$ of the object #i after the center C of the display area 31 is shifted to the center C' of the display image 111 by using the movement amount $\gamma_{shift}$. [Mathematical Formula 9]

$$\gamma_{Ai\_shift} = \mathrm{mod}(\gamma_{Ai} + \gamma_{shift} + 90°, 180°) - 90° \quad \cdots (9)$$

In Formula (9), $\gamma_{Ai}$ represents the vertical angle of the object #i included in the object position information. Further, according to Formula (9), the vertical angle $\gamma_{Ai\_shift}$ is calculated so as not to exceed the range of -90° to 90°.

Next, the position determination unit 122 calculates a vertical angle $\gamma_{A1}'$ of the object #i in the display image 111 by the following Formula (10).

[Mathematical Formula 10]

$$\gamma_{Ai}' = \begin{cases} \dfrac{\gamma_{v2}+90°}{\gamma_{v2\_shift}'+90°} \cdot (\gamma_{Ai\_shift}+90°)-90° \\ \qquad \textbf{(when } -90° \leq \gamma_{Ai\_shift} \leq \gamma_{v2\_shift}'\textbf{)} \\[2em] \dfrac{\gamma_{v1}-\gamma_{v2}}{\gamma_{v1\_shift}'-\gamma_{v2\_shift}'} \cdot \left(\gamma_{Ai\_shift}-\dfrac{\gamma_{v1}+\gamma_{v2}}{2}\right) \\ \qquad \textbf{(when } \gamma_{v2\_shift}' < \gamma_{Ai\_shift} < \gamma_{v1\_shift}'\textbf{)} \\[2em] \dfrac{90°-\gamma_{v1}}{90°-\gamma_{v1\_shift}'} \cdot (\gamma_{Ai\_shift}-90°)+90° \\ \qquad \textbf{(when } \gamma_{v1\_shift}' \leq \gamma_{Ai\_shift} \leq 90°\textbf{)} \end{cases}$$

$$\cdots (10)$$

Further, the position determination unit 122 determines a distance $r_{A1}'$ of the object #i in the display image 111 to be a distance $r_{A1}$ of the object #i included in the object position information. The position determination unit 122 supplies the audio synthesis processing unit 123 with the horizontal angle $\theta_{Ai}'$, the vertical angle $\gamma_{A1}'$, and the distance $r_{A1}$ of the object #i, which are obtained as described above, as the position of the object #i.

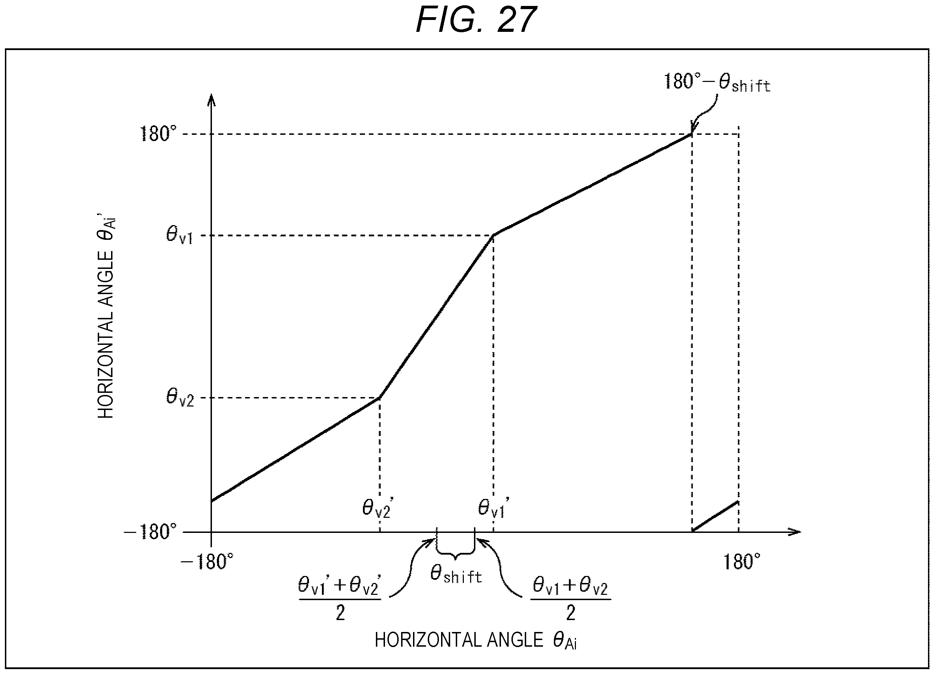

Fig. 27 is a diagram showing the relationship between the horizontal angle $\theta_{Ai}$ and the horizontal angle $\theta_{Ai}'$.

In the graph of Fig. 27, the horizontal axis represents the horizontal angle $\theta_{Ai}$, and the vertical axis represents the horizontal angle $\theta_{Ai}'$.

As shown in Fig. 27, when the condition of $\theta_{V2}' < \theta_{Ai} < \theta_{V1}'$ is satisfied, the horizontal angle $\theta_{Ai}$ is shifted by the movement amount $\theta_{shift}$ and is extend, and then the horizontal angle $\theta_{Ai}$ becomes equal to the horizontal angle $\theta_{Ai}'$. Further, when the condition of $-180° \leq \theta_{Ai} \leq \theta_{v2}'$ or $\theta_{v1}' \leq \theta_{Ai} \leq 180°$ is satisfied, the horizontal angle $\theta_{Ai}$ is shifted by the movement amount $\theta_{shift}$ and is reduced, and then the horizontal angle $\theta_{Ai}$ becomes equal to the horizontal angle $\theta_{Ai}'$.

(Explanation of Process of Streaming Playback Unit)

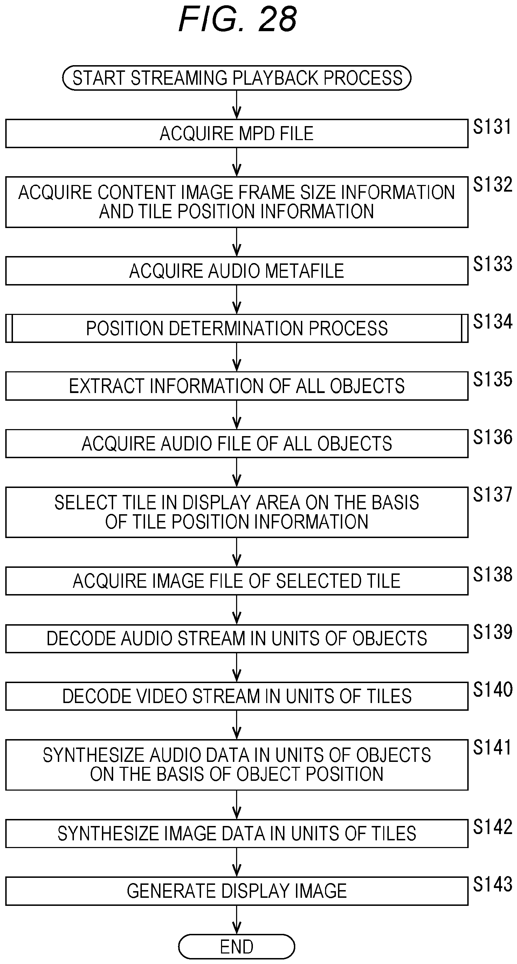

Fig. 28 is a flowchart illustrating a streaming playback process of the streaming playback unit 120 shown in Fig. 23.

In step S131 of Fig. 28, the MPD acquisition unit 91 of the streaming playback unit 120 acquires the MPD file from the Web server 12 and supplies the MPD processing unit 121 with the MPD file.

In step S132, the MPD processing unit 121 acquires the content image frame size information and the tile position information, which are described in "AdaptationSet" for image, from the MPD file supplied from the MPD acquisition unit 91. The MPD processing unit 121 supplies the position determination unit 122 with the image frame size information, and supplies the image selection unit 98 with the tile position information. Further, the MPD processing unit 121 extracts information such as a URL described in "Segment" for audio metafile, and supplies the extracted information to the metafile acquisition unit 93.

In step S133, the metafile acquisition unit 93 requests the Web server 12 to send the audio metafile specified by the URL on the basis of the information such as the URL supplied from the MPD processing unit 121, and acquires the audio metafile. The metafile acquisition unit 93 supplies the position determination unit 122 with the object position information included in the audio metafile.

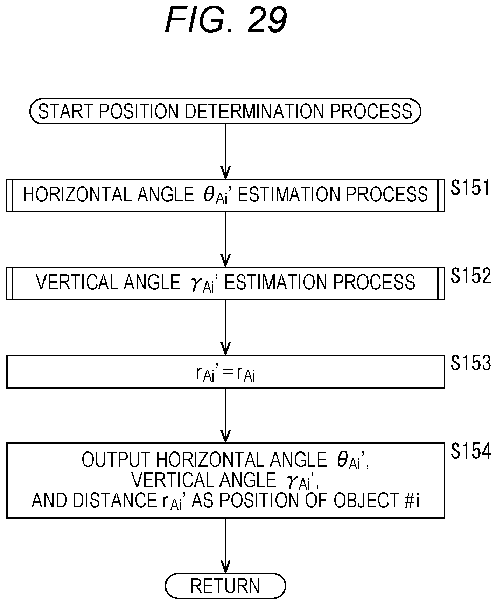

In step S134, the position determination unit 122 performs a position determination process for determining the position of each object in the display image on the basis of the object position information, the content image frame size information, and the display area image frame size information. The position determination process will be described in detail with reference to Fig. 29 which is described later.

In step S135, the MPD processing unit 121 extracts information such as a URL described in "Segment" for audio file of all objects from the MPD file, and supplies the audio file acquisition unit 95 with the extracted information.

In step S136, the audio file acquisition unit 95 requests the Web server 12 to send an audio file of all objects specified by the URL on the basis of the information such as the URL supplied from the MPD processing unit 121, and acquires the audio file. The audio file acquisition unit 95 supplies the audio decoding processing unit 96 with the acquired audio file in units of objects.

The process of steps S137 to S140 is similar to the process of steps S36 to S39 shown in Fig. 14, and thus the descriptions thereof will be omitted.

In step S141, the audio synthesis processing unit 123 synthesizes and outputs the audio data in units of objects supplied from the audio decoding processing unit 96 on the basis of the position of each object supplied from the position determination unit 122.

In step S142, the image synthesis processing unit 124 synthesizes the image data in units of tiles supplied from the image decoding processing unit 100.

In step S143, the image synthesis processing unit 124 converts the size of the image corresponding to the synthesized image data into the size of the video content, and generates the display image. Then, the image synthesis processing unit 124 outputs the display image, and the process is terminated.

Fig. 29 is a flowchart illustrating details of the position determination process in step S134 of Fig. 28. This position determination process is carried out, for example, for each object.

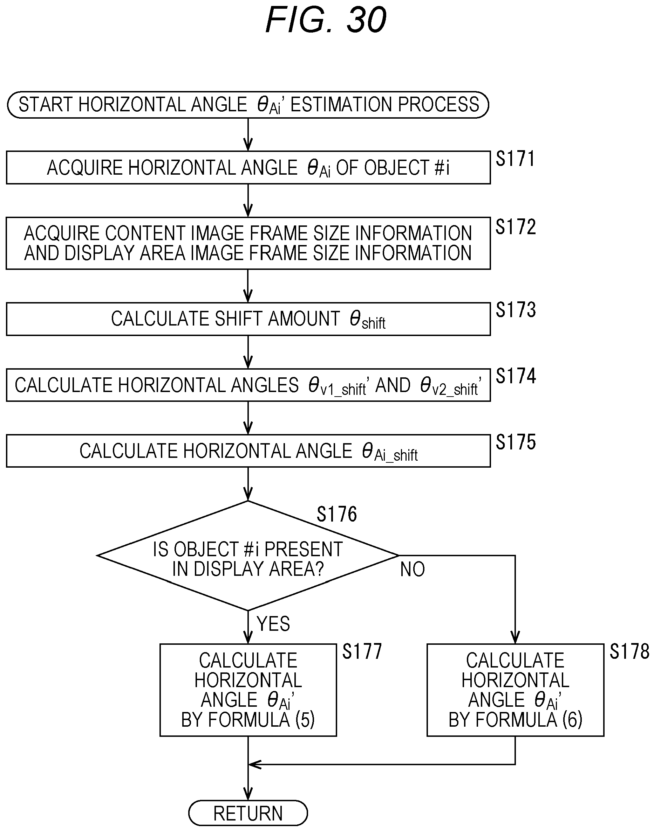

In step S151 of Fig. 29, the position determination unit 122 performs a horizontal angle $\theta_{Ai}'$ estimation process for estimating the horizontal angle $\theta_{Ai}'$ in the display image. Details of the horizontal angle $\theta_{Ai}'$ estimation process will be described with reference to Fig. 30 which is described later.

In step S152, the position determination unit 122 performs a vertical angle $\gamma_{Ai}'$ estimation process for estimating the vertical angle $\gamma_{Ai}'$ in the display image. Details of the vertical angle $\gamma_{Ai}'$ estimation process are similar to those of the horizontal angle $\theta_{Ai}'$ estimation process in step S151, except that the vertical direction is used in place of the horizontal direction, and thus a detailed description thereof will be omitted.

In step S153, the position determination unit 122 determines a distance $r_{Ai}'$ in the display image to be a distance $r_{Ai}$ included in the object position information supplied from the metafile acquisition unit 93.

In step S154, the position determination unit 122 outputs, to the audio synthesis processing unit 123, the horizontal angle $\theta_{Ai}'$, the vertical angle $\gamma_{Ai}'$, and the distance $r_{Ai}$, as the position of the object #i. Then, the process returns to step S134 of Fig. 28 and proceeds to step S135.

Fig. 30 is a flowchart illustrating details of the horizontal angle $\theta_{Ai}'$ estimation process in step S151 of Fig. 29.

In step S171 shown in Fig. 30, the position determination unit 122 acquires the horizontal angle $\theta_{Ai}$ included in the object position information supplied from the metafile acquisition unit 93.

In step S172, the position determination unit 122 acquires the content image frame size information supplied from the MPD processing unit 121 and the display area image frame size information specified by the user.

In step S173, the position determination unit 122 calculates the movement amount $\theta_{shift}$ by the above-mentioned Formula (1) on the basis of the content image frame size information and the display area image frame size information.

In step S174, the position determination unit 122 calculates horizontal angles $\theta_{v1\_shift}'$ and $\theta_{v2\_shift}'$ by the above-mentioned Formula (2) using the movement amount $\theta_{shift}$ and the display area image frame size.

In step S175, the position determination unit 122 calculates the horizontal angle $\theta_{Ai\_shift}$ by the above-mentioned Formula (4) using the horizontal angle $\theta_{Ai}$ and the movement amount $\theta_{shift}$.

In step S176, the position determination unit 122 determines whether the object #i is present in the display area 31 (the horizontal angle of the object #i is between the horizontal angles at both ends of the display area 31), i.e., whether the condition of $\theta_{v2\_shift}' < \theta_{Ai\_shift} < \theta_{v1\_shift}'$ is satisfied or not.

When it is determined in step S176 that the object #i is present in the display area 31, that is, when the condition of $\theta_{v2\_shift}' < \theta_{Ai\_shift} < \theta_{v1\_shift}'$ is satisfied, the process proceeds to step S177. In step S177, the position determination unit 122 calculates the horizontal angle $\theta_{A1}'$ by the above-mentioned Formula (5) on the basis of the content image frame size information, the horizontal angles $\theta_{v1\_shift}'$ and $\theta_{v2\_shift}'$, and the horizontal angle $\theta_{Ai\_shift}$.

On the other hand, when it is determined in step S176 that the object #i is not present in the display area 31, that is, when the condition of $-180° \leq \theta_{Ai\_shift} \leq \theta_{v2\_shift}'$ or $\theta_{v1\_shift}' \leq \theta_{Ai\_shift} \leq 180°$ is satisfied, the process proceeds to step S178. In step S178, the position determination unit 122 calculates the horizontal angle $\theta_{Ai}'$ by the above-mentioned Formula (6) on the basis of the content image frame size information, the horizontal angle $\theta_{v1\_shift}'$ or $\theta_{v2\_shift}'$, and the

horizontal angle $\theta_{Ai\_shift}$.

After the process of step S177 or step S178, the process returns to step S151 of Fig. 29 and proceeds to step S152.

Note that in the second example, the size of the display image is the same as the size of the video content, but instead the size of the display image may be different from the size of the video content.

Further, in the second example, the audio data of all objects is not synthesized and output, but instead only the audio data of some objects (for example, an object in the display area, an object in a predetermined range from the display area, etc.). The method for selecting an object of audio data to be output may be determined in advance, or may be specified by the user.

Further, in the above description, only the audio data in units objects is used, but the audio data may include audio data of channel audio, audio data of higher-order ambisonics (HOA) audio, audio data of spatial audio object coding (SAOC), and metadata (scene information, dynamic or static metadata) of audio data. In this case, for example, not only the coded data of each object, but also the coded data of these pieces of data are arranged as sub-samples.

<First Embodiment>

(Outline of 3D Audio File Format)

Prior to the description of the first embodiment to which the present disclosure is applied, the outline of tracks of the 3D audio file format of MP4 will be described with reference to Fig. 31.

In the MP4 file, the codec information of the video content and the position information indicating the position in the file can be managed for each track. In the 3D audio file format of MP4, all audio streams (elementary stream (ES)) of 3D audio (Channel audio/Object audio/HOA audio/metadata) are recorded as one track in units of samples (frames). Further, the codec information (Profile/level/audio configuration) of 3D audio is stored as a sample entry.

Channel audio constituting the 3D audio is audio data in units of channels; Object audio is audio data in units of objects; HOA audio is spherical audio data; and metadata is metadata of Channel audio/Object audio/HOA audio. In this case, audio data in units of objects is used as Object audio, but instead audio data of SAOC may be used.

(Structure of moov box)

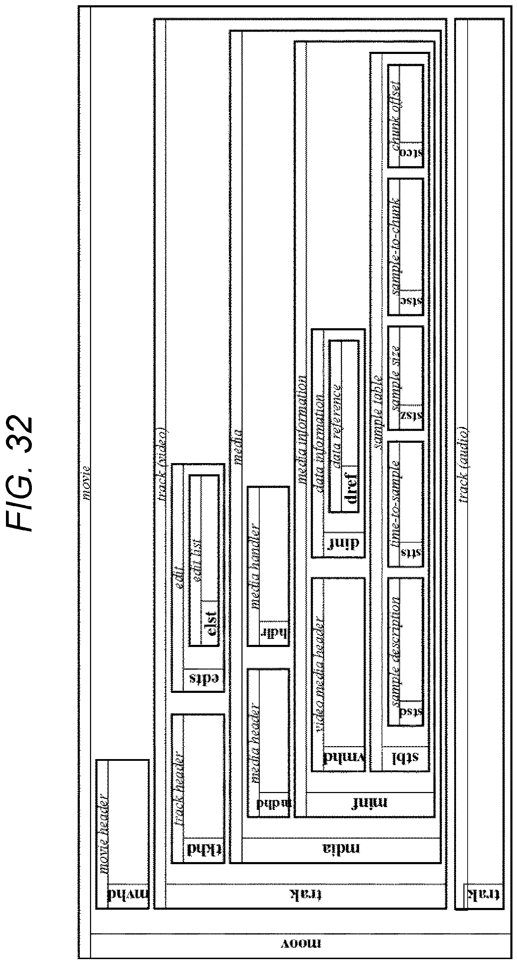

Fig. 32 shows a structure of a moov box of an MP4 file.

As shown in Fig. 32, in the MP4 file, the image data and the audio data are recorded in different tracks. Fig. 32 does not illustrate the details of the track of the audio data, but the track of the audio data is similar to the track of the image data. The sample entry is included in the sample description arranged in an stsd box within the moov box.

Incidentally, in broadcasting or local storage playback, the Web server delivers all audio streams, and the video playback terminal (client) decodes audio streams of necessary 3D audio, while parsing all audio streams, and outputs (rendering) the audio streams. When the bit rate (Bitrate) is high, or when there is a limitation on the rate of reading of a local storage, there is a demand for reducing the load on the decode process by acquiring only the audio stream of necessary 3D audio.

Further, in stream playback, there is a demand for the video playback terminal (client) to acquire only the coded data of necessary 3D audio to thereby acquire an audio stream of a coding rate optimum for the playback environment.

Accordingly, in the present disclosure, the coded data of 3D audio is divided into tracks for each type of the data and the tracks are arranged in the audio file, which makes it possible to efficiently acquire only a predetermined type of coded data. Thus, the load on the system can be reduced in broadcasting and local storage playback. Further, in stream playback, the highest-quality coded data of necessary 3D audio can be played back according to the frequency band. Further, since it is only necessary to record the position information of the audio stream of 3D audio within the audio file in units of tracks of subsegments, the amount of position information can be reduced as compared with the case where the coded data in units of objects are arranged in the sub-sample.

(Outline of Tracks)

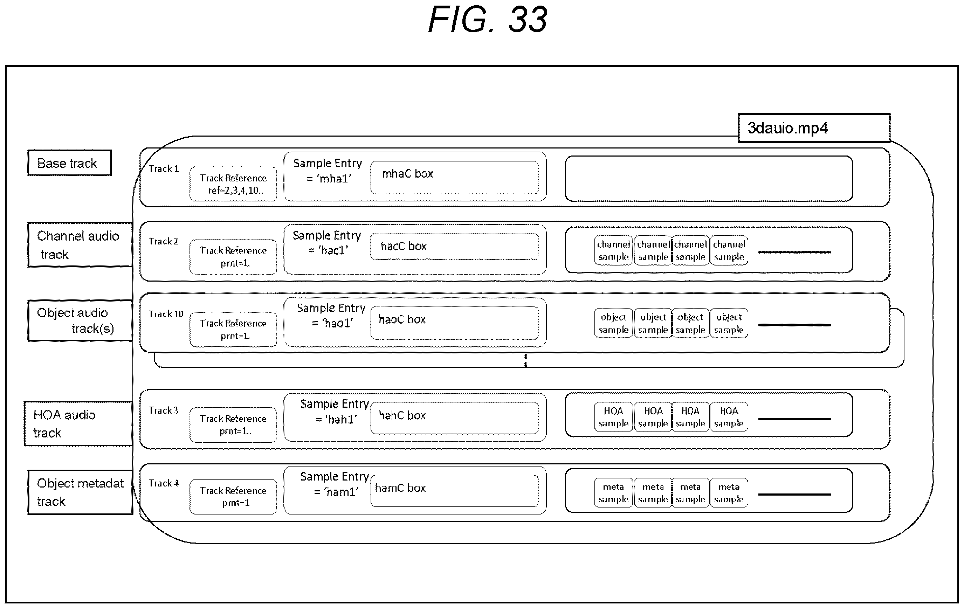

Fig. 33 is a diagram illustrating the outline of tracks in the first embodiment to which the present disclosure is applied.

As shown in Fig. 33, in the first embodiment, the Channel audio/Object audio/HOA audio/metadata constituting the 3D audio are respectively set as audio streams of different tracks (Channel audio track/Object audio track(s)/HOA audio track/Object metadata track) . The audio stream of audio metadata is arranged in the object metadata track.

Further, as a track for arranging information about the entire 3D audio, a base track (Base Track) is provided. In the base track shown in Fig. 33, the information about the entire 3D audio is arranged in the sample entry, while no sample is arranged in the sample entry. Further, the Base track, Channel audio track, Object audio track(s), HOA audio track, and Object metadata track are recorded as the same audio file (3dauio.mp4).

Track Reference is arranged in, for example, a track box, and represents a reference relationship between a corresponding track and another track. Specifically, Track Reference represents an ID unique to a track in other referred tracks (hereinafter referred to as a track ID). In the example shown in Fig. 33, the track IDs of Base track, Channel audio track, HOA audio track, Object metadata track, and Object audio track(s) are 1, 2, 3, 4, 10 ..., respectively. Track References of Base track are 2, 3, 4, 10 ..., and Track References of Channel audio track/HOA audio track/Object metadata track/Object audio track(s) are 1 which corresponds to the track ID of Base track.

Accordingly, Base track and Channel audio track/HOA audio track/Object metadata track/Object audio track(s) have a reference relationship. Specifically, Base track is referred to during playback of Channel audio track/HOA audio track/Object metadata track/Object audio track(s).

(Exemplary Syntax of Sample Entry of Base Track)

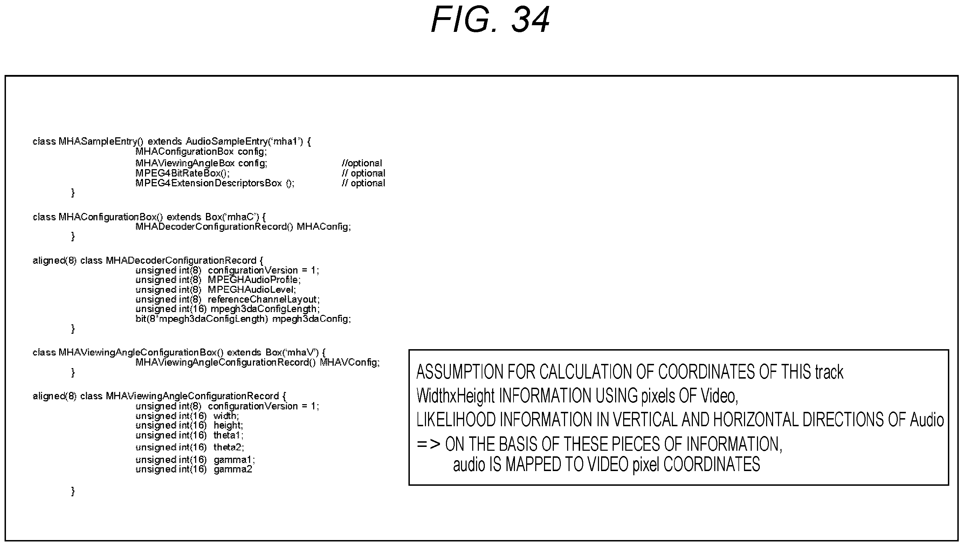

Fig. 34 is a diagram showing an exemplary syntax of a sample entry of the base track shown in Fig. 33.

As information about the entire 3D audio, configurationVersion, MPEGHAudioProfile, and MPEGHAudioLevel shown in Fig. 34 represent config information, profile information, and level information, respectively, of the entire audio stream of 3D audio (audio stream of normal 3D audio). Further, as information about the entire 3D audio, the width and the height shown in Fig. 34 represent the number of pixels in the horizontal direction of the video content and the number of pixels in the vertical direction of the video content, respectively. As information about the entire 3D audio, theta1, theta2, gamma1, and gamma2 represent the horizontal angle $\theta_{v1}$ at the left end of the image frame, the horizontal angle $\theta_{v2}$ at the right end of the image frame, the vertical angle $\gamma_{v1}$ at the upper end of the image frame, and the vertical angle $\gamma_{v2}$ at the lower end of the image frame, respectively, in the image frame size information of the video content.

(Exemplary Syntax of Sample Entry of Channel Audio Track)

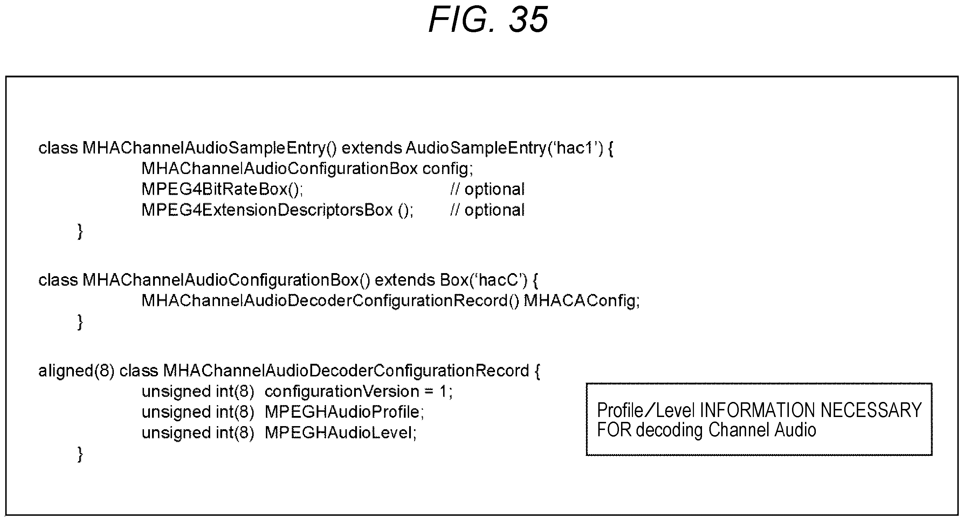

Fig. 35 is a diagram showing an exemplary syntax of a sample entry of the channel audio track (Channel audio track) shown in Fig. 33.

Fig. 35 shows configurationVersion, MPEGHAudioProfile, and MPEGHAudioLevel represent config information, profile information, and level information, respectively, of Channel Audio.

(Exemplary Syntax of Sample Entry of Object Audio Track)

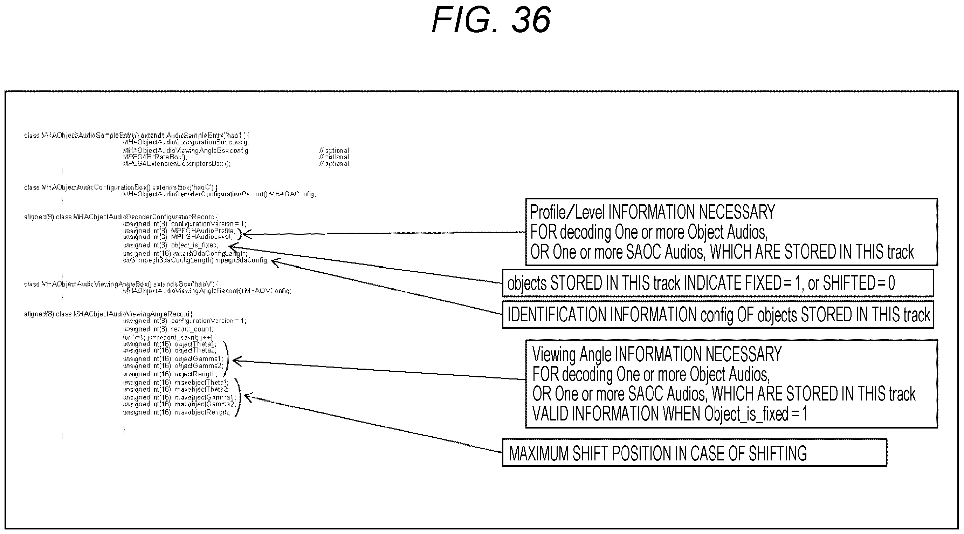

Fig. 36 is a diagram showing an exemplary syntax of a sample entry of the object audio track (Object audio track) shown in Fig. 33.

ConfigurationVersion, MPEGHAudioProfile, and MPEGHAudioLevel shown in Fig. 36 represent config information, profile information, and level information, respectively, in one or more Object audios included in the object audio track. object is fixed indicates whether one or more Object audio objects included in the object audio track are fixed or not. When object_is_fixed indicates 1, it indicates that the object is fixed, and when object is fixed indicates 0, it indicates that the object is shifted. mpegh3daConfig represents config of identification information of one or more Object audio objects included in the object audio track.

Further, objectTheta1/objectTheta2/objectGamma1/objectGamma2/objectRength represents object information of one or more Object audios included in the object audio track. This object information is information which is valid when Object_is_fixed = 1 holds.

maxobjectTheta1, maxobjectTheta2, maxobjectGamma1, maxobjectGamma2/, and maxobjectRength represent maximum values of object information when one or more Object audio objects included in the object audio track are shifted.

(Exemplary Syntax of Sample Entry of HOA Audio Track)

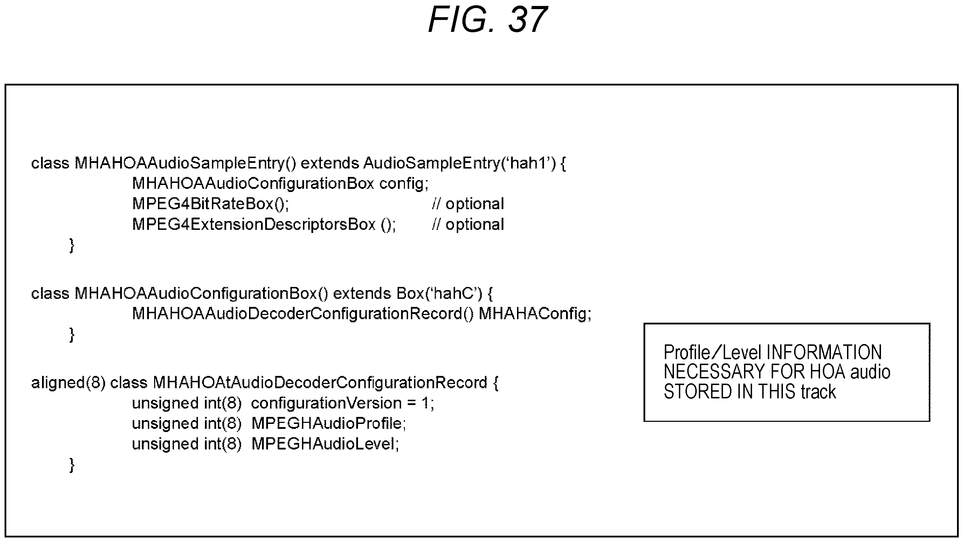

Fig. 37 is a diagram showing an exemplary syntax of a sample entry of the HOA audio track shown in Fig. 33.

ConfigurationVersion, MPEGHAudioProfile, and MPEGHAudioLevel shown in Fig. 37 represent config information, profile information, and level information, respectively, of HOA audio.

(Exemplary Syntax of Sample Entry of Object Metadata Track)

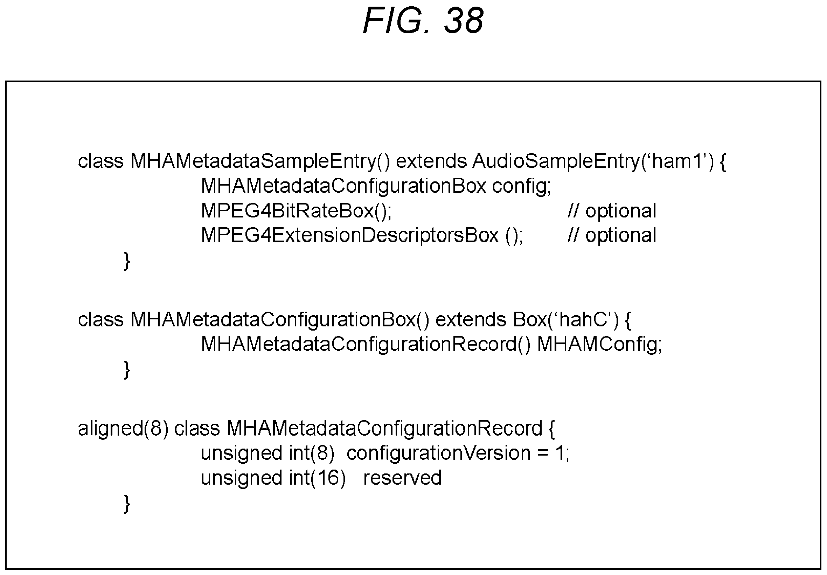

Fig. 38 is a diagram showing an exemplary syntax of a sample entry of the object metadata track (Object metadata track) shown in Fig. 33.

ConfigurationVersion shown in Fig. 38 represents config information of metadata.

(First Example of Segment Structure of Audio File of 3D Audio)

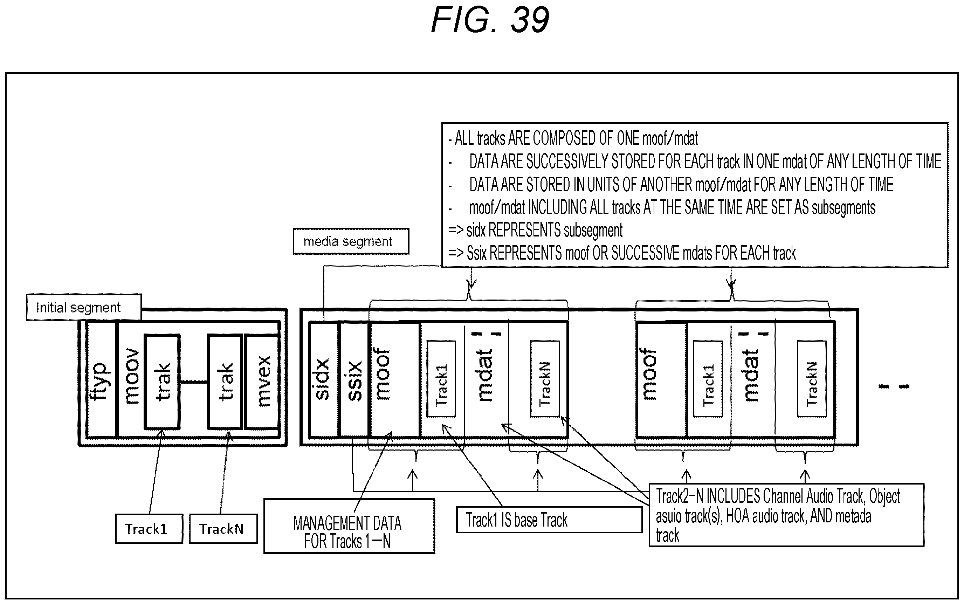

Fig. 39 is a diagram showing a first example of a segment structure of an audio file of 3D audio in the first embodiment to which the present disclosure is applied.

In the segment structure shown in Fig. 39, Initial segment is composed of an ftyp box and a moov box. trak boxes for each track included in the audio file are arranged in the moov box. An mvex box including information indicating the correspondence relation between the track ID of each track and the level used in an ssix box within the media segment is arranged in the moov box.

Further, the media segment is composed of the sidx box, the ssix box, and one or more subsegments. Position information indicating a position in the audio file of each subsegment is arranged in the sidx box. The ssix box includes position information of an audio stream at each level arranged in the mdat box. Note that each level corresponds to each track. Further, the position information of a first track is the position information of data composed of audio streams of the moof box and the first track.

The subsegment is provided for any length of time. A pair of a moof box and an mdat box which are common to all tracks is provided in the subsegment. In the mdat box, audio streams of all tracks are collectively arranged for any length of time. In the moof box, management information of the audio streams is arranged. The audio streams of each track arranged in the mdat box are continuous for each track.

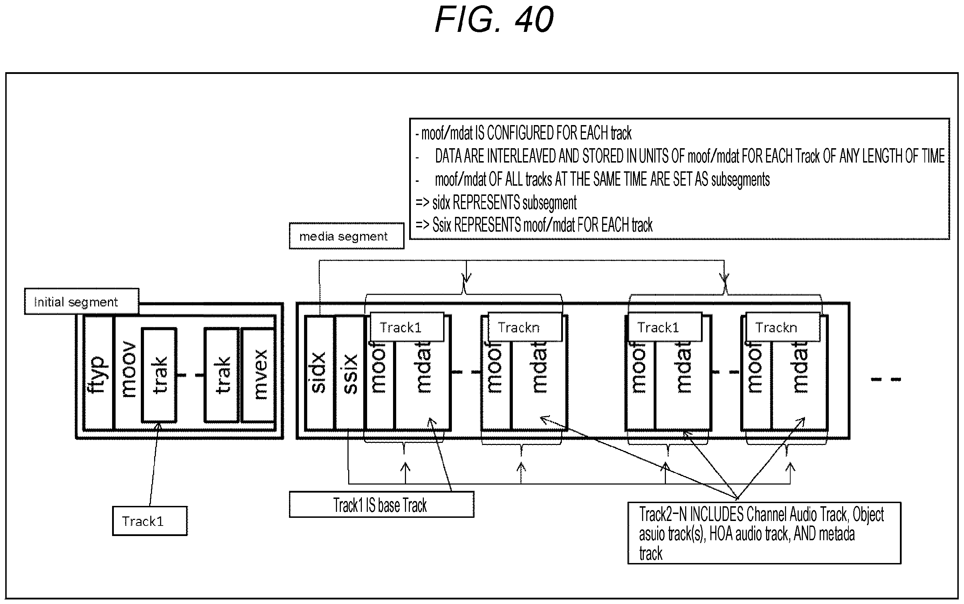

In the example of Fig. 39, Track1 having the track ID of 1 is a base Track, and Track2 to trackN having track IDs of 2 to N are Channel Audio Track, Object audio track(s), HOA audio track, and object metadata track, respectively. The same holds true for Fig. 40 to be described later.

(Second Example of Segment Structure of Audio File of 3D Audio)

Fig. 40 is a diagram showing a second example of the segment structure of the audio file of 3D audio in the first embodiment to which the present disclosure is applied.

The segment structure shown in Fig. 40 is different from the segment structure shown in Fig. 39 in that a moof box and an mdat box are provided for each track.

Specifically, Initial segment shown in Fig. 40 is similar to Initial segment shown in Fig. 39. Like the media segment shown in Fig. 39, the media segment shown in Fig. 40 is composed of the sidx box, the ssix box, and one or more subsegments. Further, like the sidx box shown in Fig. 39, the position information of each subsegment is arranged in the sidx box. The ssix box includes the position information of data of each level that is composed of the moof box and the mdat box.

The subsegment is provided for any length of time. A pair of a moof box and an mdat box is provided for each track in the subsegment. Specifically, audio streams of each track are collectively arranged (interleaved and stored) for any length of time in the mdat box of each track, and management information of the audio streams is arranged in the moof box.

As shown in Figs. 39 and 40, the audio streams for each track are collectively arranged for any length of time, so that the efficiency of acquiring audio streams via HTTP or the like is improved as compared with the case where audio streams are collectively arranged in units of samples.

(Exemplary Description of mvex Box)

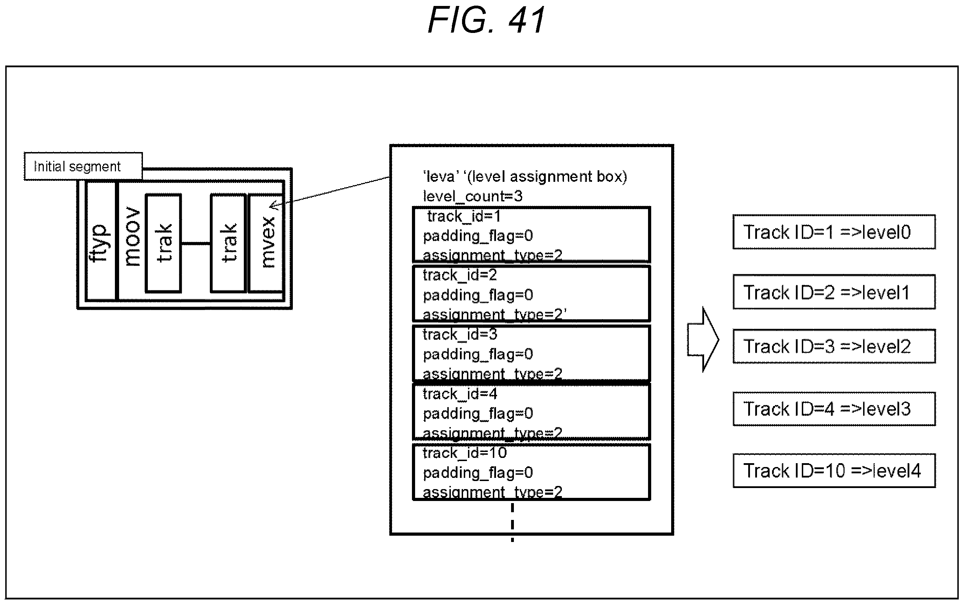

Fig. 41 is a diagram showing an exemplary description of a level assignment box arranged in the mvex box shown in Figs. 39 and 40.

The level assignment box is a box for associating the track ID of each track with the level used in the ssix box. In the example of Fig. 41, the base track having the track ID of 1 is associated with the level 0, and the channel audio track having the track ID of 2 is associated with the level 1. Further, the HOA audio track having the track ID of 3 is associated with the level 2, and the object metadata track having the track ID of 4 is associated with the level 3. Furthermore, the object audio track having the track ID of 10 is associated with the level 4.

(Exemplary Description of MPD File)

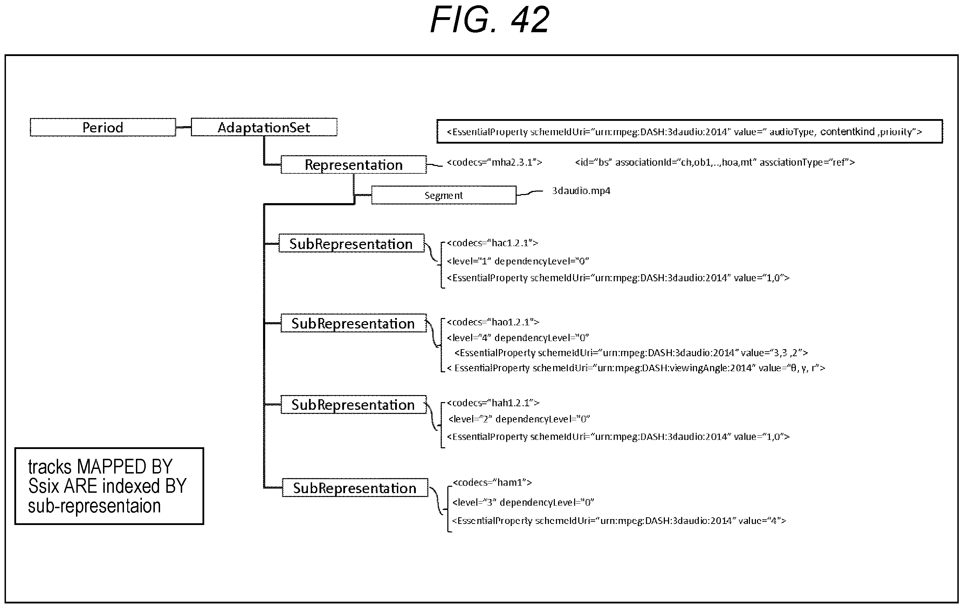

Fig. 42 is a diagram showing an exemplary description of an MPD file in the first embodiment to which the present disclosure is applied.

As shown in Fig. 42, "Representation" for managing the segment of the audio file (3daudio.mp4) of 3D audio, "SubRepresentation" for managing the tracks included in the segment, and the like are described in the MPD file.

In "Representation" and "SubRepresentation", "codecs" representing a type of codec of a corresponding segment or track in a code defined in a 3D audio file format is included. Further, "id", "associationId", and "assciationType" are included in "Representation".

"id" represents the ID of "Representation" in which "id" is included. "associationId" represents information indicating a reference relationship between a corresponding track and another track, and represents "id" of the reference track. "assciationType" represents a code indicating the meaning of a reference relationship (dependent relationship) with respect to the reference track. For example, the same value as the value of the track reference of MP4 is used.

Further, in "SubRepresentation", "level" which is a value set in the level assignment box as the value representing the corresponding track and the corresponding level is included. In "SubRepresentation", "dependencyLevel" which is a value representing a level corresponding to another track having a reference relationship (dependency) (hereinafter referred to as a reference track) is included.

Further, "SubRepresentation" includes <EssentialProperty schemeIdUri= "urn:mpeg:DASH:3daudio:2014" value= "audioType, contentkind, priority"> as information necessary for selection of 3D audio.

Further, "SubRepresentation" in the Object audio track includes <EssentialProperty schemeIdUri= "urn:mpeg:DASH:viewingAngle:2014" value= "$\theta, \gamma, r$">. When the object corresponding to "SubRepresentation" is fixed, $\theta, \gamma,$ and $r$ represent a horizontal angle, a vertical angle, and a distance, respectively, in the object position information. On the other hand, when the object is shifted, the values $\theta, \gamma,$ and $r$ represent the maximum value of the horizontal angle, the maximum value of the vertical angle, and the maximum value of the distance, respectively, among the maximum values of the object position information.

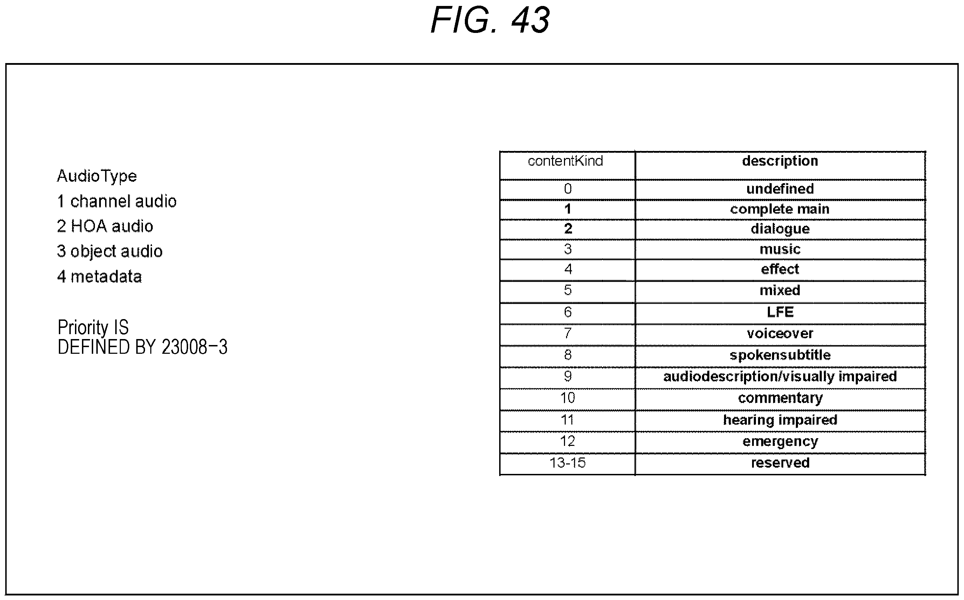

Fig. 43 is a diagram showing a definition of Essential Property shown in Fig. 42.

On the upper left side of Fig. 43, AudioType of <EssentialProperty schemeIdUri= "urn:mpeg:DASH:3daudio:2014" value= " audioType, contentkind, priority"> is defined. AudioType represents the type of 3D audio of the corresponding track.

In the example of Fig. 43, when AudioType indicates 1, it indicates that the audio data of the corresponding track is Channel audio of 3D audio, and when AudioType indicates 2, it indicates that the audio data of the corresponding track is HOA audio. Further, when AudioType indicates 3, it indicates that the audio data of the corresponding track is Object audio, and when AudioType is 4, it indicates that the audio data of the corresponding track is metadata.

Further, on the right side of Fig. 43, contentkind of <EssentialProperty schemeIdUri= "urn:mpeg:DASH:3daudio:2014" value= " audioType, contentkind, priority"> is defined. The contentkind represents the content of the corresponding audio. In the example of Fig. 43, for example, when the contentkind indicates 3, the corresponding audio is music.

As shown in the lower left of Fig. 43, Priority is defined by 23008-3 and represents the processing priority of the corresponding Object. A value representing the processing priority of Object is described as Priority only when the value is not changed during the audio stream, while when the value is changed during the audio stream, a value "0" is described.

(Outline of Information Processing System)

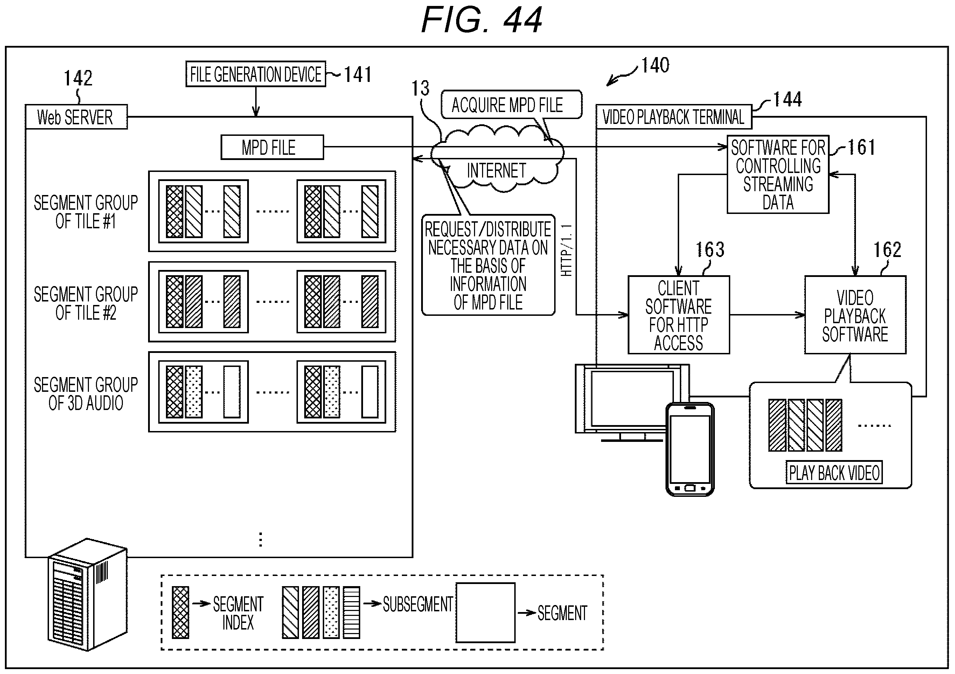

Fig. 44 is a diagram illustrating an outline of an information processing system according to the first embodiment to which the present disclosure is applied.

The components shown in Fig. 44 that are the same as the components shown in Fig. 1 are denoted by the same reference numerals. Repeated explanation is omitted as appropriate.

An information processing system 140 shown in Fig. 44 has a configuration in which a Web server 142, which is connected to a file generation device 141 is connected to a video playback terminal 144 via the Internet 13.

In the information processing system 140, the Web server 142 delivers (tiled streaming) a video stream of video content to the video playback terminal 144 in units of tiles by a method in conformity with MPEG-DASH. Further, in the information processing system 140, the Web server 142 delivers an audio stream of Object audio, Channel audio, or HOA audio corresponding to the tile to be played back to the video playback terminal 144.

The file generation device 141 of the information processing system 140 is similar to the file generation device 11 shown in Fig. 11, except that, for example, the audio file generation unit 56 generates an audio file in the first embodiment and the MPD generation unit 57 generates the MPD file in the first embodiment.

Specifically, the file generation device 141 acquires the image data of video content and encodes the image data in units of tiles to generate a video stream. The file generation device 141 processes the video stream of each tile into a file format. The file generation device 141 uploads the image file of each tile obtained as a result of the process to the Web server 142.

Further, the file generation device 141 acquires 3D audio of video content and encodes the 3D audio for each type (Channel audio/Object audio/HOA audio/metadata) of 3D audio to generate an audio stream. The file generation device 141 allocates tracks to the audio stream for each type of 3D audio. The file generation device 141 generates the audio file of the segment structure shown in Fig. 39 or 40 in which the audio stream of each track is arranged in units of subsegments, and uploads the audio file to the Web server 142.

The file generation device 141 generates an MPD file including image frame size information, tile position information, and object position information. The file generation device 141 uploads the MPD file to the Web server 142.

The Web server 142 stores the image file, the audio file, and the MPD file which are uploaded from the file generation device 141.

In the example of Fig. 44, the Web server 142 stores a segment group formed of image files of a plurality of segments of the tile #1 and a segment group formed of image files of a plurality of segments of the tile #2. The Web server 142 also stores a segment group formed of audio files of 3D audio.

The Web server 142 transmits, to the video playback terminal 144, the image file, the audio file, the MPD file, and the like stored in the Web server, in response to a request from the video playback terminal 144.

The video playback terminal 144 executes control software 161, video playback software 162, access software 163, and the like.

The control software 161 is software for controlling data to be streamed from the Web server 142. Specifically, the control software 161 causes the video playback terminal 144 to acquire the MPD file from the Web server 142.

Further, the control software 161 specifies a tile in the display area on the basis of the display area instructed from the video playback software 162 and the tile position information included in the MPD file. Then, the control software 161 instructs the access software 163 to transmit a request for the image file of the tile.

When Object audio is to be played back, the control software 161 instructs the access software 163 to transmit a request for the image frame size information in the audio file. Further, the control software 161 instructs the access software 163 to transmit a request for the audio stream of metadata. The control software 161 specifies the object corresponding to the image in the display area on the basis of the image frame size information and the object position information included in the audio stream of metadata, which are transmitted from the Web server 142 according to the instruction, and the display area. Then, the control software 161 instructs the access software 163 to transmit a request for the audio stream of the object.

Further, when Channel audio or HOA audio is to be played back, the control software 161 instructs the access software 163 to transmit a request for the audio stream of Channel audio or HOA audio.

The video playback software 162 is software for playing back the image file and the audio file which are acquired from the Web server 142. Specifically, when the display area is specified by the user, the video playback software 162 instructs the control software 161 to transmit the display area. Further, the video playback software 162 decodes the image file and the audio file which are acquired from the Web server 142 according to the instruction. The video playback software 162 synthesizes and outputs the image data in units of tiles obtained as a result of decoding. Further, the video playback software 162 synthesizes and outputs, as needed, the Object audio, Channel audio, or HOA audio, which are obtained as a result of decoding.

The access software 163 is software for controlling the communication with the Web server 142 via the Internet 13 using HTTP. Specifically, the access software 163 causes the video playback terminal 144 to transmit a request for the image frame size information or predetermined audio stream in the image file and audio file in response to the instruction from the control software 161. Further, the access software 163 causes the video playback terminal 144 to receive the image frame size information or predetermined audio stream in the image file and audio file, which are transmitted from the Web server 142, in response to the transmission request.

(Configuration Example of File Generation Device)

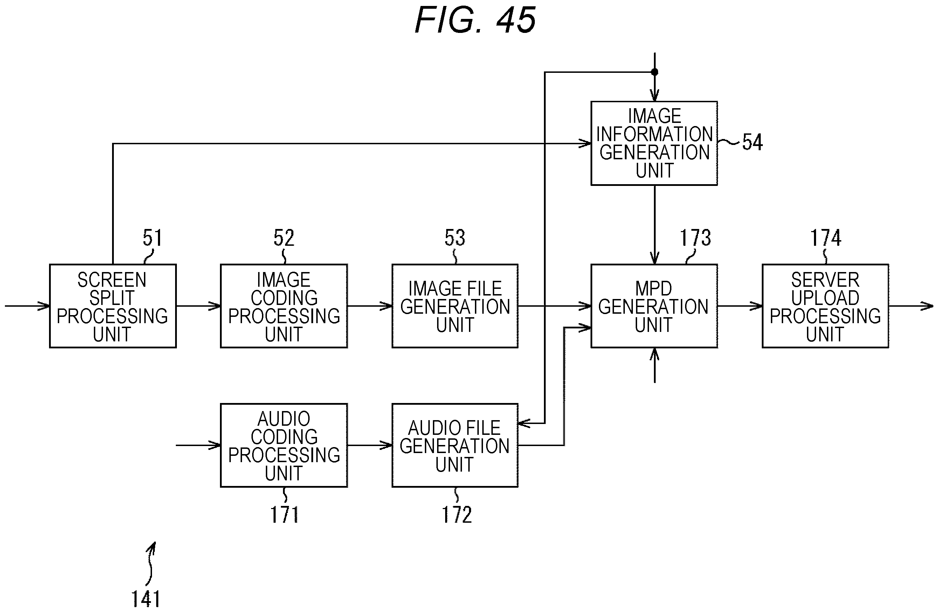

Fig. 45 is a block diagram showing a configuration example of the file generation device 141 shown in Fig. 44.

The components shown in Fig. 45 that are the same as the components shown in Fig. 11 are denoted by the same reference numerals. Repeated explanation is omitted as appropriate.

The configuration of the file generation device 141 shown in Fig. 45 is different from the configuration of the file generation device 11 shown in Fig. 11 in that an audio coding processing unit 171, an audio file generation unit 172, an MPD generation unit 173, and a server upload processing unit 174 are provided instead of the audio coding processing unit 55, the audio file generation unit 56, the MPD generation unit 57, and the server upload processing unit 58.

Specifically, the audio coding processing unit 171 of the file generation device 141 encodes the 3D audio of video content input from the outside for each type (Channel audio/Object audio/HOA audio/metadata) to generate an audio stream. The audio coding processing unit 171 supplies the audio file generation unit 172 with the audio stream for each type of the 3D audio.

The audio file generation unit 172 allocates tracks to the audio stream, which is supplied from the audio coding processing unit 171, for each type of the 3D audio. The audio file generation unit 172 generates the audio file of the segment structure shown in Fig. 39 or 40 in which the audio stream of each track is arranged in units of subsegments. At this time, the audio file generation unit 172 stores the image frame size information input from the outside in the sample entry. The audio file generation unit 172 supplies the MPD generation unit 173 with the generated audio file.

The MPD generation unit 173 determines the URL or the like of the Web server 142 that stores the image file of each tile supplied from the image file generation unit 53. Further, the MPD generation unit 173 determines the URL or the like of the Web server 142 that stores the audio file supplied from the audio file generation unit 172.

The MPD generation unit 173 arranges the image information supplied from the image information generation unit 54 in "AdaptationSet" for image of the MPD file. Further, the MPD generation unit 173 arranges the URL or the like of the image file of each tile in "Segment" of "Representation" for the image file of the tile.

The MPD generation unit 173 arranges the URL or the like of the audio file in "Segment" of "Representation" for the audio file. Further, the MPD generation unit 173 arranges the object position information or the like of each object input from the outside in "Sub Representation" for the Object metadata track of the object. The MPD generation unit 173 supplies the server upload processing unit 174 with the MPD file, in which various pieces of information arranged as described above, and the image file and audio file.

The server upload processing unit 174 uploads the image file, the audio file, and the MPD file of each tile supplied from the MPD generation unit 173 to the Web server 142.

(Explanation of Process of File Generation Device)

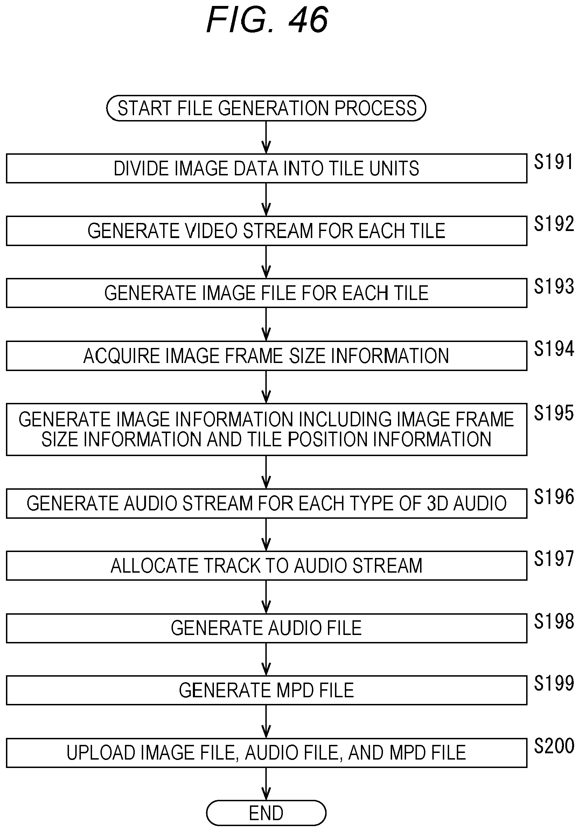

Fig. 46 is a flowchart illustrating a file generation process of the file generation device 141 shown in Fig. 45.

The process of steps S191 to S195 shown in Fig. 46 is similar to the process of steps S11 to S15 shown in Fig. 12, and thus the description thereof is omitted.

In step S196, the audio coding processing unit 171 encodes the 3D audio of video content input from the outside for each type (Channel audio/Object audio/HOA audio/metadata) to generate an audio stream. The audio coding processing unit 171 supplies the audio file generation unit 172 with the audio stream for each type of the 3D audio.

In step S197, the audio file generation unit 172 allocates tracks to the audio stream, which is supplied from the audio coding processing unit 171, for each type of the 3D audio.

In step S198, the audio file generation unit 172 generates the audio file of the segment structure shown in Fig. 39 or 40 in which the audio stream of each track is arranged in units of subsegments. At this time, the audio file generation unit 172 stores the image frame size information input from the outside in the sample entry. The audio file generation unit 172 supplies the MPD generation unit 173 with the generated audio file.

In step S199, the MPD generation unit 173 generates the MPD file including the image information supplied from the image information generation unit 54, the URL of each file, and the object position information. The MPD generation unit 173 supplies the server upload processing unit 174 with the image file, the audio file, and the MPD file.

In step S200, the server upload processing unit 174 uploads the image file, the audio file, and the MPD file, which are supplied from the MPD generation unit 173, to the Web server 142. Then, the process is terminated.

(Functional Configuration Example of Video Playback Terminal)

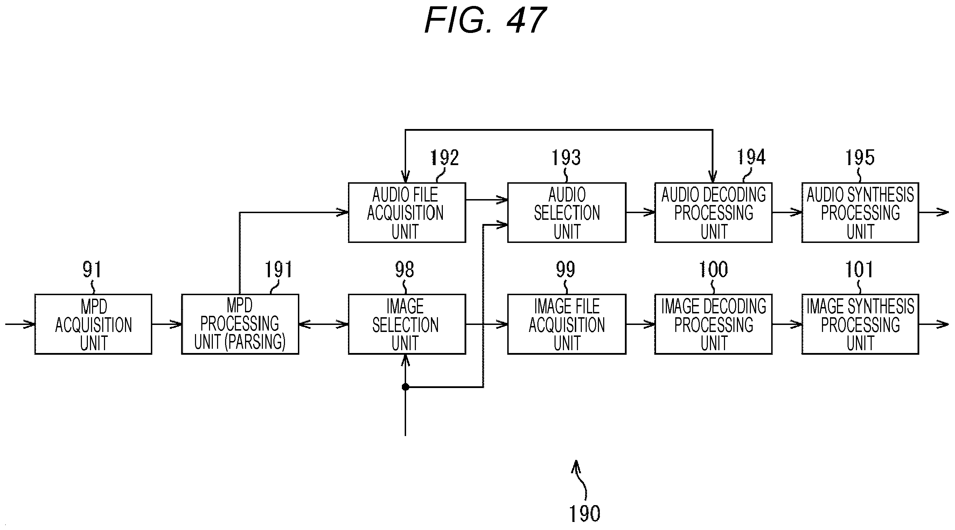

Fig. 47 is a block diagram showing a configuration example of the streaming playback unit which is implemented in such a manner that the video playback terminal 144 shown in Fig. 44 executes the control software 161, the video playback software 162, and the access software 163.

The components shown in Fig. 47 that are the same as the components shown in Fig. 13 are denoted by the same reference numerals. Repeated explanation is omitted as appropriate.

The configuration of the streaming playback unit 190 shown in Fig. 47 is different from the configuration of the streaming playback unit 90 shown in Fig. 13 in that an MPD processing unit 191, an audio selection unit 193, an audio file acquisition unit 192, an audio decoding processing unit 194, and an audio synthesis processing unit 195 are provided instead of the MPD processing unit 92, the audio selection unit 94, the audio file acquisition unit 95, the audio decoding processing unit 96, and the audio synthesis processing unit 97 and the metafile acquisition unit 93 is not provided.

The streaming playback unit 190 is similar to the streaming playback unit 90 shown in Fig. 13, except for, for example, the method of acquiring the audio data to be played back of the selected object.

Specifically, the MPD processing unit 191 of the streaming playback unit 190 extracts information, such as the URL of the audio file of the segment to be played back that is described in "Segment" for audio file, from the MPD file supplied from the MPD acquisition unit 91, and supplies the audio file acquisition unit 192 with the extracted information.

The MPD processing unit 191 extracts the tile position information described in "AdaptationSet" for image from the MPD file, and supplies the image selection unit 98 with the extracted information. The MPD processing unit 191 extracts information, such as the URL described in "Segment" for the image file of the tile requested from the image selection unit 98, from the MPD file, and supplies the image selection unit 98 with the extracted information.

When Object audio is to be played back, the audio file acquisition unit 192 requests the Web server 142 to transmit Initial Segment of Base track in the audio file specified by the URL on the basis of the information such as the URL supplied from the MPD processing unit 191, and acquires the Initial Segment of Base track.

Further, on the basis of the information such as the URL of the audio file, the audio file acquisition unit 192 requests the Web server 142 to transmit the audio stream of the object metadata track in the audio file specified by the URL, and acquires the audio stream of the object metadata track. The audio file acquisition unit 192 supplies the audio selection unit 193 with the object position information included in the audio stream of the object metadata track, the image frame size information included in Initial Segment of Base track, and the information such as the URL of the audio file.

Further, when Channel audio is to be played back, the audio file acquisition unit 192 requests the Web server 142 to transmit the audio stream of Channel audio track in the audio file specified by the URL on the basis of the information such as the URL of the audio file, and acquires the audio stream of Channel audio track. The audio file acquisition unit 192 supplies the audio decoding processing unit 194 with the acquired audio stream of Channel audio track.

When HOA audio is to be played back, the audio file acquisition unit 192 performs a process similar to that performed when Channel audio is to be played back. As a result, the audio stream of the HOA audio track is supplied to the audio decoding processing unit 194.

Note that it is determined which one of Object audio, Channel audio, and HOA audio is to be played back, for example, according to an instruction from a user.

The audio selection unit 193 calculates the position of each object on the image on the basis of the image frame size information and object position information supplied from the audio file acquisition unit 192. The audio selection unit 193 selects an object in the display area designated by the user on the basis of the position of each object on the image. On the basis of the information such as the URL of the audio file supplied from the audio file acquisition unit 192, the audio selection unit 193 requests the Web server 142 to transmit the audio stream of the Object audio track of the selected object in the audio file specified by the URL, and acquires the audio stream of the Object audio track. The audio selection unit 193 supplies the audio decoding processing unit 194 with the acquired audio stream of the Object audio track.

The audio decoding processing unit 194 decodes the audio stream of the Channel audio track or HOA audio track supplied from the audio file acquisition unit 192, or decodes the audio stream of the Object audio track supplied from the audio selection unit 193. The audio decoding processing unit 194 supplies the audio synthesis processing unit 195 with one of the Channel audio, the HOA audio, and the Object audio which are obtained as a result of decoding.

The audio synthesis processing unit 195 synthesizes and outputs the Object audio, the Channel audio, or the HOA audio supplied from the audio decoding processing unit 194, as needed.

(Explanation of Process of Video Playback Terminal)

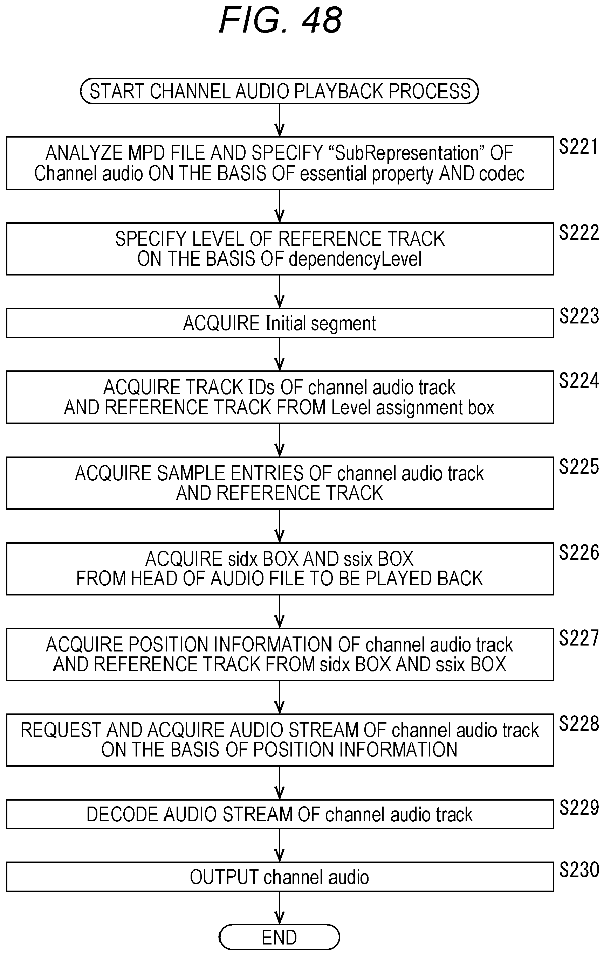

Fig. 48 is a flowchart illustrating the channel audio playback process of the streaming playback unit 190 shown in Fig. 47. This channel audio playback process is performed, for example, when the user selects the Channel audio as an object to be played back.

In step S221 of Fig. 48, the MPD processing unit 191 analyzes the MPD file supplied from the MPD acquisition unit 91, and specifies "SubRepresentation" of Channel audio of the segment to be played back on the basis of the essential property and codec described in "SubRepresentation". Further, the MPD processing unit 191 extracts, from the MPD file, information such as the URL described in "Segment" for the audio file of the segment to be played back, and supplies the audio file acquisition unit 192 with the extracted information.

In step S222, the MPD processing unit 191 specifies the level of the Base track, which is a reference track, on the basis of the dependencyLevel of "SubRepresentation" specified in step S221, and supplies the audio file acquisition unit 192 with the specified level of the Base track.

In step S223, the audio file acquisition unit 192 requests the Web server 142 to transmit Initial Segment of the segment to be played back on the basis of the information such as the URL supplied from the MPD processing unit 191, and acquires the Initial Segment.

In step S224, the audio file acquisition unit 192 acquires, from the Level assignment box in the Initial Segment, the track IDs corresponding to the levels of the channel audio track and the Base track which is a reference track.

In step S225, the audio file acquisition unit 192 acquires the sample entry of the Initial Segment in the trak box corresponding to the track ID of Initial Segment, on the basis of the track IDs of the channel audio track and the Base track which is a reference track. The audio file acquisition unit 192 supplies the audio decoding processing unit 194 with the codec information included in the acquired sample entry.

In step S226, on the basis of the information such as the URL supplied from the MPD processing unit 191, the audio file acquisition unit 192 sends a request to the Web server 142 and acquires the sidx box and the ssix box from the head of the audio file of the segment to be played back.

In step S227, the audio file acquisition unit 192 acquires the position information of the reference track and the channel audio track of the segment to be played back, from the sidx box and the ssix box which are acquired in step S223. In this case, since the Base track which is a reference track does not include any audio stream, there is no position information of the reference track.

In step S228, the audio file acquisition unit 192 requests the Web server 142 to transmit the audio stream of the channel audio track arranged in the mdat box, on the basis of the position information of the channel audio track and the information such as the URL of the audio file of the segment to be played back, and acquires the audio stream of the channel audio track. The audio file acquisition unit 192 supplies the audio decoding processing unit 194 with the acquired audio stream of the channel audio track.

In step S229, the audio decoding processing unit 194 decodes the audio stream of the channel audio track on the basis of the codec information supplied from the audio file acquisition unit 192. The audio file acquisition unit 192 supplies the audio synthesis processing unit 195 with the channel audio obtained as a result of decoding.

In step S230, the audio synthesis processing unit 195 outputs the channel audio. Then, the process is terminated.

Note that, although not shown, an HOA audio playback process for playing back the HOA audio by the streaming playback unit 190 is performed in a manner similar to the channel audio playback process shown in Fig. 48.

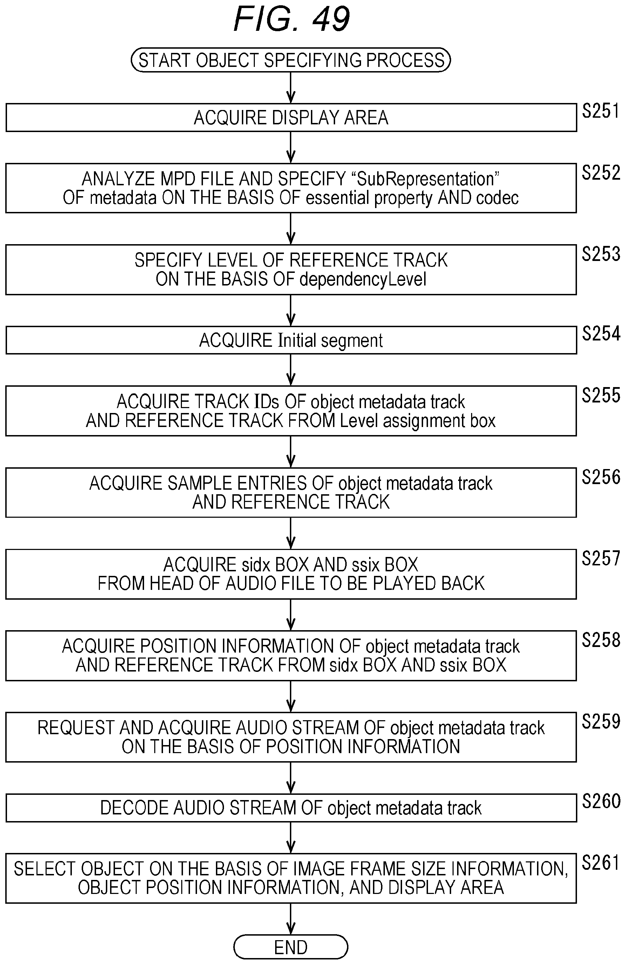

Fig. 49 is a flowchart illustrating the object specifying process of the streaming playback unit 190 shown in Fig. 47. This object specifying process is performed, for example, when the user selects the Object audio as an object to be played back and the playback area is changed.

In step S251 of Fig. 49, the audio selection unit 193 acquires the display area designated by the user through the user's operation or the like.

In step S252, the MPD processing unit 191 analyzes the MPD file supplied from the MPD acquisition unit 91, and specifies "SubRepresentation" of metadata of the segment to be played back, on the basis of the essential property and codec described in "SubRepresentation". Further, the MPD processing unit 191 extracts, from the MPD file, information such as the URL of the audio file of the segment to be played back that is described in "Segment" for audio file, and supplies the audio file acquisition unit 192 with the extracted information.

In step S253, the MPD processing unit 191 specify the level of the Base track, which is a reference track, on the basis of the dependencyLevel of "SubRepresentation" specified in step S252, and supplies the audio file acquisition unit 192 with the specified level of the Base track.

In step S254, the audio file acquisition unit 192 requests the Web server 142 to transmit Initial Segment of the segment to be played back, on the basis of the information such as the URL supplied from the MPD processing unit 191, and acquires the Initial Segment.

In step S255, the audio file acquisition unit 192 acquires, from the Level assignment box in the Initial Segment, the track IDs corresponding to the levels of the object metadata track and the Base track which is a reference track.

In step S256, the audio file acquisition unit 192 acquires the sample entry of Initial Segment in the trak box corresponding to the track ID of the Initial Segment on the basis of the track IDs of the object metadata track and the Base track which is a reference track. The audio file acquisition unit 192 supplies the audio selection unit 193 with the image frame size information included in the sample entry of the Base track which is a reference track. Further, the audio file acquisition unit 192 supplies the audio selection unit 193 with the Initial Segment.

In step S257, on the basis of the information such as the URL supplied from the MPD processing unit 191, the audio file acquisition unit 192 sends a request to the Web server 142 and acquires the sidx box and the ssix box from the head of the audio file of the segment to be played back.

In step S258, the audio file acquisition unit 192 acquires, from the sidx box and ssix box acquired in step S257, the position information of the reference track and the object metadata track of the subsegment to be played back. In this case, since the Base track which is a reference track does not include any audio stream, there is no position information of the reference track. The audio file acquisition unit 192 supplies the audio selection unit 193 with the sidx box and the ssix box.

In step S259, the audio file acquisition unit 192 requests the Web server 142 to transmit the audio stream of the object metadata track arranged in the mdat box, on the basis of the position information of the object metadata track and the information such as the URL of the audio file of the segment to be played back, and acquires the audio stream of the object metadata track.

In step S260, the audio file acquisition unit 192 decodes the audio stream of the object metadata track acquired in step S259, on the basis of the codec information included in the sample entry acquired in step S256. The audio file acquisition unit 192 supplies the audio selection unit 193 with the object position information included in the metadata obtained as a result of decoding. Further, the audio file acquisition unit 192 supplies the audio selection unit 193 with the information such as the URL of the audio file supplied from the MPD processing unit 191.

In step S261, the audio selection unit 193 selects an object in the display area on the basis of the image frame size information and object position information supplied from the audio file acquisition unit 192 and on the basis of the display area designated by the user. Then, the process is terminated.

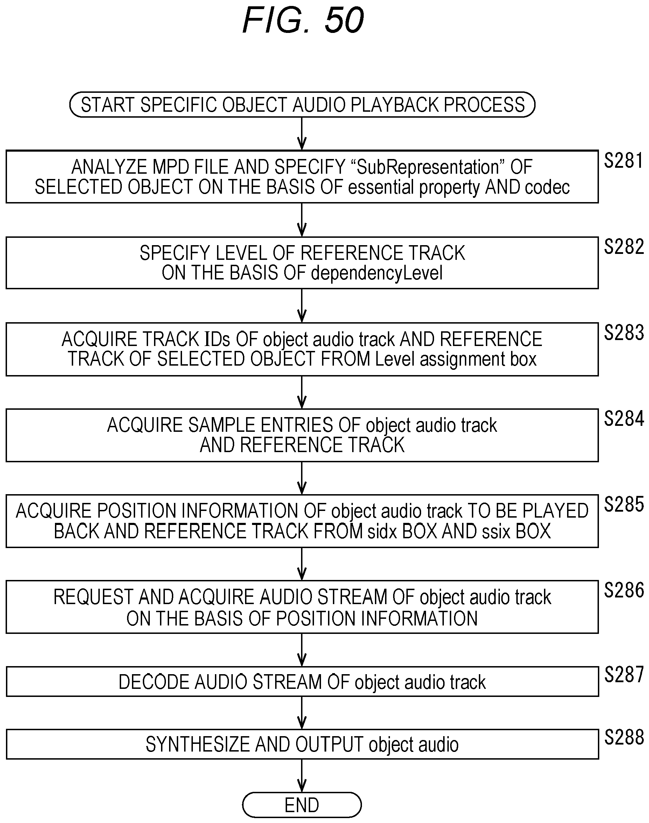

Fig. 50 is a flowchart illustrating a specific object audio playback process performed by the streaming playback unit 190 after the object specifying process shown in Fig. 49.

In step S281 of Fig. 50, the MPD processing unit 191 analyzes the MPD file supplied from the MPD acquisition unit 91, and specifies "SubRepresentation" of the object audio of the selected object on the basis of the essential property and codec described in "SubRepresentation".

In step S282, the MPD processing unit 191 specifies the level of the Base track, which is a reference track, on the basis of the dependencyLevel of "SubRepresentation" specified in step S281, and supplies the audio file acquisition unit 192 with the specified level of the Base track.

In step S283, the audio file acquisition unit 192 acquires, from the Level assignment box in the Initial Segment, the track IDs corresponding to the levels of the object audio track and the Base track which is a reference track, and supplies the audio selection unit 193 with the track IDs.

In step S284, the audio selection unit 193 acquires the sample entry of Initial Segment in the trak box corresponding to the track ID of the Initial Segment, on the basis of the track IDs of the object audio track and the Base track which is a reference track. This Initial Segment is supplied from the audio file acquisition unit 192 in step S256 shown in Fig. 49. The audio selection unit 193 supplies the audio decoding processing unit 194 with the codec information included in the acquired sample entry.

In step S285, the audio selection unit 193 acquires, from the sidx box and ssix box supplied from the audio file acquisition unit 192 in step S258, the position information of the reference track and the object audio track of the selected object of the subsegment to be played back. In this case, since the Base track which is a reference track does not include any audio stream, there is no position information of the reference track.

In step S286, the audio selection unit 193 requests the Web server 142 to transmit the audio stream of the object audio track of the selected object, which is arranged in the mdat box, on the basis of the position information of the object audio track and the information such as the URL of the audio file of the segment to be played back, and acquires the audio stream of the object audio track. The audio selection unit 193 supplies the audio decoding processing unit 194 with the acquired audio stream of the object audio track.

In step S287, the audio decoding processing unit 194 decodes the audio stream of the object audio track on the basis of the codec information supplied from the audio selection unit 193. The audio selection unit 193 supplies the audio synthesis processing unit 195 with the object audio obtained as a result of decoding.

In step S288, the audio synthesis processing unit 195 synthesizes and outputs the object audio supplied from the audio decoding processing unit 194. Then, the process is terminated.

As described above, in the information processing system 140, the file generation device 141 generates an audio file in which 3D audio is divided into a plurality of tracks depending on the types of the 3D audio and the tracks are arranged. The video playback terminal 144 acquires the audio stream of a predetermined type of 3D audio in the audio file. Accordingly, the video playback terminal 144 can efficiently acquire the audio stream of the predetermined types of 3D audio. Therefore, it can be said that the file generation device 141 generates the audio file capable of improving the efficiency of acquiring the audio stream of the predetermined type of 3D audio.

<Second Embodiment>

(Outline of Tracks)

Fig. 51 is a diagram illustrating the outline of tracks in a second embodiment to which the present disclosure is applied.

As shown in Fig. 51, the second embodiment differs from the first embodiment in that the base sample is recorded as a sample of Base track. The base sample is formed of information to be referred to for the sample of Channel audio/Object audio/HOA audio/metadata. The sample of Channel audio/Object audio/HOA audio/metadata to be referred to by the reference information included in the base sample is arranged in the order of arrangement of the reference information, thereby making it possible to generate the audio stream of 3D audio before the 3D audio is divided into tracks.

(Exemplary Syntax of Sample Entry of Base Track)

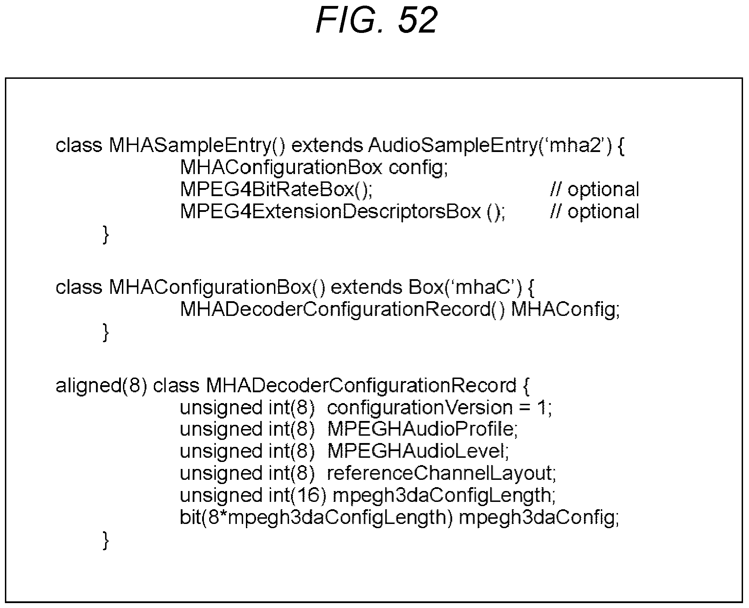

Fig. 52 is a diagram showing an exemplary syntax of the sample entry of the base track shown in Fig. 51.

The syntax shown in Fig. 52 is the same as the syntax shown in Fig. 34, except that "mha2" representing that the sample entry is the sample entry of the Base track shown in Fig. 51 is described instead of "mha1" representing that the sample entry is the sample entry of the Base track shown in Fig. 33.

(Exemplary Structure of Base Sample)

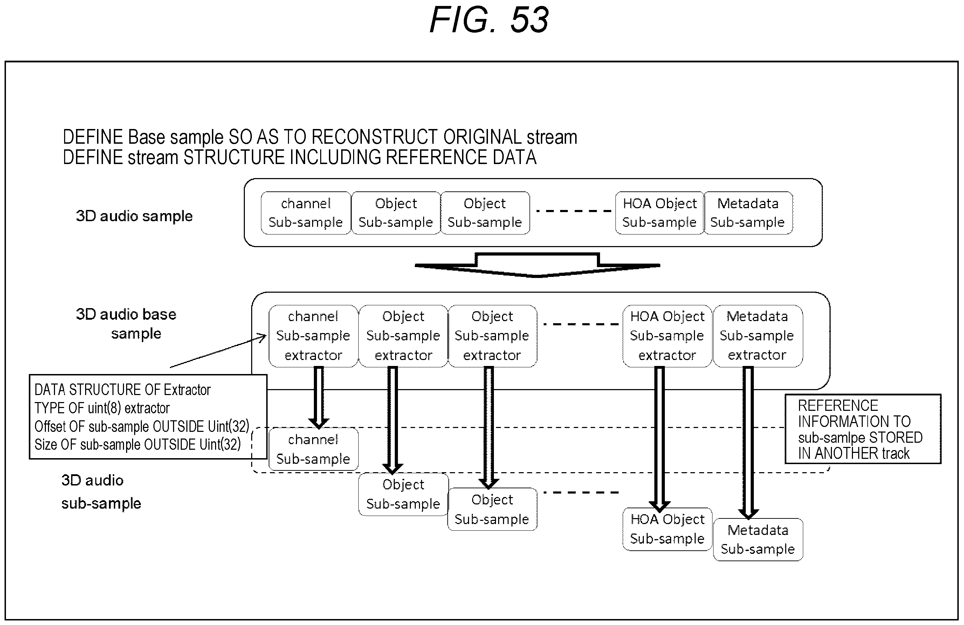

Fig. 53 is a diagram showing an exemplary structure of the base sample.

As shown in Fig. 53, the base sample is configured using the extractor of Channel audio/Object audio/HOA audio/metadata in units of samples as a sub-sample. The extractor of Channel audio/Object audio/HOA audio/metadata is composed of the type of the extractor, and the offset and size of the sub-sample of the corresponding Channel audio track/Object audio track(s)/HOA audio track/Object metadata track. This offset is a difference between the position of the base sample in the file of sub-sample of the base sample and the position of Channel audio track/Object audio track(s)/HOA audio track/Object metadata track in the file of the sample. In other words, the offset is information indicating the position within the file of a sample of another track corresponding to the sub-sample of the base sample including the offset.

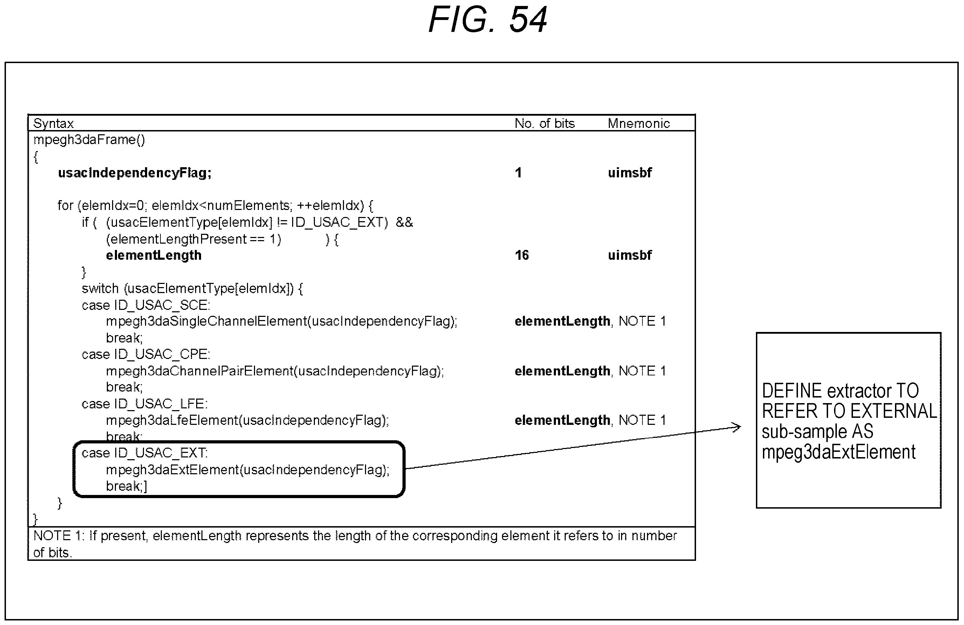

Fig. 54 is a diagram showing an exemplary syntax of the base sample.

As shown in Fig. 54, in the base sample, SCE element for storing the object audio in the sample of the Object audio track is replaced by EXT element for storing the extractor.

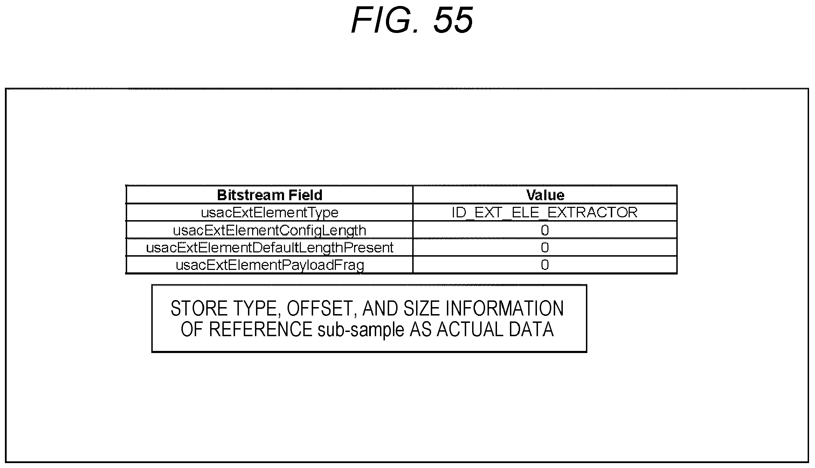

Fig. 55 is a diagram showing an example of extractor data.

As shown in Fig. 55, the type of the extractor and the offset and size of the sub-sample of the corresponding Channel audio track/Object audio track(s)/HOA audio track/Object metadata track are described in the extractor.

Note that the extractor may be extended by utilizing Network Abstraction Layer (NAL) structure, which is defined in Advanced Video Coding (AVC)/High Efficiency Video Coding (HEVC), so that audio elementary and config information can be stored.

The information processing system and the process performed by the information processing system in the second embodiment are similar to those of the first embodiment, and thus the descriptions thereof are omitted.

<Third Embodiment>

(Outline of Tracks)

Fig. 56 is a diagram illustrating the outline of tracks in a third embodiment to which the present disclosure is applied.

As shown in Fig. 56, the third embodiment differs from the first embodiment in that the base sample and the sample of metadata are recorded as the sample of the Base track and the Object metadata track is not provided.

The information processing system and the process performed by the information processing system in the third embodiment are similar to those of the first embodiment, except that the audio stream of the Base track is acquired instead of the Object metadata track so as to acquire the object position information. Accordingly, the descriptions thereof are omitted.

<Fourth Embodiment>

(Outline of Tracks)

Fig. 57 is a diagram illustrating the outline of tracks in a fourth embodiment to which the present disclosure is applied. As shown in Fig. 57, the fourth embodiment differs from the first embodiment in that the tracks are recoded as different files (3da_base.mp4/3da_channel.mp4/3da_object_1.mp4/3da_hoa.mp4/3da_meta.mp 4). In this case, only the audio data of a desired track can be acquired by acquiring a file of a desired track via HTTP. Accordingly, the audio data of a desired track can be efficiently acquired via HTTP.

(Exemplary Description of MPD File)

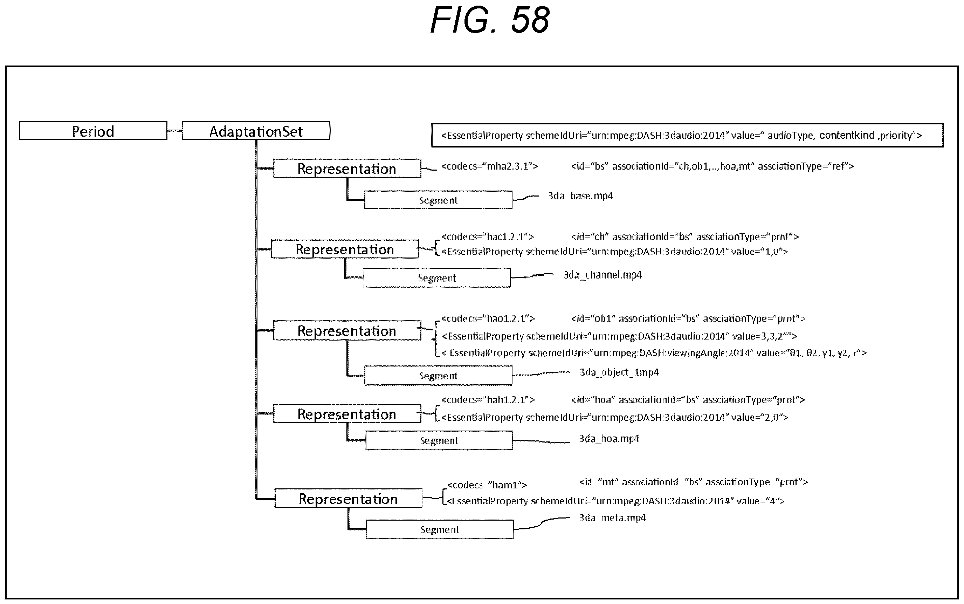

Fig. 58 is a diagram showing an exemplary description of the MPD file according to the fourth embodiment to which the present disclosure is applied.

As shown in Fig. 58, "Representation" or the like that manages the segment of each audio file (3da_base.mp4/3da_channel.mp4/3da_object_1.mp4/3da_hoa.mp4/3da_meta.mp 4) of 3D audio is described in the MPD file.

The "Representation" includes "codecs", "id", "associationId", and "assciationType". Further, the "Representation" of Channel audio track/Object audio track(s)/HOA audio track/Object metadata track also includes "<Essential-Property schemeIdUri= "urn:mpeg:DASH:3daudio:2014" value=" audioType, contentkind, priority">". Further, the "Representation" of Object audio track(s) includes <EssentialProperty schemeIdUri="urn:mpeg:DASH:viewingAngle:2014" value="$\theta$, $\gamma$, r">.

(Outline of Information Processing System)

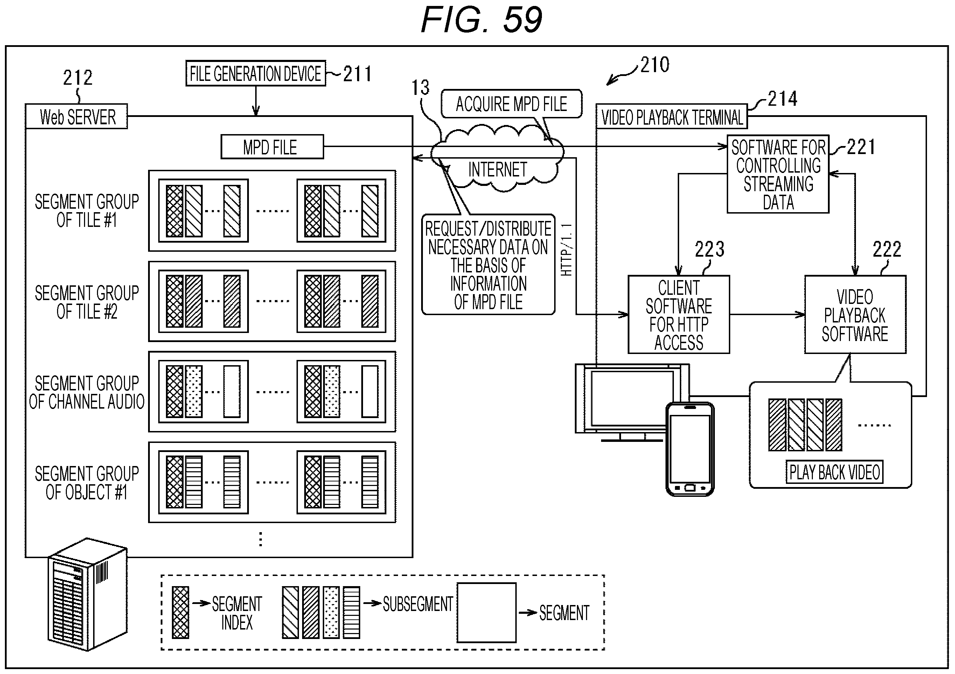

Fig. 59 is a diagram illustrating the outline of the information processing system in the fourth embodiment to which the present disclosure is applied.

The components shown in Fig. 59 that are the same as the components shown in Fig. 1 are denoted by the same reference numerals. Repeated explanation is omitted as appropriate.

The information processing system 210 shown in Fig. 59 has a configuration in which a Web server 212, which is connected to a file generation device 211, and a video playback terminal 214 are connected via the Internet 13.

In the information processing system 210, the Web server 212 delivers (tiled streaming) a video stream of video content to the video playback terminal 214 in units of tiles by a method in conformity with MPEG-DASH. Further, in the information processing system 210, the Web server 212 delivers the audio file of Object audio, Channel audio, or HOA audio corresponding to the file to be played back to the video playback terminal 214.

Specifically, the file generation device 211 acquires the image data of video content and encodes the image data in units of tiles to generate a video stream. The file generation device 211 processes the video stream of each tile into a file format for each segment. The file generation device 211 uploads the image file of each file obtained as a result of the above process to the Web server 212.

Further, the file generation device 211 acquires the 3D audio of video content, and encodes the 3D audio for each type (Channel audio/Object audio/HOA audio/metadata) of the 3D audio to generate an audio stream. The file generation device 211 allocates the tracks to the audio stream for each type of the 3D audio. The file generation device 211 generates an audio file in which the audio stream is arranged for each track, and uploads the generated audio file to the Web server 212.

The file generation device 211 generates the MPD file including the image frame size information, the tile position information, and the object position information. The file generation device 211 uploads the MPD file to the Web server 212.

The Web server 212 stores the image file uploaded from the file generation device 211, the audio file for each type of 3D audio, and the MPD file.

In the example of Fig. 59, the Web server 212 stores a segment group formed of image files of a plurality of segments of the tile #1, and a segment group formed of image files of a plurality of segments of the tile #2. The Web server 212 also stores a segment group formed of the audio file of Channel audio and a segment group of the audio file of the object #1.

The Web server 212 transmits, to the video playback terminal 214, the image file, the predetermined type of audio file of 3D audio, the MPD file, and the like, which are stored in the Web server, in response to a request from the video playback terminal 214.

The video playback terminal 214 executes control software 221, video playback software 222, access software 223, and the like.

The control software 221 is software for controlling data to be streamed from the Web server 212. Specifically, the control software 221 causes the video playback terminal 214 to acquire the MPD file from the Web server 212.

Further, the control software 221 specifies a tile in the MPD file on the basis of the display area instructed from the video playback software 222 and the tile position information included in the MPD file. Then, the control software 221 instructs the access software 223 to send a request for transmitting the image file of the tile.

When Object audio is to be played back, the control software 221 instructs the access software 223 to send a request for transmitting the audio file of the Base track. Further, the control software 221 instructs the access software 223 to send a request for transmitting the audio file of the Object metadata track. The control software 221 acquires the image frame size information in the audio file of the Base track, which is transmitted from the Web server 142 according to the instruction, and the object position information included in the audio file of metadata. The control software 221 specifies the object corresponding to the image in the display area on the basis of the image frame size information, the object position information, and the display area. Further, the control software 221 instructs the access software 223 to send a request for transmitting the audio file of the object.

Further, when Channel audio or HOA audio is to be played back, the control software 221 instructs the access software 223 to send a request for transmitting the audio file of the Channel audio or HOA audio.

The video playback software 222 is software for playing back the image file and audio file acquired from the Web server 212. Specifically, when the display area is specified by the user, the video playback software 222 gives an instruction on the display area to the control software 221. Further, the video playback software 222 decodes the image file and audio file acquired from the Web server 212 according to the instruction. The video playback software 222 synthesizes and outputs the image data in units of tiles obtained as a result of decoding. Further, the video playback software 222 synthesizes and outputs, as needed, the Object audio, Channel audio, or HOA audio obtained as a result of decoding.

The access software 223 is software for controlling the communication with the Web server 212 via the Internet 13 using HTTP. Specifically, the access software 223 causes the video playback terminal 214 to transmit a request for transmitting the image file and the predetermined audio file in response to an instruction from the control software 221. Further, the access software 223 causes the video playback terminal 214 to receive the image file and the predetermined audio file, which are transmitted from the Web server 212, according to the transmission request.

(Configuration Example of File Generation Device)

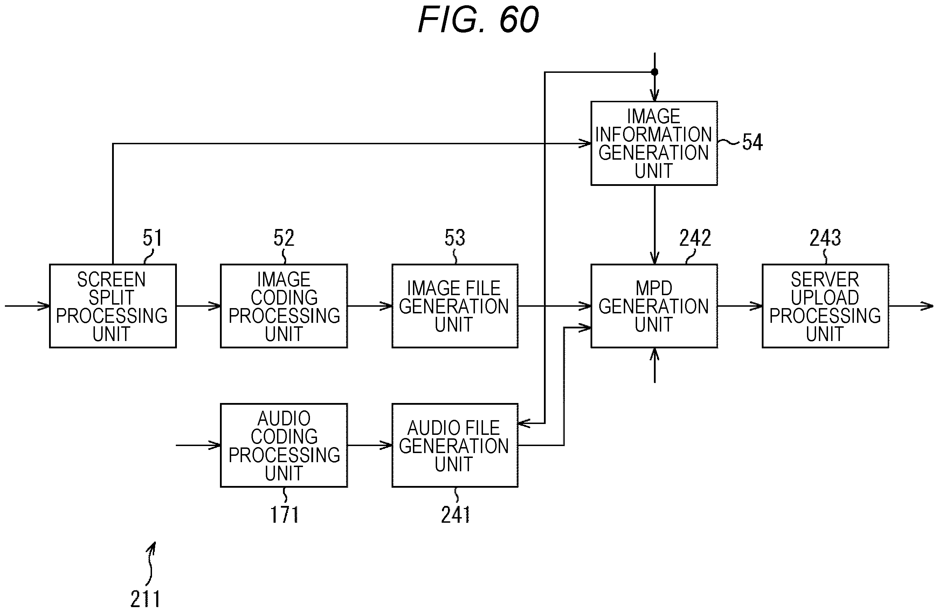

Fig. 60 is a block diagram of the file generation device 211 shown in Fig. 59.

The components shown in Fig. 60 that are the same as the components shown in Fig. 45 are denoted by the same reference numerals. Repeated explanation is omitted as appropriate.

The configuration of the file generation device 211 shown in Fig. 60 is different from the configuration of the file generation device 141 shown in Fig. 45 in that an audio file generation unit 241, an MPD generation unit 242, and a server upload processing unit 243 are provided instead of the audio file generation unit 172, the MPD generation unit 173, and the server upload processing unit 174, respectively.

Specifically, the audio file generation unit 241 of the file generation device 211 allocates the tracks to the audio stream, which is supplied from the audio coding processing unit 171, for each type of the 3D audio. The audio file generation unit 241 generates an audio file in which the audio stream is arranged for each track. At this time, the audio file generation unit 241 stores the image frame size information input from the outside in the sample entry of the Base track. The audio file generation unit 241 supplies the MPD generation unit 242 with the audio file for each type of the 3D audio.

The MPD generation unit 242 determines the URL or the like of the Web server 212 that stores the image file of each tile supplied from the image file generation unit 53. Further, the MPD generation unit 242 determines, for each type of the 3D audio, the URL or the like of the Web server 212 that stores the audio file supplied from the audio file generation unit 241.

The MPD generation unit 242 arranges, in "AdaptationSet" for the image of the MPD file, the image information supplied from the image information generation unit 54. Further, the MPD generation unit 242 arranges the URL or the like of the image file of each tile in "Segment" of "Representation" for the image file of the tile.,

The MPD generation unit 242 arranges, for each type of the 3D audio, the URL or the like of the audio file in "Segment" of "Representation" for the audio file. Further, the MPD generation unit 242 arranges the object position information or the like of each object input from the outside in "Representation" for the Object metadata track of the object. The MPD generation unit 242 supplies the server upload processing unit 243 with the MPD file, in which various pieces of information are arranged as described above, the image file, and the audio file for each type of the 3D audio.

The server upload processing unit 243 uploads the image file of each tile supplied from the MPD generation unit 242, the audio file for each type of the 3D audio, and the MPD file to the Web server 212.

(Explanation of Process of File Generation Device)

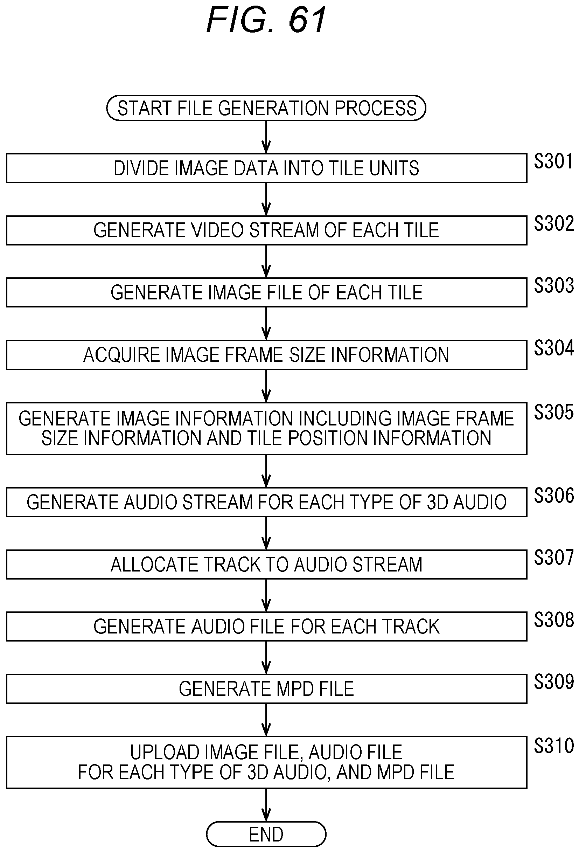

Fig. 61 is a flowchart illustrating a file generation process of the file generation device 211 shown in Fig. 60.

The process of steps S301 to S307 shown in Fig. 61 is similar to the process of steps S191 to S197 shown in Fig. 46, and thus the description thereof is omitted.

In step S308, the audio file generation unit 241 generates an audio file in which an audio stream is arranged for each track. At this time, the audio file generation unit 241 stores the image frame size information input from the outside in the sample entry in the audio file of the Base track. The audio file generation unit 241 supplies the MPD generation unit 242 with the generated audio file for each type of the 3D audio.

In step S309, the MPD generation unit 242 generates an MPD file including the image information supplied from the image information generation unit 54, the URL of each file, and the object position information. The MPD generation unit 242 supplies the server upload processing unit 243 with the image file, the audio file for each type of the 3D audio, and the MPD file.

In step S310, the server upload processing unit 243 uploads the image file supplied from the MPD generation unit 242, the audio file for each type of the 3D audio, and the MPD file to the Web server 212. Then, the process is terminated.

(Functional Configuration Example of Video Playback Terminal)

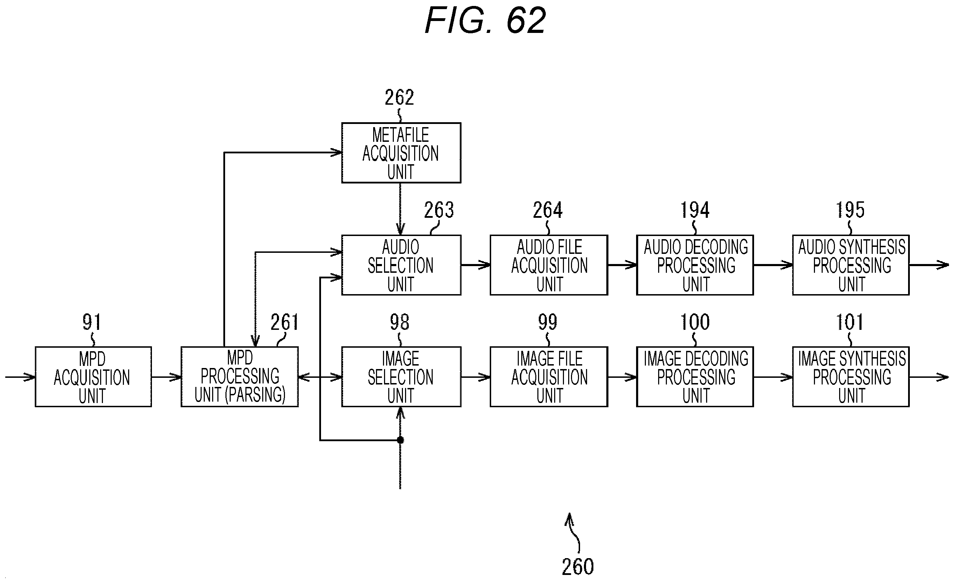

Fig. 62 is a block diagram showing a configuration example of a streaming playback unit which is implemented in such a manner that the video playback terminal 214 shown in Fig. 59 executes the control software 221, the video playback software 222, and the access software 223.

The components shown in Fig. 62 that are the same as the components shown in Figs. 13 and 47 are denoted by the same reference numerals . Repeated explanation is omitted as appropriate.

The configuration of the streaming playback unit 260 shown in Fig. 62 is different from the configuration of the streaming playback unit 90 shown in Fig. 13 in that an MPD processing unit 261, a metafile acquisition unit 262, an audio selection unit 263, an audio file acquisition unit 264, an audio decoding processing unit 194, and an audio synthesis processing unit 195 are provided instead of the MPD processing unit 92, the metafile acquisition unit 93, the audio selection unit 94, the audio file acquisition unit 95, the audio decoding processing unit 96, and the audio synthesis processing unit 97, respectively.

Specifically, when Object audio is to be played back, the MPD processing unit 261 of the streaming playback unit 260 extracts, from the MPD file supplied from the MPD acquisition unit 91, information such as the URL described in "Segment" of the audio file of the object metadata track of the segment to be played back, and supplies the metafile acquisition unit 262 with the extracted information. Further, the MPD processing unit 261 extracts, from the MPD file, information such as the URL described in "Segment" of the audio file of the object audio track of the object requested from the audio selection unit 263, and supplies the audio selection unit 263 with the extracted information. Furthermore, the MPD processing unit 261 extracts, from the MPD file, information such as the URL described in "Segment" of the audio file of the Base track of the segment to be played back, and supplies the metafile acquisition unit 262 with the extracted information.

Further, when Channel audio or HOA audio is to be played back, the MPD processing unit 261 extracts, from the MPD file, information such as the URL described in "Segment" of the audio file of the Channel audio track or HOA audio track of the segment to be played back. The MPD processing unit 261 supplies the audio file acquisition unit 264 with the information such as the URL via the audio selection unit 263.

Note that it is determined which one of Object audio, Channel audio, and HOA audio is to be played back, for example, according to an instruction from a user.

The MPD processing unit 261 extracts, from the MPD file, the tile position information described in "AdaptationSet" for image, and supplies the image selection unit 98 with the extracted tile position information. The MPD processing unit 261 extracts, from the MPD file, information such as the URL described in "Segment" for the image file of the tile requested from the image selection unit 98, and supplies the image selection unit 98 with the extracted information.

On the basis of the information such as the URL supplied from the MPD processing unit 261, the metafile acquisition unit 262 requests the Web server 212 to transmit the audio file of the object metadata track specified by the URL, and acquires the audio file of the object metadata track. The metafile acquisition unit 93 supplies the audio selection unit 263 with the object position information included in the audio file of the object metadata track.

Further, on the basis of the information such as the URL of the audio file, the metafile acquisition unit 262 requests the Web server 142 to transmit the Initial Segment of the audio file of the Base track specified by the URL, and acquires the Initial Segment. The metafile acquisition unit 262 supplies the audio selection unit 263 with the image frame size information included in the sample entry of the Initial Segment.

The audio selection unit 263 calculates the position of each object on the image on the basis of the image frame size information and the object position information supplied from the metafile acquisition unit 262. The audio selection unit 263 selects an object in the display area designated by the user, on the basis of the position of each object on the image. The audio selection unit 263 requests the MPD processing unit 261 to transmit the information such as the URL of the audio file of the object audio track of the selected object. The audio selection unit 263 supplies the audio file acquisition unit 264 with the information such as the URL supplied from the MPD processing unit 261 according to the request.

On the basis of the information, such as the URL of the audio file of the object audio track, Channel audio track, or HOA audio track supplied from the audio selection unit 263, the audio file acquisition unit 264 requests the Web server 12 to transmit the audio stream of the audio file specified by the URL, and acquires the audio stream of the audio file. The audio file acquisition unit 95 supplies the audio decoding processing unit 194 with the acquired audio file in units of objects.

(Explanation of Process of Video Playback Terminal)

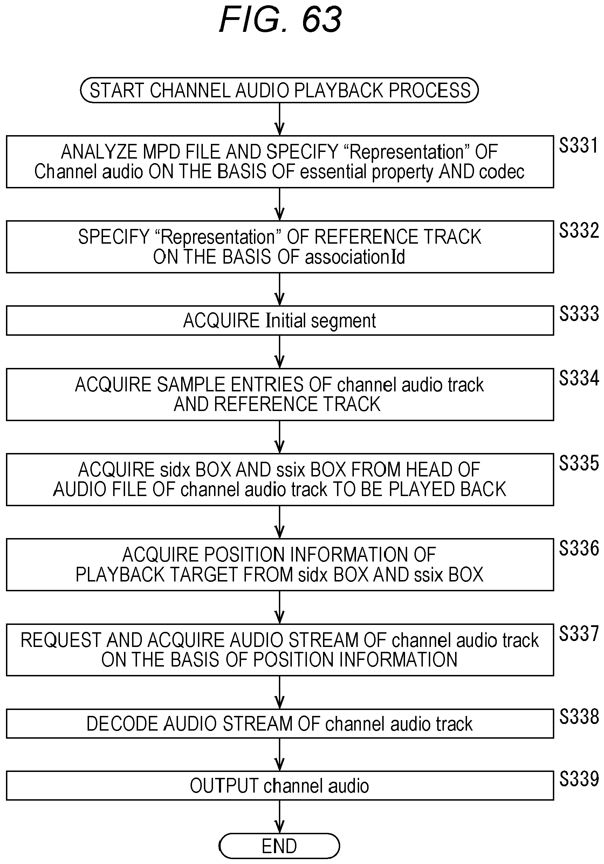

Fig. 63 is a flowchart illustrating a channel audio playback process of the streaming playback unit 260 shown in Fig. 62. This channel audio playback process is performed, for example, when Channel audio is selected by the user as an object to be played back.

In step S331 of Fig. 63, the MPD processing unit 261 analyzes the MPD file supplied from the MPD acquisition unit 91, and specifies "Representation" of the Channel audio of the segment to be played back on the basis of the essential property and codec described in "Representation". Further, the MPD processing unit 261 extracts information such as the URL of the audio file of the Channel audio track of the segment to be played back that is described in "Segment" included in the "Representation", and supplies the audio file acquisition unit 264 with the extracted information via the audio selection unit 263.

In step S332, the MPD processing unit 261 specifies "Representation" of the Base track, which is a reference track, on the basis of the associationId of "Representation" specified in step S331. The MPD processing unit 261 extracts information such as the URL of the audio file of the reference track described in "Segment" included in the "Representation", and supplies the audio file acquisition unit 264 with the extracted file via the audio selection unit 263.

In step S333, the audio file acquisition unit 264 requests the Web server 212 to transmit the Initial Segment of the audio files of the Channel audio track of the segment to be played back and the reference track on the basis of the information such as the URL supplied from the audio selection unit 263, and acquires the Initial Segment.

In step S334, the audio file acquisition unit 264 acquires the sample entry in the trak box of the acquired Initial Segment. The audio file acquisition unit 264 supplies the audio decoding processing unit 194 with the codec information included in the acquired sample entry.

In step S335, the audio file acquisition unit 264 sends a request to the Web server 142 on the basis of the information such as the URL supplied from the audio selection unit 263, and acquires the sidx box and the ssix box from the head of the audio file of the Channel audio track of the segment to be played back.

In step S336, the audio file acquisition unit 264 acquires the position information of the subsegment to be played back from the sidx box and ssix box acquired in step S333.

In step S337, the audio selection unit 263 requests the Web server 142 to transmit the audio stream of the channel audio track arranged in the mdat box in the audio file, on the basis of the position information acquired in step S337 and the information such as the URL of the audio file of the channel audio track of the segment to be played back, and acquires the audio stream of the channel audio track. The audio selection unit 263 supplies the audio decoding processing unit 194 with the acquired audio stream of the channel audio track.

In step S338, the audio decoding processing unit 194 decodes the audio stream of the channel audio track supplied from the audio selection unit 263 on the basis of the codec information supplied from the audio file acquisition unit 264. The audio selection unit 263 supplies the audio synthesis processing unit 195 with the channel audio obtained as a result of decoding.

In step S339, the audio synthesis processing unit 195 outputs the channel audio. Then, the process is terminated.

Although not shown, the HOA audio playback process for playing back HOA audio by the streaming playback unit 260 is performed in a manner similar to the channel audio playback process shown in Fig. 63.

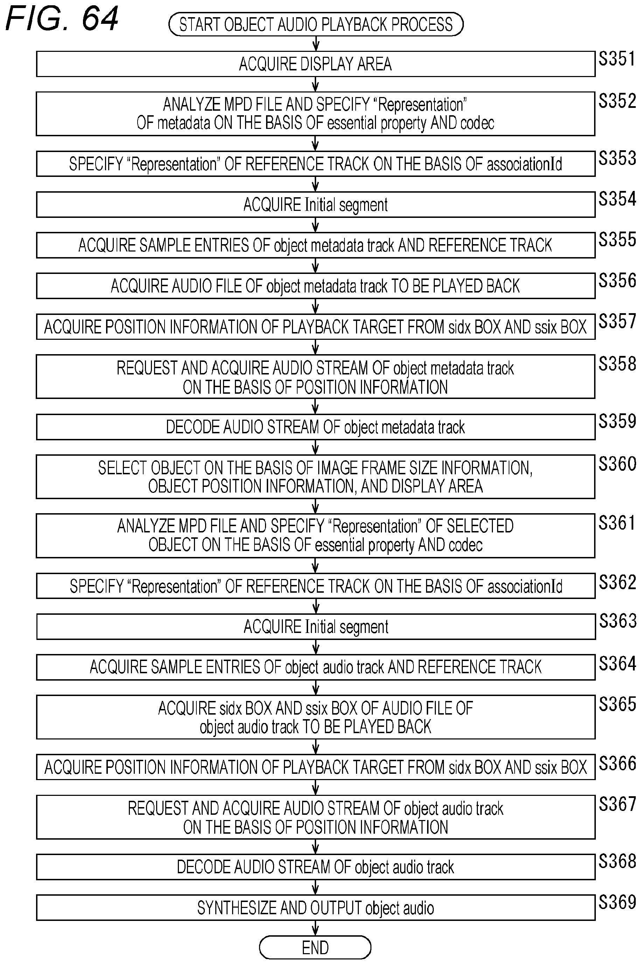

Fig. 64 is a flowchart illustrating an object audio playback process of the streaming playback unit 260 shown in Fig. 62. This object audio playback process is performed, for example, when the user selects Object audio as an object to be played back and the playback area is changed.

In step S351 of Fig. 64, the audio selection unit 263 acquires the display area designated by the user through the user's operation or the like.

In step S352, the MPD processing unit 261 analyzes the MPD file supplied from the MPD acquisition unit 91, and specifies "Representation" of the metadata of the segment to be played back, on the basis of the essential property and codec described in "Representation". Further, the MPD processing unit 261 extracts information such as the URL of the audio file of the object metadata track of the segment to be played back that is described in "Segment" included in the "Representation", and supplies the metafile acquisition unit 262 with the extracted information.

In step S353, the MPD processing unit 261 specifies "Representation" of the Base track, which is a reference track, on the basis of the associationId of "Representation" specified in step S352. The MPD processing unit 261 extracts information such as the URL of the audio file of the reference track described in "Segment" included in the "Representation", and supplies the metafile acquisition unit 262 with the extracted information.

In step S354, the metafile acquisition unit 262 requests the Web server 212 to transmit the Initial Segment of the audio files of the object metadata track of the segment to be played back and the reference track, on the basis of the information such as the URL supplied from the MPD processing unit 261, and acquires the Initial Segment.

In step S355, the metafile acquisition unit 262 acquires the sample entry in the trak box of the acquired Initial Segment. The metafile acquisition unit 262 supplies the audio file acquisition unit 264 with the image frame size information included in the sample entry of the Base track which is a reference track.

In step S356, the metafile acquisition unit 262 sends a request to the Web server 142 on the basis of the information such as the URL supplied from the MPD processing unit 261, and acquires the sidx box and the ssix box from the head of the audio file of the object metadata track of the segment to be played back.

In step S357, the metafile acquisition unit 262 acquires the position information of the subsegment to be played back from the sidx box and ssix box acquired in step S356.

In step S358, the metafile acquisition unit 262 requests the Web server 142 to transmit the audio stream of the object metadata track arranged in the mdat box in the audio file, on the basis of the position information acquired in step S357 and the information such as the URL of the audio file of the object metadata track of the segment to be played back, acquires the audio stream of the object metadata track.

In step S359, the metafile acquisition unit 262 decodes the audio stream of the object metadata track acquired in step S358, on the basis of the codec information included in the sample entry acquired in step S355. The metafile acquisition unit 262 supplies the audio selection unit 263 with the object position information included in the metadata obtained as a result of decoding.

In step S360, the audio selection unit 263 selects an object in the display area on the basis of the image frame size information and object position information supplied from the metafile acquisition unit 262 and on the basis of the display area designated by the user. The audio selection unit 263 requests the MPD processing unit 261 to transmit the information such as the URL of the audio file of the object audio track of the selected object.

In step S361, the MPD processing unit 261 analyzes the MPD file supplied from the MPD acquisition unit 91, and specifies "Representation" of the object audio of the selected object on the basis of the essential property and codec described in "Representation". Further, the MPD processing unit 261 extracts information such as the URL of the audio file of the object audio track of the selected object of the segment to be played back that is described in "Segment" included in the "Representation", and supplies the audio file acquisition unit 264 with the extracted information via the audio selection unit 263.

In step S362, the MPD processing unit 261 specifies "Representation" of the Base track, which is a reference track, on the basis of the associationId of "Representation" specified in step S361. The MPD processing unit 261 extracts information such as the URL of the audio file of the reference track described in "Segment" included in the "Representation", and supplies the audio file acquisition unit 264 with the extracted information via the audio selection unit 263.

In step S363, the audio file acquisition unit 264 requests the Web server 212 to transmit the Initial Segment of the audio files of the object audio track of the segment to be played back and the reference track, on the basis of the information such as the URL supplied from the audio selection unit 263, and acquires the Initial Segment.

In step S364, the audio file acquisition unit 264 acquires the sample entry in the trak box of the acquired Initial Segment. The audio file acquisition unit 264 supplies the audio decoding processing unit 194 with the codec information included in the sample entry.

In step S365, the audio file acquisition unit 264 sends a request to the Web server 142 on the basis of the information such as the URL supplied from the audio selection unit 263, and acquires the sidx box and the ssix box from the head of the audio file of the object audio track of the segment to be played back.

In step S366, the audio file acquisition unit 264 acquires the position information of the subsegment to be played back from the sidx box and ssix box acquired in step S365.

In step S367, the audio file acquisition unit 264 requests the Web server 142 to transmit the audio stream of the object audio track arranged in the mdat box within the audio file, on the basis of the position information acquired in step S366 and the information such as the URL of the audio file of the object audio track of the segment to be played back, and acquires the audio stream of the object audio track. The audio file acquisition unit 264 supplies the audio decoding processing unit 194 with the acquired audio stream of the object audio track.

The process of steps S368 and S369 is similar to the process of steps S287 and S288 shown in Fig. 50, and thus the description thereof is omitted.

Note that in the above description, the audio selection unit 263 selects all objects in the display area. However, the audio selection unit 263 may select only objects with a high processing priority in the display area, or may select only an audio object of a predetermined content.

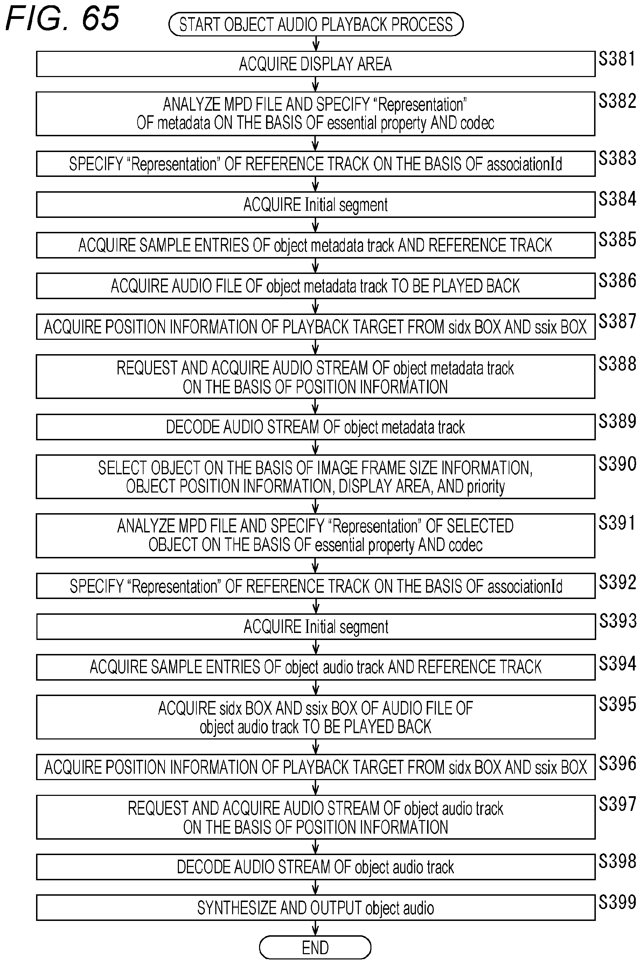

Fig. 65 is a flowchart illustrating an object audio playback process when the audio selection unit 263 selects only objects with a high processing priority among the objects in the display area.

The object audio playback process shown in Fig. 65 is similar to the object audio playback process shown in Fig. 64, except that the process of step S390 shown in Fig. 65 is performed instead of step S360 shown in Fig. 64. Specifically, the process of steps S381 to S389 and steps S391 to S399 shown in Fig. 65 is similar to the process of steps S351 to S359 and steps S361 to S369 shown in Fig. 64. Accordingly, only the process of step S390 will be described below.

In step S390 shown in Fig. 65, the audio file acquisition unit 264 selects an object with a high processing priority in the display area on the basis of the image frame size information, the object position information, the display area, and the priority of each object. Specifically, the audio file acquisition unit 264 specifies each object with the display area on the basis of the image frame size information, the object position information, and the display area. The audio file acquisition unit 264 selects, from among the specified objects, an object having a priority equal to or higher than a predetermined value. Note that, for example, the MPD processing unit 261 analyzes the MPD file, thereby acquiring the priority from "Representation" of the object audio of the specified object. The audio selection unit 263 requests the MPD processing unit 261 to transmit information such as the URL of the audio file of the object audio track of the selected object.

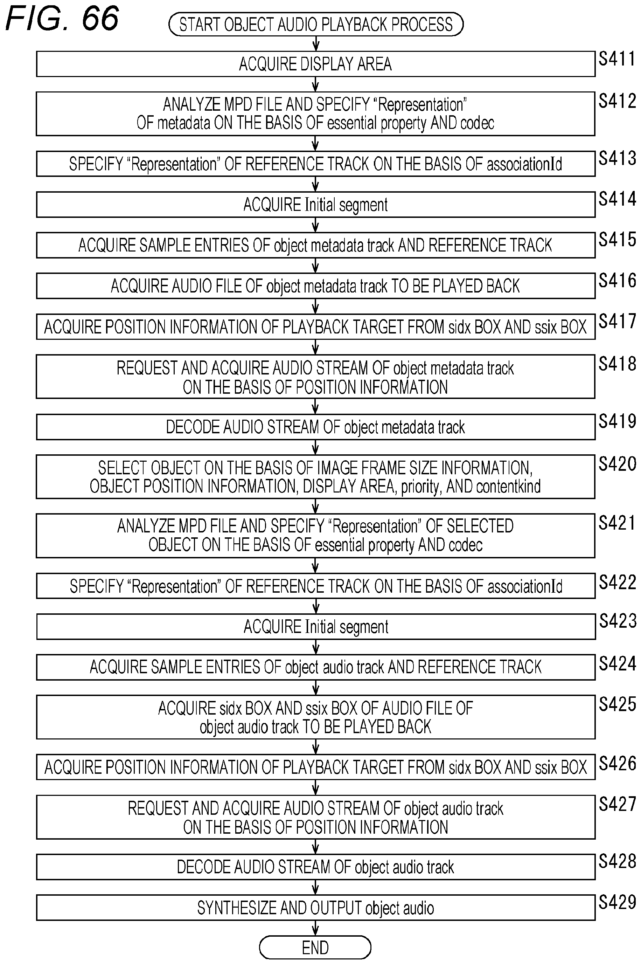

Fig. 66 is a flowchart illustrating the object audio playback process when the audio selection unit 263 selects only the audio object of the predetermined content with a high processing priority among the objects in the display area.

The object audio playback process shown in Fig. 66 is similar to the object audio playback process shown in Fig. 64, except that the process of step S420 shown in Fig. 66 is performed instead of step S360 shown in Fig. 64. Specifically, the process of steps S381 to S389 and steps S391 to S399 shown in Fig. 66 is similar to the process of steps S411 to S419 and steps S421 to S429 shown in Fig. 64. Accordingly, only the process of step S420 will be described below.

In step S420 shown in Fig. 66, the audio file acquisition unit 264 selects the audio object of the predetermined content with a high processing priority in the display area on the basis of the image frame size information, the object position information, the display area, the priority of each object, and the contentkind of each object. Specifically, the audio file acquisition unit 264 specifies each object in the display area on the basis of the image frame size information, the object position information, and the display area. The audio file acquisition unit 264 selects, from among the specified objects, an object that has a priority equal to or higher than a predetermined value and has a contentkind indicated by a predetermined value.

Note that, for example, the MPD processing unit 261 analyzes the MPD file, thereby acquiring the priority and contentkind from "Representation" of the object audio of the specified object. The audio selection unit 263 requests the MPD processing unit 261 to transmit information such as the URL of the audio file of the object audio track of the selected object.

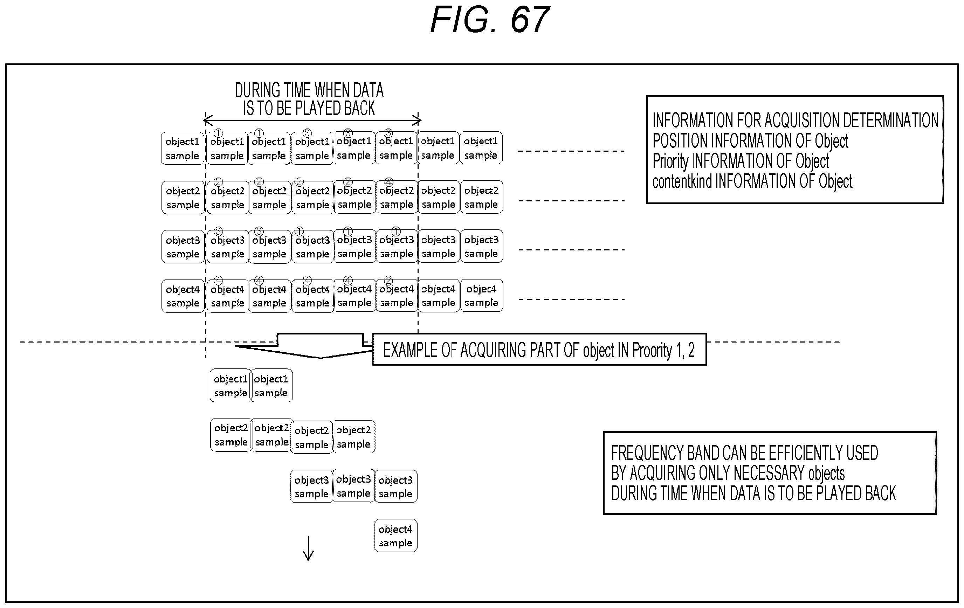

Fig. 67 is a diagram showing an example of the object selected on the basis of the priority.

In the example of Fig. 67, the objects #1 (object1) to #4 (object4) are objects in the display area, and objects having a priority equal to or lower than 2 are selected from among the objects in the display area. Assume that the smaller the number, the higher the processing priority. Further, in Fig. 67, the circled number represents the value of the priority of the corresponding object.

In the example shown in Fig. 67, when the priorities of the objects #1 to #4 are 1, 2, 3, and 4, respectively, the object #1 and the object #2 are selected. Further, the priorities of the objects #1 to #4 are changed to 3, 2, 1, and 4, respectively, the object #2 and the object #3 are selected. Further, when the priorities of the objects #1 to #4 are changed to 3, 4, 1, and 2, the object #3 and the object #4 are selected.

As described above, only the audio stream of the object audio of objects having a high processing priority are selectively acquired from among the objects in the display area, the frequency band between the Web server 142 (212) and the video playback terminal 144 (214) is efficiently utilized. The same holds true when an object is selected on the basis of the contentkind of the object.

<Fifth Embodiment>

(Outline of Tracks)

Fig. 68 is a diagram illustrating the outline of tracks in a fifth embodiment to which the present disclosure is applied.

As shown in Fig. 68, the fifth embodiment differs from the second embodiment in that the tracks are recorded as different files (3da_base.mp4/3da_channel.mp4/3da_object_1.mp4/3da_hoa.mp4/3da_meta.mp 4) .

The information processing system and the process performed by the information processing system according to the fifth embodiment are similar to those of the fourth embodiment, and thus the descriptions thereof are omitted.

<Sixth Embodiment>

(Outline of Tracks)

Fig. 69 is a diagram illustrating the outline of tracks in a sixth embodiment to which the present disclosure is applied.

As shown in Fig. 69, the sixth embodiment differs from the third embodiment in that the tracks are recorded as different files (3da_basemeta.mp4/3da_channel.mp4/3da_object_1.mp4/3da_hoa.mp4).

The information processing system and the process performed by the information processing system according to the sixth embodiment are similar to those of the fourth embodiment, except that the audio stream of the Base track is acquired instead of the Object metadata track so as to acquire the object position information. Accordingly, the descriptions thereof are omitted.

Note that also in the first to third embodiments, the fifth embodiment, and the sixth embodiment, an object in the display area can be selected on the basis of the priority or contentkind of the object.

Further, in the first to sixth embodiments, the streaming playback unit may acquire the audio stream of objects outside the display area and synthesize and output the object audio of the objects, like the streaming playback unit 120 shown in Fig. 23.

Further, in the first to sixth embodiments, the object position information is acquired from the metadata, but instead the object position information may be acquired from the MPD file.

<Explanation of Hierarchical Structure of 3D Audio>

Fig. 70 is a diagram showing a hierarchical structure of 3D audio.

As shown in Fig. 70, audio elements (Elements) which are different for each audio data are used as the audio data of 3D audio. As the types of the audio elements, there are Single Channel Element (SCE) and Channel Pair Element (CPE). The type of the audio element of audio data for one channel is SCE, and the type of the audio element corresponding to the audio data for two channels is CPE.

The audio elements of the same audio type (Channel/Object/SAOC Objects/HOA) form a group. Examples of the group type (GroupType) include Channels, Objects, SAOC Objects, and HOA. Two or more groups can form a switch Group or a group Preset, as needed.

The switch Group defines a group of audio elements to be exclusively played back. Specifically, as shown in Fig. 70, when an Object audio group for English (EN) and an Object audio group for French (FR) are present, one of the groups is to be played back. Accordingly, a switch Group is formed of the Object audio group for English having a group ID of 2 and the Object audio group for French having a group ID of 3. Thus, the Object audio for English and the Object audio for French are exclusively played back.

On the other hand, the group Preset defines a combination of groups intended by a content producer.

Ext elements (Ext Elements) which are different for each metadata are used as the metadata of 3D audio. Examples of the type of the Ext elements include Object Metadata, SAOC 3D Metadata, HOA Metadata, DRC Metadata, SpatialFrame, and SaocFrame. Ext elements of Object Metadata are all metadata of Object audio, and Ext elements of SAOC 3D Metada are all metadata of SAOC audio. Further, Ext elements of HOA Metadata are all metadata of HOA audio, and Ext elements of Dinamic Range Control (DRC) Metadata are all metadata of Object audio, SAOC audio, and HOA audio.

As described above, the audio data of 3D audio is divided in units of audio elements, group types, groups, switch Groups, and group Presets. Accordingly, the audio data may be divided into audio elements, groups, switch Groups, or group Presets, instead of dividing the audio data into tracks for each group type (in this case, however, the object audio is divided for each object) like in the first to sixth embodiments.

Further, the metadata of 3D audio is divided in units of Ext element type (ExtElementType) or audio element corresponding to the metadata. Accordingly, the metadata may be divided for each audio element corresponding to the metadata, instead of dividing the metadata for each type of Ext element like in the first to sixth embodiments.

Assume that, in the following description, audio data is divided for each audio element; metadata is divided for each type of Ext element; and data of different tracks are arranged. The same holds true when other division units are used.

<Explanation of First Example of Web Server Process>

Fig. 71 is a diagram illustrating a first example of the process of the Web server 142 (212).

In the example of Fig. 71, the 3D audio corresponding to the audio file uploaded from the file generation device 141 (211) is composed of the channel audio of five channels, the object audio of three objects, and metadata of the object audio (Object Metadata).

The channel audio of five channels is divided into a channel audio of a front center (FC) channel, a channel audio of front left/right (FL, FR) channels, and a channel audio of rear left/right (RL, RR) channels, which are arranged as data of different tracks. Further, the object audio of each object is arranged as data of different tracks. Furthermore, Object Metadata is arranged as data of one track.

Further, as shown in Fig. 71, each audio stream of 3D audio is composed of config information and data in units of frames (samples) . In the example of Fig. 71, in the audio stream of the audio file, a channel audio of five channels, an object audio of three objects, and config information of Object Metadata are collectively arranged, and data items of each frame are collectively arranged.

In this case, as shown in Fig. 71, the Web server 142 (212) divides, for each track, the audio stream of the audio file uploaded from the file generation device 141 (211), and generates the audio stream of seven tracks . Specifically, the Web server 142 (212) extracts, from the audio stream of the audio file, the config information of each track and audio data according to the information such as the ssix box, and the audio stream of each track is generated. The audio stream of each track is composed of the config information of the track and the audio data of each frame.

Fig. 72 is a flowchart illustrating a track division process of the Web server 142 (212) . This track division process is started, for example, when the audio file is uploaded from the file generation device 141 (211) .

In step S441 shown in Fig. 72, the Web server 142 (212) stores the audio file uploaded from the file generation device 141.

In step S442, the Web server 142 (212) divides the audio stream constituting the audio file for each track according to the information such as the ssix box of the audio file.

In step S443, the Web server 142 (212) holds the audio stream of each track. Then, the process is terminated. This audio stream is transmitted to the video playback terminal 144 (214) from the Web server 142 (212) when the audio stream is requested from the audio file acquisition unit 192 (264) of the video playback terminal 144 (214).

<Explanation of First Example of Process of Audio Decoding Processing Unit>

Fig. 73 is a diagram illustrating a first example of the process of the audio decoding processing unit 194 when the Web server 142 (212) performs the process described above with reference to Figs. 71 and 72.

In the example of Fig. 73, the Web server 142 (212) holds the audio stream of each track shown in Fig. 71. The tracks to be played back are the tracks of the channel audio of the front left/right channels, the channel audio of the rear left/right channels, the object audio of a first object, and Object Metadata. The same holds true for Fig. 75 to be described later.

In this case, the audio file acquisition unit 192 (264) acquires the tracks of the channel audio of the front left/right channels, the channel audio of the rear left/right channels, the object audio of the first object, and Object Metadata.

The audio decoding processing unit 194 first extracts the audio stream of the metadata of the object audio of the first object from the audio stream of the track of Object Metadata acquired by the audio file acquisition unit 192 (264).

Next, as shown in Fig. 73, the audio decoding processing unit 194 synthesizes the audio stream of the track of the audio to be played back and the extracted audio stream of the metadata. Specifically, the audio decoding processing unit 194 generates the audio stream in which Config information items included in all audio streams are collectively arranged and the data items of each frame are collectively arranged. Further, the audio decoding processing unit 194 decodes the generated audio stream.

As described above, when the audio streams to be played back include an audio stream other than the audio stream of one channel audio track, audio streams of two or more tracks are to be played back. Accordingly, the audio streams are synthesized before decoding.

On the other hand, when only the audio stream of the track of one channel audio is to be played back, there is no need to synthesize the audio stream. Accordingly, the audio decoding processing unit 194 directly decodes the audio stream acquired by the audio file acquisition unit 192 (264).

Fig. 74 is a flowchart illustrating details of the first example of a decoding process of the audio decoding processing unit 194 when the Web server 142 (212) performs the process described above with reference to Figs. 71 and 72. This decoding process is at least one of the processes of step S229 shown in Fig. 48 and step S287 shown in Fig. 50 which are carried out when the tracks to be played back include a track other than one channel audio track.

In step S461 of Fig. 74, the audio decoding processing unit 194 sets "0" to all element numbers representing the number of elements included in the generated audio stream. In step S462, the audio decoding processing unit 194 resets (clears) all element type information indicating the type of elements included in the generated audio stream.

In step S463, the audio decoding processing unit 194 sets, as a track to be processed, the track which has not been determined to be the track to be processed among the tracks to be played back. In step S464, the audio decoding processing unit 194 acquires the number and type of elements included in the track to be processed from, for example, the audio stream of the track to be processed.

In step S465, the audio decoding processing unit 194 adds the number of acquired elements to the total number of elements. In step S466, the audio decoding processing unit 194 adds the type of acquired elements to the all element type information.

In step S467, the audio decoding processing unit 194 determines whether all tracks to be played back are set as tracks to be processed. When it is determined in step S467 that not all the tracks to be played back are set as the track to be processed, the process returns to step S463 and the process of steps S463 to S467 is repeated until all tracks to be played back are set as the track to be processed.

On the other hand, when it is determined in step S467 that all tracks to be played back are set as tracks to be processed, the process proceeds to step S468. In step S468, the audio decoding processing unit 194 arranges the total number of elements and all element type information at a predetermined position on the generated audio stream.

In step S469, the audio decoding processing unit 194 sets, as a track to be processed, the track which has not been determined to be the track to be processed among the tracks to be played back. In step S470, the audio decoding processing unit 194 sets, as an element to be processed, the element which has not been determined to be the element to be processed among the elements included in the track to be processed.

In step S471, the audio decoding processing unit 194 acquires, from the audio stream of tracks to be processed, Config information of the elements to be processed, and arranges the Config information on the generated audio stream. At this time, the Config information items of all elements of all tracks to be played back are successively arranged.

In step S472, the audio decoding processing unit 194 determines whether all elements included in the track to be processed are set as elements to be processed. When it is determined in step S472 that not all the elements are set as the element to be processed, the process returns to step S470 and the process of steps S470 to S472 is repeated until all elements are set as the element to be processed.

On the other hand, when it is determined in step S472 that all elements are set as elements to be processed, the process proceeds to step S473. In step S473, the audio decoding processing unit 194 determines whether all tracks to be played back are set as tracks to be processed. When it is determined in step S473 that not all the tracks to be played back are set as the track to be processed, the process returns to step S469 and the process of steps S469 to S473 is repeated until all tracks to be played back are set as the track to be processed.

On the other hand, when it is determined in step S473 that all tracks to be played back are set as tracks to be processed, the process proceeds to step S474. In step S474, the audio decoding processing unit 194 determines a frame to be processed. In the process of step S474 of the first time, the head frame is determined to be the frame to be processed. In the process of step S474 of the second and subsequent times, the frame next to the current frame to be processed is determined to be a new frame to be processed.

In step S475, the audio decoding processing unit 194 sets, as a track to be processed, the track which has not been determined to be the track to be processed among the tracks to be played back. In step S476, the audio decoding processing unit 194 sets, as an element to be processed, the element which has not been determined to be the element to be processed among the elements included in the track to be processed.

In step S477, the audio decoding processing unit 194 determines whether the element to be processed is an EXT element. When it is determined in step S477 that the element to be processed is not the EXT element, the process proceeds to step S478.

In step S478, the audio decoding processing unit 194 acquires, from the audio stream of tracks to be processed, the audio data of the frame to be processed of the element to be processed, and arranges the audio data on the generated audio stream. At this time, the data in the same frame of all elements of all tracks to be played back are successively arranged. After the process of step S478, the process proceeds to step S481.

On the other hand, when it is determined in step S477 that the element to be processed is the EXT element, the process proceeds to step S479. In step S479, the audio decoding processing unit 194 acquires, from the audio stream of tracks to be processed, the metadata of all objects in the frame to be processed of the element to be processed.

In step S480, the audio decoding processing unit 194 arranges the metadata of objects to be played back among the acquired metadata of all objects on the generated audio stream. At this time, the data items in the same frame of all elements of all tracks to be played back are successively arranged. After the process of step S480, the process proceeds to step S481.

In step S481, the audio decoding processing unit 194 determines whether all elements included in the track to be processed are set as elements to be processed. When it is determined in step S481 that not all the elements are set as the element to be processed, the process returns to step S476 and the process of steps S476 to S481 is repeated until all elements are set as the element to be processed.

On the other hand, when it is determined in step S481 that all elements are set as elements to be processed, the process proceeds to step S482. In step S482, the audio decoding processing unit 194 determines whether all tracks to be played back are set as tracks to be processed. When it is determined in step S482 that not all the tracks to be played back are set as the track to be processed, the process returns to step S475 and the process of steps S475 to S482 is repeated until all tracks to be played back are set as the track to be processed.

On the other hand, when it is determined in step S482 that all tracks to be played back are set as tracks to be processed, the process proceeds to step S483.

In step S483, the audio decoding processing unit 194 determines whether all frames are set as frames to be processed. When it is determined in step S483 that not all the frames are set as the frame to be processed, the process returns to step S474 and the process of steps S474 to S483 is repeated until all frames are set as the frame to be processed.

On the other hand, when it is determined in step S483 that all frames are set as frames to be processed, the process proceeds to step S484. In step S484, the audio decoding processing unit 194 decodes the generated audio stream. Specifically, the audio decoding processing unit 194 decodes the audio stream in which the total number of elements, all element type information, Config information, audio data, and metadata of objects to be played back are arranged. The audio decoding processing unit 194 supplies the audio synthesis processing unit 195 with the audio data (Object audio, Channel audio, HOA audio) obtained as a result of decoding. Then, the process is terminated.

<Explanation of Second Example of Process of Audio Decoding Processing Unit>

Fig. 75 is a diagram illustrating a second example of the process of the audio decoding processing unit 194 when the Web server 142 (212) performs the process described above with reference to Figs. 71 and 72.

As shown in Fig. 75, the second example of the process of the audio decoding processing unit 194 differs from the first example thereof in that audio streams of all tracks are arranged on the generated audio stream and a stream or flag indicating a decoding result of zero (hereinafter referred to as a zero stream) is arranged as an audio stream of tracks which are not to be played back.

Specifically, the audio file acquisition unit 192 (264) acquires Config information included in the audio streams of all tracks held in the Web server 142 (212), and data of each frame included in the audio streams of tracks to be played back.

As shown in Fig. 75, the audio decoding processing unit 194 arranges the Config information items of all tracks collectively on the generated audio stream. Further, the audio decoding processing unit 194 arranges, on the generated audio stream, the data of each frame of tracks to be played back and the zero stream as data of each frame of tracks which are not to be played back.

As described above, since the audio decoding processing unit 194 arranges, on the generated audio stream, the zero stream as the audio stream of tracks which are not to be played back, the audio stream of objects which are not to be played back is also present. Accordingly, it is possible to include the metadata of objects which are not to be played back in the generated audio stream. This eliminates the need for the audio decoding processing unit 194 to extract the audio stream of the metadata of objects to be played back from the audio stream of the track of Object Metadata.

Note that the zero stream may be arranged as Config information of tracks which are not to be played back.

Fig. 76 is a flowchart illustrating details of the second example of the decoding process of the audio decoding processing unit 194 when the Web server 142 (212) performs the process described above with reference to Figs. 71 and 72. This decoding process is at least one of the process of step S229 shown in Fig. 48 and the process of step S287 shown in Fig. 50 which are carried out when the tracks to be played back include a track other than one channel audio track.

The process of steps S501 and S502 shown in Fig. 76 is similar to the process of steps S461 and S462 shown in Fig. 74, and thus the description thereof is omitted.

In step S503, the audio decoding processing unit 194 sets, as a track to be processed, the track which has not been determined to be the track to be processed among the tracks corresponding to the audio streams held in the Web server 142 (212).

The process of steps S504 to S506 is similar to the process of steps S464 to S466, and thus the description thereof is omitted.

In step S507, the audio decoding processing unit 194 determines whether all tracks corresponding to the audio streams held in the Web server 142 (212) are set as tracks to be processed. When it is determined in step S507 that not all the tracks are set as the track to be processed, the process returns to step S503 and the process of steps S503 to S507 is repeated until all tracks are set as the track to be processsed.

On the other hand, when it is determined in step S507 that all tracks are set as tracks to be processed, the process proceeds to step S508. In step S508, the audio decoding processing unit 194 arranges the total number of elements and all element type information at a predetermined position of the generated audio stream.

In step S509, the audio decoding processing unit 194 sets, as a track to be processed, the track which has not been determined to be the track to be processed among the tracks corresponding to the audio streams held in the Web server 142 (212). In step S510, the audio decoding processing unit 194 sets, as an element to be processed, the element which has not been determined to be the element to be processed among the elements included in the track to be processed.

In step S511, the audio decoding processing unit 194 acquires Config information of an element to be processed from the audio stream of the track to be processed, and generates the Config information on the generated audio stream. At this time, the Config information items of all elements of all tracks corresponding to the audio streams held in the Web server 142 (212) are successively arranged.

In step S512, the audio decoding processing unit 194 determines whether all elements included in the tracks to be processes are set as elements to be processed. When it is determined in step S512 that not all the elements are set as the element to be processed, the process returns to step S510 and the process of steps S510 to S512 is repeated until all elements are set as the element to be processed.

On the other hand, when it is determined in step S512 that all elements are set as elements to be processed, the process proceeds to step S513. In step S513, the audio decoding processing unit 194 determines whether all tracks corresponding to the audio streams held in the Web server 142 (212) are set as tracks to be processed. When it is determined in step S513 that not all the tracks are set as the track to be processed, the process returns to step S509 and the process of steps S509 to S513 is repeated until all tracks are set as the track to be processed.

On the other hand, when it is determined in step S513 that all tracks are set as tracks to be processed, the process proceeds to step S514. In step S514, the audio decoding processing unit 194 determines a frame to be processed. In the process of step S514 of the first time, the head frame is determined to be the frame to be processed. In the process of step S514 of the second and subsequent times, the frame next to the current frame to be processed is determined to be a new frame to be processed.

In step S515, the audio decoding processing unit 194 sets, as a track to be processed, the track which has not been determined to be the track to be processed among the tracks corresponding to the audio streams held in the Web server 142 (212).

In step S516, the audio decoding processing unit 194 determines whether the track to be processed is the track to be played back. When it is determined in step S516 that the track to be processed is the track to be played back, the process proceeds to step S517.

In step S517, the audio decoding processing unit 194 sets, as an element to be processed, the element which has not been determined to be the element to be processed among the elements included in the track to be processed.

In step S518, the audio decoding processing unit 194 acquires, from the audio stream of the track to be processed, the audio data of the frame to be processed of the element to be processed, and arranges the audio stream on the generated audio stream. At this time, the data items in the same frame of all elements of all tracks corresponding to the audio streams held in the Web server 142 (212) are successively arranged.

In step S519, the audio decoding processing unit 194 determines whether all elements included in the track to be processed are set as the element to be processed. When it is determined in step S519 that not all the elements are set as the element to be processed, the process returns to step S517 and the process of steps S517 to S519 is repeated until all elements are set as the element to be processed.

On the other hand, when it is determined in step S519 that all elements are set as the element to be processed, the process proceeds to step S523.

Further, when it is determined in step S516 that the track to be processed is not the track to be played back, the process proceeds to step S520. In step S520, the audio decoding processing unit 194 sets, as an element to be processed, the element which has not been determined to be the element to be processed among the elements included in the track to be processed.

In step S521, the audio decoding processing unit 194 arranges the zero stream as the data of the frame to be processed of the element to be processed on the generated audio stream. At this time, the data items in the same frame of all elements of all tracks corresponding to the audio streams held in the Web server 142 (212) are successively arranged.

In step S522, the audio decoding processing unit 194 determines whether all elements included in the track to be processed are set as the element to be processed. When it is determined in step S522 that not all the elements are set as the element to be processed, the process returns to step S520 and the process of steps S520 to S522 is repeated until all elements are set as the element to be processed.

On the other hand, when it is determined in step S522 that all elements are set as the element to be processed, the process proceeds to step S523.

In step S523, the audio decoding processing unit 194 determines whether all tracks corresponding to the audio streams held in the Web server 142 (212) are set as the track to be processed. When it is determined in step S522 that not all the tracks are set as the track to be processed, the process returns to step S515 and the process of steps S515 to S523 is repeated until all tracks to be played back are set as the track to be processed.

On the other hand, when it is determined in step S523 that all tracks are set as the track to be processed, the process proceeds to step S524.

In step S524, the audio decoding processing unit 194 determines whether all frames are set as the frame to be processed. When it is determined in step S524 that not all the frames are set as the frame to be processed, the process returns to step S514 and the process of steps S514 to S524 is repeated until all frames are set as the frame to be processed.

On the other hand, when it is determined in step S524 that all frames are set as the frame to be processed, the process proceeds to step S525. In step S525, the audio decoding processing unit 194 decodes the generated audio stream. Specifically, the audio decoding processing unit 194 decodes the audio stream in which the total number of elements, all element type information, and Config information and data of all tracks corresponding to the audio streams held in the Web server 142 (212) are arranged. The audio decoding processing unit 194 supplies the audio synthesis processing unit 195 with the audio data (Object audio, Channel audio, HOA audio) obtained as a result of decoding. Then, the process is terminated.

<Explanation of Second Example of Web Server Process>

Fig. 77 is a diagram illustrating a second example of the process of the Web server 142 (212).

The second example of the process of the Web server 142 (212) shown in Fig. 77 is the same as the first example shown in Fig. 71, except that Object Metadata of each object is arranged in the audio file as data of different tracks.

Accordingly, as shown in Fig. 77, the Web server 142 (212) divides, for each track, the audio stream of the audio file uploaded from the file generation device 141 (211), and generates the audio stream of nine tracks.

In this case, the track division process of the Web server 142 (212) is similar to the track division process shown in Fig. 72, and thus the description thereof it omitted.

<Explanation of Third Example of Audio Decoding Processing Unit>

Fig. 78 is a diagram illustrating the process of the audio decoding processing unit 194 when the Web server 142 (212) performs the process described above with reference to Fig. 77.

In the example of Fig. 78, the Web server 142 (212) holds the audio stream of each track shown in Fig. 77. The tracks to be played back are the tracks of the channel audio of the front left/right channels, the channel audio of the rear left/right channels, the object audio of the first object, and the Object Metadata of the first object.

In this case, the audio file acquisition unit 192 (264) acquires the audio streams of the tracks of the channel audio of the front left/right channels, the channel audio of the rear left/right channels, the object audio of the first object, and the Object Metadata of the first object. The audio decoding processing unit 194 synthesizes the acquired audio streams of the tracks to be played back, and decodes the generated audio stream.

As described above, when the Object Metadata is arranged as data of different tracks for each object, there is no need for the audio decoding processing unit 194 to extract the audio stream of the Object Metadata of objects to be played back. Accordingly, audio decoding processing unit 194 can easily generate the audio stream to be decoded.

Fig. 79 is a flowchart illustrating details of the decoding process of the audio decoding processing unit 194 when the Web server 142 (212) performs the process described above with reference to Fig. 77. This decoding process is one of the process of step S229 shown in Fig. 48 and the process of step S287 shown in Fig. 50 which are carried out when the tracks to be played back include a track other than one channel audio track.

The decoding process shown in Fig. 79 is similar to the decoding process shown in Fig. 74, except that processes in steps S477, S479, and S480 are not carried out and not only audio data but also metadata are arranged in the process of step S478. Specifically, the process of steps S541 to S556 shown in Fig. 79 is similar to steps S461 to S476 shown in Fig. 74. In the process of step S557 shown in Fig. 79, the data of the frame to be processed of the element to be processed is arranged, like in the process of step S478. Further, the process of steps S558 to S561 is similar to the process of steps S481 to S484 shown in Fig. 74.

Note that in the above description, the video playback terminal 144 (214) generates the audio stream to be decoded, but instead the Web server 142 (212) may generate a combination of audio streams which are assumed as a combination of tracks to be played back. In this case, the video playback terminal 144 (214) can play back the audio of the tracks to be played back only by acquiring the audio streams with a combination of tracks to be played back from the Web server 142 (212) and decoding the audio streams .

Further, the audio decoding processing unit 194 may decode, for each track, the audio streams of the tracks to be played back that are acquired from the Web server 142 (212) . In this case, the audio decoding processing unit 194 needs to synthesize the audio data and metadata obtained as a result of decoding.

<Second Example of Syntax of Base Sample>

(Second Example of Syntax of Config information Arranged in Base Sample)

Fig. 80 is a diagram showing a second example of syntax of Config information arranged in a base sample.

In the example of Fig. 80, the number of elements (numElements) arranged in the base sample is described as Config information. Further, as the type of each element (usacElementType) arranged in the base sample, "ID_USAC_EXT" representing the Ext element is described and Config information for Ext element of each element (mpegh3daExtElementCongfig) is also described.

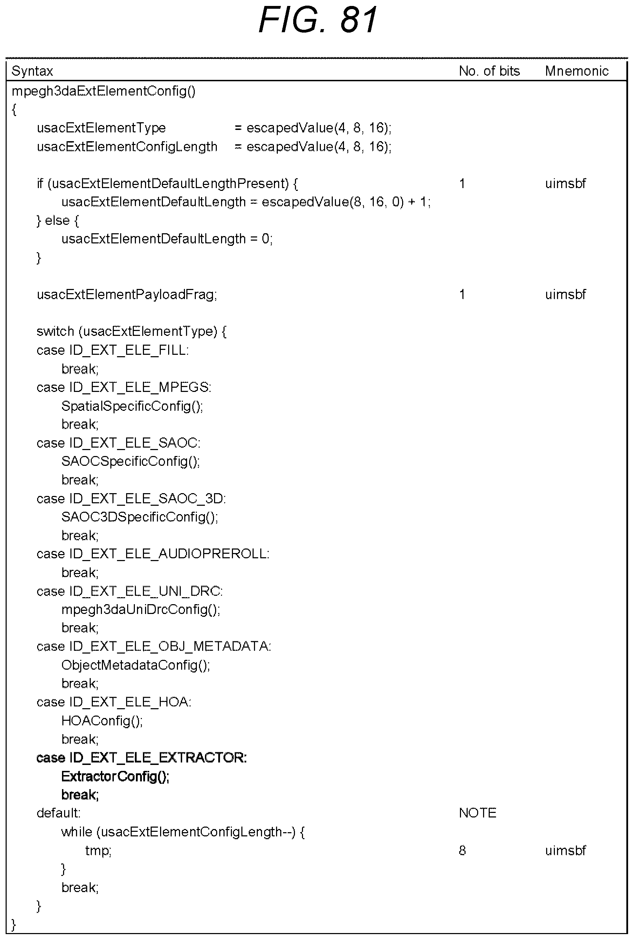

Fig. 81 is a diagram showing an exemplary syntax of Config information (mpegh3daExtElementCongfig) for Ext element shown in Fig. 80.

As shown in Fig. 81, "ID_EXT_ELE_EXTRACTOR" representing Extractor as the type of the Ext element is described as Config information for Ext element (mpegh3daExtElementCongfig) shown in Fig. 80. Further, Config information for Extractor (ExtractorConfig) is described.

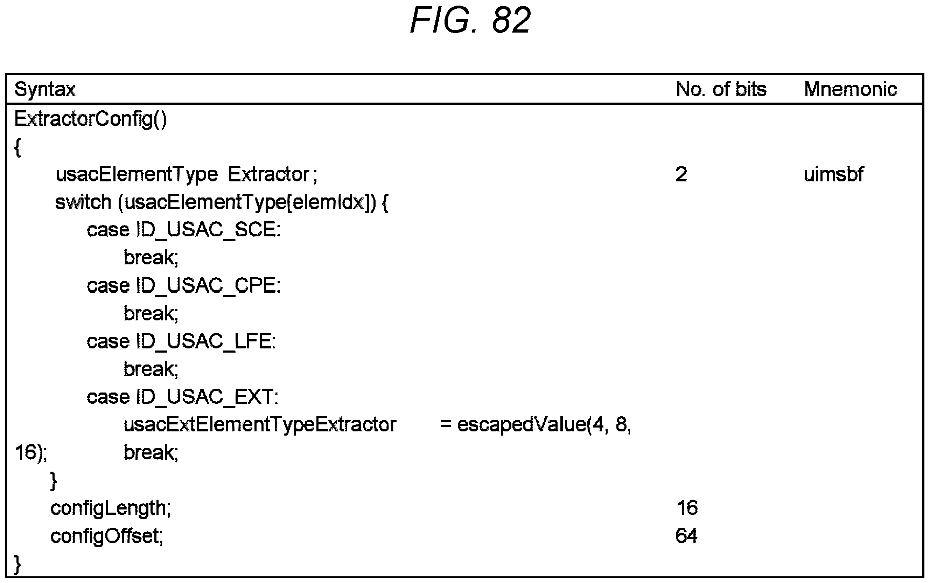

Fig. 82 is a diagram showing an exemplary syntax of Config information for Extractor (ExtractorConfig) shown in Fig. 81.

As shown in Fig. 82, as Config information for Extractor (ExtractorConfig) shown in Fig. 81, the type of the element (usac Element Type Extractor) to be referred to by the Extractor is described. Further, when the type of the element (usac Element Type Extractor) is "ID_USAC_EXT" which represents the Ext element, the type of the Ext element (usacExtElementTypeExtractor) is described. Furthermore, the size (configLength) and position (configOffset) of the Config information of the element (sub-sample) to be referred to are described.

(Second Example of Syntax of Data of Frame Unit Arranged in Base Sample)

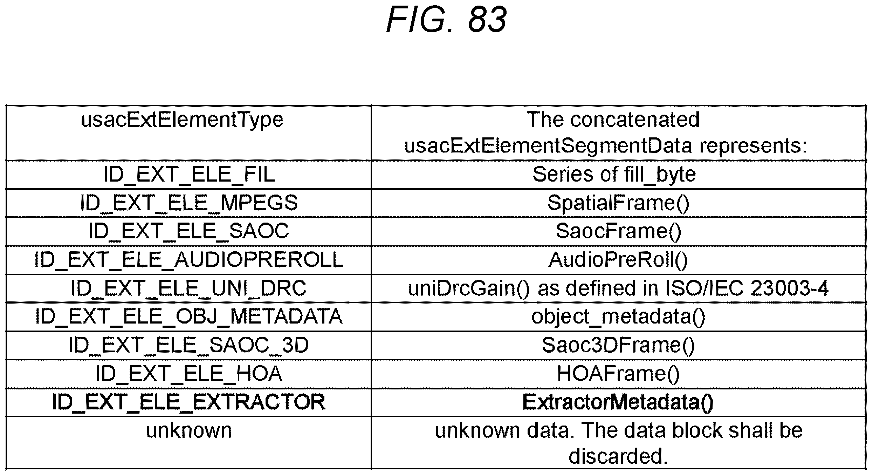

Fig. 83 is a diagram showing a second example of syntax of data in units of frames arranged in the base sample.

As shown in Fig. 83, as the data in units of frames arranged in the base sample, "ID_EXT_ELE_EXTRACTOR" which represents Extractor as the type of the Ext element which is the data element is described. Extractor data (Extractor Metadata) is also described.

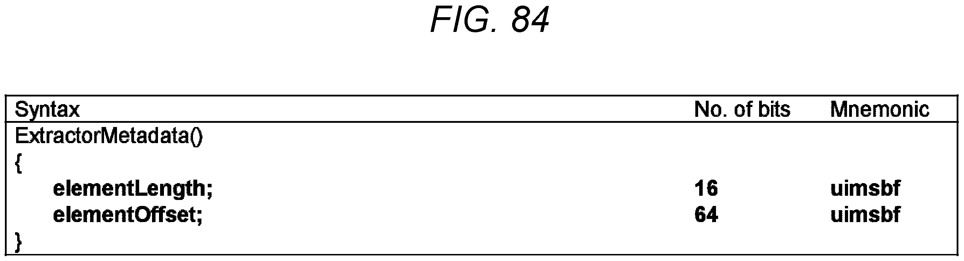

Fig. 84 is a diagram showing an exemplary syntax of Extractor data (Extractor Metadata) shown in Fig. 83.

As shown in Fig. 84, the size (elementLength) and position (elementOffset) of the data of the element to be referred to by the Extractor are described as Extractor data (Extractor Metadata) shown in Fig. 83.

<Third Example of Syntax of Base Sample>

(Third Example of Syntax of Config Information Arranged in Base Sample)

Fig. 85 is a diagram showing a third example of syntax of Config information arranged in the base sample.
In the example of Fig. 85, the number of elements (numElements) arranged in the base sample is described as Config information. Further, "1" indicating Extractor is described as an Extractor flag (flag Extractor) indicating whether the sample in which Config information is arranged is Extractor. Furthermore, "1" is described as elementLengthPresent.
Further, the type of the element to be referred to by the element is described as the type of each element (usacElementType) arranged in the base sample. When the type of the element (usacElementType) is "ID_USAC_EXT" which represents the Ext element, the type of the Ext element (usacExtElementType) is described. Furthermore, the size (configLength) and position (configOffset) of Config information of the element to be referred to are described.

(Third Example of Syntax of Data in Units of Frames Arranged in Base Sample)

Fig. 86 is a diagram showing a third example of syntax of data in units of frames arranged in the base sample.
As shown in Fig. 86, as the data in units of frames arranged in the base sample, the size (elementLength) and position (elementOffset) of the data of the element to be referred to by the data are described.

<Seventh Embodiment>

(Configuration Example of Audio Stream)

Fig. 87 is a diagram showing a configuration example of the audio stream stored in the audio file in a seventh embodiment of an information processing system to which the present disclosure is applied.
As shown in Fig. 87, in the seventh embodiment, the audio file stores coded data in units of samples of 3D audio for each group type (in this case, however, the object audio is stored for each object) and an audio stream (3D audio stream) arranged as a sub-sample.
Further, the audio file stores a clue stream (3D audio hint stream) in which the extractor including the size, position, and group type of the coded data in units of samples of 3D audio for each group type is set as a sub-sample. The configuration of the extractor is similar to the configuration described above, and the group type is described as the type of the extractor.

(Outline of Tracks)

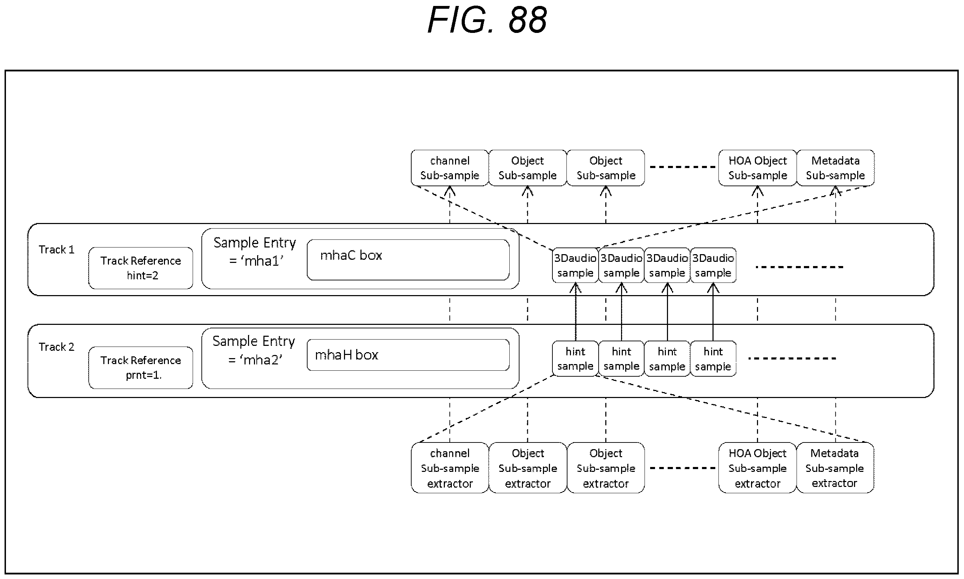

Fig. 88 is a diagram illustrating the outline of tracks in the seventh embodiment.
As shown in Fig. 88, in the seventh embodiment, different tracks are allocated to an audio stream and a clue stream, respectively. The track ID "2" of the track of the corresponding clue stream is described as Track Reference of the track of the audio stream. Further, the track ID "1" of the track of the corresponding audio stream is described as Track Reference of the track of the clue stream.
The syntax of the sample entry of the track of the audio stream is the syntax shown in Fig. 34, and the syntax of the sample entry of the track of the clue stream includes the syntax shown in Figs. 35 to 38.

(Explanation of Process of File Generation Device)

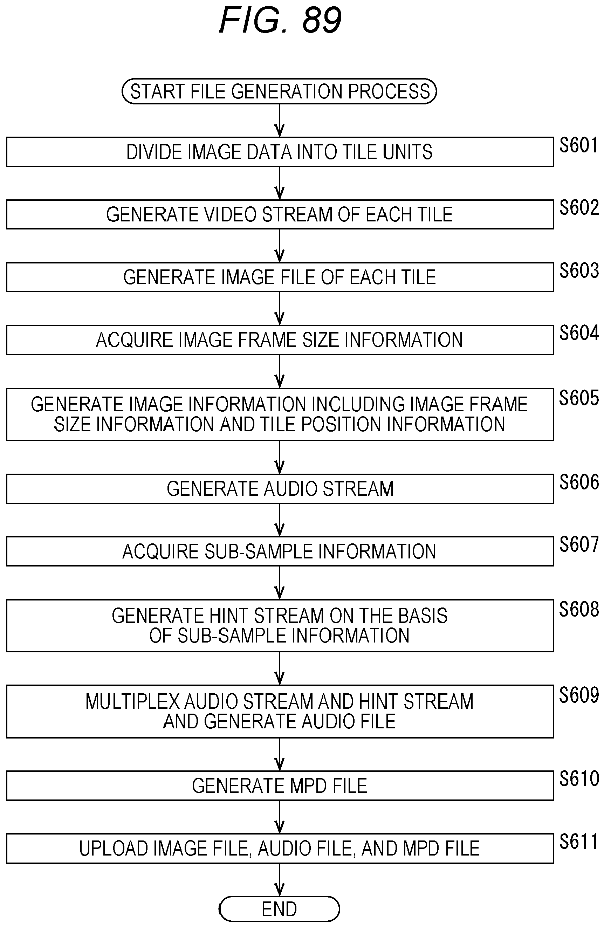

Fig. 89 is a flowchart illustrating a file generation process of the file generation device in the seventh embodiment.
Note that the file generation device according to the seventh embodiment is the same as the file generation device 141 shown in Fig. 45, except for the processes of the audio coding processing unit 171 and the audio file generation unit 172. Accordingly, the file generation device, the audio coding processing unit, and the audio file generation unit according to the seventh embodiment are hereinafter referred to as a file generation device 301, an audio coding processing unit 341, and an audio file generation unit 342, respectively.
The process of steps S601 to S605 shown in Fig. 89 is similar to the process of steps S191 to S195 shown in Fig. 46, and thus the description thereof is omitted.
In step S606, the audio coding processing unit 341 encodes, for each group type, the 3D audio of the video content input from the outside, and generates the audio stream shown in Fig. 87. The audio coding processing unit 341 supplies the audio file generation unit 342 with the generated audio stream.
In step S607, the audio file generation unit 342 acquires sub-sample information from the audio stream supplied from the audio coding processing unit 341. The sub-sample information indicates the size, position, and group type of the coded data in units of samples of the 3D audio of each group type.

In step S608, the audio file generation unit 342 generates the clue stream shown in Fig. 87 on the basis of the sub-sample information. In step S609, the audio file generation unit 342 multiplexes the audio stream and the clue stream as different tracks, and generates an audio file. At this time, the audio file generation unit 342 stores the image frame size information input from the outside in the sample entry. The audio file generation unit 342 supplies the MPD generation unit 173 with the generated audio file.

The process of steps S610 and S611 is similar to the process of steps S199 and S200 shown in Fig. 46, and thus the description thereof is omitted.

(Explanation of Process of Video Playback Terminal)

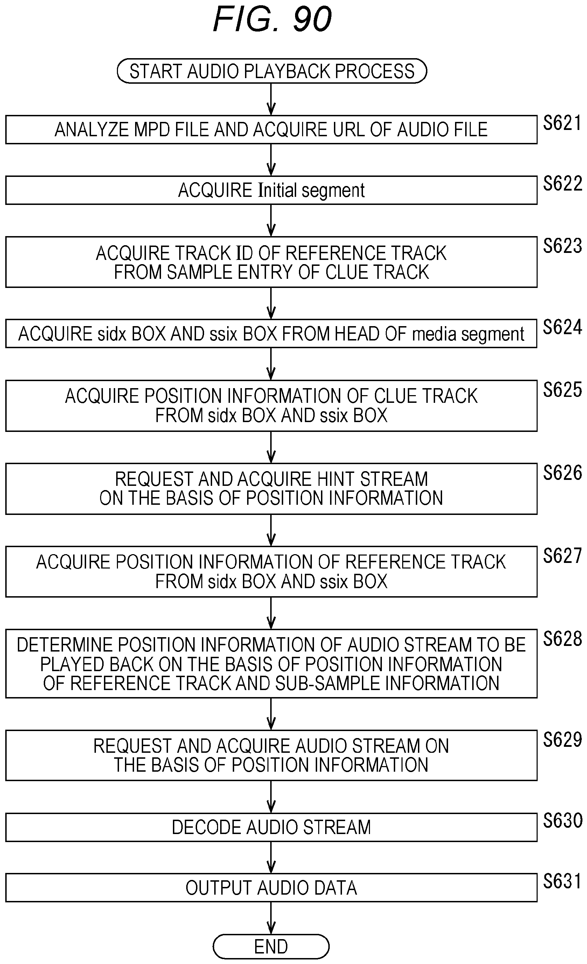

Fig. 90 is a flowchart illustrating an audio playback process of the stream playback unit of the video playback terminal in the seventh embodiment.

Note that the streaming playback unit according to the seventh embodiment is the same as the streaming playback unit 190 shown in Fig. 47, except that the processes of the MPD processing unit 191, the audio file acquisition unit 192, and the audio decoding processing unit 194 are different and the audio selection unit 193 is not provided. Accordingly, the streaming playback unit, the MPD processing unit, the audio file acquisition unit, and the audio decoding processing unit according to the seventh embodiment are hereinafter referred to as a streaming playback unit 360, an MPD processing unit 381, an audio file acquisition unit 382, and an audio decoding processing unit 383, respectively.

In step S621 shown in Fig. 90, the MPD processing unit 381 of the streaming playback unit 360 analyzes the MPD file supplied from the MPD acquisition unit 91, acquires information such as the URL of the audio file of the segment to be played back, and supplies the audio file acquisition unit 382 with the acquired information.

In step S622, the audio file acquisition unit 382 requests the Web server to transmit Initial Segment of the segment to be played back on the basis of the information such as the URL supplied from the MPD processing unit 381, and acquires the Initial Segment.

In step S623, the audio file acquisition unit 382 acquires the track ID of the track of the audio stream as the reference track from the sample entry of the track of the clue stream (hereinafter referred to as a clue track) of the moov box in the Initial Segment.

In step S624, the audio file acquisition unit 382 requests the Web server to transmit the sidx box and the ssix box from the head of the media segment of the segment to be played back on the basis of the information such as the URL supplied from the MPD processing unit 381, and acquires the sidx box and the ssix box.

In step S625, the audio file acquisition unit 382 acquires the position information of the clue track from the sidx box and the ssix box which are acquired in step S624.

In step S626, the audio file acquisition unit 382 requests the Web server to transmit the clue stream on the basis of the position information of the clue track acquired in step S625, and acquires the clue stream. Further, the audio file acquisition unit 382 acquires, from the clue stream, the extractor of the group type of the 3D audio to be played back. Note that when the 3D audio to be played back is the object audio, the object to be played back is selected on the basis of the image frame size information and object position information.

In step S627, the audio file acquisition unit 382 acquires the position information of the reference track from the sidx box and the ssix box which are acquired in step S624. In step S628, the audio file acquisition unit 382 determines the position information of the audio stream of the group type of the 3D audio to be played back on the basis of the position information of the reference track acquired in step S627 and the sub-sample information included in the acquired extractor.

In step S629, the audio file acquisition unit 382 requests the Web server to transmit the audio stream of the group type of the 3D audio to be played back on the basis of the position information determined in step S627, and acquires the audio stream. The audio file acquisition unit 382 supplies the audio decoding processing unit 383 with the acquired audio stream.

In step S630, the audio decoding processing unit 383 decodes the audio stream supplied from the audio file acquisition unit 382, and supplies the audio synthesis processing unit 195 with the audio data obtained as a result of decoding.

In step S631, the audio synthesis processing unit 195 outputs the audio data. Then, the process is terminated.

Note that in the seventh embodiment, the track of the audio stream and the clue track are stored in the same audio file, but may be stored in different files.

<Eighth Embodiment>

(Outline of Tracks)

Fig. 91 is a diagram illustrating the outline of tracks in an eighth embodiment of an information processing system to which the present disclosure is applied.

The audio file of the eighth embodiment is different from the audio file of the seventh embodiment in that the stored clue stream is a stream for each group type. Specifically, the clue stream of the eighth embodiment is generated for each group type, and the extractor including the size, position, and group type of the coded data in units of samples of the 3D audio of each group type is arranged as a sample in each clue stream. Note that when the 3D audio includes object audios of a plurality of objects, the extractor is arranged as a sub-sample for each object.

Further, as shown in Fig. 91, in the eighth embodiment, different tracks are allocated to the audio stream and each clue stream. The track of the audio stream is the same as the track of the audio stream shown in Fig. 88, and thus the description thereof is omitted.

As Track Reference of the clue track of the group types of "Channels", "Objects", "HOA", and "metadata", the track ID "1" of the track of the corresponding audio stream is described.

The syntax of the sample entry of the clue track of each of the group types of "Channels", "Objects", "HOA", and "metadata" is the same as the syntax shown in Figs. 35 to 38, except for the information indicating the type of the sample entry. The information indicating the type of the sample entry of the clue track of each of the group types of "Channels", "Objects", "HOA", and "metadata" is similar to the information shown in Figs. 35 to 38, except that the number "1" of the information is replaced by "2". The number "2" represents the sample entry of the clue track.

(Configuration Example of Audio File)

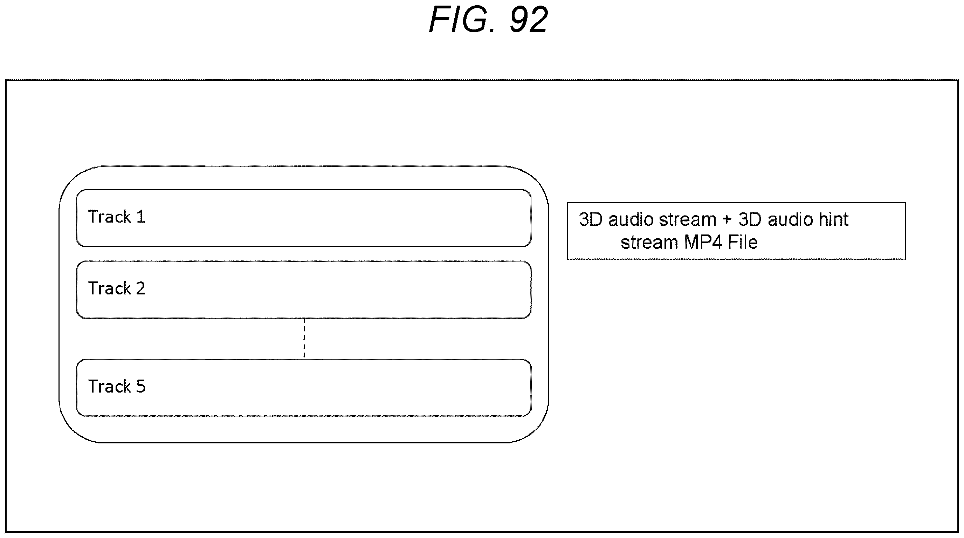

Fig. 92 is a diagram showing a configuration example of the audio file.

As shown in Fig. 92, the audio file stores all tracks shown in Fig. 91. Specifically, the audio file stores the audio stream and the clue stream of each group type.

The file generation process of the file generation device according to the eighth embodiment is similar to the file generation process shown in Fig. 89, except that the clue stream is generated for each group type, instead of the clue stream shown in Fig. 87.

Further, the audio playback process of the streaming playback unit of the video playback terminal according to the eighth embodiment is similar to the audio playback process shown in Fig. 90, except that the track ID of the clue track of the group type to be played back, as well as the track ID of the reference track is acquired in step S623; the position information of the clue track of the group type to be played back in step S625 is acquired; and the clue stream of the group type to be played back is acquired in step S626.

Note that in the eighth embodiment, the track of the audio stream and the clue track are stored in the same audio file, but may be stored in different files.

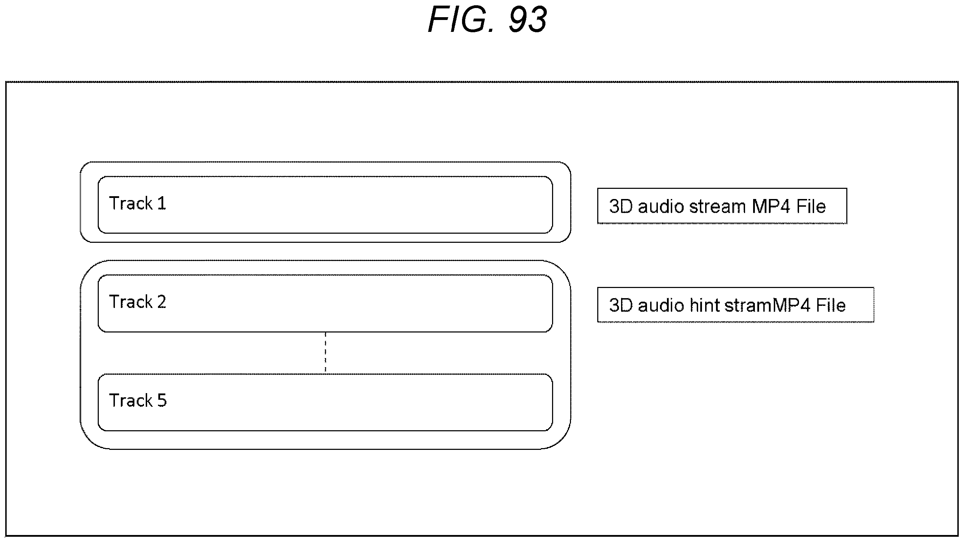

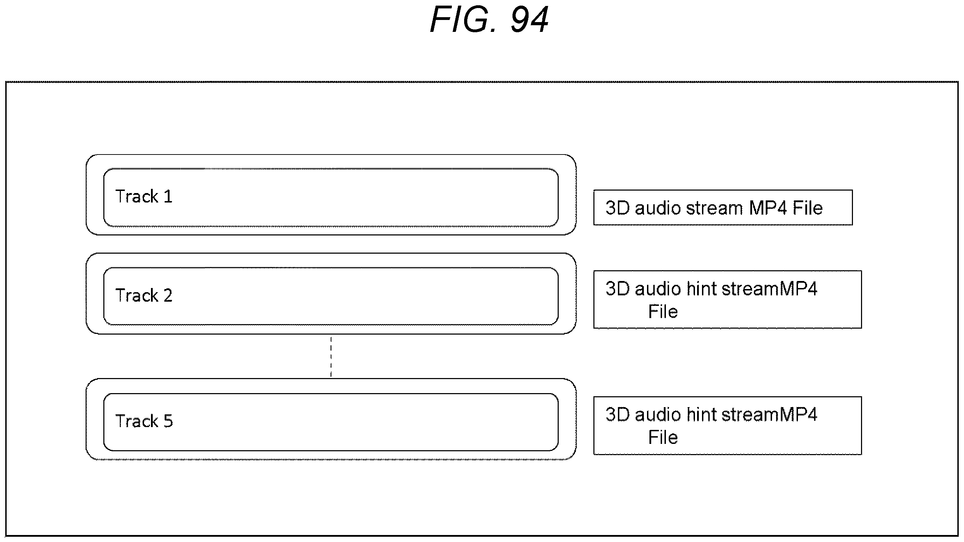

For example, as shown in Fig. 93, the track of the audio stream may be stored in one audio file (3D audio stream MP4 File), and the clue track may be stored in one audio file (3D audio hint stream MP4 File). Further, as shown in Fig. 94, the clue track may be divided into a plurality of audio files to be stored. In the example of Fig. 94, the clue tracks are stored in different audio files.

Further, in the eighth embodiment, the clue stream is generated for each group type even when the group type indicates objects. However, when the group type indicates objects, the clue stream may be generated for each object. In this case, different tracks are allocated to the clue streams of each object.

As described above, in the audio file of the seventh and eighth embodiments, all the audio streams of 3D audio are stored in one track. Accordingly, the video playback terminal can play back all the audio streams of 3D audios by acquiring the track.

Further, the clue stream is stored in the audio file of the seventh and eighth embodiments. Accordingly, the video playback terminal acquires only the audio stream of a desired group type among all the audio streams of 3D audio without referring to the moof box in which a table that associates a sub-sample with the size or position of the sub-sample is described, thereby making it possible to play back the audio stream.

Further, in the audio file of the seventh and eighth embodiments, the video playback terminal can be caused to acquire the audio stream for each group type, only by storing all the audio streams of 3D audio and the clue stream. Accordingly, there is no need to prepare the audio stream of 3D audio for each group type separately from all the generated audio streams of 3D audio for the purpose of broadcasting or local storage so as to enable acquisition of the audio stream for each group type.

Note that in the seventh and eighth embodiments, the extractor is generated for each group type, but may be generated in units of audio elements, groups, switch Groups, or group Presets.

When the extractor is generated in units of groups, the sample entry of each clue track of the eighth embodiment includes information about the corresponding group. The information about the group is composed of, for example, information indicating the ID of the group and the content of data of the element classified as the group. When the group forms the switch Group, the sample entry of the clue track of the group also includes information about the switch Group. The information about the switch Group is composed of, for example, the ID of the switch Group and the ID of the group that forms the switch Group. The sample entry of the clue track of the seventh embodiment includes the information included in the sample entries of all clue tracks of the eighth embodiment.

Further, the segment structures in the seventh and eighth embodiments are the same as the segment structures shown in Figs. 39 and 40.

<Ninth Embodiment>

(Explanation of Computer to Which The Present Disclosure Is Applied)

A series of processes of the Web server described above can also be executed by hardware or software. When the series of processes is executed by software, a program constituting the software is installed in a computer. Examples of the computer include a computer incorporated in dedicated hardware and a general-purpose personal computer capable of executing various functions by installing various programs therein.

Fig. 95 is a block diagram showing a configuration example of hardware of a computer that executes a series of processes for the Web server by using a program.

In the computer, a central processing unit (CPU) 601, a read only memory (ROM) 602, and a random access memory (RAM) 603 are interconnected via a bus 604.

The bus 604 is also connected to an input/output interface 605. The input/output interface 605 is connected to each of an input unit 606, an output unit 607, a storage unit 608, a communication unit 609, and a drive 610.

The input unit 606 is formed with a keyboard, a mouse, a microphone, and the like. The output unit 607 is formed with a display, a speaker, and the like. The storage unit 608 is formed with hardware, a non-volatile memory, and the like. The communication unit 609 is formed with a network interface and the like. The drive 610 drives a removable medium 611 such as a magnetic disk, an optical disk, a magneto-optical disk, or a semiconductor memory.

In the computer configured as described above, a CPU 601 loads, for example, the program stored in the storage unit 608 in the RAM 603 via the input/output interface 605 and the bus 604, and executes the program, thereby performing the series of processes described above.

The program executed by the computer (CPU 601) can be provided by being recorded in the removable medium 611 serving as, for example, a package medium or the like. In addition, the program can be provided via a wired or wireless transmission medium such as a local area network, the Internet, or digital satellite broadcasting.

The program can be installed in the storage unit 608 via the input/output interface 605 by loading the removable medium 611 in the drive 610. Further, the program can be received by the communication unit 609 and installed in the storage unit 608 via the wired or wireless transmission medium. In addition, the program can be installed in advance in the ROM 602 or the storage unit 608.

Note that the program executed by the computer may be a program which performs the processes in a time series manner in the order described in the present description, or may be a program which performs the processes in parallel or at necessary timings when they are invoked, for example.

The video playback terminal described above may have a hardware configuration that is similar to that of the computer shown in Fig. 95. In this case, for example, the CPU 601 can execute the control software 161 (221), the video playback software 162 (222), and the access software 163 (223). The process of the video playback terminal 144 (214) may be executed by hardware.

In the present description, a system has the meaning of a set of a plurality of components (such as an apparatus or a module (part)), and does not take into account whether or not all the components are in the same casing. Therefore, the system may be either a plurality of apparatuses, which are stored in separate casings and connected through a network, or a plurality of modules within a single casing.

Note that embodiments of the present disclosure are not limited to the above-described embodiments, and can be modified in various ways without departing from the gist of the present disclosure.

For example, the file generation device 141 (211) may generate the video stream by multiplexing the coded data of all tiles to generate one image file, instead of generating the image file in units of tiles.

The present disclosure can be applied not only to MPEG-H 3D audio, but also to general audio codecs capable of creating a stream for each object.

Further, the present disclosure can also be applied to an information processing system that performs broadcasting and local storage playback, as well as streaming playback.

Furthermore, the present disclosure may have the following configurations.

(1)

An information processing apparatus including an acquisition unit that acquires audio data of a predetermined track in a file in which a plurality of types of audio data are divided into a plurality of tracks depending on the types and the tracks are arranged.

(2)

The information processing apparatus according to the above item (1), in which the types are configured to be an element of the audio data, a type of the element, or a group into which the element is classified.

(3)

The information processing apparatus according to the above item (1) or (2), further including a decoding unit that decodes the audio data of the predetermined track acquired by the acquisition unit.

(4)

The information processing apparatus according to the above item (3), in which when there are a plurality of predetermined tracks, the decoding unit synthesizes the audio data of the predetermined tracks acquired by the acquisition unit, and decodes the synthesized audio data.

(5)

The information processing apparatus according to the above item (4), in which

the file is configured in such a manner that audio data in units of a plurality of objects is divided into the tracks different for each object and the tracks are arranged, and metadata items of all the audio data in units of objects are collectively arranged in a track different from the track,
the acquisition unit is configured to acquire the audio data of the track of the object to be played back as the audio data of the predetermined track, and acquires the metadata, and
the decoding unit is configured to extract the metadata of the object to be played back from the metadata acquired by the acquisition unit, and synthesize the metadata with the audio data acquired by the acquisition unit.

(6)

The information processing apparatus according to the above item (4), in which

the file is configured in such a manner that audio data in units of a plurality of objects is divided into the tracks different for each object and the tracks are arranged, and metadata items of all the audio data in units of objects are collectively arranged in a track different from the track, and
the acquisition unit is configured to acquire the audio data of the track of the object to be played back as the audio data of the predetermined track, and acquires the metadata, and
the decoding unit is configured to synthesize zero data with the audio data and the metadata acquired by the acquisition unit, the zero data indicating a decoding result of zero as the audio data of the track which is not to be played back.

(7)

The information processing apparatus according to the above item (4), in which

the file is configured in such a manner that audio data in units of a plurality of objects is divided into the tracks different for each object and the tracks are arranged, and metadata items of the audio data in units of objects are arranged in different tracks for each object,
the acquisition unit is configured to acquire the audio data of the track of the object to be played back as the audio data of the predetermined track, and aquires the metadata of the object to be played back, and
the decoding unit is configured to synthesize the audio data and the metadata acquired by the acquisition unit.

(8)

The information processing apparatus according to any one of the above items (1) to (7), in which the audio data items of the plurality of tracks are configured to be arranged in one file.

(9)

The information processing apparatus according to any one of the above items (1) to (7), in which the audio data items of the plurality of tracks are configured to be arranged in the different files for each track.

(10)

The information processing apparatus according to any one of the above items (1) to (9), in which the file is configured in such a manner that information about the plurality of types of the audio data is arranged as a track different from the plurality of tracks.

(11)

The information processing apparatus according to the above item (10), in which information about the plurality of types of the audio data is configured to include image frame size information indicating an image frame size of image data corresponding to the audio data.

(12)

The information processing apparatus according to any one of the above items (1) to (9), in which the file is configured in such a manner that, as the audio data of a track different from the plurality of tracks, information indicating a position of the audio data of another track corresponding to the audio data is arranged.

(13)

The information processing apparatus according to any one of the above items (1) to (9), in which the file is configured in such a manner that, as the data of a track different from the plurality of tracks, information indicating a position of the audio data of another track corresponding to the data and metadata of the audio data of the other track are arranged.

(14)

The information processing apparatus according to the above item (13), in which the metadata of the audio data is configured to include information indicating a position at which the audio data is acquired.

(15)

The information processing apparatus according to any one of the above items (1) to (14), in which the file is configured to include information indicating a reference relationship between the track and the other track.

(16)

The information processing apparatus according to any one of the above items (1) to (15), in which the file is configured to include codec information of the audio data of each track.

(17)

The information processing apparatus according to any one of the above items (1) to (16), in which the predetermined type of audio data is information indicating a position at which another type of audio data is acquired.

(18)

An information processing method including an acquisition step of acquiring, by an information processing apparatus, audio data of a predetermined track in a file in which a plurality of types of audio data are divided into a plurality of tracks depending on the types and the tracks are arranged.

(19)

An information processing apparatus including a generation unit that generates a file in which a plurality of types of audio data are divided into a plurality of tracks depending on the types and the tracks are arranged.

(20)

An information processing method including a generation step of generating, by an information processing apparatus, a file in which a plurality of types of audio data are divided into a plurality of tracks depending on the types and the tracks are arranged.

(21)

An information processing apparatus comprising an acquisition unit that acquires audio data of a predetermined track in a file in which a plurality of types of audio data are divided into a plurality of tracks depending on the types and the tracks are arranged.

(22)

The information processing apparatus according to (21), wherein the types are configured to be an element of the audio data, a type of the element, or a group into which the element is classified.

(23)

The information processing apparatus according to (21), further comprising a decoding unit that decodes the audio data of the predetermined track acquired by the acquisition unit.

(24)

The information processing apparatus according to (23), wherein when there are a plurality of the predetermined tracks, the decoding unit synthesizes the audio data of the predetermined tracks acquired by the acquisition unit, and decodes the synthesized audio data.

(25)

The information processing apparatus according to (24), wherein

the file is configured in such a manner that audio data in units of a plurality of objects is divided into the tracks different for each object and the tracks are arranged, and metadata items of all the audio data in units of objects are collectively arranged in a track different from the track,
the acquisition unit is configured to acquire the audio data of the track of an object to be played back as the audio data of the predetermined track, and acquire the metadata, and
the decoding unit is configured to extract the metadata of the object to be played back from the metadata acquired by the acquisition unit, and synthesize the metadata with the audio data acquired by the acquisition unit.

(26)
The information processing apparatus according to (24), wherein

the file is configured in such a manner that audio data in units of a plurality of objects is divided into the tracks different for each object and the tracks are arranged, and metadata of all the audio data in units of objects are collectively arranged in a track different from the track,
the acquisition unit is configured to acquire the audio data of the track of the object to be played back as the audio data of the predetermined track, and acquire the metadata, and
the decoding unit is configured to synthesize the audio data and the metadata acquired by the acquisition unit with zero data indicating a decoding result of zero as the audio data of the track which is not to be played back.

(27)
The information processing apparatus according to (24), wherein

the file is configured in such a manner that audio data in units of a plurality of objects is divided into the tracks different for each object and the tracks are arranged, metadata of the audio data in units of objects is arranged in tracks different for each object,
the acquisition unit is configured to acquire the audio data in the track of an object to be played back as the audio data of the predetermined track, and acquire metadata of the object to be played back, and
the decoding unit synthesizes the audio data and the metadata acquired by the acquisition unit.

(28)
The information processing apparatus according to (21), wherein the audio data of the plurality of tracks is arranged in one file.
(29)
The information processing apparatus according to (11), wherein the audio data of the plurality of tracks is arranged in the files different for each track.
(30)
The information processing apparatus according to (21), wherein the file is configured in such a manner that information about the plurality of types of the audio data is arranged as tracks different from the plurality of tracks.
(31)
The information processing apparatus according to (30), wherein information about the plurality of types of the audio data includes image frame size information indicating an image frame size of image data corresponding to the audio data.
(32)
The information processing apparatus according to (21), wherein the file is configured in such a manner that information indicating a position of the audio data in another track corresponding to the audio data is arranged as the audio data of a track different from the plurality of tracks.
(33)
The information processing apparatus according to (21), wherein the file is configured in such a manner that information indicating a position of the audio data of another track corresponding to the data and metadata of the audio data of the other track are arranged as the data of a track different from the plurality of tracks.
(34)
The information processing apparatus according to (33), wherein the metadata of the audio data is configured to include information indicating a position at which the audio data is acquired.
(35)
The information processing apparatus according to (21), wherein the file is configured to include information indicating a reference relationship between the track and the other track.
(36)
The information processing apparatus according to (21), wherein the file is configured to include codec information of the audio data of each track.
(37)
The information processing apparatus according to (21), wherein the predetermined type of audio data is configured as information indicating a position at which another type of audio data is acquired.
(38)
An information processing method comprising an acquisition step of acquiring, by an information processing apparatus, acquiring audio data of a predetermined track in a file in which a plurality of types of audio data are divided into a plurality of tracks depending on the types and the tracks are arranged.

(39)
An information processing apparatus comprising a generation unit that generates a file in which a plurality of types of audio data are divided into a plurality of tracks depending on the types and the tracks are arranged.

(40)
An information processing method comprising a generation step of generating, by an information processing apparatus, a file in which a plurality of types of audio data are divided into a plurality of tracks depending on the types and the tracks are arranged.

REFERENCE SIGNS LIST

| | |
|---|---|
| 141 | File generation device |
| 144 | Moving image playback terminal |
| 172 | Audio file generation unit |
| 192 | Audio file acquisition unit |
| 193 | Audio selection unit |
| 211 | File generation device |
| 214 | Moving image playback terminal |
| 241 | Audio file generation unit |
| 264 | Audio file acquisition unit |

**Claims**

1. . An information processing apparatus comprising a file generation unit that allocates, for each type of audio data, a track to a stream composed of one track including a plurality of types of audio data and generates a file composed of a plurality of tracks.

2. . The information processing apparatus according to claim 1, wherein the type is configured as Channel audio, Object audio, HOA audio, or metadata.

3. . The information processing apparatus according to claim 1 or claim 2, further comprising a coding unit that encodes the plurality of types of audio data for each type of audio data.

4. . The information processing apparatus according to any preceding claim, wherein the file generation unit is configured to allocate different tracks to the audio data of each object for the stream composed of one track, and to allocate, to the metadata, a track different from the tracks of the audio data, the stream including audio data of a plurality of objects and metadata of the audio data of all the objects as the plurality of types of audio data.

5. . The information processing apparatus according to any preceding claim, wherein the file generation unit is configured to allocate different tracks to the audio data of each object for the stream composed of one track, and to allocate a track different from the tracks of the audio data to the metadata of each object, the stream including audio data of a plurality of objects and metadata of the audio data of each object as the plurality of types of audio data.

6. _ The information processing apparatus according to any preceding claim, wherein the file generation unit is configured to generate one file composed of the plurality of tracks.

7. . The information processing apparatus according to any of claims 1 to 5, wherein the file generation unit is configured to generate a plurality of the files in which the plurality of tracks are arranged for each of the tracks.

8. . The information processing apparatus according to any preceding claim, wherein the file is configured in such a manner that information about the data is arranged as a base track, the base track being a track different from the plurality of tracks.

9. . The information processing apparatus according to claim 8, wherein the information about the data is configured to include image frame size information indicating an image frame size of image data corresponding to the data.

10. .The information processing apparatus according to claim 8 or claim 9, wherein the information about the data is configured to include information indicating a position of the data in the file.

11. . The information processing apparatus according to any of claims 8 to 10, wherein the base track is configured in such a manner that information indicating a position of the data in the file and metadata of the data are arranged.

12. . The information processing apparatus according to claim 11, wherein the metadata of the data is configured to include information indicating a position where the data is acquired.

13. . The information processing apparatus according to any preceding claim, wherein the file is configured to include information indicating a reference relationship of the track with another track.

14. . The information processing apparatus according to any preceding claim, wherein a predetermined type of audio data is configured to be information indicating a position where another type of audio data is acquired.

15. . An information processing method comprising a file generation step of allocating, by an information processing apparatus, for each type of audio data, a track to a stream composed of one track including a plurality of types of audio data, and generating a file composed of a plurality of tracks.

# FIG. 1

- **12** Web SERVER
- **11** FILE GENERATION DEVICE
- **13** ACQUIRE MPD FILE
- **10**
- **14** VIDEO PLAYBACK TERMINAL

MPD FILE

INTERNET

HTTP/1.1

REQUEST/DISTRIBUTE NECESSARY DATA ON THE BASIS OF INFORMATION OF MPD FILE

SEGMENT GROUP OF TILE #1

SEGMENT GROUP OF TILE #2

SEGMENT GROUP OF OBJECT #1

SEGMENT GROUP OF OBJECT #2

- **21** SOFTWARE FOR CONTROLLING STREAMING DATA
- **23** CLIENT SOFTWARE FOR HTTP ACCESS
- **22** VIDEO PLAYBACK SOFTWARE

PLAY BACK VIDEO

SEGMENT INDEX

SUBSEGMENT

SEGMENT

# FIG. 2

| Tile#1 | Tile#2 |
|--------|--------|
| Tile#3 | Tile#4 |

## FIG. 3

OBJECT #3
OBJECT #6
OBJECT #1
OBJECT #2
OBJECT #6
OBJECT #2

31

OBJECT #5
OBJECT #8
OBJECT #4
OBJECT #7
OBJECT #1

# FIG. 4

# FIG. 5

# FIG. 6

**Media Presentation**

- Period, start=0s
  ...
- Period, start=100s
  ...
- Period, start=295s
  ...

...

**Period,**
- start=100
- baseURL=http://www.e.com/
  ...

Representation1
500kbit/s

Representation2
100kbit/s

...

**Representation1**
- bandwidth=500kbit/s
- width 640, height 480
  ...

Segment Info
duration=10s

Template:
/ahs-5-SIndex.3gs

**Segment Info**

Initialization Segment
http://www.e.com/ahs-5-3gp

Media Segment1
start=0s
http://www.e.com/ahs-5-1.3gm

Media Segment2
start=10s
http://www.e.com/ahs-5-2.3gm

Media Segment3
start=20s
http://www.e.com/ahs-5-3.3gm

...

Media Segment20
start=190s
http://www.e.com/ahs-5-20.3gm

## FIG. 7

## FIG. 8

```
┌─────────────────────────────────────────────────┐
│ MPD FILE                                         │
│  ┌──────────────────────────────────────────┐   │
│  │                          ┌──────────┐     │───────→ INFORMATION OF PROGRAM
│  │                          │ Period   │     │   │     (DATA OF ONE SET OF SYNCHRONIZED VIDEO, AUDIO, ETC.)
│  │  ┌───────────────────────────────────────┐│   │
│  │  │                   ┌──────────────┐     ││───────→ PERFORM GROUPING OF RANGE OF STREAMS TO BE SELECTED
│  │  │                   │ AdaptationSet│     ││   │     (Representation GROUP)
│  │  │  ┌────────────────────────────────────┐│   │
│  │  │  │              ┌──────────────┐       ││───────→ CODING RATES OF VIDEO AND AUDIO,
│  │  │  │              │Representation│       ││   │     INFORMATION SUCH AS VIDEO AND IMAGE SIZE
│  │  │  │  ┌─────────────────────────────────┐│   │
│  │  │  │  │          ┌──────────────┐        ││───────→ INFORMATION RELATED TO SEGMENTS OF VIDEO AND AUDIO
│  │  │  │  │          │ SegmentInfo  │        ││   │
│  │  │  │  │  ┌──────────────────────┐        ││   │
│  │  │  │  │  │Initialization Segment│        ││───────→ INITIALIZATION INFORMATION SUCH AS DATA COMPRESSION SCHEME
│  │  │  │  │  └──────────────────────┘        ││   │
│  │  │  │  │  ┌──────────────┐                ││   │
│  │  │  │  │  │ Media Segment│                ││───────→ SEGMENTS OF VIDEO AND AUDIO
│  │  │  │  │  └──────────────┘                ││   │
│  │  │  │  └─────────────────────────────────┘│   │
│  │  │  └────────────────────────────────────┘│   │
│  │  └───────────────────────────────────────┘│   │
│  └──────────────────────────────────────────┘   │
└─────────────────────────────────────────────────┘
```

EP 4 177 886 A1

FIG. 9

# FIG. 10

Period
- AdaptationSet — `<Viewpoint schemeIdUri="urn:mpeg:DASH:viewingAngle:2013" value=" θ_{V1}, θ_{V2}, γ_{V1}, γ_{V2}, r_V">`
  - Representation
    - Segment — audiometadata.mp4
  - Representation
    - Segment — audioObje1.mp4
      `<Role schemeIdUri="urn:mpeg:DASH:role:2013" value="objectaudiometadata"/>`
      `<Viewpoint schemeIdUri="urn:mpeg:DASH:audioObj:2013" value="1">`
  - Representation
    - Segment — audioObje5.mp4
      `<Viewpoint schemeIdUri="urn:mpeg:DASH:audioObj:2013" value="5">`
- AdaptationSet — `<Viewpoint schemeIdUri="urn:mpeg:DASH:viewingAngle:2013" value=" θ_{V1}, θ_{V2}, γ_{V1}, γ_{V2}, r_V">`
  - Representation
    - Segment — videoTile1.mp4
- AdaptationSet
  - Representation
    - Segment — videoTile35.mp4

EP 4 177 886 A1

FIG. 11

# FIG. 12

START FILE GENERATION PROCESS

DIVIDE IMAGE DATA INTO TILE UNITS — S11

GENERATE VIDEO STREAM FOR EACH TILE — S12

GENERATE IMAGE FILE FOR EACH TILE — S13

ACQUIRE IMAGE FRAME SIZE INFORMATION — S14

GENERATE IMAGE INFORMATION INCLUDING IMAGE FRAME SIZE INFORMATION AND TILE POSITION INFORMATION — S15

GENERATE AUDIO STREAM OF EACH OBJECT AND ENCODED DATA OF AUDIO METADATA — S16

GENERATE AUDIO FILE OF EACH OBJECT AND AUDIO METAFILE — S17

GENERATE MPD FILE INCLUDING IMAGE INFORMATION — S18

UPLOAD IMAGE FILE, AUDIO FILE, AUDIO METAFILE, AND MPD FILE — S19

END

## FIG. 13

EP 4 177 886 A1

# FIG. 14

START STREAMING PLAYBACK PROCESS

ACQUIRE MPD FILE — S31

ACQUIRE IMAGE FRAME SIZE INFORMATION
AND TILE POSITION INFORMATION — S32

ACQUIRE AUDIO METAFILE — S33

SELECT OBJECT IN DISPLAY AREA ON THE BASIS
OF IMAGE FRAME SIZE INFORMATION
AND OBJECT POSITION INFORMATION — S34

ACQUIRE AUDIO FILE OF SELECTED OBJECT — S35

SELECT TILE IN DISPLAY AREA ON THE BASIS
OF TILE POSITION INFORMATION — S36

ACQUIRE IMAGE FILE OF SELECTED TILE — S37

DECODE AUDIO STREAM IN UNITS OF OBJECTS — S38

DECODE VIDEO STREAM IN UNITS OF TILES — S39

SYNTHESIZE AUDIO DATA IN UNITS OF OBJECTS — S40

SYNTHESIZE IMAGE DATA IN UNITS OF TILES — S41

END

# FIG. 15

Period — AdaptationSet ~ <Viewpoint schemeIdUri="urn:mpeg:DASH:viewingAngle:2013" value=" $\theta_{V1}$, $\theta_{V2}$, $\gamma_{V1}$, $\gamma_{V2}$, $r_V$ ">

Representation

Segment ~ audiometadata.mp4

<Role schemeIdUri="urn:mpeg:dash:role:2013" value="objectaudiometadata"/>

Representation

Segment ~ audioObje1.mp4

<Viewpoint schemeIdUri="urn:mpeg:DASH:audioObj:2013" value="1">

Representation

Segment ~ audioObje5.mp4

<Viewpoint schemeIdUri="urn:mpeg:DASH:audioObj:2013" value="5">

AdaptationSet <Viewpoint schemeIdUri="urn:mpeg:DASH:viewingAngle:2013" value" $\theta_{V1}$, $\theta_{V2}$, $\gamma_{V1}$, $\gamma_{V2}$, $r_V$ ">
<Viewpoint schemeIdUri="urn:mpeg:DASH:audioObj:2013" value="1,2">

Representation

Segment ~ videoTile1.mp4

AdaptationSet

Representation

Segment ~ videoTile35.mp4

## FIG. 16

Period ─ AdaptationSet ～ `<Viewpoint schemeIdUri="urn:mpeg:DASH:viewingAngle:2013" value="$\theta_{V1}, \theta_{V2}, \gamma_{V1}, \gamma_{V2}, r_V$">`

Representation

Segment ～ audiometadata.mp4

`<Role schemeIdUri="urn:mpeg:DASH:role:2013" value="objectaudiometadata"/>`

Representation

Segment ～ audioObje.mp4

`<Viewpoint schemeIdUri="urn:mpeg:DASH:audioObj:2013" value="1,2,3,4,5">`

AdaptationSet ～ `<Viewpoint schemeIdUri="urn:mpeg:DASH:viewingAngle:2013" value="$\theta_{V1}, \theta_{V2}, \gamma_{V1}, \gamma_{V2}, r_V$">`

Representation

Segment ～ videoTile1.mp4

AdaptationSet

Representation

Segment ～ videoTile35.mp4

# FIG. 17

Initialization segment | media segment | Size=a | Size=z | media segment

ftyp | moov | stbl | mvex

styp | sidx | gsix | moof | mdat
Sample | sample | sample | sample | sample

moof | mdat

gsix
Type=
'obja'

index=0
size=a1

index=1
size=a2

index=4
size=a3

index=2
size=a4

index=3
size=a5

moof | mdat
Audio object 1 | Audio object 4 | Audio object 2 | Audio object 3

sample

EP 4 177 886 A1

## FIG. 18

```
aligned(8) class GeneralSubsegmentIndexBox extends FullBox('gsix',0,0){
    grouping_type int(32);
    unsigned int(32) subsegment_count;
    for(i=1;i<=subsegment_count;i++)
    {
        unsigned int(32) entry_count;
        for(j=1;j<= entry_count;j++){
            unsigned int(8) entry_index;
            unsigned int(24)range_size;
        }
    }
}
```

EP 4 177 886 A1

# FIG. 19

Initialization segment

| ftyp | moov | stbl | mvex |
|------|------|------|------|

media segment

| styp | sidx | gsix | moof | mdat | moof | mdat | moof | mdat | --- | moof | mdat | --- |
|------|------|------|------|------|------|------|------|------|-----|------|------|-----|

'sgpd' '(sample group description box)
grouping_type='obja'
entry_count=n

| AudioObjectSampleGroupEntry |
|---|

| AudioObjectSampleGroupEntry |
|---|

| AudioObjectSampleGroupEntry |
|---|

| AudioObjectSampleGroupEntry |
|---|

'typa' '(type assignment box)
entry_count=n

| Grouping_type="obja" |
|---|

| Grouping_type="obja" |
|---|

| Grouping_type="obja" |
|---|

| Grouping_type="obja" |
|---|

EP 4 177 886 A1

# FIG. 20

A

```
Class  AudioObjectSampleGroupEntry extends AudioSampleGroupEntry('obja'){

            unsigned int(32)audio_object_id;
            unsigned int(32)reserved=0;

}
```

B

```
Sample Group Description Box("sgpd")
Grouping_type="obja"
Entry_count=4
```

AudioObjectSampleGroupEntry("obja) "1"

AudioObjectSampleGroupEntry("obja) "2"

AudioObjectSampleGroupEntry("obja) "3"

AudioObjectSampleGroupEntry("obja) "4"

## FIG. 21

```
aligned(8)class TypeAssignmentBox extends FullBox('typa', 0,0)
{
    unsigned int(8) entry_count;
        for (j=1;j<= entry_count;j++){
        unsigned int(32)track_id;
        unsigned int(7)assignment_type;
            if(assignment_type == 0){
            unsigned int(32) grouping_type;
            }
            else if (assignment_type == 1){
                unsigned int(32)grouping_type;
                unsigned int(32)grouping_type_parameter;
            }
    }
// other assignment_type values are reserved
}
```

# FIG. 22

OBJECT #3
OBJECT #6
OBJECT #1
OBJECT #2
OBJECT #3
OBJECT #6
OBJECT #2

31

OBJECT #5
OBJECT #8
OBJECT #7
OBJECT #1
111

OBJECT #4
OBJECT #7
OBJECT #4
OBJECT #8
OBJECT #5

*FIG. 23*

EP 4 177 886 A1

FIG. 24

FIG. 25

# FIG. 26

*FIG. 27*

EP 4 177 886 A1

# FIG. 28

```
( START STREAMING PLAYBACK PROCESS )
```

| | |
|---|---|
| ACQUIRE MPD FILE | S131 |
| ACQUIRE CONTENT IMAGE FRAME SIZE INFORMATION AND TILE POSITION INFORMATION | S132 |
| ACQUIRE AUDIO METAFILE | S133 |
| POSITION DETERMINATION PROCESS | S134 |
| EXTRACT INFORMATION OF ALL OBJECTS | S135 |
| ACQUIRE AUDIO FILE OF ALL OBJECTS | S136 |
| SELECT TILE IN DISPLAY AREA ON THE BASIS OF TILE POSITION INFORMATION | S137 |
| ACQUIRE IMAGE FILE OF SELECTED TILE | S138 |
| DECODE AUDIO STREAM IN UNITS OF OBJECTS | S139 |
| DECODE VIDEO STREAM IN UNITS OF TILES | S140 |
| SYNTHESIZE AUDIO DATA IN UNITS OF OBJECTS ON THE BASIS OF OBJECT POSITION | S141 |
| SYNTHESIZE IMAGE DATA IN UNITS OF TILES | S142 |
| GENERATE DISPLAY IMAGE | S143 |

```
( END )
```

# FIG. 29

```
(START POSITION DETERMINATION PROCESS)
                    │
                    ▼
┌─────────────────────────────────────────────┐
│ HORIZONTAL ANGLE $\theta_{Ai}'$ ESTIMATION PROCESS │ S151
└─────────────────────────────────────────────┘
                    │
                    ▼
┌─────────────────────────────────────────────┐
│ VERTICAL ANGLE $\gamma_{Ai}'$ ESTIMATION PROCESS  │ S152
└─────────────────────────────────────────────┘
                    │
                    ▼
┌─────────────────────────────────────────────┐
│              $r_{Ai}' = r_{Ai}$                    │ S153
└─────────────────────────────────────────────┘
                    │
                    ▼
┌─────────────────────────────────────────────┐
│       OUTPUT HORIZONTAL ANGLE $\theta_{Ai}'$,      │ S154
│            VERTICAL ANGLE $\gamma_{Ai}'$,          │
│ AND DISTANCE $r_{Ai}'$ AS POSITION OF OBJECT #i │
└─────────────────────────────────────────────┘
                    │
                    ▼
              (  RETURN  )
```

# FIG. 30

START HORIZONTAL ANGLE $\theta_{Ai}'$ ESTIMATION PROCESS

ACQUIRE HORIZONTAL ANGLE $\theta_{Ai}$ OF OBJECT #i — S171

ACQUIRE CONTENT IMAGE FRAME SIZE INFORMATION AND DISPLAY AREA IMAGE FRAME SIZE INFORMATION — S172

CALCULATE SHIFT AMOUNT $\theta_{shift}$ — S173

CALCULATE HORIZONTAL ANGLES $\theta_{v1\_shift}'$ AND $\theta_{v2\_shift}'$ — S174

CALCULATE HORIZONTAL ANGLE $\theta_{Ai\_shift}$ — S175

S176

IS OBJECT #i PRESENT IN DISPLAY AREA?

NO

YES

CALCULATE HORIZONTAL ANGLE $\theta_{Ai}'$ BY FORMULA (5) — S177

CALCULATE HORIZONTAL ANGLE $\theta_{Ai}'$ BY FORMULA (6) — S178

RETURN

FIG. 31

Track 1

Sample Entry = 'mha1'

mhaC box

| 3daudio sample | 3daudio sample | 3daudio sample | 3daudio sample |

```
class MHASampleEntry() extends AudioSampleEntry('mha1') {
       MHAConfigurationBox config;
       MPEG4BitRateBox();              // optional
       MPEG4ExtensionDescriptorsBox (); // optional
}
```

```
aligned(8) class MHADecoderConfigurationRecord {
       unsigned int(8)  configurationVersion = 1;
       unsigned int(8)  MPEGHAudioProfile;
       unsigned int(8)  MPEGHAudioLevel;
       unsigned int(8)  referenceChannelLayout;
       unsigned int(16) mpegh3daConfigLength;
       bit(8*mpegh3daConfigLength) mpegh3daConfig;
}
```

FIG. 32

EP 4 177 886 A1

FIG. 33

EP 4 177 886 A1

## FIG. 34

```
class MHASampleEntry() extends AudioSampleEntry('mha1') {
            MHAConfigurationBox config;
            MHAViewingAngleBox config;              //optional
            MPEG4BitRateBox();                      // optional
            MPEG4ExtensionDescriptorsBox ();        // optional
    }

class MHAConfigurationBox() extends Box('mhaC') {
            MHADecoderConfigurationRecord() MHAConfig;
    }

aligned(8) class MHADecoderConfigurationRecord {
            unsigned int(8)  configurationVersion = 1;
            unsigned int(8)  MPEGHAudioProfile;
            unsigned int(8)  MPEGHAudioLevel;
            unsigned int(8)  referenceChannelLayout;
            unsigned int(16) mpegh3daConfigLength;
            bit(8*mpegh3daConfigLength) mpegh3daConfig;
    }

class MHAViewingAngleConfigurationBox() extends Box('mhaV') {
            MHAViewingAngleConfigurationRecord() MHAVConfig;
    }

aligned(8) class MHAViewingAngleConfigurationRecord {
            unsigned int(8)  configurationVersion = 1;
            unsigned int(16)  width;
            unsigned int(16)  height;
            unsigned int(16)  theta1;
            unsigned int(16)  theta2;
            unsigned int(16)  gamma1;
            unsigned int(16)  gamma2

    }
```

ASSUMPTION FOR CALCULATION OF COORDINATES OF THIS track
WidthxHeight INFORMATION USING pixels OF Video,
LIKELIHOOD INFORMATION IN VERTICAL AND HORIZONTAL DIRECTIONS OF Audio
=> ON THE BASIS OF THESE PIECES OF INFORMATION,
      audio IS MAPPED TO VIDEO pixel COORDINATES

# FIG. 35

```
class MHAChannelAudioSampleEntry() extends AudioSampleEntry('hac1') {
        MHAChannelAudioConfigurationBox config;
        MPEG4BitRateBox();                         // optional
        MPEG4ExtensionDescriptorsBox ();           // optional
    }


class MHAChannelAudioConfigurationBox() extends Box('hacC') {
        MHAChannelAudioDecoderConfigurationRecord() MHACAConfig;
    }


aligned(8) class MHAChannelAudioDecoderConfigurationRecord {
        unsigned int(8)   configurationVersion = 1;
        unsigned int(8)   MPEGHAudioProfile;
        unsigned int(8)   MPEGHAudioLevel;
    }
```

Profile/Level INFORMATION NECESSARY FOR decoding Channel Audio

# FIG. 36

```
class MHAObjectAudioSampleEntry() extends AudioSampleEntry('hao1') {
            MHAObjectAudioConfigurationBox config;
            MHAObjectAudioViewingAngleBox config;            // optional
            MPEG4BitRateBox();                               // optional
            MPEG4ExtensionDescriptorsBox ();                 // optional
    }

class MHAObjectAudioConfigurationBox() extends Box('haoC') {
            MHAObjectAudioDecoderConfigurationRecord() MHAOAConfig;
    }

aligned(8) class MHAObjectAudioDecoderConfigurationRecord {
            unsigned int(8)  configurationVersion = 1;
            unsigned int(8)  MPEGHAudioProfile;
            unsigned int(8)  MPEGHAudioLevel;
            unsigned int(8)  object_is_fixed;
            unsigned int(16) mpegh3daConfigLength;
            bit(8*mpegh3daConfigLength) mpegh3daConfig;
    }

class MHAObjectAudioViewingAngleBox() extends Box('haoV') {
            MHAObjectAudioViewingAngleRecord() MHAOVConfig;
    }

aligned(8) class MHAObjectAudioViewingAngleRecord {
            unsigned int(8)  configurationVersion = 1;
            unsigned int(8)  record_count;
            for (j=1; j<=record_count; j++) {
            unsigned int(16) objectTheta1;
            unsigned int(16) objectTheta2;
            unsigned int(16) objectGamma1;
            unsigned int(16) objectGamma2;
            unsigned int(16) objectRength;
            unsigned int(16) maxobjectTheta1;
            unsigned int(16) maxobjectTheta2;
            unsigned int(16) maxobjectGamma1;
            unsigned int(16) maxobjectGamma2;
            unsigned int(16) maxobjectRength;

            }

    }
```

**Profile/Level INFORMATION NECESSARY FOR decoding One or more Object Audios, OR One or more SAOC Audios, WHICH ARE STORED IN THIS track**

**objects STORED IN THIS track INDICATE FIXED = 1, or SHIFTED = 0**

**IDENTIFICATION INFORMATION config OF objects STORED IN THIS track**

**Viewing Angle INFORMATION NECESSARY FOR decoding One or more Object Audios, OR One or more SAOC Audios, WHICH ARE STORED IN THIS track VALID INFORMATION WHEN Object_is_fixed = 1**

**MAXIMUM SHIFT POSITION IN CASE OF SHIFTING**

EP 4 177 886 A1

FIG. 37

```
class MHAHOAAudioSampleEntry() extends AudioSampleEntry('hah1') {
        MHAHOAAudioConfigurationBox config;
        MPEG4BitRateBox();                       // optional
        MPEG4ExtensionDescriptorsBox ();         // optional
    }


class MHAHOAAudioConfigurationBox() extends Box('hahC') {
        MHAHOAAudioDecoderConfigurationRecord() MHAHAConfig;
    }


aligned(8) class MHAHOAtAudioDecoderConfigurationRecord {
        unsigned int(8)  configurationVersion = 1;
        unsigned int(8)  MPEGHAudioProfile;
        unsigned int(8)  MPEGHAudioLevel;
    }
```

Profile/Level INFORMATION
NECESSARY FOR HOA audio
STORED IN THIS track

# FIG. 38

```
class MHAMetadataSampleEntry() extends AudioSampleEntry('ham1') {
        MHAMetadataConfigurationBox config;
        MPEG4BitRateBox();                    // optional
        MPEG4ExtensionDescriptorsBox ();      // optional
    }


class MHAMetadataConfigurationBox() extends Box('hahC') {
        MHAMetadataConfigurationRecord() MHAMConfig;
    }


aligned(8) class MHAMetadataConfigurationRecord {
        unsigned int(8)  configurationVersion = 1;
        unsigned int(16)  reserved
    }
```

## FIG. 39

- ALL tracks ARE COMPOSED OF ONE moof/mdat
- DATA ARE SUCCESSIVELY STORED FOR EACH track IN ONE mdat OF ANY LENGTH OF TIME
- DATA ARE STORED IN UNITS OF ANOTHER moof/mdat FOR ANY LENGTH OF TIME
- moof/mdat INCLUDING ALL tracks AT THE SAME TIME ARE SET AS subsegments
=> sidx REPRESENTS subsegment
=> Ssix REPRESENTS moof OR SUCCESSIVE mdats FOR EACH track

media segment

Initial segment

ftyp | moov | trak — trak | mvex

sidx | ssix | moof | Track1 | mdat | TrackN | moof | Track1 | mdat | TrackN

Track1 | TrackN

MANAGEMENT DATA FOR Tracks 1—N

Track1 IS base Track

Track2—N INCLUDES Channel Audio Track, Object asuio track(s), HOA audio track, AND metada track

## FIG. 40

- moof/mdat IS CONFIGURED FOR EACH track
  - DATA ARE INTERLEAVED AND STORED IN UNITS OF moof/mdat FOR EACH Track OF ANY LENGTH OF TIME
  - moof/mdat OF ALL tracks AT THE SAME TIME ARE SET AS subsegments
  => sidx REPRESENTS subsegment
  => Ssix REPRESENTS moof/mdat FOR EACH track

media segment

Initial segment

ftyp | moov [ trak | trak | mvex ]

sidx | ssix | Track1 [ moof | mdat ] | Trackn [ moof | mdat ] | Track1 [ moof | mdat ] | Trackn [ moof | mdat ]

Track1

Track1 IS base Track

Track2-N INCLUDES Channel Audio Track, Object asuio track(s), HOA audio track, AND metada track

EP 4 177 886 A1

*FIG. 41*

# FIG. 42

```
Period ── AdaptationSet        <EssentialProperty schemeIdUri="urn:mpeg:DASH:3daudio:2014" value=" audioType, contentkind ,priority">

              Representation ── <codecs="mha2.3.1">        <id="bs" associationId="ch,ob1,..,hoa,mt" assciationType="ref">

                        Segment ── 3daudio.mp4

              SubRepresentation   <codecs="hac1.2.1">
                                  <level="1" dependencyLevel="0"
                                  <EssentialProperty schemeIdUri="urn:mpeg:DASH:3daudio:2014" value="1,0">

              SubRepresentation   <codecs="hao1.2.1">
                                  <level="4" dependencyLevel="0"
                                     <EssentialProperty schemeIdUri="urn:mpeg:DASH:3daudio:2014" value="3,3 ,2">
                                  < EssentialProperty schemeIdUri="urn:mpeg:DASH:viewingAngle:2014" value="θ, γ, r">

              SubRepresentation   <codecs="hah1.2.1">
                                   <level="2" dependencyLevel="0"
                                  <EssentialProperty schemeIdUri="urn:mpeg:DASH:3daudio:2014" value="1,0">

              SubRepresentation   <codecs="ham1">
                                  <level="3" dependencyLevel="0"
                                  <EssentialProperty schemeIdUri="urn:mpeg:DASH:3daudio:2014" value="4">
```

tracks MAPPED BY
Ssix ARE indexed BY
sub-representaion

90

# FIG. 43

AudioType
1 channel audio
2 HOA audio
3 object audio
4 metadata

Priority IS
DEFINED BY 23008-3

| contentKind | description |
|---|---|
| 0 | undefined |
| 1 | complete main |
| 2 | dialogue |
| 3 | music |
| 4 | effect |
| 5 | mixed |
| 6 | LFE |
| 7 | voiceover |
| 8 | spokensubtitle |
| 9 | audiodescription/visually impaired |
| 10 | commentary |
| 11 | hearing impaired |
| 12 | emergency |
| 13-15 | reserved |

EP 4 177 886 A1

# FIG. 44

FIG. 45

EP 4 177 886 A1

# FIG. 46

```
┌─────────────────────────────────────┐
│   START FILE GENERATION PROCESS      │
└─────────────────────────────────────┘
                   │
                   ▼
┌─────────────────────────────────────┐  S191
│   DIVIDE IMAGE DATA INTO TILE UNITS  │
└─────────────────────────────────────┘
                   │
                   ▼
┌─────────────────────────────────────┐  S192
│  GENERATE VIDEO STREAM FOR EACH TILE │
└─────────────────────────────────────┘
                   │
                   ▼
┌─────────────────────────────────────┐  S193
│   GENERATE IMAGE FILE FOR EACH TILE  │
└─────────────────────────────────────┘
                   │
                   ▼
┌─────────────────────────────────────┐  S194
│  ACQUIRE IMAGE FRAME SIZE INFORMATION│
└─────────────────────────────────────┘
                   │
                   ▼
┌───────────────────────────────────────────────────┐  S195
│ GENERATE IMAGE INFORMATION INCLUDING IMAGE FRAME   │
│ SIZE INFORMATION AND TILE POSITION INFORMATION     │
└───────────────────────────────────────────────────┘
                   │
                   ▼
┌───────────────────────────────────────────────────┐  S196
│ GENERATE AUDIO STREAM FOR EACH TYPE OF 3D AUDIO    │
└───────────────────────────────────────────────────┘
                   │
                   ▼
┌─────────────────────────────────────┐  S197
│   ALLOCATE TRACK TO AUDIO STREAM     │
└─────────────────────────────────────┘
                   │
                   ▼
┌─────────────────────────────────────┐  S198
│       GENERATE AUDIO FILE            │
└─────────────────────────────────────┘
                   │
                   ▼
┌─────────────────────────────────────┐  S199
│       GENERATE MPD FILE              │
└─────────────────────────────────────┘
                   │
                   ▼
┌───────────────────────────────────────────────────┐  S200
│  UPLOAD IMAGE FILE, AUDIO FILE, AND MPD FILE       │
└───────────────────────────────────────────────────┘
                   │
                   ▼
            ┌──────────────┐
            │     END      │
            └──────────────┘
```

FIG. 47

EP 4 177 886 A1

# FIG. 48

(START CHANNEL AUDIO PLAYBACK PROCESS)

| | |
|---|---|
| ANALYZE MPD FILE AND SPECIFY "SubRepresentation" OF Channel audio ON THE BASIS OF essential property AND codec | S221 |

| | |
|---|---|
| SPECIFY LEVEL OF REFERENCE TRACK ON THE BASIS OF dependencyLevel | S222 |

| | |
|---|---|
| ACQUIRE Initial segment | S223 |

| | |
|---|---|
| ACQUIRE TRACK IDs OF channel audio track AND REFERENCE TRACK FROM Level assignment box | S224 |

| | |
|---|---|
| ACQUIRE SAMPLE ENTRIES OF channel audio track AND REFERENCE TRACK | S225 |

| | |
|---|---|
| ACQUIRE sidx BOX AND ssix BOX FROM HEAD OF AUDIO FILE TO BE PLAYED BACK | S226 |

| | |
|---|---|
| ACQUIRE POSITION INFORMATION OF channel audio track AND REFERENCE TRACK FROM sidx BOX AND ssix BOX | S227 |

| | |
|---|---|
| REQUEST AND ACQUIRE AUDIO STREAM OF channel audio track ON THE BASIS OF POSITION INFORMATION | S228 |

| | |
|---|---|
| DECODE AUDIO STREAM OF channel audio track | S229 |

| | |
|---|---|
| OUTPUT channel audio | S230 |

(END)

# FIG. 49

START OBJECT SPECIFYING PROCESS

ACQUIRE DISPLAY AREA — S251

ANALYZE MPD FILE AND SPECIFY "SubRepresentation" OF metadata ON THE BASIS OF essential property AND codec — S252

SPECIFY LEVEL OF REFERENCE TRACK ON THE BASIS OF dependencyLevel — S253

ACQUIRE Initial segment — S254

ACQUIRE TRACK IDs OF object metadata track AND REFERENCE TRACK FROM Level assignment box — S255

ACQUIRE SAMPLE ENTRIES OF object metadata track AND REFERENCE TRACK — S256

ACQUIRE sidx BOX AND ssix BOX FROM HEAD OF AUDIO FILE TO BE PLAYED BACK — S257

ACQUIRE POSITION INFORMATION OF object metadata track AND REFERENCE TRACK FROM sidx BOX AND ssix BOX — S258

REQUEST AND ACQUIRE AUDIO STREAM OF object metadata track ON THE BASIS OF POSITION INFORMATION — S259

DECODE AUDIO STREAM OF object metadata track — S260

SELECT OBJECT ON THE BASIS OF IMAGE FRAME SIZE INFORMATION, OBJECT POSITION INFORMATION, AND DISPLAY AREA — S261

END

# FIG. 50

```
( START SPECIFIC OBJECT AUDIO PLAYBACK PROCESS )
```

| | |
|---|---|
| ANALYZE MPD FILE AND SPECIFY "SubRepresentation" OF SELECTED OBJECT ON THE BASIS OF essential property AND codec | S281 |
| SPECIFY LEVEL OF REFERENCE TRACK ON THE BASIS OF dependencyLevel | S282 |
| ACQUIRE TRACK IDs OF object audio track AND REFERENCE TRACK OF SELECTED OBJECT FROM Level assignment box | S283 |
| ACQUIRE SAMPLE ENTRIES OF object audio track AND REFERENCE TRACK | S284 |
| ACQUIRE POSITION INFORMATION OF object audio track TO BE PLAYED BACK AND REFERENCE TRACK FROM sidx BOX AND ssix BOX | S285 |
| REQUEST AND ACQUIRE AUDIO STREAM OF object audio track ON THE BASIS OF POSITION INFORMATION | S286 |
| DECODE AUDIO STREAM OF object audio track | S287 |
| SYNTHESIZE AND OUTPUT object audio | S288 |

```
( END )
```

# FIG. 51

EP 4 177 886 A1

## FIG. 52

```
class MHASampleEntry() extends AudioSampleEntry('mha2') {
        MHAConfigurationBox config;
        MPEG4BitRateBox();                          // optional
        MPEG4ExtensionDescriptorsBox ();     // optional
    }


class MHAConfigurationBox() extends Box('mhaC') {
        MHADecoderConfigurationRecord() MHAConfig;
    }


aligned(8) class MHADecoderConfigurationRecord {
            unsigned int(8)   configurationVersion = 1;
            unsigned int(8)   MPEGHAudioProfile;
            unsigned int(8)   MPEGHAudioLevel;
            unsigned int(8)   referenceChannelLayout;
            unsigned int(16) mpegh3daConfigLength;
            bit(8*mpegh3daConfigLength) mpegh3daConfig;
    }
```

## FIG. 53

DEFINE Base sample SO AS TO RECONSTRUCT ORIGINAL stream
DEFINE stream STRUCTURE INCLUDING REFERENCE DATA

3D audio sample

| channel Sub-sample | Object Sub-sample | Object Sub-sample | - - - - - | HOA Object Sub-sample | Metadata Sub-sample |

3D audio base sample

| channel Sub-sample extractor | Object Sub-sample extractor | Object Sub-sample extractor | - - - - - | HOA Object Sub-sample extractor | Metadata Sub-sample extractor |

DATA STRUCTURE OF Extractor
TYPE OF uint(8) extractor
Offset OF sub-sample OUTSIDE Uint(32)
Size OF sub-sample OUTSIDE Uint(32)

REFERENCE INFORMATION TO sub-samlpe STORED IN ANOTHER track

3D audio sub-sample

channel Sub-sample

Object Sub-sample

Object Sub-sample

HOA Object Sub-sample

Metadata Sub-sample

EP 4 177 886 A1

## FIG. 54

```
Syntax                                                          No. of bits      Mnemonic
mpegh3daFrame()
{
    usacIndependencyFlag;                                       1                uimsbf

    for (elemIdx=0; elemIdx<numElements; ++elemIdx) {
        if (  (usacElementType[elemIdx] != ID_USAC_EXT) &&
              (elementLengthPresent == 1)        ) {
            elementLength                                       16               uimsbf
        }
        switch (usacElementType[elemIdx]) {
        case ID_USAC_SCE:
            mpegh3daSingleChannelElement(usacIndependencyFlag);    elementLength, NOTE 1
            break;
        case ID_USAC_CPE:
            mpegh3daChannelPairElement(usacIndependencyFlag);      elementLength, NOTE 1
            break;
        case ID_USAC_LFE:
            mpegh3daLfeElement(usacIndependencyFlag);              elementLength, NOTE 1
            break;
        case ID_USAC_EXT:
            mpegh3daExtElement(usacIndependencyFlag);
            break;]
    }
}
NOTE 1: If present, elementLength represents the length of the corresponding element it refers to in number
of bits.
```

DEFINE extractor TO REFER TO EXTERNAL sub-sample AS mpeg3daExtElement

# FIG. 55

| Bitstream Field | Value |
|---|---|
| usacExtElementType | ID_EXT_ELE_EXTRACTOR |
| usacExtElementConfigLength | 0 |
| usacExtElementDefaultLengthPresent | 0 |
| usacExtElementPayloadFrag | 0 |

STORE TYPE, OFFSET, AND SIZE INFORMATION
OF REFERENCE sub-sample AS ACTUAL DATA

FIG. 56

EP 4 177 886 A1

# FIG. 57

EP 4 177 886 A1

| | | | | | 3da_base.mp4 |
|---|---|---|---|---|---|

**Base track** — Track 1 — Track Reference ref=2,3,4,10.. — Sample Entry = 'mha1' — mhaC box

**Channel audio track** — Track 2 — Track Reference prnt=1. — Sample Entry = 'hac1' — hacC box — channel sample | channel sample | channel sample | channel sample — 3da_channel.mp4

**Object audio track(s)** — Track 10 — Track Reference prnt=1. — Sample Entry = 'hao1' — haoC box — object sample | object sample | object sample | object sample — 3da_object_1.mp4

**HOA audio track** — Track 3 — Track Reference prnt=1.. — Sample Entry = 'hah1' — hahC box — HOA sample | HOA sample | HOA sample | HOA sample — 3da_hoa.mp4

**Object metadat track** — Track 4 — Track Reference prnt=1 — Sample Entry = 'ham1' — hamC box — meta sample | meta sample | meta sample | meta sample — 3da_meta.mp4

# FIG. 58

Period — AdaptationSet

`<EssentialProperty schemeIdUri="urn:mpeg:DASH:3daudio:2014" value=" audioType, contentkind ,priority">`

Representation — `<codecs="mha2.3.1">` `<id="bs" associationId="ch,ob1,..,hoa,mt" assciationType="ref">`

Segment — 3da_base.mp4

Representation — `<codecs="hac1.2.1">` `<id="ch" associationId="bs" assciationType="prnt">`
`<EssentialProperty schemeIdUri="urn:mpeg:DASH:3daudio:2014" value="1,0">`

Segment — 3da_channel.mp4

Representation — `<codecs="hao1.2.1">` `<id="ob1" associationId="bs" assciationType="prnt">`
`<EssentialProperty schemeIdUri="urn:mpeg:DASH:3daudio:2014" value=3,3,2"">`
`< EssentialProperty schemeIdUri="urn:mpeg:DASH:viewingAngle:2014" value="θ1, θ2, γ1, γ2, r">`

Segment — 3da_object_1mp4

Representation — `<codecs="hah1.2.1">` `<id="hoa" associationId="bs" assciationType="prnt">`
`<EssentialProperty schemeIdUri="urn:mpeg:DASH:3daudio:2014" value="2,0">`

Segment — 3da_hoa.mp4

Representation — `<codecs="ham1">` `<id="mt" associationId="bs" assciationType="prnt">`
`<EssentialProperty schemeIdUri="urn:mpeg:DASH:3daudio:2014" value="4">`

Segment — 3da_meta.mp4

# FIG. 59

FIG. 60

# FIG. 61

```
( START FILE GENERATION PROCESS )
              │
              ▼
┌─────────────────────────────────────────┐
│   DIVIDE IMAGE DATA INTO TILE UNITS      │ S301
└─────────────────────────────────────────┘
              │
              ▼
┌─────────────────────────────────────────┐
│   GENERATE VIDEO STREAM OF EACH TILE     │ S302
└─────────────────────────────────────────┘
              │
              ▼
┌─────────────────────────────────────────┐
│    GENERATE IMAGE FILE OF EACH TILE      │ S303
└─────────────────────────────────────────┘
              │
              ▼
┌─────────────────────────────────────────┐
│   ACQUIRE IMAGE FRAME SIZE INFORMATION   │ S304
└─────────────────────────────────────────┘
              │
              ▼
┌─────────────────────────────────────────┐
│  GENERATE IMAGE INFORMATION INCLUDING    │ S305
│  IMAGE FRAME SIZE INFORMATION AND TILE   │
│  POSITION INFORMATION                    │
└─────────────────────────────────────────┘
              │
              ▼
┌─────────────────────────────────────────┐
│ GENERATE AUDIO STREAM FOR EACH TYPE OF   │ S306
│ 3D AUDIO                                 │
└─────────────────────────────────────────┘
              │
              ▼
┌─────────────────────────────────────────┐
│    ALLOCATE TRACK TO AUDIO STREAM        │ S307
└─────────────────────────────────────────┘
              │
              ▼
┌─────────────────────────────────────────┐
│   GENERATE AUDIO FILE FOR EACH TRACK     │ S308
└─────────────────────────────────────────┘
              │
              ▼
┌─────────────────────────────────────────┐
│           GENERATE MPD FILE              │ S309
└─────────────────────────────────────────┘
              │
              ▼
┌─────────────────────────────────────────┐
│   UPLOAD IMAGE FILE, AUDIO FILE          │ S310
│ FOR EACH TYPE OF 3D AUDIO, AND MPD FILE  │
└─────────────────────────────────────────┘
              │
              ▼
          (   END   )
```

FIG. 62

EP 4 177 886 A1

# FIG. 63

```
START CHANNEL AUDIO PLAYBACK PROCESS
```

ANALYZE MPD FILE AND SPECIFY "Representation" OF
Channel audio ON THE BASIS OF essential property AND codec — S331

SPECIFY "Representation" OF REFERENCE TRACK
ON THE BASIS OF associationId — S332

ACQUIRE Initial segment — S333

ACQUIRE SAMPLE ENTRIES OF channel audio track
AND REFERENCE TRACK — S334

ACQUIRE sidx BOX AND ssix BOX FROM HEAD OF
AUDIO FILE OF channel audio track TO BE PLAYED BACK — S335

ACQUIRE POSITION INFORMATION OF
PLAYBACK TARGET FROM sidx BOX AND ssix BOX — S336

REQUEST AND ACQUIRE AUDIO STREAM OF channel audio track
ON THE BASIS OF POSITION INFORMATION — S337

DECODE AUDIO STREAM OF channel audio track — S338

OUTPUT channel audio — S339

```
END
```

## FIG. 64

START OBJECT AUDIO PLAYBACK PROCESS

ACQUIRE DISPLAY AREA — S351

ANALYZE MPD FILE AND SPECIFY "Representation" OF metadata ON THE BASIS OF essential property AND codec — S352

SPECIFY "Representation" OF REFERENCE TRACK ON THE BASIS OF associationId — S353

ACQUIRE Initial segment — S354

ACQUIRE SAMPLE ENTRIES OF object metadata track AND REFERENCE TRACK — S355

ACQUIRE AUDIO FILE OF object metadata track TO BE PLAYED BACK — S356

ACQUIRE POSITION INFORMATION OF PLAYBACK TARGET FROM sidx BOX AND ssix BOX — S357

REQUEST AND ACQUIRE AUDIO STREAM OF object metadata track ON THE BASIS OF POSITION INFORMATION — S358

DECODE AUDIO STREAM OF object metadata track — S359

SELECT OBJECT ON THE BASIS OF IMAGE FRAME SIZE INFORMATION, OBJECT POSITION INFORMATION, AND DISPLAY AREA — S360

ANALYZE MPD FILE AND SPECIFY "Representation" OF SELECTED OBJECT ON THE BASIS OF essential property AND codec — S361

SPECIFY "Representation" OF REFERENCE TRACK ON THE BASIS OF associationId — S362

ACQUIRE Initial segment — S363

ACQUIRE SAMPLE ENTRIES OF object audio track AND REFERENCE TRACK — S364

ACQUIRE sidx BOX AND ssix BOX OF AUDIO FILE OF object audio track TO BE PLAYED BACK — S365

ACQUIRE POSITION INFORMATION OF PLAYBACK TARGET FROM sidx BOX AND ssix BOX — S366

REQUEST AND ACQUIRE AUDIO STREAM OF object audio track ON THE BASIS OF POSITION INFORMATION — S367

DECODE AUDIO STREAM OF object audio track — S368

SYNTHESIZE AND OUTPUT object audio — S369

END

# FIG. 65

```
START OBJECT AUDIO PLAYBACK PROCESS
```

| | |
|---|---|
| ACQUIRE DISPLAY AREA | S381 |
| ANALYZE MPD FILE AND SPECIFY "Representation" OF metadata ON THE BASIS OF essential property AND codec | S382 |
| SPECIFY "Representation" OF REFERENCE TRACK ON THE BASIS OF associationId | S383 |
| ACQUIRE Initial segment | S384 |
| ACQUIRE SAMPLE ENTRIES OF object metadata track AND REFERENCE TRACK | S385 |
| ACQUIRE AUDIO FILE OF object metadata track TO BE PLAYED BACK | S386 |
| ACQUIRE POSITION INFORMATION OF PLAYBACK TARGET FROM sidx BOX AND ssix BOX | S387 |
| REQUEST AND ACQUIRE AUDIO STREAM OF object metadata track ON THE BASIS OF POSITION INFORMATION | S388 |
| DECODE AUDIO STREAM OF object metadata track | S389 |
| SELECT OBJECT ON THE BASIS OF IMAGE FRAME SIZE INFORMATION, OBJECT POSITION INFORMATION, DISPLAY AREA, AND priority | S390 |
| ANALYZE MPD FILE AND SPECIFY "Representation" OF SELECTED OBJECT ON THE BASIS OF essential property AND codec | S391 |
| SPECIFY "Representation" OF REFERENCE TRACK ON THE BASIS OF associationId | S392 |
| ACQUIRE Initial segment | S393 |
| ACQUIRE SAMPLE ENTRIES OF object audio track AND REFERENCE TRACK | S394 |
| ACQUIRE sidx BOX AND ssix BOX OF AUDIO FILE OF object audio track TO BE PLAYED BACK | S395 |
| ACQUIRE POSITION INFORMATION OF PLAYBACK TARGET FROM sidx BOX AND ssix BOX | S396 |
| REQUEST AND ACQUIRE AUDIO STREAM OF object audio track ON THE BASIS OF POSITION INFORMATION | S397 |
| DECODE AUDIO STREAM OF object audio track | S398 |
| SYNTHESIZE AND OUTPUT object audio | S399 |

```
END
```

*FIG. 66*

( START OBJECT AUDIO PLAYBACK PROCESS )

| | |
|---|---|
| ACQUIRE DISPLAY AREA | S411 |
| ANALYZE MPD FILE AND SPECIFY "Representation" OF metadata ON THE BASIS OF essential property AND codec | S412 |
| SPECIFY "Representation" OF REFERENCE TRACK ON THE BASIS OF associationId | S413 |
| ACQUIRE Initial segment | S414 |
| ACQUIRE SAMPLE ENTRIES OF object metadata track AND REFERENCE TRACK | S415 |
| ACQUIRE AUDIO FILE OF object metadata track TO BE PLAYED BACK | S416 |
| ACQUIRE POSITION INFORMATION OF PLAYBACK TARGET FROM sidx BOX AND ssix BOX | S417 |
| REQUEST AND ACQUIRE AUDIO STREAM OF object metadata track ON THE BASIS OF POSITION INFORMATION | S418 |
| DECODE AUDIO STREAM OF object metadata track | S419 |
| SELECT OBJECT ON THE BASIS OF IMAGE FRAME SIZE INFORMATION, OBJECT POSITION INFORMATION, DISPLAY AREA, priority, AND contentkind | S420 |
| ANALYZE MPD FILE AND SPECIFY "Representation" OF SELECTED OBJECT ON THE BASIS OF essential property AND codec | S421 |
| SPECIFY "Representation" OF REFERENCE TRACK ON THE BASIS OF associationId | S422 |
| ACQUIRE Initial segment | S423 |
| ACQUIRE SAMPLE ENTRIES OF object audio track AND REFERENCE TRACK | S424 |
| ACQUIRE sidx BOX AND ssix BOX OF AUDIO FILE OF object audio track TO BE PLAYED BACK | S425 |
| ACQUIRE POSITION INFORMATION OF PLAYBACK TARGET FROM sidx BOX AND ssix BOX | S426 |
| REQUEST AND ACQUIRE AUDIO STREAM OF object audio track ON THE BASIS OF POSITION INFORMATION | S427 |
| DECODE AUDIO STREAM OF object audio track | S428 |
| SYNTHESIZE AND OUTPUT object audio | S429 |

( END )

## FIG. 67

DURING TIME WHEN DATA
IS TO BE PLAYED BACK

| object1 sample | object1 sample | object1 sample | object1 sample | object1 sample | object1 sample | object1 sample | object1 sample |

| object2 sample | object2 sample | object2 sample | object2 sample | object2 sample | object2 sample | object2 sample | object2 sample |

| object3 sample | object3 sample | object3 sample | object3 sample | object3 sample | object3 sample | object3 sample | object3 sample |

| object4 sample | object4 sample | object4 sample | object4 sample | object4 sample | object4 sample | object4 sample | object4 sample |

INFORMATION FOR ACQUISITION DETERMINATION
POSITION INFORMATION OF Object
Priority INFORMATION OF Object
contentkind INFORMATION OF Object

EXAMPLE OF ACQUIRING PART OF object IN Proority 1, 2

| object1 sample | object1 sample |

| object2 sample | object2 sample | object2 sample | object2 sample |

| object3 sample | object3 sample | object3 sample |

| object4 sample |

FREQUENCY BAND CAN BE EFFICIENTLY USED
BY ACQUIRING ONLY NECESSARY objects
DURING TIME WHEN DATA IS TO BE PLAYED BACK

# FIG. 68

EP 4 177 886 A1

| Base track | Track 1 | Track Reference ref=2,3,4,10.. | Sample Entry = 'mha2' | mhaC box | | base sample | base sample | base sample | base sample | 3da_base.mp4 |

| Channel audio track | Track 2 | Track Reference prnt=1. | Sample Entry = 'hac1' | hacC box | | channel sample | channel sample | channel sample | channel sample | 3da_channel.mp4 |

| Object audio track(s) | Track 10 | Track Reference prnt=1. | Sample Entry = 'hao1' | haoC box | | object sample | object sample | object sample | object sample | 3da_object_1.mp4 |

| HOA audio track | Track 3 | Track Reference prnt=1.. | Sample Entry = 'hah1' | hahC box | | HOA sample | HOA sample | HOA sample | HOA sample | 3da_hoa.mp4 |

| Object metadat track | Track 4 | Track Reference prnt=1 | Sample Entry = 'ham1' | hamC box | | meta sample | meta sample | meta sample | meta sample | 3da_meta.mp4 |

# FIG. 69

**Base + Object metadat track** — Track 1 | Track Reference ref=2,3,4,10.. | Sample Entry = 'mha2' | mhaC box | Bs/meta sample | Bs/meta sample | Bs/meta sample | Bs/meta sample | 3da_basemeta.mp4

**Channel audio track** — Track 2 | Track Reference prnt=1. | Sample Entry = 'hac1' | hacC box | channel sample | channel sample | channel sample | channel sample | 3da_channel.mp4

**Object audio track(s)** — Track 10 | Track Reference prnt=1. | Sample Entry = 'hao1' | haoC box | object sample | 3da_object_1.mp4

**HOA audio track** — Track 3 | Track Reference prnt=1.. | Sample Entry = 'hah1' | hahC box | HOA sample | HOA sample | HOA sample | HOA sample | 3da_hoa.mp4

EP 4 177 886 A1

## FIG. 70

| Switch Group/ group Preset | Group | Element | Group Type |

AudioSceneInfo/MPEG-H 3D Audio Descriptor

switchGroupID=1
Dialog

groupID=1
Atmo
- 1:Atmo(Center)
- 2:Atmo(L) / 3:Atmo(R) — CPE
- 4:Atmo(Ls) / 5:Atmo(Rs) — CPE
} Channels

groupID=2
Dialog EN

groupID=3
Dialog FR
- 6:Dialog EN 1(Left)
- 7:Dialog FR
- 8:Dialog EN 2(Right)
- 9:VoiceOver GE
} Objects

groupID=4
VoiceOver GE

groupID=5
Effects
- 10:Effects 1
- 11:Effects 2
- 12:Effects 3
— SAOC DMX
} SAOC Objects

groupID=6
Effects

13:Atmo
} HOA

groupID=7
Effects

EP 4 177 886 A1

# FIG. 71

# FIG. 72

```
        ( START TRACK DIVISION PROCESS )
                      |
                      v
    +--------------------------------------+  S441
    |           STORE AUDIO FILE           |
    +--------------------------------------+
                      |
                      v
    +--------------------------------------+  S442
    |   DIVIDE AUDIO STREAM FOR EACH TACK   |
    +--------------------------------------+
                      |
                      v
    +--------------------------------------+  S443
    |  HOLD AUDIO STREAM FOR EACH TRACK     |
    +--------------------------------------+
                      |
                      v
                  (   END   )
```

# FIG. 73

## FIG. 74

START DECODING PROCESS

SET 0 TO TOTAL ELEMENT NUMBERS — S461

INITIALIZE ALL ELEMENT TYPE INFORMATION — S462

SET TRACKS TO BE PLAYED BACK AS TRACKS TO BE PROCESSED — S463

ACQUIRE NUMBER AND TYPE OF ELEMENTS INCLUDED IN TRACK TO BE PROCESSED — S464

ADD NUMBER OF ACQUIRED ELEMENTS TO TOTAL ELEMENT NUMBER — S465

ADD TYPE OF ACQUIRED ELEMENTS TO ALL ELEMENT TYPE INFORMATION — S466

S467 — ARE ALL TRACKS TO BE PLAYED BACK SET AS TRACKS TO BE PROCESSED?
NO
YES

ARRANGE TOTAL ELEMENT NUMBER AND ALL ELEMENT TYPE INFORMATION — S468

SET TRACKS TO BE PLAYED BACK AS TRACKS TO BE PROCESSED — S469

SET ELEMENTS INCLUDED IN TRACK TO BE PROCESSED AS ELEMENTS TO BE PROCESSED — S470

ACQUIRE AND ARRANGE Config INFORMATION OF ELEMENT TO BE PROCESSED — S471

S472 — ARE ALL ELEMENTS INCLUDED IN TRACK TO BE PROCESSED SET AS ELEMENTS TO BE PROCESSED?
NO
YES

S473 — ARE ALL TRACKS TO BE PLAYED BACK SET AS TRACKS TO BE PROCESSED?
NO
YES

DETERMINE FRAME TO BE PROCESSED — S474

SET TRACKS TO BE PLAYED BACK AS TRACKS TO BE PROCESSED — S475

SET ELEMENTS INCLUDED IN TRACK TO BE PROCESSED AS ELEMENTS TO BE PROCESSED — S476

S477 — DO ELEMENTS TO BE PROCESSED CORRESPOND TO EXT ELEMENTS?
YES
NO

ARRANGE AUDIO DATA OF FRAME TO BE PROCESSED OF ELEMENT TO BE PROCESSED — S478

ACQUIRE METADATA OF ALL OBJECTS OF FRAME TO BE PROCESSED OF ELEMENT TO BE PROCESSED — S479

ARRANGE METADATA OF OBJECTS TO BE PLAYED BACK AMONG METADATA OF ALL OBJECTS — S480

S481 — ARE ALL ELEMENTS INCLUDED IN TRACK TO BE PROCESSED SET AS ELEMENTS TO BE PROCESSED?
NO
YES

S482 — ARE ALL TRACKS TO BE PLAYED BACK SET AS TRACKS TO BE PROCESSED?
NO
YES

S483 — ARE ALL FRAMES SET AS FRAMES TO BE PROCESSED?
NO
YES

DECODE AUDIO STREAM — S484

END

# FIG. 75

**Channel Audio**

CPE track
(for FL, FR)

CPE track
(for RL, RR)

**Object Audio**

SCE track
(for object1)

**Object Metadata**

EXT track
(for all objects)

Track ACQUISITION

3D audio
bit stream

config   frame#1

EP 4 177 886 A1

*FIG. 76*

START DECODING PROCESS

SET 0 TO TOTAL ELEMENT NUMBERS — S501

INITIALIZE ALL ELEMENT TYPE INFORMATION — S502

SET TRACKS HELD IN Web SERVER AS TRACKS TO BE PROCESSED — S503

ACQUIRE NUMBER AND TYPE OF ELEMENTS INCLUDED IN TRACK TO BE PROCESSED — S504

ADD NUMBER OF ACQUIRED ELEMENTS TO TOTAL ELEMENT NUMBER — S505

ADD TYPE OF ACQUIRED ELEMENTS TO ALL ELEMENT TYPE INFORMATION — S506

S507 — ARE ALL TRACKS SET AS TRACKS TO BE PROCESSED? — NO / YES

ARRANGE TOTAL ELEMENT NUMBER AND ALL ELEMENT TYPE INFORMATION — S508

SET TRACKS HELD IN Web SERVER AS TRACKS TO BE PROCESSED — S509

SET ELEMENTS INCLUDED IN TRACK TO BE PROCESSED AS ELEMENTS TO BE PROCESSED — S510

ACQUIRE AND ARRANGE Config INFORMATION OF ELEMENT TO BE PROCESSED — S511

S512 — ARE ALL ELEMENTS INCLUDED IN TRACK TO BE PROCESSED SET AS ELEMENTS TO BE PROCESSED? — NO / YES

S513 — ARE ALL TRACKS SET AS TRACKS TO BE PROCESSED? — NO / YES

DETERMINE FRAME TO BE PROCESSED — S514

SET TRACKS HELD IN Web SERVER AS TRACKS TO BE PROCESSED — S515

S516 — ARE TRACKS TO BE PROCESSED SET AS TRACKS TO BE PLAYED BACK? — NO / YES

SET ELEMENTS INCLUDED IN TRACK TO BE PROCESSED AS ELEMENTS TO BE PROCESSED — S517

ARRANGE AUDIO DATA OF FRAME TO BE PROCESSED OF ELEMENT TO BE PROCESSED — S518

S519 — ARE ALL ELEMENTS INCLUDED IN TRACK TO BE PROCESSED SET AS ELEMENTS TO BE PROCESSED? — NO / YES

SET ELEMENTS INCLUDED IN TRACK TO BE PROCESSED AS ELEMENTS TO BE PROCESSED — S520

ARRANGE ZERO STREAM OF FRAME TO BE PROCESSED OF ELEMENT TO BE PROCESSED — S521

S522 — ARE ALL ELEMENTS INCLUDED IN TRACK TO BE PROCESSED SET AS ELEMENTS TO BE PROCESSED? — NO / YES

S523 — ARE ALL TRACKS SET AS TRACKS TO BE PROCESSED? — NO / YES

S524 — ARE ALL FRAMES SET AS FRAMES TO BE PROCESSED? — NO / YES

DECODE AUDIO STREAM — S525

END

# FIG. 77

3D audio bit stream

| S C E C | C P E C | C P E C | S C E C | S C E C | S C E C | E X T C | S C E F | C P E F | C P E F | S C E F | S C E F | S C E F | E X T F | S C E F | C P E F | C P E F | S C E F | S C E F | S C E F | E X T F | - - - - - - - |

config    frame#1    frame#2

Track DIVISION

## Channel Audio

SCE track (for FC)

| S C E C | S C E F | S C E F | - - - - - - |

CPE track (for FL, FR)

| C P E C | C P E F | C P E F | - - - - - - |

CPE track (for RL, RR)

| C P E C | C P E F | C P E F | - - - - - - |

## Object Audio

SCE track (for object1)

| S C E C | S C E F | S C E F | - - - - - - |

SCE track (for object2)

| S C E C | S C E F | S C E F | - - - - - - |

SCE track (for object3)

| S C E C | S C E F | S C E F | - - - - - - |

## Object Metadata

EXT track (for object1)

| E X T C | E X T F | E X T F | - - - - - - |

EXT track (for object2)

| E X T C | E X T F | E X T F | - - - - - - |

EXT track (for object3)

| E X T C | E X T F | E X T F | - - - - - - |

EP 4 177 886 A1

# FIG. 78

Channel Audio

CPE track
(for FL, FR)  [CPEC][CPEF][CPEF] -------

CPE track
(for RL, RR)  [CPEC][CPEF][CPEF] -------

Object Audio

SCE track
( for
 object1 )  [SCEC][SCEF][SCEF] -------

Object Metadata

EXT track
( for
 object1 )  [EXTC][EXTF][EXTF] -------

Track ACQUISITION

3D audio
bit stream  [CPEC][SCEC][EXTC][CPEF][SCEF][EXTF][CPEF][SCEF][EXTF] -------

config    frame
          #1    frame
                #2

# FIG. 79

```
            ( START DECODING PROCESS )
                        │
                        ▼
        SET 0 TO TOTAL ELEMENT NUMBERS    S541
                        │
                        ▼
            INITIALIZE ALL ELEMENT        S542
              TYPE INFORMATION
                        │
    ┌───────────────────▼
    │       SET TRACK TO BE PLAYED BACK   S543
    │         AS TRACK TO BE PROCESSED
    │                   │
    │                   ▼
    │       ACQUIRE NUMBER OF ELEMENTS    S544
    │         AND TYPE INCLUDED IN TRACK
    │             TO BE PROCESSED
    │                   │
    │                   ▼
    │   ADD NUMBER OF ACQUIRED ELEMENTS   S545
    │       TO TOTAL ELEMENT NUMBER
    │                   │
    │                   ▼
    │       ADD TYPE OF ACQUIRED ELEMENT  S546
    │       TO ALL ELEMENT TYPE INFORMATION
    │                   │
    │                   ▼         S547
    │              ARE ALL
    │          TRACKS TO BE PLAYED
    └──NO─── BACK SET AS TRACKS TO BE
               PROCESSED?
                        │ YES
                        ▼
        ARRANGE TOTAL ELEMENT NUMBERS     S548
        AND ALL ELEMENT TYPE INFORMATION
                        │
    ┌───────────────────▼
    │       SET TRACK TO BE PLAYED BACK   S549
    │         AS TRACK TO BE PROCESSED
    │                   │
    │  ┌────────────────▼
    │  │    SET ELEMENTS INCLUDED IN      S550
    │  │    TRACK TO BE PROCESSED AS
    │  │    ELEMENTS TO BE PROCESSED
    │  │             │
    │  │             ▼
    │  │   ACQUIRE AND ARRANGE Config     S551
    │  │    INFORMATION OF ELEMENTS
    │  │       TO BE PROCESSED
    │  │             │
    │  │             ▼        S552
    │  │         ARE ALL
    │  │     ELEMENTS INCLUDED
    │  └─NO─ IN TRACK TO BE PROCESSED
    │         SET AS ELEMENTS TO BE
    │            PROCESSED?
    │               │ YES
    │               ▼        S553
    │           ARE ALL
    │       TRACKS TO BE PLAYED
    └───NO── BACK SET AS TRACKS TO BE
               PROCESSED?
                   │ YES
```

```
    ┌──────────────────────────────▼
    │  DETERMINE FRAME TO BE PROCESSED    S554
    │                   │
    │ ┌─────────────────▼
    │ │     SET TRACK TO BE PLAYED BACK   S555
    │ │       AS TRACK TO BE PROCESSED
    │ │                 │
    │ │ ┌───────────────▼
    │ │ │  SET ELEMENTS INCLUDED IN TRACK TO BE   S556
    │ │ │  PROCESSED AS ELEMENTS TO BE PROCESSED
    │ │ │               │
    │ │ │               ▼
    │ │ │  ARRANGE DATA OF FRAME TO BE PROCESSED  S557
    │ │ │      OF ELEMENT TO BE PROCESSED
    │ │ │               │
    │ │ │               ▼         S558
    │ │ │           ARE ALL
    │ │ │       ELEMENTS INCLUDED
    │ │ └──NO── IN TRACK TO BE PROCESSED
    │ │           SET AS ELEMENTS TO BE
    │ │              PROCESSED?
    │ │                 │ YES
    │ │                 ▼        S559
    │ │             ARE ALL
    │ │         TRACKS TO BE PLAYED
    │ └────NO──── BACK SET AS TRACKS TO BE
    │                PROCESSED?
    │                    │ YES
    │                    ▼        S560
    │                ARE ALL FRAMES
    └──────NO──────  SET AS FRAMES TO BE
                      PROCESSED?
                          │ YES
                          ▼
                DECODE AUDIO STREAM    S561
                          │
                          ▼
                        ( END )
```

## FIG. 80

| Syntax | No. of bits | Mnemonic |
|---|---|---|
| mpegh3daDecoderConfig() | | |
| { | | |
|     numElements = escapedValue(4,8,16) + 1; | | |
|     elementLengthPresent | 1 | |
| | | |
|     for (elemIdx=0; elemIdx<numElements; ++elemIdx) { | | |
|         usacElementType[elemIdx] | 2 | uimsbf |
|         switch (usacElementType[elemIdx]) { | | |
|         case ID_USAC_SCE: | | |
|             mpegh3daSingleChannelElementConfig(sbrRatioIndex); | | |
|             break; | | |
|         case ID_USAC_CPE: | | |
|             mpegh3daChannelPairElementConfig(sbrRatioIndex); | | |
|             break; | | |
|         case ID_USAC_LFE: | | |
|             mpegh3daLfeElementConfig(); | | |
|             break; | | |
|         case ID_USAC_EXT: | | |
|             mpegh3daExtElementConfig(); | | |
|             break; | | |
|     } | | |
| } | | |
| NOTE: mpegh3daSingleChannelElementConfig(), mpegh3daChannelPairElementConfig(), mpegh3daLfeElementConfig() and mpegh3daExtElementConfig() signaled at position elemIdx refer to the corresponding elements in mpegh3daFrame() at the respective position elemIdx. | | |

# FIG. 81

| Syntax | No. of bits | Mnemonic |
|---|---|---|
| mpegh3daExtElementConfig() | | |
| { | | |
|     usacExtElementType        = escapedValue(4, 8, 16); | | |
|     usacExtElementConfigLength   = escapedValue(4, 8, 16); | | |
| | | |
|     if (usacExtElementDefaultLengthPresent) { | 1 | uimsbf |
|         usacExtElementDefaultLength = escapedValue(8, 16, 0) + 1; | | |
|     } else { | | |
|         usacExtElementDefaultLength = 0; | | |
|     } | | |
| | | |
|     usacExtElementPayloadFrag; | 1 | uimsbf |
| | | |
|     switch (usacExtElementType) { | | |
|     case ID_EXT_ELE_FILL: | | |
|         break; | | |
|     case ID_EXT_ELE_MPEGS: | | |
|         SpatialSpecificConfig(); | | |
|         break; | | |
|     case ID_EXT_ELE_SAOC: | | |
|         SAOCSpecificConfig(); | | |
|         break; | | |
|     case ID_EXT_ELE_SAOC_3D: | | |
|         SAOC3DSpecificConfig(); | | |
|         break; | | |
|     case ID_EXT_ELE_AUDIOPREROLL: | | |
|         break; | | |
|     case ID_EXT_ELE_UNI_DRC: | | |
|         mpegh3daUniDrcConfig(); | | |
|         break; | | |
|     case ID_EXT_ELE_OBJ_METADATA: | | |
|         ObjectMetadataConfig(); | | |
|         break; | | |
|     case ID_EXT_ELE_HOA: | | |
|         HOAConfig(); | | |
|         break; | | |
|     **case ID_EXT_ELE_EXTRACTOR:** | | |
|         **ExtractorConfig();** | | |
|         **break;** | | |
|     default: | NOTE | |
|         while (usacExtElementConfigLength--) { | | |
|             tmp; | 8 | uimsbf |
|         } | | |
|         break; | | |
|     } | | |
| } | | |

# FIG. 82

| Syntax | No. of bits | Mnemonic |
|---|---|---|
| ExtractorConfig() | | |
| { | | |
|     usacElementType Extractor ; | 2 | uimsbf |
|     switch (usacElementType[elemIdx]) { | | |
|         case ID_USAC_SCE: | | |
|           break; | | |
|         case ID_USAC_CPE: | | |
|           break; | | |
|         case ID_USAC_LFE: | | |
|           break; | | |
|         case ID_USAC_EXT: | | |
|           usacExtElementTypeExtractor    = escapedValue(4, 8, 16);    break; | | |
|     } | | |
|     configLength; | 16 | |
|     configOffset; | 64 | |
| } | | |

EP 4 177 886 A1

# FIG. 83

| usacExtElementType | The concatenated usacExtElementSegmentData represents: |
|---|---|
| ID_EXT_ELE_FIL | Series of fill_byte |
| ID_EXT_ELE_MPEGS | SpatialFrame() |
| ID_EXT_ELE_SAOC | SaocFrame() |
| ID_EXT_ELE_AUDIOPREROLL | AudioPreRoll() |
| ID_EXT_ELE_UNI_DRC | uniDrcGain() as defined in ISO/IEC 23003-4 |
| ID_EXT_ELE_OBJ_METADATA | object_metadata() |
| ID_EXT_ELE_SAOC_3D | Saoc3DFrame() |
| ID_EXT_ELE_HOA | HOAFrame() |
| **ID_EXT_ELE_EXTRACTOR** | **ExtractorMetadata()** |
| unknown | unknown data. The data block shall be discarded. |

EP 4 177 886 A1

## FIG. 84

| Syntax | No. of bits | Mnemonic |
|---|---|---|
| ExtractorMetadata() | | |
| { | | |
|     **elementLength;** | **16** | **uimsbf** |
|     **elementOffset;** | **64** | **uimsbf** |
| } | | |

EP 4 177 886 A1

# FIG. 85

| Syntax | No. of bits | Mnemonic |
|---|---|---|
| mpegh3daDecoderConfig() | | |
| { | | |
|     numElements = escapedValue(4,8,16) + 1; | | |
|     elementLengthPresent | 1 | |
|     **flagExtractor** | **1** | **uimsbf** |
| | | |
|     for (elemIdx=0; elemIdx<numElements; ++elemIdx) { | | |
|         usacElementType[elemIdx] | 2 | uimsbf |
|         switch (usacElementType[elemIdx]) { | | |
|         case ID_USAC_SCE: | | |
|             **if (!flagExtractor) {** | | |
|             mpegh3daSingleChannelElementConfig(sbrRatioIndex); | | |
|             **}** | | |
|             break; | | |
|         case ID_USAC_CPE: | | |
|             **if (!flagExtractor) {** | | |
|             mpegh3daChannelPairElementConfig(sbrRatioIndex); | | |
|             **}** | | |
|             break; | | |
|         case ID_USAC_LFE: | | |
|             **if (!flagExtractor) {** | | |
|             mpegh3daLfeElementConfig(); | | |
|             **}** | | |
|             break; | | |
|         case ID_USAC_EXT: | | |
|             **if (flagExtractor) {** | | |
|                 **usacExtElementType = escapedValue(4, 8, 16);** | | |
|             **} else {** | | |
|             mpegh3daExtElementConfig(); | | |
|             **}** | | |
|             break; | | |
|         } | | |
|         config length | | |
|         config offset | | |
|     } | | |
| } | | |

# FIG. 86

| Syntax | No. of bits | Mnemonic |
|---|---|---|
| mpegh3daFrame() | | |
| { | | |
|    usacIndependencyFlag; | 1 | uimsbf |
| | | |
|    for (elemIdx=0; elemIdx<numElements; ++elemIdx) { | | |
|       if ( (usacElementType[elemIdx] != ID_USAC_EXT) && | | |
|       (elementLengthPresent == 1)    ) { | | |
|         elementLength | 16 | uimsbf |
|       } | | |
|       switch (usacElementType[elemIdx]) { | | |
|       case ID_USAC_SCE: | | |
|         if (flagExtractor) { | | |
|           element Offset | 64 | uimsbf |
|         } else { | | |
|         mpegh3daSingleChannelElement(usacIndependencyFlag); | elementLength, NOTE 1 | |
|         } | | |
|         break; | | |
|       case ID_USAC_CPE: | | |
|         if (flagExtractor) { | | |
|           element Offset | 64 | uimsbf |
|         } else { | | |
|         mpegh3daChannelPairElement(usacIndependencyFlag); | elementLength, NOTE 1 | |
|         } | | |
|         break; | | |
|       case ID_USAC_LFE: | | |
|         if (flagExtractor) { | | |
|           element Offset | 64 | uimsbf |
|         } else { | | |
|         mpegh3daLfeElement(usacIndependencyFlag); | elementLength, NOTE 1 | |
|         } | | |
|         break; | | |
|       case ID_USAC_EXT: | | |
|         if (flagExtractor) { | | |
|           element Length | 16 | uimsbf |
|           element Offset | 64 | uimsbf |
|         } else { | | |
|         mpegh3daExtElement(usacIndependencyFlag); | | |
|         } | | |
|         break; | | |
|       } | | |
| } | | |
| NOTE 1: If present, elementLength represents the length of the corresponding element it refers to in number of bits. | | |

# FIG. 87

3D audio stream

| channel Sub-sample | Object Sub-sample | Object Sub-sample | - - - - - - - | HOA Object Sub-sample | Metadata Sub-sample |

3D audio hint stream

| channel Sub-sample extractor | Object Sub-sample extractor | Object Sub-sample extractor | - - - - - - - | HOA Object Sub-sample extractor | Metadata Sub-sample extractor |

# FIG. 88

Track 1 | Track Reference hint=2 | Sample Entry = 'mha1' | mhaC box | 3Daudio sample | 3Daudio sample | 3Daudio sample | 3Daudio sample | - - - - - -

Track 2 | Track Reference prnt=1. | Sample Entry = 'mha2' | mhaH box | hint sample | hint sample | hint sample | hint sample | - - - - - -

channel Sub-sample | Object Sub-sample | Object Sub-sample | - - - - - | HOA Object Sub-sample | Metadata Sub-sample

channel Sub-sample extractor | Object Sub-sample extractor | Object Sub-sample extractor | - - - - - | HOA Object Sub-sample extractor | Metadata Sub-sample extractor

EP 4 177 886 A1

# FIG. 89

START FILE GENERATION PROCESS

DIVIDE IMAGE DATA INTO TILE UNITS — S601

GENERATE VIDEO STREAM OF EACH TILE — S602

GENERATE IMAGE FILE OF EACH TILE — S603

ACQUIRE IMAGE FRAME SIZE INFORMATION — S604

GENERATE IMAGE INFORMATION INCLUDING IMAGE FRAME SIZE INFORMATION AND TILE POSITION INFORMATION — S605

GENERATE AUDIO STREAM — S606

ACQUIRE SUB-SAMPLE INFORMATION — S607

GENERATE HINT STREAM ON THE BASIS OF SUB-SAMPLE INFORMATION — S608

MULTIPLEX AUDIO STREAM AND HINT STREAM AND GENERATE AUDIO FILE — S609

GENERATE MPD FILE — S610

UPLOAD IMAGE FILE, AUDIO FILE, AND MPD FILE — S611

END

# FIG. 90

```
( START AUDIO PLAYBACK PROCESS )
```

| | |
|---|---|
| ANALYZE MPD FILE AND ACQUIRE URL OF AUDIO FILE | S621 |
| ACQUIRE Initial segment | S622 |
| ACQUIRE TRACK ID OF REFERENCE TRACK FROM SAMPLE ENTRY OF CLUE TRACK | S623 |
| ACQUIRE sidx BOX AND ssix BOX FROM HEAD OF media segment | S624 |
| ACQUIRE POSITION INFORMATION OF CLUE TRACK FROM sidx BOX AND ssix BOX | S625 |
| REQUEST AND ACQUIRE HINT STREAM ON THE BASIS OF POSITION INFORMATION | S626 |
| ACQUIRE POSITION INFORMATION OF REFERENCE TRACK FROM sidx BOX AND ssix BOX | S627 |
| DETERMINE POSITION INFORMATION OF AUDIO STREAM TO BE PLAYED BACK ON THE BASIS OF POSITION INFORMATION OF REFERENCE TRACK AND SUB-SAMPLE INFORMATION | S628 |
| REQUEST AND ACQUIRE AUDIO STREAM ON THE BASIS OF POSITION INFORMATION | S629 |
| DECODE AUDIO STREAM | S630 |
| OUTPUT AUDIO DATA | S631 |

```
( END )
```

## FIG. 91

channel Sub-sample | Object Sub-sample | Object Sub-sample - - - - - HOA Object Sub-sample | Metadata Sub-sample

**Track 1** — Track Reference hint=2,3,4,5 | Sample Entry = 'mha1' | mhaC box | 3Daudio sample | 3Daudio sample | 3Daudio sample | 3Daudio sample - - - - - - - -

**Track 2** — Track Reference prnt=1. | Sample Entry = 'hac2' | mhaH box | hint sample | hint sample | hint sample | hint sample - - - - - - channel Sub-sample extractor

**Track 3** — Track Reference prnt=1. | Sample Entry = 'hao2' | mhaH box | hint sample | hint sample | hint sample | hint sample - - - - - - Object Sub-sample extractor | Object Sub-sample extractor - - - - -

**Track 4** — Track Reference prnt=1. | Sample Entry = 'hah2' | mhaH box | hint sample | hint sample | hint sample | hint sample - - - - - HOA Object Sub-sample extractor

**Track 5** — Track Reference prnt=1. | Sample Entry = 'ham2' | mhaH box | hint sample | hint sample | hint sample | hint sample - - - - - Metadata Sub-sample extractor

EP 4 177 886 A1

*FIG. 92*

3D audio stream + 3D audio hint stream MP4 File

Track 1

Track 2

Track 5

# FIG. 93

Track 1 — 3D audio stream MP4 File

Track 2 / Track 5 — 3D audio hint stramMP4 File

## FIG. 94

| | |
|---|---|
| Track 1 | 3D audio stream MP4 File |
| Track 2 | 3D audio hint streamMP4 File |
| Track 5 | 3D audio hint streamMP4 File |

EP 4 177 886 A1

# FIG. 95

EP 4 177 886 A1

Europäisches
Patentamt
European
Patent Office
Office européen
des brevets

## EUROPEAN SEARCH REPORT

**Application Number**

EP 22 21 3391

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 146 522 A1 (FRAUNHOFER GES FORSCHUNG [DE]) 20 January 2010 (2010-01-20) * the whole document * | 1-15 | INV. G11B27/034 G10L19/008 G06F13/00 |
| X | WO 2014/025752 A1 (DOLBY LAB LICENSING CORP [US]) 13 February 2014 (2014-02-13) * the whole document * | 1-15 | G10K15/02 G10L19/00 G11B20/12 H04N21/439 |
| X | WO 2013/006338 A2 (DOLBY LAB LICENSING CORP [US]; ROBINSON CHARLES Q [US]; TSINGOS NICOLA) 10 January 2013 (2013-01-10) * the whole document * | 1-15 | G10L19/16 H04S7/00 |
| X | US 2011/069934 A1 (LEE TAE JIN [KR] ET AL) 24 March 2011 (2011-03-24) * the whole document * | 1-15 | |
| A,D | ANONYMOUS: "Text of ISO/IEC IS 23009-1 Media Presentation Description and Segment Formats", 98. MPEG MEETING; 28-11-2011 - 2-12-2012; GENEVA; (MOTION PICTURE EXPERT GROUP OR ISO/IEC JTC1/SC29/WG11),, no. N12329, 6 January 2012 (2012-01-06), XP030018824, * the whole document * | 1-15 | **TECHNICAL FIELDS SEARCHED (IPC)** G11B G10L H04S |

-/--

The present search report has been drawn up for all claims

| Place of search | Date of completion of the search | Examiner |
|---|---|---|
| The Hague | 7 February 2023 | Bruma, Cezar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 177 886 A1**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Information technology Dynamic adaptive streaming over HTTP (DASH) Part 1: Media presentation description and segment formats", , 15 May 2014 (2014-05-15), XP055214031, Geneva, CH Retrieved from the Internet: URL:https://mpeg.chiariglione.org/standard s/mpeg-dash [retrieved on 2015-09-17] * the whole document * | 1-15 | |
| A | US 2004/146285 A1 (MATSUI YOSHINORI [JP] ET AL) 29 July 2004 (2004-07-29) * the whole document * | 1-15 | |
| A,D | VILLE PULKKI: "Virtual sound source positioning using vector base amplitude planning", JOURNAL OF THE AUDIO ENGINEERING SOCIETY, vol. 45, no. 6, 1 June 1997 (1997-06-01), pages 456-466, XP055303802, US ISSN: 0004-7554 * the whole document * | 1-15 | **TECHNICAL FIELDS SEARCHED (IPC)** |

The present search report has been drawn up for all claims

| Place of search | Date of completion of the search | Examiner |
|---|---|---|
| The Hague | 7 February 2023 | Bruma, Cezar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 22 21 3391

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2023

| Patent document cited in search report | | | Publication date | Patent family member(s) | | Publication date |
|---|---|---|---|---|---|---|
| EP 2146522 | A1 | 20-01-2010 | AR | 072702 | A1 | 15-09-2010 |
| | | | AR | 094591 | A2 | 12-08-2015 |
| | | | AU | 2009270526 | A1 | 21-01-2010 |
| | | | BR | PI0910375 | A2 | 06-10-2015 |
| | | | CA | 2725793 | A1 | 21-01-2010 |
| | | | CN | 102100088 | A | 15-06-2011 |
| | | | CN | 103354630 | A | 16-10-2013 |
| | | | EP | 2146522 | A1 | 20-01-2010 |
| | | | EP | 2297978 | A1 | 23-03-2011 |
| | | | ES | 2453074 | T3 | 03-04-2014 |
| | | | HK | 1155884 | A1 | 25-05-2012 |
| | | | HK | 1190554 | A1 | 04-07-2014 |
| | | | JP | 5467105 | B2 | 09-04-2014 |
| | | | JP | 2011528200 | A | 10-11-2011 |
| | | | KR | 20110037974 | A | 13-04-2011 |
| | | | KR | 20120131210 | A | 04-12-2012 |
| | | | PL | 2297978 | T3 | 29-08-2014 |
| | | | RU | 2010150046 | A | 20-06-2012 |
| | | | RU | 2013127404 | A | 27-12-2014 |
| | | | TW | 201010450 | A | 01-03-2010 |
| | | | TW | 201404189 | A | 16-01-2014 |
| | | | US | 2010014692 | A1 | 21-01-2010 |
| | | | US | 2012308049 | A1 | 06-12-2012 |
| | | | WO | 2010006719 | A1 | 21-01-2010 |
| WO 2014025752 | A1 | 13-02-2014 | CN | 104520924 | A | 15-04-2015 |
| | | | EP | 2883366 | A1 | 17-06-2015 |
| | | | JP | 6186435 | B2 | 23-08-2017 |
| | | | JP | 2015532723 | A | 12-11-2015 |
| | | | WO | 2014025752 | A1 | 13-02-2014 |
| WO 2013006338 | A2 | 10-01-2013 | AR | 086775 | A1 | 22-01-2014 |
| | | | AU | 2012279357 | B2 | 14-01-2016 |
| | | | AU | 2016202227 | A1 | 05-05-2016 |
| | | | AU | 2018203734 | A1 | 21-06-2018 |
| | | | AU | 2019204012 | A1 | 11-07-2019 |
| | | | AU | 2020226984 | A1 | 17-09-2020 |
| | | | AU | 2021258043 | A1 | 25-11-2021 |
| | | | BR | 112013033386 | A2 | 24-01-2017 |
| | | | BR | 122020001361 | B1 | 19-04-2022 |
| | | | CA | 2837893 | A1 | 10-01-2013 |
| | | | CA | 2973703 | A1 | 10-01-2013 |
| | | | CA | 3157717 | A1 | 10-01-2013 |
| | | | CN | 103650539 | A | 19-03-2014 |
| | | | CN | 105792086 | A | 20-07-2016 |
| | | | DK | 2727383 | T3 | 25-05-2021 |

EPO FORM P0459

For more details about this annex : see Official Journal of the European Patent Office, No. 12/82

**page 1 of 3**

## ANNEX TO THE EUROPEAN SEARCH REPORT
## ON EUROPEAN PATENT APPLICATION NO.

EP 22 21 3391

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2023

| Patent document cited in search report | Publication date | Patent family member(s) | Publication date |
|---|---|---|---|
| | | EP 2727383 A2 | 07-05-2014 |
| | | EP 3893521 A1 | 13-10-2021 |
| | | ES 2871224 T3 | 28-10-2021 |
| | | HK 1219604 A1 | 07-04-2017 |
| | | HU E054452 T2 | 28-09-2021 |
| | | IL 230046 A | 30-06-2016 |
| | | IL 265741 A | 30-06-2019 |
| | | IL 277736 A | 30-11-2020 |
| | | IL 284585 A | 31-08-2021 |
| | | IL 291043 A | 01-05-2022 |
| | | IL 295733 A | 01-10-2022 |
| | | JP 5912179 B2 | 27-04-2016 |
| | | JP 6174184 B2 | 02-08-2017 |
| | | JP 6486995 B2 | 20-03-2019 |
| | | JP 6523585 B1 | 05-06-2019 |
| | | JP 6637208 B2 | 29-01-2020 |
| | | JP 6759442 B2 | 23-09-2020 |
| | | JP 6821854 B2 | 27-01-2021 |
| | | JP 6882618 B2 | 02-06-2021 |
| | | JP 7009664 B2 | 25-01-2022 |
| | | JP 2014522155 A | 28-08-2014 |
| | | JP 2016165117 A | 08-09-2016 |
| | | JP 2017215592 A | 07-12-2017 |
| | | JP 2019095813 A | 20-06-2019 |
| | | JP 2019144583 A | 29-08-2019 |
| | | JP 2020057014 A | 09-04-2020 |
| | | JP 2021005876 A | 14-01-2021 |
| | | JP 2021073496 A | 13-05-2021 |
| | | JP 2021131562 A | 09-09-2021 |
| | | JP 2022058569 A | 12-04-2022 |
| | | KR 20140017682 A | 11-02-2014 |
| | | KR 20150013913 A | 05-02-2015 |
| | | KR 20180035937 A | 06-04-2018 |
| | | KR 20190014601 A | 12-02-2019 |
| | | KR 20190086785 A | 23-07-2019 |
| | | KR 20200058593 A | 27-05-2020 |
| | | KR 20200137034 A | 08-12-2020 |
| | | KR 20220081385 A | 15-06-2022 |
| | | MY 165933 A | 18-05-2018 |
| | | PL 2727383 T3 | 02-08-2021 |
| | | RU 2741738 C1 | 28-01-2021 |
| | | RU 2013158054 A | 10-08-2015 |
| | | RU 2017112527 A | 24-01-2019 |
| | | SG 10201604679U A | 28-07-2016 |
| | | TW 201325269 A | 16-06-2013 |
| | | TW 201642673 A | 01-12-2016 |

EPO FORM P0459

For more details about this annex : see Official Journal of the European Patent Office, No. 12/82

**page 2 of 3**

## ANNEX TO THE EUROPEAN SEARCH REPORT
## ON EUROPEAN PATENT APPLICATION NO.

EP 22 21 3391

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2023

| Patent document cited in search report | Publication date | Patent family member(s) | | Publication date |
|---|---|---|---|---|
| | | TW | 201811070 A | 16-03-2018 |
| | | TW | 201909658 A | 01-03-2019 |
| | | TW | 202139720 A | 16-10-2021 |
| | | UA | 124570 C2 | 13-10-2021 |
| | | US | 2014133683 A1 | 15-05-2014 |
| | | US | 2016021476 A1 | 21-01-2016 |
| | | US | 2016381483 A1 | 29-12-2016 |
| | | US | 2017215020 A1 | 27-07-2017 |
| | | US | 2018027352 A1 | 25-01-2018 |
| | | US | 2018192230 A1 | 05-07-2018 |
| | | US | 2018324543 A1 | 08-11-2018 |
| | | US | 2019104376 A1 | 04-04-2019 |
| | | US | 2019306652 A1 | 03-10-2019 |
| | | US | 2020145779 A1 | 07-05-2020 |
| | | US | 2021219091 A1 | 15-07-2021 |
| | | WO | 2013006338 A2 | 10-01-2013 |
| US 2011069934 A1 | 24-03-2011 | CN | 102034519 A | 27-04-2011 |
| | | US | 2011069934 A1 | 24-03-2011 |
| US 2004146285 A1 | 29-07-2004 | AU | 2003232637 A1 | 12-12-2003 |
| | | CN | 1547852 A | 17-11-2004 |
| | | EP | 1508245 A1 | 23-02-2005 |
| | | KR | 20050013050 A | 02-02-2005 |
| | | US | 2004146285 A1 | 29-07-2004 |
| | | WO | 03101114 A1 | 04-12-2003 |

EPO FORM P0459

For more details about this annex : see Official Journal of the European Patent Office, No. 12/82

page 3 of 3

**EP 4 177 886 A1**

**Non-patent literature cited in the description**

- Dynamic Adaptive Streaming over HTTP. *MPEG-DASH, http://mpeg.chiariglione.org/standards/mpeg-dash/media-prese ntation-description-and-segment-formats/text-isoiec-23009-12012-dam-1*

- **VILLE PULKKI.** Virtual Sound Source Positioning Using Vector Base Amplitude Panning. *Journal of AES,* 1997, vol. 45 (6), 456-466